# EUROPEAN PATENT APPLICATION

(11) **EP 1 703 423 A1**
(43) Date of publication of application: **20.09.2006**
(21) Application number: 06251305.6
(22) Date of filing: 13.03.2006
(51) Int. Cl.: G06F 17/30

(54) **Apparatus and method for successively outputting related information**

(30) Priority: 14.03.2005 JP 2005071990; 20.05.2005 JP 2005148735
(71) Applicant: SONY CORPORATION, Tokyo 141 (JP)
(72) Inventor: Yamahara, Susumu c/o Sony Corporation, Shinagawa-Ku Tokyo 141 (JP); Konno, Taro c/o Sony Corporation, Shinagawa-Ku Tokyo 141 (JP); Aramaki, Junichi c/o Sony Corporation, Shinagawa-Ku Tokyo 141 (JP); Kikkoji, Hiroyuki c/o Sony Corporation, Shinagawa-Ku Tokyo 141 (JP)
(74) Representative: DeVile, Jonathan Mark

(57) **Abstract**

An apparatus for successively outputting related information includes an outputting apparatus, which selects a content identification information set as a successive output object in a list. The list is included in page information acquired from a providing apparatus as noticed content information, and acquires content related information coordinated with the selected content identification from the providing apparatus. The outputting apparatus outputs the acquired content related information and detects an end of the outputting. When an end of the outputting is detected, the selection of noticed content information, acquisition and outputting of related information and detection of an end of outputting are successively executed again. As a result, content related information acquired from the providing apparatus can be output automatically and successively. The apparatus for successively outputting and providing the related information can thereby provide the content related information with a significantly reduced processing load.

## Description

### FIELD OF THE INVENTION

The present invention relates to apparatus and methods for successively outputting related information, and an apparatus and method for successively providing related information. The present invention also relates to computer programs for successively outputting related information and successively providing related information.
Embodiments of the present invention can be suitably applied, for example, to acquisition of music data provided on a network from a data recording and reproduction apparatus (hereinafter referred to as client terminal).

### BACKGROUND OF THE INVENTION

A terminal of a conventional music distribution system issues a request for a preview of a tune to a web server if a preview of a tune is selected on a web browser screen displayed on a display unit. In response to the request, the web server successively transmits tunes which can be sold in a streaming format for every predetermined period of time determined in advance to the terminal. Consequently, the terminal successively outputs the tunes transmitted thereto in the streaming format from the web server individually for the predetermined period of time from a speaker so as to be previewed by the user. A music distribution system of the type described is disclosed, for example, in Japanese Patent Laid-open No. 2002-99283 (pages 6 and 7, figures 2 and 3) (hereinafter referred to as Patent Document 1).

### SUMMARY OF THE INVENTION

Various aspects and features of the present invention are defined in the appended claims.

However, in a music distribution system having such a configuration as disclosed in Patent Document 1, the web server must successively select tunes which can be previewed from among a plurality of tunes in response to a previewing request for a tune received from the terminal and cut out and transmit a predetermined time portion of every one of the selected tunes to the terminal. Therefore, the conventional music distribution system has a problem in that the processing load upon previewing of tunes to the web server is very high.

It is desirable for the present invention to provide a related information successively outputting method, a related information successively providing method, a related information successively outputting apparatus, a related information successively providing apparatus, a related information successively outputting program and a related information successively providing program wherein the processing load to a related information successively providing apparatus upon provision of content related information can be reduced significantly.

According to an embodiment of the present invention, there is provided a related information successively outputting method including a page information acquisition step of acquiring page information transmitted from a page information providing apparatus and including a list of a plurality of pieces of content identification information, a noticed content information selection step of selecting one of those of the pieces of content identification information which are set as a successive output object in the list included in the acquired page information as noticed content information, a related information acquisition step of acquiring content related information coordinated with the one piece of content identification information selected as the noticed content information from a related information successively providing apparatus, a related information outputting step of outputting the acquired content related information, and an outputting end detection step of detecting an end of the outputting of the content related information, whereby, if an end of the outputting of the content related information is detected at the outputting end detection step, then the noticed content information selection step, related information acquisition step, related information outputting step and outputting end detection step are successively executed again thereby to automatically and successively output the content related information coordinated with the content identification information set as a successive output object in the list included in the page information.

The related information successively outputting method is executed by a related information successively outputting apparatus including a page information acquisition section configured to acquire page information including a list of a plurality of pieces of content identification information transmitted from a page information providing apparatus, a noticed content information selection section configured to select the content identification information set as a successive output object in the list included in the page information acquired by the page information acquisition section as noticed content information, a related information acquisition section configured to acquire content related information coordinated with the content identification information selected as the noticed content information by the noticed content information selection section from a related information successively providing apparatus, a related information outputting section configured to output the content related information acquired by the related information acquisition section, and an outputting end detection section configured to detect an end of the outputting of the content related information by the related information outputting section, whereby, if the noticed content information selection section selects, as the noticed content information, one of those of the pieces of the content identification information which are set as a successive output object in the list included in the page information, then the related information acquisition section acquires the content related information coordinated with the content identification information selected as the noticed content information from the related information successively providing apparatus and the related information outputting section outputs the acquired content related information, and then when the outputting end detection section detects an end of the outputting of the content related information by the related information outputting section, the noticed content information selection section automatically and newly selects, as the noticed content information, one of those of the pieces of the content identification information which are set as the successive outputting target in the list included in the page information and the related information acquisition section acquires the content related information coordinated with the content identification information newly selected as the noticed content information from the related information successive providing apparatus, whereafter the related information outputting section outputs the acquired content related information thereby to automatically and successively output the content related information coordinated with the content identification information set as a successive output object in the list included in the page information.

Further, the related information successively outputting method is applied as a related information successively outputting program for causing an information processing apparatus to execute the steps described above.

In the related information successively outputting method, related information successively outputting apparatus and related information successively outputting program, a plurality of pieces of content identification information set as a successive output object in a list included in page information are automatically and successively selected as notice content information, and a request for a piece of content related information coordinated with every piece of content identification information selected as the noticed content information is issued to the related information successively providing apparatus. Consequently, the related information successively providing apparatus can automatically and successively transmit a plurality of pieces of content related information coordinated with a plurality of pieces of content identification information set as a successive output object in the list included in the page information to the related information successively outputting apparatus without the necessity to perform a cumbersome process such as to successively select a piece of content identification information to be provided to the related information successively outputting apparatus from among a plurality of pieces of content related information. Therefore, the related information successively outputting apparatus can output the content related information received from the related information successively providing apparatus without causing the related information successively providing apparatus to perform such a cumbersome process as described above.

More particularly, the related information successively outputting apparatus acquires page information transmitted from the related information successively providing apparatus and including a list of a plurality of pieces of content identification information and selects one of the pieces of content identification information set as a successive output object in the list included in the acquired page information as noticed content information thereby to acquire and output a piece of content related information coordinated with the one piece of content identification information selected as the noticed content information from the related information successively providing apparatus. Then, when an end of the outputting of the content related information is detected, a new one of the pieces of content identification information set as a successive output object in the list included in the page information is automatically selected as the noticed content information. Further, a piece of content related information coordinated with the one piece of content identification information selected newly as the noticed content information is acquired from the related information successively providing apparatus and outputted. Thus, those pieces of content related information which are coordinated with those pieces of content identification information which are set as a successive output object are outputted automatically and successively. Consequently, the related information successively providing apparatus can automatically and successively transmit a plurality of pieces of content related information coordinated with a plurality of pieces of content identification information set as a successive output object in the list included in the page information to the related information successively outputting apparatus without the necessity to perform a cumbersome process such as to successively select a piece of content identification information to be provided to the related information successively outputting apparatus from among a plurality of pieces of content related information. Therefore, the related information successively outputting apparatus can output the content related information received from the related information successively providing apparatus without causing the related information successively providing apparatus to perform such a cumbersome process as described above. As a result, the processing load to the related information successively providing apparatus upon provision of content related information can be reduced significantly.

According to another embodiment of the present invention, there is provided a related information successively providing method including a page information transmission step of transmitting, in response to a request transmitted from a related information successively outputting apparatus, page information including a list of a plurality of pieces of content identification information to the related information successively outputting apparatus, a requesting information receiving step of receiving requesting information, transmitted from the related information successively outputting apparatus as a result of selection of one of those of the pieces of content identification information which are set as a successive output object in the list included in the page information by the related information successively outputting apparatus as noticed content information, for content related information coordinated with the content identification information selected as the noticed content information, and a related information transmission step of transmitting the content related information according to the received requesting information to the related information successively outputting apparatus, whereby, if the outputting of the content related information by the related information successively outputting apparatus comes to an end and a new one of the pieces of content identification information from within the content identification information set as a successive output object in the list included in the page information is automatically selected as the noticed content information, then the requesting information receiving step and the related information transmission step are successively executed again to automatically and successively transmit the content related information according to the requesting information successively transmitted from the related information successively outputting apparatus to the related information successively outputting apparatus.

The related information successively providing method is executed by a related information successively providing apparatus including a page information transmission section configured to transmit, in response to a request transmitted from a related information successive outputting apparatus, page information including a list of a plurality of pieces of content identification information to the related information successive outputting apparatus, a requesting information receiving section configured to receive requesting information, transmitted from the related information successively outputting apparatus as a result of selection of one of those of the pieces of content identification information which are set as a successive output object in the list included in the page information by the related information successively outputting apparatus as noticed content information, for content related information coordinated with the content identification information selected as the noticed content information, and a related information transmission section configured to transmit the content related information according to the requesting information received by the requesting information receiving section to the related information successive outputting apparatus, whereby, if the requesting information receiving section receives the requesting information, transmitted as a result of the selection of one of those of the pieces of the content identification information which are set as the successive output object in the list included in the page information as the noticed content information from the related information successive outputting apparatus, for the content related information coordinated with the content identification information selected as the noticed content information, then the related information transmission section transmits the content related information according to the requesting information to the related information successive outputting apparatus, and then if the requesting information receiving section receives the requesting information, transmitted as a result of automatic selection of a new one of those of the pieces of content identification information which are set as a successive output object in the list included in the page information as the noticed content information after the outputting of the content related information from the related information successively outputting apparatus, for the content related information coordinated with the content identification information newly selected as the noticed content information, then the related information transmission section transmits the content related information according to the requesting information to the related information successively outputting apparatus thereby to automatically and successively transmit the content related information according to the requesting information successively transmitted from the related information successively outputting apparatus to the related information successively outputting apparatus.

Further, the related information successively providing method is applied as a related information successively providing program for causing an information processing apparatus to execute the steps described above.

With the related information successively providing method, related information successively providing apparatus and related information successively providing program, a request for a piece of content related information coordinated with a piece of content identification information selected as noticed content information as a result of automatic and successive selection as noticed content information from among a plurality of pieces of content identification information set as a successive output object within the list included in the page information is successively received from a related information successively outputting apparatus. Consequently, the related information successively providing apparatus can automatically and successively transmit a plurality of pieces of content related information coordinated with a plurality of pieces of content identification information set as a successive output object in the list included in the page information to the related information successively outputting apparatus without the necessity to perform a cumbersome process such as to successively select a piece of content identification information to be provided to the related information successively outputting apparatus from among a plurality of pieces of content related information.

More particularly, page information including a list of a plurality of pieces of content identification information is transmitted to a related information successively outputting apparatus in response to a request transmitted thereto from the related information successively outputting apparatus. Then, if requesting information, transmitted from the related information successively outputting apparatus, for a piece of content related information coordinated with a piece of content identification information selected as noticed content information as a result of selection of one of the pieces of content identification information set as a successive output object in the list included in the page information as the noticed content information on the related information successively outputting apparatus is received, then a piece of content related information according to the requesting information is transmitted to the related information successively outputting apparatus. Then, if requesting information, transmitted from the related information successively outputting apparatus, for a piece of content related information coordinated with a piece of content identification information selected newly as noticed content information as a result of automatic selection of a new one of the pieces of content identification information set as a successive output object in the list included in the page information as the noticed content information after the outputting of the content related information comes to an end on the related information successively outputting apparatus is received, then a piece of content related information according to the received requesting information is transmitted to the related information successively outputting apparatus. Consequently, content related information according to requesting information successively transmitted from the related information successively outputting apparatus is automatically and successively transmitted to the related information successively outputting apparatus. As a result, the related information successively providing apparatus can automatically and successively transmit a plurality of pieces of content related information coordinated with a plurality of pieces of content identification information set as a successive output object in the list included in the page information to the related information successively outputting apparatus without the necessity to perform a cumbersome process such as to successively select a piece of content identification information to be provided to the related information successively outputting apparatus from among a plurality of pieces of content related information. As a result, the processing load to the related information successively providing apparatus upon provision of content related information can be reduced significantly.

### BRIEF DESCRIPTION OF THE DRAWINGS

The above and other objects, features and advantages of the present invention will become apparent from the following description and the appended claims, taken in conjunction with the accompanying drawings in which like parts or elements denoted by like reference symbols, wherein:
FIG. 1 is a schematic view showing a general configuration of a music-related service providing system to which the present invention is applied;
FIG. 2 is a block diagram showing a hardware configuration according to functional circuit blocks of a client terminal shown in FIG. 1;
FIG. 3 is a diagrammatic view showing a directory configuration used in the music-related service providing system;
FIG. 4 is a block diagram showing a hardware configuration according to functional circuit blocks of a portal server shown in FIG. 1;
FIG. 5 is a block diagram showing a hardware configuration according to functional circuit blocks of a music data distribution server shown in FIG. 1;
FIG. 6 is a block diagram showing a hardware configuration according to functional circuit blocks of an article selling server shown in FIG. 1;
FIG. 7 is a block diagram showing a hardware configuration according to functional circuit blocks of a radio broadcast information distribution server shown in FIG. 1;
FIG. 8 is a sequence chart illustrating a user authentication processing procedure between the client terminal and the portal server;
FIG. 9 is a sequence chart illustrating a user authentication processing procedure between the client terminal and the music data distribution server;
FIG. 10 is a sequence chart illustrating a music data distribution service providing processing procedure of the music data distribution server;
FIG. 11 is a sequence chart illustrating an article selling service providing processing procedure of the article selling server;
FIG. 12 is a sequence chart illustrating a radio broadcast information (on-air list information) distribution service providing processing procedure (1) of the radio broadcast information distribution server;
FIG. 13 is a sequence chart illustrating a radio broadcast information (now-on-air information) distribution service providing processing procedure (2) of the radio broadcast information distribution server;
FIG. 14 is a block diagram showing a hardware configuration according to hardware circuit blocks of the client terminal;
FIG. 15 is a block diagram showing program modules of the client terminal;
FIG. 16 is a block diagram showing a hardware configuration according to hardware circuit blocks of the music data distribution server;
FIG. 17 is a view illustrating a configuration of tune list information used in the music data distribution server;
FIG. 18 is a schematic view showing a configuration of a tune introduction screen;
FIG. 19 is a schematic view illustrating selection of a tune name on the tune introduction screen;
FIG. 20 is a schematic view illustrating selection (1) of tune names ready for successive outputting on the tune introduction screen;
FIG. 21 is a schematic view illustrating selection (2) of tune names as a successive output object on the tune introduction screen;
FIG. 22 is a schematic view showing a configuration of the tune introduction screen when a play mode is indicated;
FIG. 23 is a schematic view showing a configuration of the tune introduction screen when a repeat play mode and a single repeat play mode are indicated;
FIG. 24 is a schematic view showing a configuration of the tune introduction screen when a shuffle play mode is indicated;
FIG. 25 is a schematic view showing a configuration of the tune introduction screen when a random play mode is indicated;
FIG. 26 is a schematic view showing a configuration of the tune introduction screen when a program play mode is instructed;
FIG. 27 is a schematic view showing a configuration of a details information presentation screen;
FIG. 28 is a sequence chart illustrating a related information successively providing outputting processing procedure;
FIG. 29 is a flow chart illustrating a first related information successively outputting processing procedure;
FIG. 30 is a schematic view showing a configuration of a processing instruction input screen;
FIG. 31 is a flow chart illustrating a second related information successively outputting processing procedure;
FIG. 32 is a flow chart illustrating a third related information successively outputting processing procedure;
FIG. 33 is a flow chart illustrating a fourth related information successively outputting processing procedure;
FIG. 34 is a schematic view showing a configuration of a play mode setting screen;
FIGS. 35 and 36 are flow charts illustrating a fifth related information successively outputting processing procedure;
FIG. 37 is a schematic view showing a configuration of an output control screen;
FIG. 38 is a schematic view showing a configuration of a tune introduction screen upon outputting of preview data;
FIG. 39 is a schematic view showing a configuration of the tune stopping screen upon temporary stopping of preview data;
FIG. 40 is a schematic view showing a configuration of the tune stopping screen upon stopping of outputting of preview data;
FIG. 41 is a schematic view showing a configuration of the tune introduction screen upon preceding skipping of preview data;
FIG. 42 is a schematic view showing a configuration of the tune introduction screen upon succeeding skipping of preview data;
FIG. 43 is a schematic view showing a configuration of the tune introduction screen upon fast rewinding of preview data;
FIG. 44 is a schematic view showing a configuration of the tune introduction screen upon fast forwarding of preview data;
FIGS. 45 and 46 are flow charts illustrating a sixth related information successively outputting processing procedure;
FIG. 47 is a view illustrating a seventh related information successively outputting processing procedure where an arbitrary tune name is selected as noticed tune information by a user;
FIG. 48 is a block diagram showing a hardware configuration according to functional circuit blocks of a related information successively providing apparatus and a related information successively outputting apparatus of another related information successively providing outputting system to which the present invention is applied; and
FIG. 49 is a block diagram showing a hardware configuration according to functional circuit blocks of a related information successively providing apparatus and a related information successively outputting apparatus of a further related information successively providing outputting system to which the present invention is applied.

### DETAILED DESCRIPTION OF THE PREFERRED EMBODIMENTS

In the following, preferred embodiments of the present invention are described with reference to the accompanying drawings.

### [1] First Embodiment

### 1. Music-Related Service Providing System

### 1-1. System Configuration

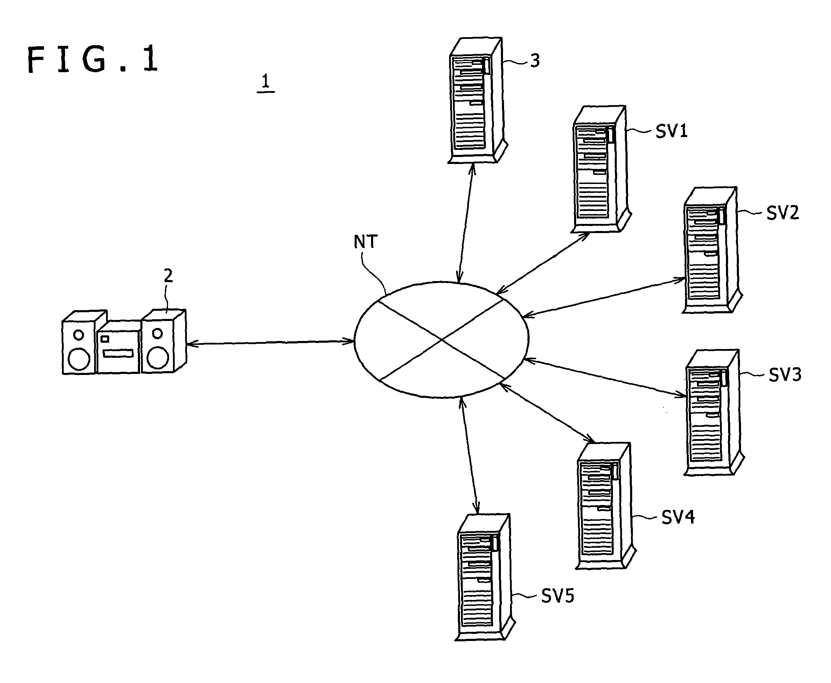

Referring first to FIG. 1, there is shown a music-related service providing system to which the present invention is applied. The music-related service providing system is generally denoted by 1 and includes a client terminal 2 of a user who is under contract with an administrator of the music-related service providing system 1, and a portal server 3 for managing the client terminal 2. The music-related service providing system 1 further includes a plurality of servers SV1 to SV5 which provide various services relating to music to the client terminal 2.

In the present embodiment, the music data distribution server SV1 provides a music data distribution service of distributing music data of the ATRAC3 (Adaptive Transform Acoustic Coding 3), AAC (Advanced Audio Coding), WMA (Windows (trademark) Media Audio), RealAUDIO G2 Music Codec and MP3 (MPEG Audio Layer-3) formats and so forth to the client terminal 2. Meanwhile, the article selling server SV2 provides a merchandizing service of selling articles such as CDs (Compact Disks), DVDs (Digital Versatile Disks) and so forth to the user through the client terminal 2. Further, the radio broadcast information distribution server SV3 provides a radio broadcast information distribution service of distributing radio broadcast information relating to radio programs, music and so forth of radio broadcasts broadcast through a radio station to the client terminal 2.

Further, the Internet radio server SV4 provides an Internet radio broadcast service of broadcasting radio broadcast data in the form of streaming distribution to the client terminal 2 through a network NT which corresponds to the Internet. In addition, the charging server SV5 executes a charging process for charging the user with various fees in accordance with a request from the portal server 3 or the like.

### 1-2. Configuration of the client terminal 2

### 1-2-1. Functional circuit block configuration of the client terminal 2

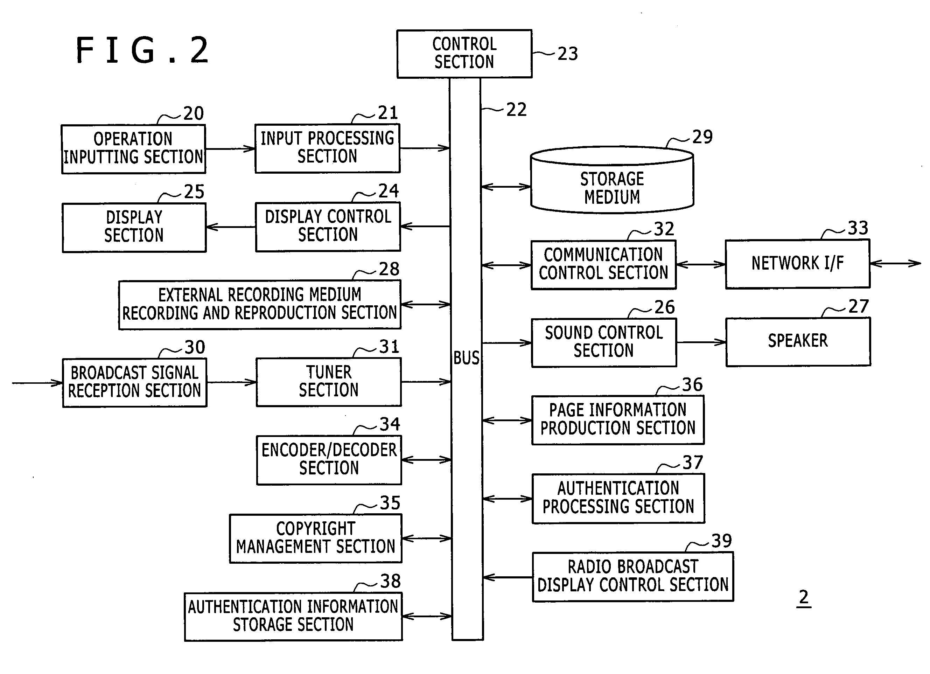

A hardware configuration of functional circuit blocks of the client terminal 2 is described. Referring to FIG. 2, the client terminal 2 includes an operation inputting section 20 which includes various operation buttons provided on the surface of a housing of the client terminal 2 or on a remote controller not shown. If the operation inputting section 20 is operated by the user, then the operation inputting section 20 recognizes this and signals an operation input signal corresponding to the operation to an input processing section 21. The input processing section 21 converts the operation input signal received from the operation inputting section 20 into a particular operation command and signals the operation command to a control section 23 through a bus 22. The control section 23 receives an operation command or a control signal supplied thereto from any of various circuits connected thereto through the bus 22 and controls operation of the circuits in accordance with the operation command or control signal.

A display control section 24 performs a digital to analog conversion process for video data supplied thereto through the bus 22 and signals a resulting analog video signal to a display section 25. The display section 25 may be a display device such as, for example, a liquid crystal display unit and may be attached directly to the surface of the housing or may be provided externally. When a processing result of the control section 23 or various video data are supplied as an analog video signal through the display control section 24 to the display section 25, the display section 25 displays an image based on the analog video signal.

A sound control section 26 performs a digital to analog conversion process for audio data supplied thereto through the bus 22 and signals a resulting analog audio signal to a speaker 27. The speaker 27 outputs sound based on the analog audio signal supplied thereto from the sound control section 26.

An external recording medium recording and reproduction section 28 serves as a recording and reproduction section which reads out and reproduces content data recorded on or in an external recording medium such as a CD or a memory stick (registered trademark) including a flash memory contained in an outer case or records content data of a recording object on or into the external recording medium. When video data are read out as content data from the external recording medium, the external recording medium recording and reproduction section 28 supplies the read out video data to the display control section 24 through the bus 22. Consequently, the display control section 24 converts the video data read out as content data from the external recording medium by the external recording medium recording and reproduction section 28 into an analog video signal and supplies the analog video signal to the display section 25.

On the other hand, when audio data are read out as content data from the external recording medium, the external recording medium recording and reproduction section 28 supplies the read out audio data to the sound control section 26 through the bus 22. Consequently, the sound control section 26 converts the sound data read out as content data from the external recording medium by the external recording medium recording and reproduction section 28 into an analog audio signal and supplies the analog audio signal to the speaker 27.

Further, the control section 23 can signal the content data read out from the external recording medium by the external recording medium recording and reproduction section 28 to a storage medium 29 in the inside of the client terminal 2 through the bus 22 so that the content data are stored into the storage medium 29 (in the following description, storage of content data recorded in the external recording medium into the storage medium 29 in this manner is referred to as ripping). Then, when video data such as image data are read out as content data from the storage medium 29, the control section 23 supplies the read out video data to the display control section 24 through the bus 22. On the other hand, when audio data such as sound data or voice data are read out as content data from the storage medium 29, the control section 23 supplies the read out audio data to the sound control section 26 through the bus 22. In addition, the control section 23 reads out music data from the storage medium 29 and transfers the music data to the external recording medium recording and reproduction section 28 so that the external recording medium recording and reproduction section 28 can record the music data into or on the external recording medium.

A broadcast signal reception section 30 receives radio broadcast waves from radio stations and supplied the received radio broadcast waves to a tuner section 31. The tuner section 31 extracts a radio broadcast signal of a broadcasting frequency corresponding to a radio station designated, for example, through the operation inputting section 20 from among the radio broadcast waves received through the broadcast signal reception section 30 and performs a predetermined reception process for the extracted radio broadcast signal. Then, the tuner section 31 signals audio data obtained as a result of the predetermined reception process to the sound control section 26 through the bus 22. The sound control section 26 converts the audio data supplied thereto from the tuner section 31 into an analog audio signal and signals the analog audio signal to the speaker 27. Consequently, the speaker 27 can output therefrom the broadcast sound of the radio program broadcast from the radio station so that the user can enjoy the program sound of the radio program. Further, the control section 23 can signal audio data obtained by the tuner section 31 to the storage medium 29 so that the program sound of the radio program is recorded into or on the storage medium 29.

Further, the control section 23 can establish a connection to the network NT successively through a communication control section 32 and a network interface (I/F) 33 to access the portal server 3 and the other servers SV1 to SV4 on the network NT. Consequently, the control section 23 transmits and receives various kinds of information and data to and from the portal server 3 and the servers SV1 to SV4.

An encoder/decoder section 34 decodes compression coded content data received successively through the network interface 33 and the communication control section 32 from the network NT or compression coded content data read out from the storage medium 29 or the external recording medium and signals the decoded content data to the display control section 24 and the sound control section 26. Further, the encoder/decoder section 34 compression codes content data not in a compression coded form read out from the external recording medium or audio data and so forth supplied thereto from the tuner section 31 and signals the compression coded content data to the storage medium 29. Consequently, the content data compression-coded by the encoder/decoder section 34 are stored into the storage medium 29 under the control of the control section 23.

A copyright management section 35 produces copyright management information corresponding to content data downloaded from the network NT successively through the network interface 33 and the communication control section 32. The copyright management section 35 further produces copyright management information corresponding to content data read out from the external recording medium by the external recording medium recording and reproduction section 28. The copyright management information produced by the copyright management section 35 is registered in a coordinated relationship with the content data into the storage medium 29 under the control of the control section 23. Further, when content data coordinated with copyright management information is to be checked out between the storage medium 29 and a particular external recording medium or when the content data coordinated with the copyright management information is to be checked in between the particular external recording medium and the storage medium 29, the copyright management section 35 appropriately updates the substance of the copyright management information coordinated with the content data to protect the copyright for the content data.

A page information production section 36 interprets page information of an XML (extensible Markup Language) file, an HTML (Hyper Text Markup Language) or the like received from the network NT successively through the network interface 33 and the communication control section 32 to produce video data for displaying the page information on the display section 25 and signals the produced video data to the display control section 24.

An authentication processing section 37 executes an authentication process including transmission of authentication information to the portal server 3 and other servers SV1 to SV4 on the network NT connected thereto through the network interface 33 successively through the communication control section 32 and the network interface 33. An authentication information storage section 38 stores authentication information necessary for the authentication processing section 37 to access any of the portal server 3 and other servers SV1 to SV4.

A radio broadcast display control section 39 transmits a request signal for requesting radio broadcast information relating to a radio broadcast being currently received for enjoyment by the user to the radio broadcast information distribution server SV3 corresponding to the radio station from which the radio broadcast being currently received is broadcast successively through the communication control section 32 and the network interface 33. As a result, the radio broadcast display control section 39 receives radio broadcast information transmitted from the radio broadcast information distribution server SV3 on the network NT successively through the network interface 33 and the communication control section 32 and signals the received radio broadcast information to the display control section 24. Consequently, the radio broadcast information which includes the name of the radio program being currently received or the title, artist name and so forth of a tune being currently received is displayed on the display section 25.

### 1-2-2. Directory Management

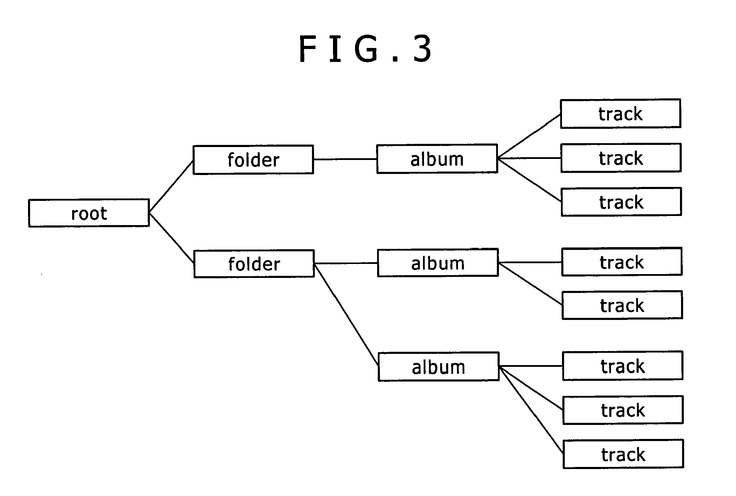

The control section 23 of the client terminal 2 manages content data stored in the storage medium 29 making use of a directory configuration illustrated in FIG. 3. First, an arbitrary number of "folder" directories within a prescribed range are produced in a layer under a "root" directory of the highest layer. Each of the "folder" directories is produced corresponding, for example, to a genre to which a content belongs, a user who owns a content or the like. An arbitrary number of "album" directories within a prescribed range are produced in a layer under any "folder" directory. Each of the "album" directories corresponds, for example, to an album title. In a layer under each "album" directory, one or more "track" files which belong to the "album" directory are stored, and each "track" file makes, for example, music data of one tune, that is, a content. Directory management of such content data is performed using a database file stored in the storage medium 29.

### 1-3. Functional circuit block configuration of the portal server 3

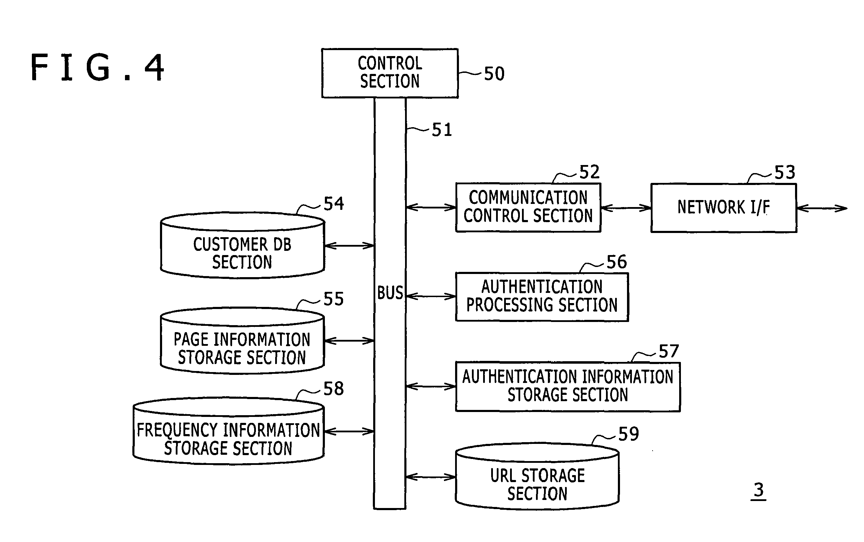

Now, a hardware configuration by functional circuit blocks of the portal server 3 is described with reference to FIG. 4. A control section 50 in the portal server 3 controls operation of circuits connected thereto through a bus 51. A communication control section 52 transmits and receives various kinds of information to and from the client terminal 2 and other servers SV1 to SV5 through a network interface (I/F) 53 under the control of the control section 50. A customer database (DB) section 54 registers user ID (Identification) information and password information of users who already are under completed contract with the administrator of the music-related service providing system 1 in a coordinated relationship with each other. A page information storage section 55 stores page information and so forth to be managed by the administrator of the music-related service providing system 1. It is to be noted that the page information is described in such a language as the XML language and includes URL (Uniform Resource Locator) information for accessing the music data distribution server SV1, article selling server SV2, radio broadcast information distribution server SV3, Internet radio server SV4 and so forth.

An authentication processing section 56 authenticates, as a user authentication process when it receives user ID information and password information transmitted from the client terminal 2 successively through the network interface 53 and the communication control section 52, whether or not the received user ID information and password information are registered as client information in the customer database section 54. Then, when the user authentication process is ended, the authentication processing section 56 issues portal authentication result information (authentication session ID information hereinafter described) representing a result of the user authentication process and temporarily stores the thus issued portal authentication result information into an authentication information storage section 57. At this time, if it is authenticated as a result of the user authentication process by the authentication processing section 56 that the user is an authorized user, then the control section 50 transmits page information for a contractor stored in the page information storage section 55 together with the portal authentication result information to the client terminal 2 successively through the communication control section 52 and the network interface 53. It is to be noted that, if it is not authenticated as a result of the user authentication process by the authentication processing section 56 that the user is an authorized user, then the control section 50 may transmit authentication error information together with authentication failure notification page information representing failure in authentication stored in the page information storage section 55 to the client terminal 2 successively through the communication control section 52 and the network interface 53.

Further, if the authentication processing section 56 receives portal authentication result information (authentication ticket hereinafter described) acquired and transmitted from the client terminal 2 of the user as a result of execution of an authentication process for the user from the music data distribution server SV1, article selling server SV2 or radio broadcast information distribution server SV3 successively through the network interface 53 and the communication control section 52, then the authentication processing section 56 compares the received portal authentication result information and the portal authentication result information corresponding to the user temporarily stored in the authentication information storage section 57 with each other. Consequently, the authentication processing section 56 executes, as an authentication process for the portal authentication result information received from the music data distribution server SV1, article selling server SV2 or radio broadcast information distribution server SV3, a confirmation process for confirming whether or not the received portal authentication result information is regular portal authentication result information. Then, the authentication processing section 56 transmits confirmation result information representative of a result of the confirmation to the music data distribution server SV1, article selling server SV2 or radio broadcast information distribution server SV3 successively through the communication control section 52 and the network interface 53.

A frequency information storage section 58 stores therein district codes such as zip codes according to which a district can be specified, frequency information representative of broadcast frequencies of radio broadcasts which can be received in a district indicated by each of the zip codes, titles (hereinafter referred to as radio station names) of radio stations from which the radio broadcasts are broadcasted, and call signs as identification information unique to the individual radio stations in a coordinated relationship with one another. A URL storage section 59 stores the call signs of the individual radio stations of the radio broadcasts and URL information with which radio broadcast information (hereinafter referred to particularly as now-on-air information) relating to radio programs being currently broadcasted and provided by the radio stations corresponding to the call signs and including the title of a tune being broadcasted at the present point of time in each of the radio programs in a coordinated relationship with each other.

### 1-4. Functional circuit block configuration of the music data distribution server SV1

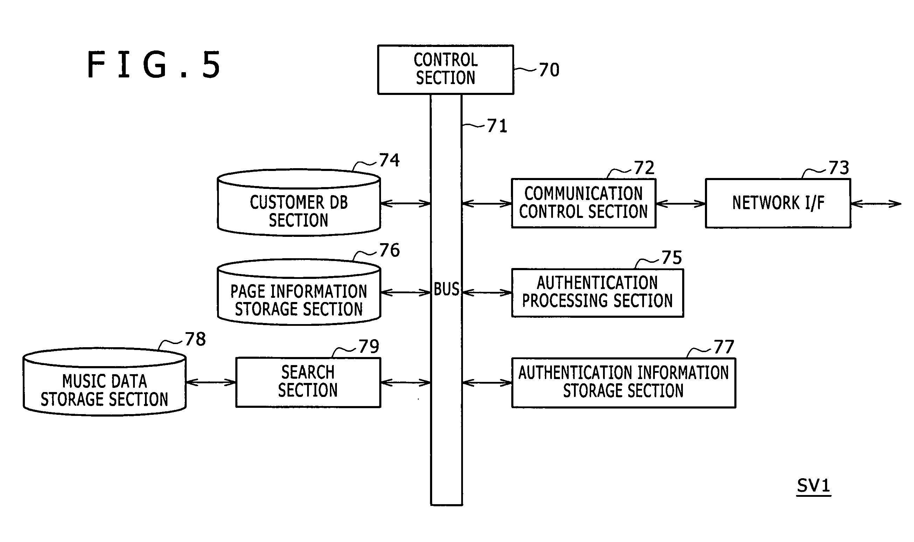

Now, a hardware configuration of functional circuit blocks of the music data distribution server SV1 is described with reference to FIG. 5. The music data distribution server SV1 includes a control section 70 which controls operation of circuits connected thereto through a bus 71. A communication control section 72 transmits various kinds of information, various data such as content data and so forth to or from the client terminal 2, portal server 3 and so forth through a network interface (I/F) 73 under the control of the control section 70. A customer database (DB) section 74 registers therein customer information which includes user ID information and password information of users who already are under contract with the administrator of the music data distribution server SV1 in a coordinated relationship with each other. However, the customer database section 74 need not necessarily be provided if an authentication processing section 75 has a function of authenticating user portal authentication result information issued by the portal server 3 and transmitted from the client terminal 2.

A page information storage section 76 stores page information for music data distribution for introducing music data which are managed by the music data distribution server SV1 and can be downloaded. Incidentally, the page information for music data distribution is described in a language such as the XML language and allows the user who utilizes the client terminal 2 to select music data which the user wants to download. Thus, if the control section 70 receives a page information acquisition request signal transmitted from the client terminal 2 for requesting the page information for music data distribution successively through the network interface 73 and the communication control section 72, then the control section 70 transmits the page information for music data distribution stored in the page information storage section 76 to the client terminal 2 successively through the communication control section 72 and the network interface 73 in accordance with the received page information acquisition request signal.

If the authentication processing section 75 receives user 10 information and the password information of the user, who uses the client terminal 2, transmitted from the client terminal 2 successively through the network interface 73 and the communication control section 72, then the authentication processing section 75 confirms, as a user authentication process, whether or not the user ID information and the password information received are registered as client information in the customer database section 74. Further, as another user authentication technique different from the user authentication process which uses the user ID information and the password information, the authentication processing section 75 receives portal authentication result information (authentication ticket hereinafter described) issued by the portal server 3 and transmitted from the client terminal 2 successively through the network interface 73 and the communication control section 72 and transmits the received portal authentication result information to the portal server 3 successively through the communication control section 72 and the network interface 73. Then, the authentication processing section 75 receives confirmation result information, which is returned from the portal server 3 as a result of execution of a confirmation process (that is, the confirmation process described hereinabove) of the portal authentication result information in response to the transmission of the portal authentication result information to the portal server 3, successively through the network interface 73 and the communication control section 72. Thereafter, the authentication processing section 75 confirms, based on the received confirmation result information, whether or not the user is an authorized user who already is under completed contract with the administrator of the music-related service providing system 1. After the authentication processing section 75 ends the user authentication process in this manner, the authentication processing section 75 issues server authentication result information (service session ID information hereinafter described) indicative of a result of the user authentication process.

At this time, if it is authenticated as a result of the user authentication process by the authentication processing section 75 that the user is an authorized user, then the control section 70 transmits the page information for music data distribution stored for contractors in the page information storage section 76 together with the server authentication result information to the client terminal 2 successively through the communication control section 72 and the network interface 73. On the other hand, if it is not authenticated as a result of the user authentication process by the authentication processing section 75 that the user is an authorized user, then the control section 70 transmits authentication error information together with authentication failure notification page information representative of a failure in authentication stored in the page information storage section 76 to the client terminal 2 successively through the communication control section 72 and the network interface 73. Incidentally, an authentication information storage section 77 temporarily stores server authentication result information issued by the authentication processing section 75 and has stored therein various kinds of authentication information necessary for the authentication processing section 75 to perform a user authentication process for the user who utilizes the client terminal 2.

A music data storage section 78 stores a plurality of music data compression coded in the ATRAC3 format or the MP3 format described hereinabove in a coordinated relationship with search keys such as content ID information of the music data. A search section 79 retains a search key for search for music data desired to be downloaded, which is transmitted from the client terminal 2 in response to transmission of the page information for music data distribution to the client terminal 2. Thus, if the download requesting signal for requesting downloading of music data to be downloaded is received successively through the network interface 73 and the communication control section 72, then the search section 79 extracts the search key from the received download request signal. Then, the search section 79 searches for the music data desired to be downloaded which satisfies the search condition indicated by the search key from among the plural music data in the music data storage section 78 based on the search key. Thus, the control section 70 transmits the searched out music data desired to be downloaded to the client terminal 2 successively through the communication control section 72 and the network interface 73. Further, the control section 70 transmits charging information for charging a fee to the user for the downloading of the music data to the client terminal 2 to the charging server SV5 successively through the communication control section 72 and the network interface 73 so that the charging server SV5 executes a charging process for the downloading of the music data to the user.

### 1-5. Functional circuit block configuration of the article selling server SV2

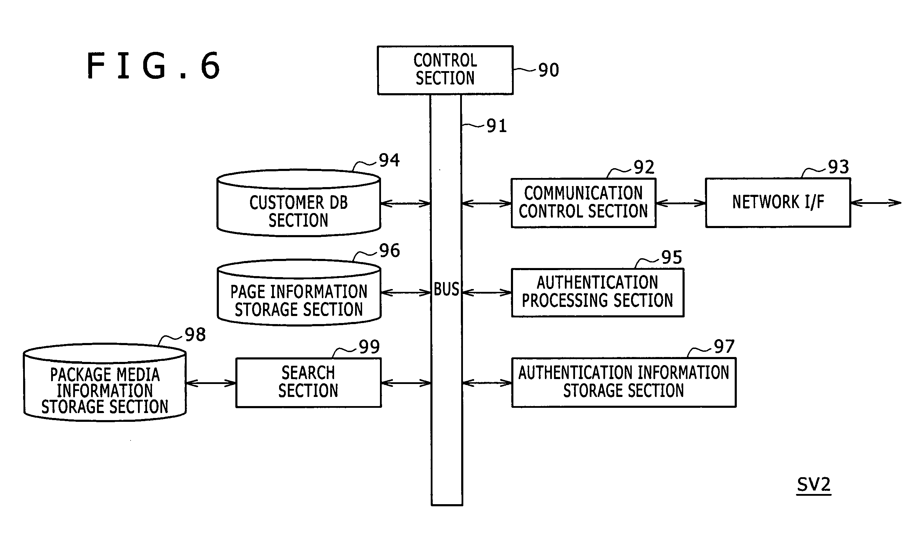

Now, a hardware configuration of functional circuit blocks of the article selling server SV2 is described with reference to FIG. 6. The article selling server SV2 includes a control section 90 which controls operation of circuits connected thereto through a bus 91. A communication control section 92 transmits and receives various kinds of information to and from the client terminal 2, portal server 3 and so forth through a network interface (I/F) 93 under the control of the control section 90. A customer database (DB) section 94 registers user ID information and password information of users who are under completed contract with the administrator of the article selling server SV2 in a coordinated relationship with each other as customer information. However, the customer database section 94 need not necessarily be provided if an authentication processing section 95 has a function of authenticating a user based on portal authentication result information issued by the portal server 3 and transmitted from the client terminal 2.

A page information storage section 96 stores page information and so forth for sales of package media such as CDs and DVDs of an object of sales managed by the article selling server SV2. Incidentally, the page information for package media sales is described in a language such as the XML language and allows the user who uses the client terminal 2 to select a package medium such as a CD or a DVD which the user desires to purchase. Thus, if the control section 90 receives a page information acquisition request signal for requesting the page information for package media sales transmitted from the client terminal 2 successively through the network interface 93 and the communication control section 92, then the control section 90 transmits the page information for package media sales stored in the page information storage section 96 to the client terminal 2 successively through the communication control section 92 and the network interface 93 in accordance with the received page information acquisition request signal.

If the authentication processing section 95 receives the user ID information and the password information of the user, who utilizes the client terminal 2, transmitted from the client terminal 2 successively through the network interface 93 and the communication control section 92, then the authentication processing section 95 confirms, as a user authentication process, whether or not the user ID information and the password information received are registered as customer information in the customer database section 94. Further, the authentication processing section 95 receives, as a user authentication technique different from the user authentication process which uses the user ID information and the password information, portal authentication result information (authentication ticket hereinafter described) issued by the portal server 3 and transmitted from the client terminal 2 successively through the network interface 93 and the communication control section 92 and transmits the received portal authentication result information to the portal server 3 successively through the communication control section 92 and the network interface 93. Then, the authentication processing section 95 receives confirmation result information returned as a result of execution of the authentication process (that is, the authentication process described hereinabove) for portal authentication result information from the portal server 3 in response to the transmission of the portal authentication information to the portal server 3. Then, the authentication processing section 95 confirms, based on the received confirmation result information, whether or not the user is an authorized user who is under completed contract with the administrator of the music-related service providing system 1. After the authentication processing section 95 completes the user authentication process in this manner, the authentication processing section 95 issues server authentication result information (service session ID information hereinafter described) representative of a result of the user authentication process.

At this time, if it is authenticated as a result of the user authentication process by the authentication processing section 95 that the user is an authorized user, then the control section 90 transmits the page information for package media sales stored for contractors in the page information storage section 96 together with the server authentication result information to the client terminal 2 successively through the communication control section 92 and the network interface 93. However, if it is not authenticated as a result of the user authentication process by the authentication processing section 95 that the user is an authorized user, then the control section 90 transmits authentication error information together with authentication failure notification page information representative of a failure in authentication stored in the page information storage section 96 to the client terminal 2 successively through the communication control section 92 and the network interface 93. Incidentally, an authentication information storage section 97 temporarily stores the server authentication result information issued by the authentication processing section 95. Further, various kinds of information necessary to perform a user authentication process of the user who utilizes the client terminal 2 is stored in the authentication processing section 95.

A package media information storage section 98 stores information (hereinafter referred to as package media information) relating a plurality of package media such as CDs and DVDs of an object of sales in a coordinated relationship with search keys such as package media ID information. A search section 99 receives a medium information request signal transmitted from the client terminal 2 as a result of transmitting the page information for package media sales to the client 2. When the medium information request signal for requesting package media information relating to a particular package medium such as a CD or a DVD is received successively through the network interface 93 and the communication control section 92, the search section 99 extracts a search key for search of the particular package medium from within the received medium information request signal. Then, the search section 99 searches for the package media information of the particular package medium which satisfies the search condition indicated by the search key from within the package media information of the plural package media in the package media information storage section 98 based on the search key. Consequently, the control section 90 transmits the thus searched out package media information to the client terminal 2 successively through the communication control section 92 and the network interface 93 thereby to present the package media information relating to the particular package medium to the user. As a result, if the control section 90 receives a purchase request signal for requesting purchase of the particular package medium described above transmitted from the client terminal 2 successively through the network interface 93 and the communication control section 92, then the control section 90 executes a purchase process such as a delivery procedure and so forth of the particular package medium to the user who utilizes the client terminal 2.

Further, the control section 90 transmits charging information for a charging process to the user for the purchase of the particular package medium to the charging server SV5 successively through the communication control section 92 and the network interface 93 so that the charging server SV5 executes a charging process for the purchase of the particular package medium to the user. Further, when the charging process to the user by the charging server SV5 is completed, the control section 90 transmits purchase completion page information representing that the purchase process for the package medium is completed to the client terminal 2 successively through the communication control section 92 and the network interface 93.

### 1-6. Functional circuit block configuration of the radio broadcast information distribution server SV3

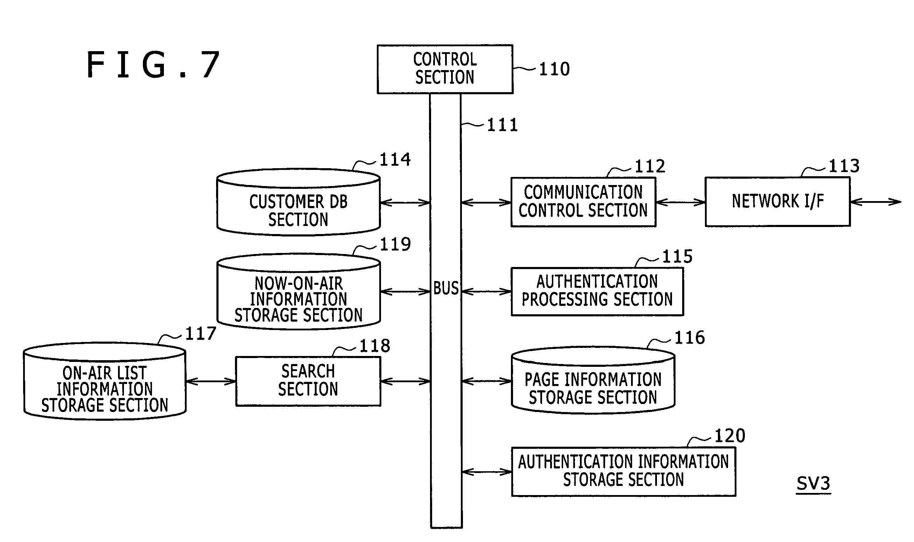

Now, a hardware configuration of functional circuit blocks of the radio broadcast information distribution server SV3 is described with reference to FIG. 7. The radio broadcast information distribution server SV3 includes a control section 110 which controls operation of circuits connected thereto through a bus 111. A communication control section 112 transmits and receives various kinds of information to and from the client terminal 2, portal server 3 and so forth through a network interface (I/F) 113 under the control of the control section 110. A customer database (DB) section 114 registers user ID information and password information of users who are under completed contract with the administrator of the radio broadcast information distribution server SV3 in a coordinated relationship with each other as customer information. However, the customer database section 114 need not necessarily be provided where an authentication processing section 115 has a function of authenticating a user based on portal authentication result information issued by the portal server 3 and transmitted from the client terminal 2.

A page information storage section 116 stores page information and so forth for on-air list information distribution to be utilized for acquisition of radio broadcast information (hereinafter referred to as on-air list information) relating to radio programs broadcasted already by the radio station corresponding to the radio broadcast information distribution server SV3. Incidentally, the page information for on-air list information distribution is described in a language such as the XML language and includes an input box and so forth for allowing the user who utilizes the client terminal 2 to input any of broadcast date and hour information, program names and so forth of the radio programs as a search key for on-air list information desired to acquire. An on-air list information storage section 117 stores on-air list information produced by placing the program name, program broadcasting starting time, program broadcasting ending time and so forth of each of the radio programs broadcasted already from the radio station corresponding to the radio broadcast information distribution server SV3, the title, artist name, tune broadcasting starting time and so forth of each of tunes broadcasted in the radio program into a list.

Then, if the control section 110 receives a page information acquisition request signal for requesting the page information for on-air list information distribution transmitted from the client terminal 2 successively through the network interface 113 and the communication control section 112, then the control section 110 transmits the page information for on-air list information distribution stored in the page information storage section 116 to the client terminal 2 successively through the communication control section 112 and the network interface 113 in accordance with the received page information acquisition request signal. As a result, if a search section 118 receives an on-air list information request signal successively through the network interface 113 and the communication control section 112 from the client terminal 2, from which the on-air list information request signal, in which a search key for search for on-air list information desired to acquire inputted on the page information for on-air list information distribution is placed and which indicates a request for downloading of the on-air list information, is transmitted, then the search section 118 extracts the search key from within the received on-air list information request signal. Then, the search section 118 searches, based on the search key, the entire on-air list information in the on-air list information storage section 117 for a predetermined range portion corresponding to the search condition indicated by the search key as on-air list information desired to acquire. Consequently, the control section 110 transmits the searched out on-air list information desired to acquire to the client terminal 2 successively through the communication control section 112 and the network interface 113.

A now-on-air information storage section 119 stores now-on-air information including the program name, program broadcasting starting time and program broadcasting ending time of a radio program being currently broadcasted from the radio station corresponding to the radio broadcast information distribution server SV3, the title, artist name, tune broadcasting starting time and so forth of a tune being currently broadcasted in the radio program, and so forth. Then, if the now-on-air information storage section 119 receives the user ID information and the password information of the user, who utilizes the client terminal 2, transmitted from the client terminal 2 together with a now-on-air information request signal for requesting acquisition of the now-on-air information successively through the network interface 113 and the communication control section 112, then the now-on-air information storage section 119 confirms, as a user authentication process, whether or not the user ID information and the password information received are registered as customer information in the customer database section 114.

Further, the authentication processing section 115 receives, as a user authentication technique different from the user authentication process which uses the user ID information and the password information, portal authentication result information (authentication ticket hereinafter described) issued by the portal server 3 and transmitted from the client terminal 2 successively through the network interface 113 and the communication control section 112 and transmits the received portal authentication result information to the portal server 3 successively through the communication control section 112 and the network interface 113. Then, the authentication processing section 115 receives confirmation result information returned as a result of execution of an authentication process (that is, the confirmation process described hereinabove) for portal authentication result information from the portal server 3 in response to the transmission of the portal authentication information to the portal server 3. Then, the authentication processing section 115 confirms, based on the received confirmation result information, whether or not the user is an authorized user who is under completed contract with the administrator of the music-related service providing system 1. After the authentication processing section 115 completes the user authentication process in this manner, the authentication processing section 115 issues server authentication result information (service session ID information hereinafter described) representative of a result of the user authentication process.

At this time, if it is authenticated as a result of the user authentication process by the authentication processing section 115 that the user is an authorized user, then the control section 110 transmits the now-on-air information stored in the now-on-air information storage section 119 together with the server authentication result information to the client terminal 2 successively through the communication control section 112 and the network interface 113. However, if it is not authenticated as a result of the user authentication process by the authentication processing section 115 that the user is an authorized user, then the control section 110 transmits authentication error information together with authentication failure notification page information representative of a failure in authentication stored in the page information storage section 116 to the client terminal 2 successively through the communication control section 112 and the network interface 113. In this manner, when a request for acquisition of now-on-air information is received from the user, if it is authenticated that the user is an authorized user, then the control section 110 distributes the now-on-air information, but if it is not authenticated that the user is an authorized user, then the control section 110 inhibits the user from enjoying the radio broadcast information distribution service provided by the radio broadcast information distribution server SV3 such as a distribution service of the now-on-air information. Incidentally, an authentication information storage section 120 temporarily stores the server authentication result information issued by the authentication processing section 115. Further, various kinds of authentication necessary to perform a user authentication process of the user who utilizes the client terminal 2 is stored in the authentication processing section 115.

### 1-7. Outline of processes of the servers

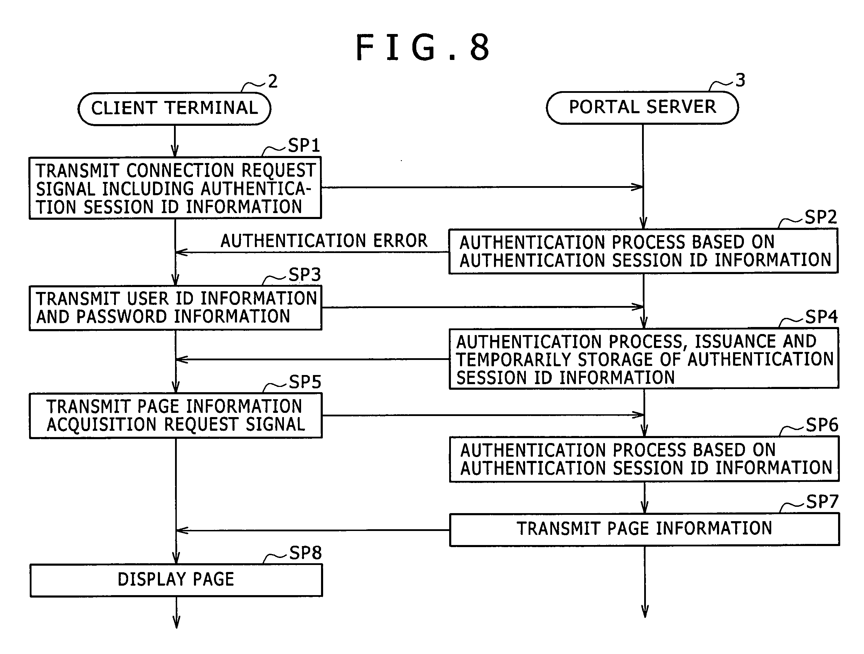

Now, an outline of processes executed between the client terminal 2 and the portal server 3 and processes executed between the client terminal 2 and the other music data distribution server SV1, article selling server SV2 and radio broadcast information distribution server SV3 is described with reference to sequence charts of FIGS. 8 to 13.

### 1-7-1. User authentication processing procedure between the client terminal 2 and the portal server 3

First, the user authentication processing procedure executed between the client terminal 2 and the portal server 3 is described with reference to FIG. 8. The control section 23 of the client terminal 2 of the user who is under contract with the administrator of the music-related service providing system 1 starts an authentication request process when an operation input signal recognized by the operation inputting section 20, for example, in response to an operation performed to connect the power supply to the client terminal 2 or in response to depression of a particular operation button of the operation inputting section 20 by the user is converted by the input processing section 21 into and supplied as an operation command to the control section 23.

At step SP1 after the client terminal 2 starts the authentication request process, the control section 23 produces a connection request signal in which authentication session ID information and so forth temporarily stored in advance in the authentication information storage section 38 are placed. Then, the control section 23 transmits the produced connection request signal to the portal server 3 successively through the communication control section 32 and the network interface 33. Incidentally, the authentication session ID information is identification information issued by the portal server 3 for identification of an individual communication connection state (that is, session) every time the client terminal 2 and the portal server 3 are connected for communication to each other in order to execute various processes such as the user authentication process. It is to be noted that, with regard to the authentication session ID information, a predetermined term of validity (for example, approximately one minute) with reference to the point of time of the issuance by the portal server 3 is set for the utilization in the user authentication process and so forth.

Accordingly, if the client terminal 2 which acquires the authentication session ID information from the portal server 3 cannot present the authentication session ID information to the portal server 3 within the term of validity, then the client terminal 2 decides that the communication connection state specified with the authentication session ID information is disconnected by the portal server 3. Consequently, the portal server 3 prevents authentication session ID information issued in the past from being utilized without any authorization in a user authentication process and so forth by any user who is not under contract with the administrator of the music-related service providing system 1. Further, the authentication session ID information temporarily stored in the authentication information storage section 38 was issued by the portal server 3 when the client terminal 2 and the portal server 3 were connected for communication to each other to execute a user authentication process or the like formerly.

After the connection request signal is transmitted from the client terminal 2, the control section 50 of the portal server 3 receives, at step SP2, the connection request signal successively through the network interface 53 and the communication control section 52 and signals the authentication session ID information and so forth placed in the received connection request signal to the authentication processing section 56. Then, the authentication processing section 56 executes a user authentication process based on the authentication session ID information and so forth received as the connection request signal from the client terminal 2 under the control of the control section 50. As a result, if the authentication processing section 56 fails to authenticate that the user who utilizes the client terminal 2 is an authorized user because the term of validity of the authentication session ID information and so forth received from the client terminal 2 has expired or from some other reason, then the control section 50 transmits authentication error information representative of an authentication error to the client terminal 2 successively through the communication control section 52 and the network interface 53.

At step SP3, the control section 23 of the client terminal 2 receives the authentication error information transmitted from the portal server 3 successively through the network interface 33 and the communication control section 32 and reads out the user ID information, password information and so forth stored in the authentication information storage section 38 in response to the authentication error information. Then, the control section 23 transmits the thus read out user ID information, password information and so forth to the portal server 3 successively through the communication control section 32 and the network interface 33.

At step SP4, the control section 50 of the portal server 3 receives the user ID information, password information and so forth transmitted from the client terminal 2 successively through the network interface 53 and the communication control section 52 and signals the received user ID information, password information and so forth to the authentication processing section 56. Consequently, the authentication processing section 56 detects, as a user authentication process, whether or not the user ID information, password information and so forth received from the client terminal 2 are included in the client information registered in the customer database section 54 under the control of the control section 50. As a result, if the authentication processing section 56 authenticates that the user who utilizes the client terminal 2 is an authorized user, then the authentication processing section 56 issues authentication session information and so forth for the communication correction state between the client terminal 2 and the portal server 3 at the present point of time as portal authentication result information under the control of the control section 50 and temporarily stores the authentication session ID information and so forth issued to the client terminal 2 into the authentication information storage section 57. Then, the control section 50 transmits the authentication session ID information and so forth issued to the client terminal 2 by the authentication processing section 56 to the client terminal 2 successively through the communication control section 52 and the network interface 53.

At step SP5, the control section 23 of the client terminal 2 receives the authentication session ID information and so forth transmitted from the portal server 3 successively through the network interface 33 and the communication control section 32 and signals the received authentication session ID information and so forth to the authentication processing section 37. Then, the authentication processing section 37 temporarily stores the authentication session ID information and so forth received from the portal server 3 into the authentication information storage section 38 under the control of the control section 23. Consequently, the control section 23 transmits a page information acquisition request signal for requesting the page information to the portal server 3 together with the authentication session ID information and so forth received from the portal server 3 and temporarily stored in the authentication information storage section 38 to the portal server 3 successively through the communication control section 32 and the network interface 33.

At step SP6, the control section 50 of the portal server 3 receives the page information acquisition request signal, authentication session ID information and so forth transmitted from the client terminal 2 successively through the network interface 53 and the communication control section 52 and signals the received authentication session ID information and so forth to the authentication processing section 56. Consequently, the authentication processing section 56 compares the authentication session ID information and so forth received from the client terminal 2 and the authentication session ID information and so forth issued to the client terminal 2 and temporarily stored in the authentication information storage section 57 at step SP4 described hereinabove with each other to execute a user authentication process under the control of the control section 50.

As a result, at step SP7, if the authentication processing section 56 authenticates that the user who utilizes the client terminal 2 is an authorized user, then the authentication processing section 56 decides that the acquisition request for page information from the client terminal 2 is a regular request and extends the term of validity of the authentication session ID information and so forth issued to the client terminal 2. Consequently, the control section 50 reads out the page information whose acquisition is requested by the user from the page information storage section 55 and transmits the read out page information together with the authentication session ID information and so forth whose term of validity is elongated by the authentication processing section 56 to the client terminal 2 successively through the communication control section 52 and the network interface 53.

At step SP8, the control section 23 of the client terminal 2 receives the page information and the authentication session ID information and so forth, which have the extended term of validity, transmitted from the portal server 3 successively through the network interface 33 and the communication control section 32 and signals the received page information to the page information production section 36. Further, the control section 23 signals the authentication session ID information having the extended term of validity to the authentication processing section 37. The page information production section 36 produces, based on the page information received from the control section 23, video data of a page in which links to the music data distribution server SV1, the article selling server SV2 and the radio broadcast information distribution server SV3 are embedded, and signals the produced video data to the display control section 24. Consequently, the display control section 24 applies a digital to analog conversion process to the video data received from the page information production section 36 and signals the resulting analog video signal to the display section 25 so that the page of the portal server 3 is displayed as an image based on the analog video signal on the display section 25. Further, the authentication processing section 37 temporarily stores the authentication session ID information and so forth having the extended term of validity received from the portal server 3 into the authentication information storage section 38 under the control of the control section 23 such that the authentication session ID information and so forth are overwritten on the authentication session ID information and so forth whose term of validity is not extended as yet. Consequently, the authentication session ID information and so forth temporarily stored at step SP5 described hereinabove are updated with the authentication session ID information and so forth whose term of validity is extended.

### 1-7-2. User authentication processing procedure between the client terminal 2 and any of the servers SV1 to SV3

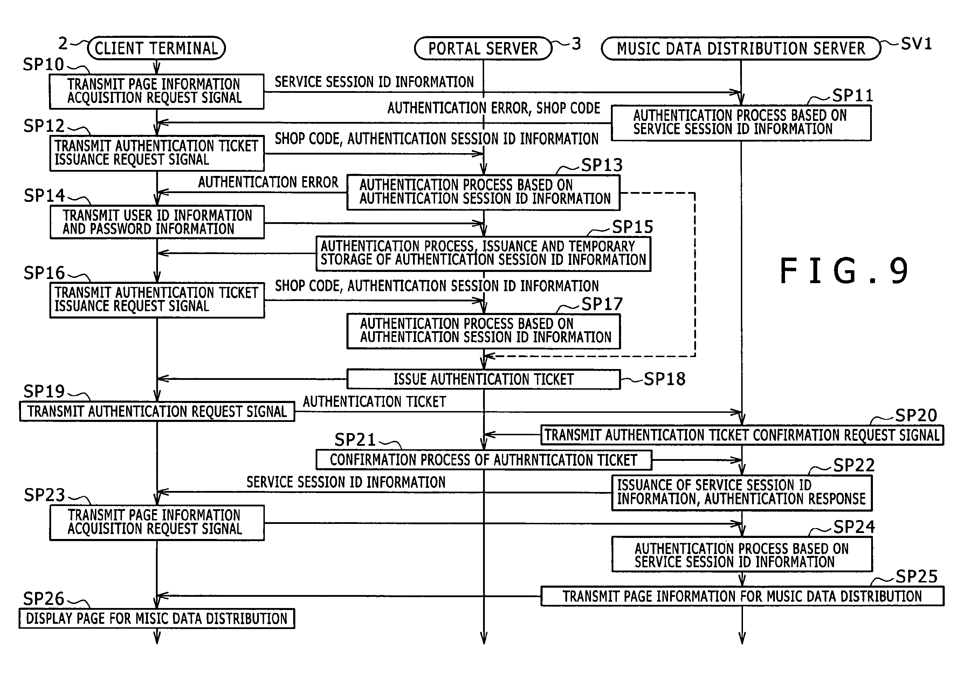

Now, a user authentication process executed between the client terminal 2 and any of the music data distribution server SV1, article selling server SV2 and radio broadcast information distribution server SV3 is described below with reference FIG. 9.

In this instance, the user authentication process may be a user authentication process (hereinafter referred to as indirect access authentication process) which is executed when the client terminal 2 acquires page information once from the portal server 3 in such a manner as described above with reference to FIG. 8 and then accesses the music data distribution server SV1, article selling server SV2 or radio broadcast information distribution server SV3 through a link embedded in the page information. Or, the user authentication process may be a user authentication process (hereinafter referred to as direct access authentication process) which is executed when the client terminal 2 directly accesses the music data distribution server SV1, article selling server SV2 or radio broadcast information distribution server SV3 based on URL information or the like registered as a bookmark in advance without acquiring page information of the portal server 3.

However, the indirect access authentication process can be executed in a similar procedure with whichever one of the music data distribution server SV1, article selling server SV2 and radio broadcast information distribution server SV3 is combined with the client terminal 2. Also the direct access authentication process can be executed in a similar procedure with whichever one of the music data distribution server SV1, article selling server SV2 and radio broadcast information distribution server SV3 the client terminal 2 is combined. Then, the indirect access authentication process and the direct access authentication process are different from each other only in the manner of acquisition of URL information to be used by the client terminal 2 for accessing to the music data distribution server SV1, article selling server SV2 or radio broadcast information distribution server SV3, but after the URL information is acquired, both of the indirect access authentication process and the direct access authentication process can be executed in procedures similar to each other. Accordingly, in the following description, the music data distribution server SV1 is used as a representative as an accessing destination of the client terminal 2 for simplified description, and further, the indirect access authentication process and the direct access authentication process are described collectively as one user authentication process.

First at step SP10, the control section 23 of the client terminal 2 transmits service session ID information and so forth read out from the authentication information storage section 38 together with the page information for music data distribution (for the other article selling server SV2 or radio broadcast information distribution server SV3, the page information for package media sales or the page information for on-air list information distribution) to the music data distribution server SV1 successively through the communication control section 32 and the network interface 33 in accordance with URL information embedded as a link in the link information or URL information or the like registered already as a bookmark. Incidentally, the service session ID information is identification information which is issued by the music data distribution server SV1, article selling server SV2 or radio broadcast information distribution server SV3 accessed by the client terminal 2 and used for identification of an individual communication connection state (that is, session) every time the client terminal 2 and the music data distribution server SV1, article selling server SV2 or radio broadcast information distribution server SV3 establish a connection for communication therebetween in order to execute various processes such as a user authentication process. It is to be noted that the service session ID information has a predetermined term of validity (for example, approximately one minute) set with reference to the point of time at which the service session ID information is issued by the music data distribution server SV1, article selling server SV2 or radio broadcast information distribution server SV3 for the utilization of a user authentication process or the like.

Accordingly, if the client terminal 2 which acquires the service session ID information from any of the servers SV1 to SV3 cannot present the service session ID information to the music data distribution server SV1, article selling server SV2 or radio broadcast information distribution server SV3 of the source of issuance of the service session ID information, then the client terminal 2 decides that the communication connection state specified with the service session ID information is disconnected by the music data distribution server SV1, article selling server SV2 or radio broadcast information distribution server SV3 of the source of issuance. Consequently, the music data distribution server SV1, article selling server SV2 and radio broadcast information distribution server SV3 prevent the service session ID information issued in the past from being utilized without any authorization in a user authentication process or the like by any user who is not under contract with the administrator of the music-related service providing system 1. Further, the service session ID information temporarily stored in the authentication information storage section 38 was issued by the music data distribution server SV1, article selling server SV2 or radio broadcast information distribution server SV3 of the accessing designation when the client terminal 2 and the music data distribution server SV1, article selling server SV2 or radio broadcast information distribution server SV3 were connected for communication to each other in order to execute a user authentication process or the like formerly.

At step SP11, the control section 70 of the music data distribution server SV1 receives the page information acquisition request signal, service session ID information and so forth transmitted from the client terminal 2 successively through the network interface 73 and the communication control section 72 and signals the received service session ID information and so forth to the authentication processing section 75. The authentication processing section 75 compares the service session ID information and so forth received from the client terminal 2 and the service session ID information and so forth already stored temporarily in the authentication information storage section 77 with each other to execute a user authentication process under the control of the control section 70. As a result, if the authentication processing section 75 fails to authenticate that the user who utilizes the client terminal 2 is an authorized user, for example, because the term of validity of the service session ID information received from the client terminal 2 has expired already, then the authentication processing section 75 decides that the request for acquisition of the page information for music data distribution from the client terminal 2 is not a regular request. Then, if it is not authenticated by the authentication processing section 75 that the user who utilizes the client terminal 2 is an authorized user, then the control section 70 transmits authentication error information representative of an error in authentication and a shop code for identification of the music data distribution server SV1 to the client terminal 2 successively through the communication control section 72 and the network interface 73.

At step SP12, the control section 23 of the client terminal 2 receives the authentication error information and the shop code transmitted from the music data distribution server SV1 successively through the network interface 33 and the communication control section 32. Further, the control section 23 recognizes from the received authentication error information that the user has not been authenticated as an authorized user by the music data distribution server SV1, and temporarily stores the shop code received from the music data distribution server SV1 into the authentication information storage section 38. Then, the control section 23 produces an authentication ticket issuance request signal for requesting issuance of an authentication ticket to be used to access the music data distribution server SV1 to the portal server 3. Further, the control section 23 transmits the produced authentication ticket issuance request signal together with the shop code of the music data distribution server SV1 and the authentication session ID information and so forth received from the portal server 3 already and temporarily stored in the authentication information storage section 38 to the portal server 3 successively through the communication control section 32 and the network interface 33.

At step SP13, the control section 50 of the portal server 3 receives the authentication ticket issuance request signal, shop code, service session ID information and so forth transmitted from the client terminal 2 successively through the network interface 53 and the communication control section 52 and signals the received information to the authentication processing section 56. As a result, the authentication processing section 56 decides that, for example, if the term of validity of the authentication session ID information received from the client terminal 2 has expired already and it cannot be authenticated that the user who utilizes the client terminal 2 is an authorized user, then the request for issuance of an authentication ticket from the client terminal 2 is not a regular request. Then, if it is not authenticated by the authentication processing section 56 that the user who utilizes the client terminal 2 is an authorized user, then the control section 50 transmits authentication error information representative of an error in authentication to the client terminal 2 successively through the communication control section 52 and the network interface 53. On the other hand, if the authentication processing section 56 authenticates that user who utilizes the client terminal 2 is an authorized user, for example, because the term of validity of the authentication session ID information received from the client terminal 2 has not expired as yet, then the authentication processing section 56 decides that the request for issuance of an authentication ticket from the client terminal 2 is a regular request. Then, if it is authenticated by the authentication processing section 56 that the user who utilizes the client terminal 2 is an authorized user, then the control section 50 advances its processing to step SP18 hereafter described.

At step SP14, the control section 23 of the client terminal 2 receives the authentication error information transmitted from the portal server 3 successively through the network interface 33 and the communication control section 32 and reads out the user ID information, password information and so forth stored in the authentication information storage section 38. Further, the control section 23 transmits the read out user ID information, password information and so forth to the portal server 3 successively through the communication control section 32 and the network interface 33.

At step SP15, the control section 50 of the portal server 3 receives the user ID information, password information and so forth transmitted from the client terminal 2 successively through the network interface 53 and the communication control section 52 and signals the received user ID information, password information and so forth to the authentication processing section 56. Consequently, the authentication processing section 56 detects under the control of the control section 50 whether or not the user ID information, password information and so forth received from the client terminal 2 are included in the customer information registered in the customer database section 54 to execute a user authentication process. As a result, if the authentication processing section 56 confirms that the user who utilizes the client terminal 2 is an authorized user, then the authentication processing section 56 issues authentication session ID information and so forth with regard to the communication connection state between the client terminal 2 and the portal server 3 at the present point of time as portal authentication result information under the control of the control section 50. Further, the authentication processing section 56 temporarily stores the authentication session ID information and so forth issued to the client terminal 2 into the authentication information storage section 57 under the control of the control section 50. Then, the control section 50 transmits the authentication session ID information and so forth issued to the client terminal 2 by the authentication processing section 56 to the client terminal 2 successively through the communication control section 52 and the network interface 53.

At step SP16, the control section 23 of the client terminal 2 receives the authentication session ID information and so forth transmitted from the portal server 3 successively through the network interface 33 and the communication control section 32 and temporarily stores the received authentication session ID information and so forth into the authentication information storage section 38 by the authentication processing section 37. Then, the control section 23 produces an authentication ticket issuance request signal for requesting issuance of an authentication ticket to the portal server 3 again and transmits the produced authentication ticket issuance request signal together with the shop code temporarily stored already in the authentication information storage section 38 and the authentication session ID information and so forth stored temporarily at this time to the portal server 3 successively through the communication control section 32 and the network interface 33.

Here, while, in the present embodiment, the shop code is temporarily stored in the authentication information storage section 38 of the client terminal 2, it need not necessarily be stored in this manner, but when the processes at steps SP12 to SP16 are executed between the client terminal 2 and the portal server 3, if the shop code is transmitted and received, then the shop code can be transmitted to the portal server 3 at step SP16 even if the shop code is not temporarily stored into the authentication information storage section 38 of the client terminal 2.

At step SP17, the control section 50 of the portal server 3 receives the authentication ticket issuance request signal, shop code, authentication session ID information and so forth transmitted from the client terminal 2 successively through the network interface 53 and the communication control section 52 and signals the received signal and so forth to the authentication processing section 56. Consequently, the authentication processing section 56 compares the authentication session ID information and so forth received from the client terminal 2 and the authentication session ID information temporarily stored already in the authentication information storage section 57 with each other to execute a user authentication process under the control of the control section 50. As a result, if the authentication processing section 56 authenticates that the user who utilizes the client terminal 2 is an authorized user, for example, because the term of validity of the authentication session ID information and so forth received from the client terminal 2 does not expire as yet, then the authentication processing section 56 decides that the request for issuance of an authentication ticket from the client terminal 2 is a regular request. Then, if it is authenticated by the authentication processing section 56 that the user who utilizes the client terminal 2 is an authorized user, then the control section 50 advances its processing to step SP18.

At step SP18, the authentication processing section 56 issues, based on the shop code and the authentication ticket issuance request signal received from the client terminal 2 at step SP17 described hereinabove, an authentication ticket or the like as portal authentication result information which enables accessing to the music data distribution server SV1 indicated by the shop code under the control of the control section 50.. Then, the authentication processing section 56 temporarily stores the issued authentication ticket or the like into the authentication information storage section 57 and extends the term of validity of the authentication session ID information and so forth having been issued to the client terminal 2 under the control of the control section 50. Consequently, the control section 50 transmits the authentication ticket or the like together with the authentication session ID information and so forth having the term of validity extended by the authentication processing section 56 to the client terminal 2 successively through the communication control section 52 and the network interface 53.

At step SP19, the control section 23 of the client terminal 2 receives the authentication ticket or the like, the authentication session ID information having the extended term of validity and so forth transmitted from the portal server 3 successively through the network interface 33 and the communication control section 32 and signals the received authentication session ID information to the authentication processing section 37. Then, the control section 23 transmits the authentication ticket or the like received from the portal server 3 together with an authentication request signal to the music data distribution server SV1 successively through the communication control section 32 and the network interface 33. Further, the authentication processing section 37 temporarily stores the authentication session ID information having the extended term of validity and so forth received from the portal server 3 into the authentication information storage section 38 under the control of the control section 23 such that the authentication session ID information and so forth before the term of validity is extended are overwritten thereby to update the authentication session ID information and so forth temporarily stored at step SP16 described hereinabove into the authentication session ID information and so forth having the extended term of validity.

At step SP20, the control section 70 of the music data distribution server SV1 receives the authentication request signal, authentication ticket and so forth transmitted from the client terminal 2 successively through the network interface 73 and the communication control section 72. Then, the control section 70 transmits the authentication ticket and so forth received from the client terminal 2 together with an authentication ticket confirmation request signal for requesting confirmation of the authentication ticket or the like to the portal server 3 successively through the communication control section 72 and the network interface 73.

At step SP21, the control section 50 of the portal server 3 receives the authentication ticket confirmation request signal, authentication ticket and so forth transmitted from the music data distribution server SV1 successively through the network interface 53 and the communication control section 52 and signals the received authentication ticket confirmation request signal, authentication ticket and so forth to the authentication processing section 56. Then, the authentication processing section 56 compares the authentication ticket and so forth received from the music data distribution server SV1 with the authentication ticket and so forth temporarily stored already in the authentication information storage section 57 in response to the authentication ticket confirmation request signal under the control of the control section 50 to execute a confirmation process for the authentication ticket received from the music data distribution server SV1. As a result, if it is confirmed by the authentication processing section 56 that the authentication ticket and so forth received from the music data distribution server SV1 are a regular authentication ticket and so forth, then the control section 50 transmits confirmation result information representing that it is confirmed that the authentication ticket and so forth are a regular authentication ticket and so forth to the music data distribution server SV1 successively through the communication control section 52 and the network interface 53.

At step SP22, the control section 70 of the music data distribution server SV1 receives the confirmation result information transmitted from the portal server 3 successively through the network interface 73 and the communication control section 72 and signals the received confirmation result information to the authentication processing section 75. Consequently, the authentication processing section 75 issues service session ID information and so forth for the communication connection state between the client terminal 2 and the music data distribution server SV1 at the present point of time as server authentication result information in response to the confirmation result information under the control of the control section 70. Further, the authentication processing section 75 temporarily stores the issued service session ID information and so forth into the authentication information storage section 77. Further, the control section 70 transmits the service session ID information and so forth issued to the client terminal 2 by the authentication processing section 75 to the client terminal 2 successively through the communication control section 72 and the network interface 73.

At step SP23, the control section 23 of the client terminal 2 receives the service session ID information and so forth transmitted from the music data distribution server SV1 successively through the network interface 33 and the communication control section 32 and temporarily stores the received service session ID information and so forth into the authentication information storage section 38 by means of the authentication processing section 37. Consequently, the control section 23 transmits a page information acquisition request signal for requesting the page information for music data distribution together with the service session ID information and so forth received from the music data distribution server SV1 and temporarily stored in the authentication information storage section 38 to the music data distribution server SV1 successively through the communication control section 32 and the network interface 33.

At step SP24, the control section 70 of the music data distribution server SV1 receives the page information acquisition request signal, service session ID information and so forth transmitted from the client terminal 2 successively through the network interface 73 and the communication control section 72 and signals the received service session ID information and so forth to the authentication processing section 75. Consequently, the authentication processing section 75 compares the service session ID information and so forth received from the client terminal 2 with the service session ID information and so forth issued already to the client terminal 2 at step SP22 described hereinabove and temporarily stored in the authentication information storage section 77 to execute a user authentication process under the control of the control section 70. As a result, if the authentication processing section 75 authenticates that the user who utilizes the client terminal 2 is an authorized user, for example, because the term of validity of the service session ID information and so forth received from the client terminal 2 does not expire as yet, then the authentication processing section 75 decides that the request for acquisition of the page information for music data distribution from the client terminal 2 is a regular request. Then, if it is authenticated by the authentication processing section 75 that the user who utilizes the client terminal 2 is an authorized user, then the control section 70 advances its processing to next step SP25.

At step SP25, the control section 70 reads out the page information for music data distribution whose acquisition is requested by the user and controls the authentication processing section 75 to extend the term of validity of the service session ID information and so forth issued to the client terminal 2. Then, the control section 70 transmits the page information for music data distribution read out from the page information storage section 76 together with the service session ID information and so forth having the term of validity extended by the authentication processing section 75 to the client terminal 2 successively through the communication control section 72 and the network interface 73.

At step SP26, the control section 23 of the client terminal 2 receives the page information for music data distribution, the service session ID information having the extended term of validity and so forth transmitted from the music data distribution server SV1 successively through the network interface 33 and the communication control section 32. Then, the control section 23 transmits the received page information for music data distribution to the page information production section 36 and signals the service session ID information and so forth received from the music data distribution server SV1 to the authentication processing section 37. Consequently, the authentication processing section 37 temporarily stores the service session ID information and so forth having the extended term of validity and received from the music data distribution server SV1 into the authentication information storage section 38 under the control of the control section 23 so that the service session ID information and so forth whose term of validity is not extended are overwritten, thereby to update the service session ID information and so forth temporarily stored at step SP23 described hereinabove into the service session ID information and so forth having the extended term of validity. Further, the page information production section 36 produces video data based on the page information for music data distribution and signals the produced video data to the display control section 24. Consequently, the display control section 24 performs a digital to analog conversion process for the video data supplied thereto from the page information production section 36 and signals a resulting analog video signal to the display section 25 so that a page for music data distribution is displayed as an image based on the analog video signal on the display section 25.

### 1-7-3. Music-related service providing process

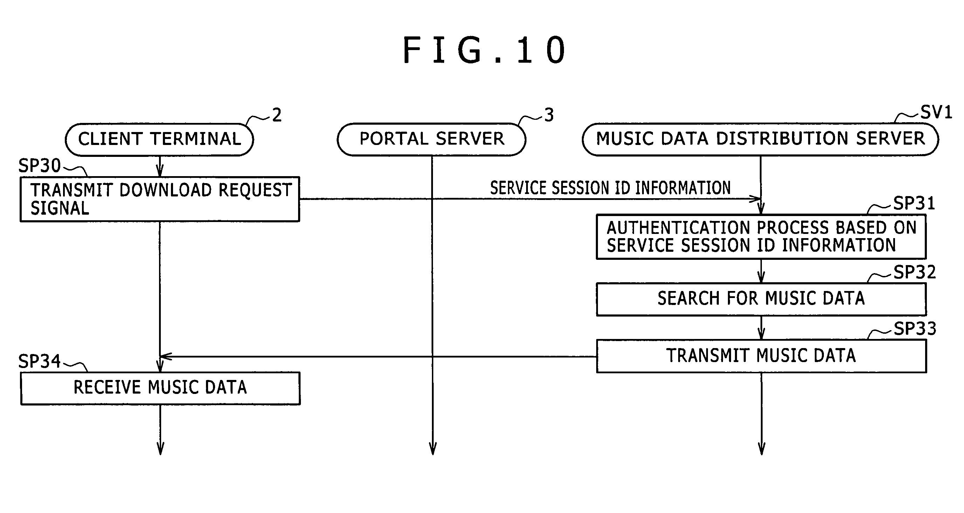

Now, description is given, with reference to FIGS. 10 to 13, of a music-related service providing process when, after the user authentication processing procedure executed between the client terminal 2 and the music data distribution server SV1, article selling server SV2 or radio broadcast information distribution server SV3 described hereinabove with reference to FIG. 9 comes to an end, the client terminal 2 utilizes the page information for music data distribution, page information for package media sales, page information for on-air list information distribution or the like acquired from the music data distribution server SV1, article selling server SV2 or radio broadcast information distribution server SV3 by the client terminal 2 in the user authentication processing procedure to receive provision of a music data distribution service, an article selling service or a radio broadcast information distribution service is described.

### 1-7-3-1. Music data distribution service providing processing procedure

First, a music data distribution service providing processing procedure when the.client terminal 2 receives provision the music data distribution service from the music data distribution server SV1 is described with reference to FIG. 10.

At step SP30, if a control command to select part of the page for music data distribution displayed as an image on the display section 25 is inputted from the input processing section 21, then the control section 23 of the client terminal 2 produces a downloading requesting signal for requesting downloading of music data desired to download in accordance with the inputted control command. Then, the control section 23 transmits the downloading requesting signal together with the service session ID information and so forth issued already by the music data distribution server SV1 and temporarily stored in the authentication information storage section 38 to the music data distribution server SV1 successively through the communication control section 32 and the network interface 33.

At step SP31, the control section 70 of the music data distribution server SV1 receives the downloading requesting signal, service session ID information and so forth transmitted from the client terminal 2 successively through the network interface 73 and the communication control section 72 and signals the received service session ID information and so forth to the authentication processing section 75. Consequently, the authentication processing section 75 compares the service session ID information and so forth received from the client terminal 2 and the service session ID information and so forth temporarily stored already in the authentication information storage section 77 with teach other to execute a user authentication process under the control of the control section 70. As a result, if it is authenticated by the authentication processing section 75 that the user who utilizes the client terminal 2 to request downloading of music data is an authorized user, then the control section 70 advances its processing to step SP32.

At step SP32, the search section 79 searches, based on a search key placed in the downloading requesting signal, for the music data desired to download which satisfies a search condition indicated by the search key from among a plurality of music data in the music data storage section 78. Then, if the music data is searched out by the search section 79, then the control section 70 controls the authentication processing section 75 to extend the term of validity of the service session ID information and so forth issued to the client terminal 2. Thereafter, the processing advances to step SP33.

At step SP33, the control section 70 reads out the music data desired to download searched out by the search section 79 from the music data storage section 78 and transmits the read out music data desired to download together with the service session ID information and so forth having the term of validity extended by the authentication processing section 75 to the client terminal 2 successively through the communication control section 72 and the network interface 73.

At step SP34, the control section 23 of the client terminal 2 receives the music data desired to download and the service session ID information and so forth, which have the extended term of validity, transmitted from the music data distribution server SV1 successively through the network interface 33 and the communication control section 32. Further, the control section 23 stores the received music data into or on the storage medium 29 and signals the service session ID information and so forth received from the music data distribution server SV1 to the authentication processing section 37. The authentication processing section 37 temporarily stores the service session ID information and so forth received from the music data distribution server SV1 and having the extended term of validity into the authentication information storage section 38 under the control of the control section 23 such that the service session ID information and so forth before the term of validity thereof is extended may be overwritten thereby to update the substance of the service session ID information and so forth already stored temporarily in the authentication information storage section 38. In this manner, the client terminal 2 can utilize the music data distribution service provided by the music data distribution server SV1 to download music data desired by the user to acquire.

### 1-7-3-2. Article selling service providing processing procedure

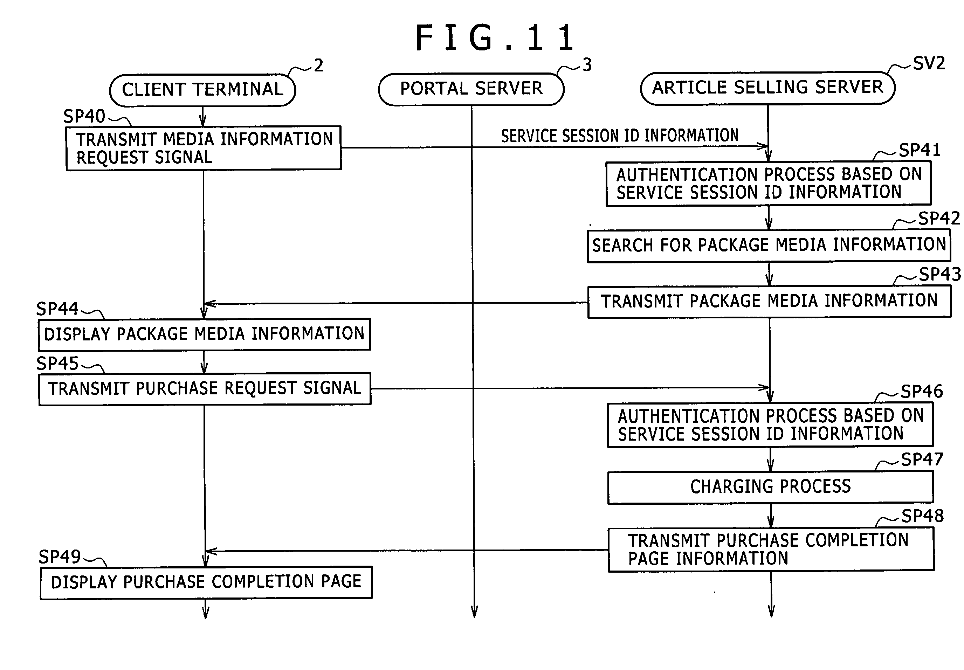

Now, an article selling service providing processing procedure when the client terminal 2 receives provision of an article selling service from the article selling server SV2 is described with reference to FIG. 11.

At step SP40, if a control command for selecting part of the page for package media sales displayed as an image on the display section 25 is inputted from the input processing section 21, then the control section 23 of the client terminal 2 produces a media information requesting signal for requesting package media information relating to a particular package medium in accordance with the inputted control command. Then, the control section 23 transmits the media information requesting signal together with service session ID information and so forth issued already by the article selling server SV2 and temporarily stored in the authentication information storage section 38 to the article selling server SV2 successively through the communication control section 32 and the network interface 33.

At step SP41, the control section 90 of the article selling server SV2 receives the media information requesting signal, service session ID information and so forth transmitted from the client terminal 2 successively through network interface 93 and the communication control section 92 and signals the received service session ID information and so forth to the authentication processing section 95. The authentication processing section 95 compares the service session ID information and so forth received from the client terminal 2 with the service session ID information and so forth already stored temporarily in the authentication information storage section 97 to execute a user authentication process under the control of the control section 90. As a result, if it is authenticated by the authentication processing section 95 that the user who issues the request for package media information relating to the package medium using the client terminal 2 is an authorized user, then the processing advances to step SP42.

At step SP42, the search section 99 searches, based on a search key placed in the media information requesting signal, for the package media information of the particular package medium which satisfies a search condition indicated by the search key from among the pieces of package media information in the package media information storage section 98. Then, if the package media information is searched out by the search section 99, then the control section 90 controls the authentication processing section 95 to extend the term of validity of the service session ID information and so forth issued to the client terminal 2. Thereafter, the processing advances to step SP43.

At step SP43, the control section 90 reads out the package media information searched out by the search section 99 from the package media information storage section 98 and transmits the read out package media information together with the service session ID information and so forth having the term of validity extended by the authentication processing section 95 to the client terminal 2 successively through the communication control section 92 and the network interface 93.

At step SP44, the control section 23 of the client terminal 2 receives the package media information and the service session ID information and so forth, which have the extended term of validity, transmitted from the article selling server SV2 successively through the network interface 33 and the communication control section 32. Then, the control section 23 signals the received package media information to the page information production section 36 and signals the service session ID information and so forth received from the article selling server SV2 to the authentication processing section 37. The authentication processing section 37 temporarily stores the service session ID information and so forth received from the article selling server SV2 and having the extended term of validity into the authentication information storage section 38 under the control of the control section 23 such that the service session ID information and so forth before the term of validity thereof is extended may be overwritten thereby to update the substance of the service session ID information and so forth already stored temporarily in the authentication information storage section 38. Further, the page information production section 36 produces video data based on the package media information received from the control section 23, and the display control section 24 converts the produced video data into an analog video signal and signals the analog video signal to the display section 25. Then, the control section 23 controls the display section 25 to display the package media information as an image based on the analog video signal, and thereafter, the processing advances to step SP45.

At step SP45, if a control command for requesting purchase of the package medium corresponding to the package media information displayed as an image on the display section 25 is inputted from the input processing section 21, then the control section 23 produces a purchase requesting signal for requesting purchase of the package medium in accordance with the inputted control command. Then, the control section 23 transmits the purchase requesting signal together with the service session ID information and so forth (that is, the service session ID information and so forth whose term of validity is extended) received from the article selling server SV2 already and temporarily stored in the authentication information storage section 38 to the article selling server SV2 successively through the communication control section 32 and the network interface 33.

At step SP46, the control section 90 of the article selling server SV2 receives the purchase requesting signal, service session 10 information and so forth transmitted from the client terminal 2 successively through the network interface 93 and the communication control section 92 and signals the received service session ID information and so forth to the authentication processing section 95. The authentication processing section 95 compares the service session ID information and so forth received from the client terminal 2 and the service session ID information and so forth already stored temporarily in the authentication information storage section 97 with each other to execute a user authentication process under the control of the control section 90. As a result, if it is authenticated by the authentication processing section 95 that the user who utilizes the client terminal 2 to request the purchase of the package medium is an authorized user, then the control section 90 advances its processing to step SP47.

At step SP47, the control section 90 executes a purchase process such as a procedure for delivering the package medium whose purchase is requested to the user who utilizes the client terminal 2. Further, the control section 90 transmits charging information for a charging process to the user for the purchase of the package medium to the charging server SV5 successively through the communication control section 92 and the network interface 93 to cause the charging server SV5 to execute a charging process in accordance with the purchase of the package medium to the user. Further, the control section 90 controls the authentication processing section 95 to extend the term of validity of the service session ID information and so forth issued to the client terminal 2.

At step SP48, the control section 90 transmits purchase completion page information representing that the purchase process of the package medium is completed after the charging process comes to an end together with the service session ID information and so forth, whose term of validity is extended by the authentication processing section 95, to the client terminal 2 successively through the communication control section 92 and the network interface 93.

At step SP49, the control section 23 of the client terminal 2 receives the purchase completion page information and the service session ID information and so forth, whose term of validity is extended, transmitted from the article selling server SV2 successively through the network interface 33 and the communication control section 32. Further, the control section 23 signals the received purchase completion page information to the page information production section 36 and signals the service session ID information and so forth received from the article selling server SV2 to the authentication processing section 37. The authentication processing section 37 temporarily stores the service session ID information and so forth having the extended term of validity and received from the article selling server SV2 into the authentication information storage section 38 under the control of the control section 23 such that the service session ID information and so forth before the term of validity is extended are overwritten thereby to update the substance of the service session ID information and so forth already stored temporarily in the authentication information storage section 38. Further, the page information production section 36 produces video data based on the purchase completion page information received from the control section 23, and the display control section 24 converts the thus produced video data into an analog vide signal and signals the analog video signal to the display section 25. Consequently, the control section 23 controls the display section 25 to display a purchase completion page as an image based on the analog video signal. In this manner, the client terminal 2 can utilize the article selling service provided by the article selling server SV2 to allow the user to purchase a desired package medium.

### 1-7-3-3. On-air list information distribution service providing processing procedure

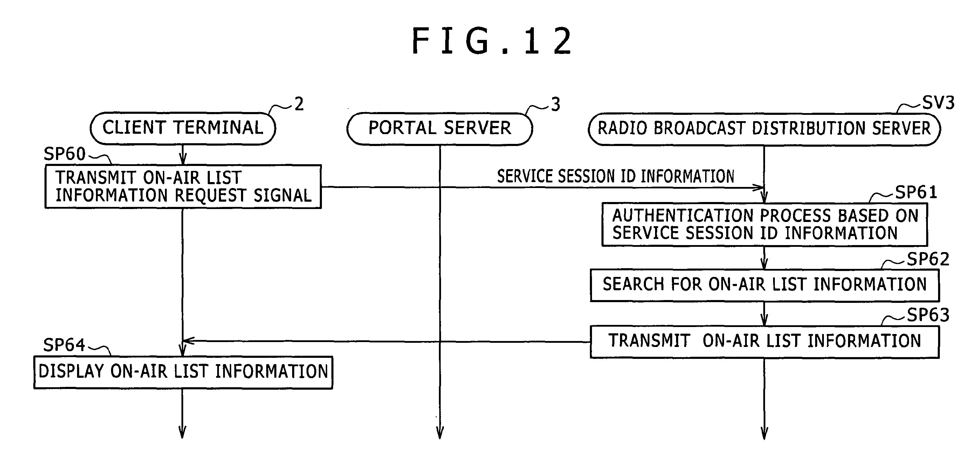

Now, a radio broadcast information distribution service providing processing procedure when the client terminal 2 receives provision particularly of an on-air list information distribution service as a radio broadcast information distribution service from the radio broadcast information distribution server SV3 is described with reference to FIG. 12.

At step SP60, if a search key for searching for on-air list information desired to acquire is inputted to an input box on a page for the on-air list information distribution displayed as an image on the display section 25 and a control command corresponding to a character string representative of the inputted search key is inputted, then the control section 23 of the client terminal 2 produces an on-air list information requesting signal for requesting downloading of the on-air list information desired to acquire in accordance with the inputted control command. Then, the control section 23 transmits the on-air list information requesting signal together with the service session ID information and so forth issued by the radio broadcast information distribution server SV3 already and temporarily stored in the authentication information storage section 38 to the radio broadcast information distribution server SV3 successively through the communication control section 32 and the network interface 33.

At step SP61, the control section 110 of the radio broadcast information distribution server SV3 receives the on-air list information requesting signal, service session ID information and so forth transmitted from the client terminal 2 successively through the network interface 113 and the communication control section 112 and signals the received service session ID information and so forth to the authentication processing section 115. The authentication processing section 115 compares the service session ID information and so forth received from the client terminal 2 and the service session ID information and so forth already stored temporarily in the authentication information storage section 120 with each other to execute a user authentication process under the control of the control section 110. As a result, if it is authenticated by the authentication processing section 115 that the user who utilizes the client terminal 2 to issue the request for on-air list information is an authorized user, then the control section 110 advances the processing to step SP62.

At step SP62, the search section 118 searches, based on the search key placed in the on-air list information requesting signal, the entire on-air list information in the on-air list information storage section 117 for a portion of a predetermined range which satisfies the search condition indicated by the search key as on-air list information. Then, after the on-air list information is searched out by the search section 118, the control section 110 controls the authentication processing section 115 to extend the term of validity of the service session ID information and so forth issued to the client terminal 2 and then advances its processing to step SP63.

Then at step SP63, the control section 110 reads out the on-air list information searched out by the search section 118 from the on-air list information storage section 117 and transmits the read out on-air list information together with the service session ID information and so forth having the term of validity extended by the authentication processing section 115 to the client terminal 2 successively through the communication control section 112 and the network interface 113.

At step SP64, the control section 23 of the client terminal 2 receives the on-air list information and the service session ID information and so forth, which have the extended term of validity, transmitted from the radio broadcast information distribution server SV3 successively through the network interface 33 and the communication control section 32 and signals the received on-air list information to the page information production section 36. Further, the control section 23 signals the service session ID information and so forth received from the radio broadcast information distribution server SV3 to the authentication processing section 37. The authentication processing section 37 temporarily stores the service session ID information and so forth received from the radio broadcast information distribution server SV3 and having the extended term of validity into the authentication information storage section 38 under the control of the control section 23 such that the service session ID information and so forth before the term of validity thereof is extended are overwritten thereby to update the substance of the service session ID information and so forth already stored temporarily in the authentication information storage section 38. Further, the page information production section 36 produces video data based on the on-air list information received from the control section 23, and the produced video data are converted into an analog video signal and signaled to the display section 25 so that the on-air list information is displayed as an image based on the analog video signal on the display section 25. In this manner, the client terminal 2 can utilize the radio broadcast information distribution service provided by the radio broadcast information distribution server SV3 to allow the user to acquire desired on-air list information.

### 1-7-3-4. Now-on-air information distribution service providing processing procedure

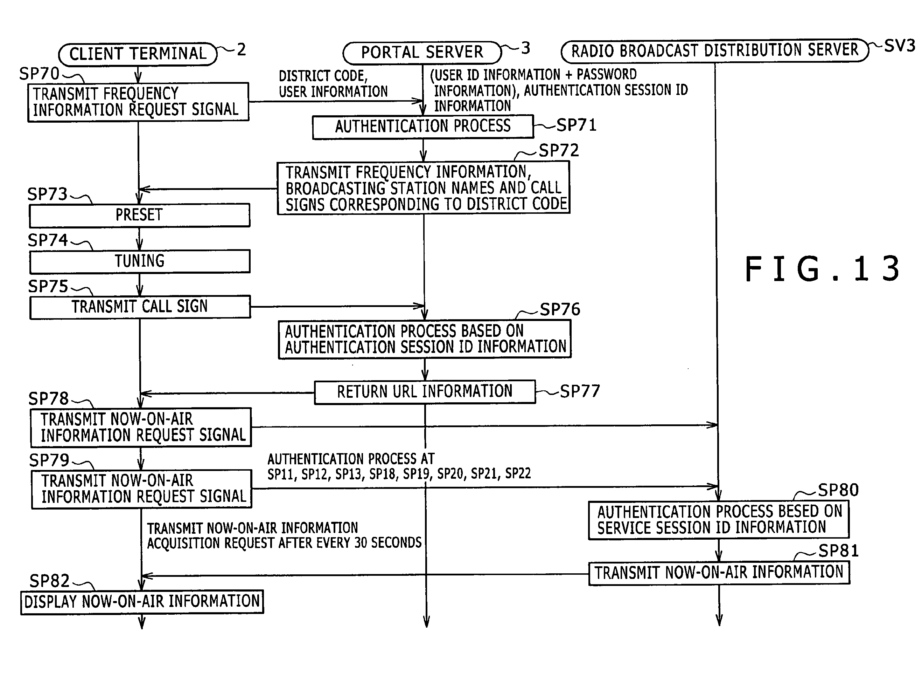

Now, a radio broadcast information distribution service providing processing procedure when the client terminal 2 receives supply particularly of a now-on-air information distribution service as the radio broadcast information distribution service from the radio broadcast information distribution server SV3 is described with reference to FIG. 13.

It is to be noted, however, that the radio broadcast information distribution server SV3 which provides now-on-air information is provided for each radio station (call sign). Further, the client terminal 2 may not store URL information of the radio broadcast information distribution servers SV3 corresponding to the individual radio stations. Therefore, the radio broadcast information distribution service providing processing procedure is described taking a case wherein URL information of the radio broadcast information distribution servers SV3 is managed for the individual call signs of the radio stations by the portal server 3 as an example. Further, the now-on-air information distribution service providing processing procedure supposes a case wherein, when the client terminal 2 issues a request for frequency information representative of broadcasting frequencies of the radio stations to the portal server 3 in order to automatically preset the broadcasting frequencies, authentication session ID information and so forth are not temporarily stored in the authentication information storage section 38. Therefore, the client terminal 2 first transmits user ID information, password information and so forth to the portal server 3.

At step SP70, if an operation command for requesting automatic presetting of the broadcasting frequencies of the radio stations is inputted from the input processing section 21, then the control section 23 of the client terminal 2 transmits, in response to the operation command, a frequency information requesting signal for requesting acquisition of frequency information of broadcasting frequencies which can be received from radio stations together with a district code inputted by the user and the user ID information, password information and so forth stored in the authentication information storage section 38 to the portal server 3 successively through the communication control section 32 and the network interface 33.

At step SP71, the control section 50 of the portal server 3 receives the frequency information requesting signal, district code, user ID information, password information and so forth transmitted from the client terminal 2 successively through the network interface 53 and the communication control section 52. Then, the control section 50 signals the user ID information, password information and so forth received from the client terminal 2 to the authentication processing section 56. The authentication processing section 56 compares the user ID information, password information and so forth received from the client terminal 2 with the customer information registered in the customer database section 54 to execute a user authentication process under the control of the control section 50. As a result, if the authentication processing section 56 authenticates that the user who utilizes the client terminal 2 is an authorized user and the request for acquisition of frequency information from the client terminal 2 is a regular request, then the authentication processing section 56 issues authentication session ID information and so forth for the communication connection state between the client terminal 2 and the portal server 3 at the present point of time and temporarily stores the issued authentication session ID information and so forth into the authentication information storage section 57 under the control of the control section 50. Then, after it is authenticated by the authentication processing section 56 that the user is an authorized user, then the control section 50 advances its processing to step SP72.

At step SP72, the control section 50 searches, based on the district code received from the client terminal 2, the list of frequency information, radio station names and call signs in the frequency information storage section 58 for frequency information, radio station names and call signs which correspond to the district code and reads out the searched out frequency information, radio station names and call signs. Then, the control section 50 transmits the frequency information, radio station names and call signs read out as the list from the frequency information storage section 58 together with the authentication session ID information and so forth issued to the client terminal 2 from the authentication processing section 56 at step SP71 described hereinabove to the client terminal 2 successively through the communication control section 52 and the network interface 53.

At step SP73, the control section 23 of the client terminal 2 receives the list of the frequency information, radio station names and call signs, the authentication session ID information and so forth transmitted from the portal server 3 successively through the network interface 33 and the communication control section 32. Then, the control section 23 transmits the authentication session ID information and so forth received from the portal server 3 to the authentication processing section 37 and signals the list of frequency information, radio station names and call signs to the display control section 24. Consequently, the authentication processing section 37 temporarily stores the authentication session ID information and so forth received from the portal server 3 into the authentication information storage section 38. Further, the display control section 24 signals the list of frequency information, radio station names and call signs received from the control section 23 to the display section 25 so that the list is displayed on the display section 25. Furthermore, the control section 23 stores frequency information, a radio station name and a call sign selected based on a selection command inputted thereupon from the input processing section 21 as preset information into the storage medium 29. Thereafter, the processing advances to step SP74.

At step SP74, the control section 23 controls the tuner section 31 in response to a tuning control command inputted from the input processing section 21 to extract a radio broadcast signal of a radio broadcast being broadcasted with a broadcast frequency corresponding to the tuning control command from among the radio broadcast waves. Consequently, the tuner section 31 extracts a radio broadcast signal being broadcasted with the broadcast frequency from among the radio frequency waves received by the broadcast signal reception section 30 and performs a predetermined reception process such as decoding to the extracted radio broadcast signal. Then, the tuner section 31 signals audio data obtained by the reception process to the sound control section 26. Accordingly, the sound control section 26 converts the audio data received from the tuner section 31 into an analog audio signal and signals the analog audio signal to the speaker 27 so that sound of the selected radio program can be outputted from the speaker 27.

At step SP75, the radio broadcast displaying control section 39 reads out a call sign stored corresponding to the frequency information indicative of the broadcast frequency corresponding to the tuning control command described hereinabove from the storage medium 29 under the control of the control section 23. Further, the radio broadcast displaying control section 39 transmits the read out call sign together with the authentication session ID information and so forth already stored temporarily in the authentication information storage section 38 to the portal server 3 successively through the communication control section 32 and the network interface 33.

At step SP76, the control section 50 of the portal server 3 receives the call sign, authentication session ID information and so forth transmitted from the client terminal 2 successively through the network interface 53 and the communication control section 52 and signals the received authentication session ID information and so forth to the authentication processing section 56. The authentication processing section 56 compares the authentication session ID information and so forth received from the client terminal 2 with the authentication session ID information and so forth already stored temporarily in the authentication information storage section 57 to execute a user authentication process under the control of the control section 50. As a result, if it is authenticated by the authentication processing section 56 that the authentication session ID information and so forth received from the client terminal 2 remain within the term of validity and the user who utilizes the client terminal 2 to transmit the call sign is an authorized user, then the control section 50 advances its processing to step SP77.

At step SP77, the control section 50 searches, based on the call sign received from the client terminal 2, the URL information in the URL storage section 59 for the URL information coordinated with the call sign. Further, the control section 50 controls the authentication processing section 56 to extend the term of validity of the authentication session ID information and so forth issued to the client terminal 2. Then, the control section 50 reads out the searched out URL information from the URL storage section 59 and transmits the read out URL information together with the authentication session ID information and so forth having the term of validity extended by the authentication processing section 56 to the client terminal 2 successively through the communication control section 52 and the network interface 53.

At step SP78, the control section 23 of the client terminal 2 receives the URL information and the authentication session ID information and so forth, which have the extended term of validity, transmitted from the portal server 3 successively through the network interface 33 and the communication control section 32. Then, the control section 23 signals the received authentication session ID information and so forth to the authentication processing section 37 and signals the URL information to the radio broadcast displaying control section 39. The authentication processing section 37 temporarily stores the authentication session ID information and so forth received from the portal server 3 and having the extended term of validity into the authentication information storage section 38 under the control of the control section 23 such that the authentication session ID information and so forth before the term of validity thereof is extended are overwritten thereby to update the substance of the authentication session ID information and so forth already stored temporarily in the authentication information storage section 38. Further, the radio broadcast displaying control section 39 temporarily stores the URL information received from the control section 23 in a coordinated relationship with the call sign stored in the storage medium 29 under the control of the control section 23. Then, the radio broadcast displaying control section 39 transmits a now-on-air information requesting signal for requesting acquisition of now-on-air information in accordance with the URL information temporarily stored in the storage medium 29 or the like together with the service session ID information and so forth received already from the radio broadcast information distribution server SV3 and temporarily stored in the authentication information storage section 38 to the radio broadcast information distribution server SV3 successively through the communication control section 32 and the network interface 33 under the control of the control section 23.

In such a radio broadcast information distribution service providing processing procedure as described above, the process at step SP78 of transmitting a now-on-air information requesting signal and service session ID information and so forth from the client terminal 2 to the radio broadcast information distribution server SV3 corresponds to the process at step SP10 described hereinabove with reference to FIG. 9. Accordingly, in the present radio broadcast information distribution service providing processing procedure, subsequently to the process at step SP78, the client terminal 2, radio broadcast information distribution server SV3 and portal server 3 successively execute a user authentication process similar to that at steps SP11 to SP13 and steps SP18 to SP22 described hereinabove with reference to FIG. 9. Thereafter, the processing advances to step SP79.

At step SP79, the radio broadcast displaying control section 39 of the client terminal 2 transmits, in accordance with the URL information temporarily stored in the storage medium 29 or the like, the now-on-air information requesting signal again together with the service session ID information and so forth received already from the radio broadcast information distribution server SV3 and temporarily stored in the authentication information storage section 38 under the control of the control section 23 to the radio broadcast information distribution server SV3 successively through the communication control section 32 and the network interface 33.

At step SP80, the control section 110 of the radio broadcast information distribution server SV3 receives the now-on-air information requesting signal, service session ID information and so forth transmitted from the client terminal 2 successively through the network interface 113 and the communication control section 112 and signals the received authentication session ID information and so forth to the authentication processing section 115. Consequently, the authentication processing section 115 compares the service session ID information and so forth received from the client terminal 2 with the service session ID information and so forth already stored temporarily in the authentication information storage section 120 to execute a user authentication process under the control of the control section 110. As a result, if the authentication processing section 115 authenticates that the user who utilizes the client terminal 2 is an authorized user, then it decides that the request for acquisition of now-on-air information from the client terminal 2 is a regular request. Then, if it is authenticated by the authentication processing section 115 that the user who utilizes the client terminal 2 is an authorized user, then the control section 110 controls the authentication processing section 115 to extend the term of validity of the service session ID information and so forth issued to the client terminal 2. Thereafter, the processing advances to step SP81.

At step SP81, the control section 110 reads out now-on-air information from the now-on-air information storage section 119 and transmits the read out now-on-air information together with the service session ID information and so forth having the term of validity extended by the authentication processing section 115 to the client terminal 2 successively through the communication control section 112 and the network interface 113.

At step SP82, the control section 23 of the client terminal 2 receives the now-on-air information and the service session ID information and so forth, which have the extended term of validity, transmitted from the radio broadcast information distribution server SV3 successively through the network interface 33 and the communication control section 32. Then, the control section 23 signals the received service session ID information and so forth to the authentication processing section 37 and signals the now-on-air information to the radio broadcast displaying control section 39. Consequently, the authentication processing section 37 temporarily stores the service session ID information and so forth received from the radio broadcast information distribution server SV3 and having the extended term of validity into the authentication information storage section 38 under the control of the control section 23 such that the service session ID information and so forth before the term of validity thereof is extended are overwritten thereby to update the substance of the service session ID information and so forth already stored temporarily in the authentication information storage section 38.

Further, the radio broadcast displaying control section 39 signals the now-on-air information received from the control section 23 to the display section 25 through the display control section 24 so that the display section 25 displays the now-on-air information relating to the radio program of the radio broadcast being currently received. Then, in such a radio broadcast information distribution service providing processing procedure as described above, the client terminal 2 periodically and repetitively executes the request for acquisition of now-on-air information at step SP79, and the radio broadcast information distribution server SV3 receives the request for acquisition from the client terminal 2 and successively executes the processes at steps SP80 and SP81. Consequently, the client terminal 2 can display the program name, program broadcast starting time and program broadcast ending time of the radio program being currently received and the title, artist name, tune broadcasting starting time and so forth of the tune being broadcasted in the radio program on the display section 25 of the client terminal 2 while they are updated every moment as now-on-air information.

### 1-8. Hardware circuit block configuration of the client terminal 2

### 1-8-1. Circuit configuration

Now, a hardware configuration according to hardware circuit blocks of the client terminal 2 is described. In the hardware configuration according to hardware circuit blocks of the client terminal 2, some of the functions are implemented in accordance with software modules hereinafter described.

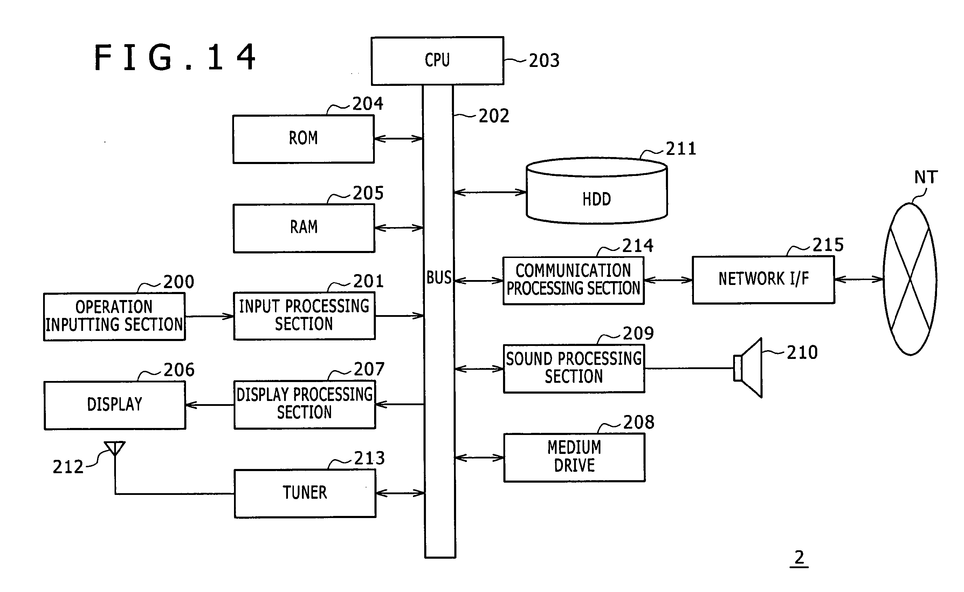

Referring to FIG. 14, the client terminal 2 includes an operation inputting section 200 including various operation buttons provided on the surface of a housing thereof or on a remote controller (not shown). If the operation inputting section 200 is operated by the user, then the operation inputting section 200 recognizes this and signals an operation input signal corresponding to the operation to an input processing section 201. The input processing section 201 applies a predetermined process to the operation input signal supplied thereto to convert the operation input signal into an operation command and supplies the operation command to a CPU (Central Processing Unit) 203 through a bus 202. The CPU 203 reads out various programs such as a basic program and application programs stored in advance in a ROM (Read Only Memory) 204 into a RAM (Random Access Memory) 205, and controls the entire client terminal 2 and executes predetermined arithmetic operation processes and various processes in response to an operation command supplied thereto from the input processing section 201 in accordance with the programs.

A display unit 206 is a display device such as, for example, a liquid crystal display unit and may be attached directly to the surface of the housing or may be provided externally. The display unit 206 displays an image based on an analog video signal when a result of processing by the CPU 203 or various video data are supplied thereto as the analog video signal through a display processing section 207.

A media drive 208 reads out and reproduces content data recorded, for example, on a CD or in a memory stick (registered trademark) whose flash memory is included in an outer case, or records content data of an object of recording on the CD or into the memory stick. Then, if video data are read out as content data from the CD or the memory stick, then the media drive 208 supplies the reproduced video data to the display processing section 207 through the bus 202. On the other hand, if audio data are read out as content data from the CD or the memory stick, then the media drive 208 supplies the reproduced audio data to a sound processing section 209.

The display processing section 207 performs a digital to analog conversion process for the video data supplied thereto through the bus 202 and supplies a resulting analog video signal to the display unit 206 so that an image based on the analog video signal is displayed on the display unit 206. Meanwhile, the sound processing section 209 performs a digital to analog conversion process for audio data supplied thereto through the bus 202 and signals a resulting analog audio signal to a 2-channel speaker 210 so that stereo sound based on the analog audio signal is outputted from the speaker 210.

Further, the CPU 203 signals content data read out by the media drive 208 to a hard disk drive 211 through the bus 202 so that the content data can be stored as a content file on or into the hard disk drive 211. Incidentally, the CPU 203 manages content data stored in the hard disk drive 211 in such a directory configuration as described hereinabove with reference to FIG. 3. Then, the CPU 203 can read out any content file stored in the hard disk drive 211 as content data from the hard disk drive 211. It is to be noted that, when video data are read out as content data from the hard disk drive 211, then the CPU 203 supplies the read out video data to the display processing section 207 through the bus 202. On the other hand, when audio data are read out as content data from the hard disk drive 211, the CPU 203 supplies the read out audio data to the sound processing section 209.

An antenna 212 receives radio broadcast waves transmitted thereto from radio stations and signals the received radio broadcast waves to a tuner 213 in the form of an AM/FM tuner. The tuner 213 extracts a radio broadcast signal of a broadcast frequency corresponding to a radio station designated, for example, through the operation inputting section 200 from among the radio broadcast waves received through the antenna 212 and performs a predetermined reception process for the extracted radio broadcast signal. Then, the tuner 213 supplies audio data obtained as a result of the reception process to the sound processing section 209 through the bus 202. The sound processing section 209 converts the audio data received from the tuner 213 into an analog audio signal and signals the analog audio signal to the speaker 210 so that program sound of the radio program being broadcasted from the radio station can be outputted from the speaker 210 thereby to allow the user to enjoy the program sound of the radio program. Further, the CPU 203 signals the audio data obtained by the tuner 213 to the hard disk drive 211 so that the program sound of the radio program can be recorded.

Furthermore, the CPU 203 can establish a connection to the network NT successively through a communication processing section 214 and a network interface 215 to access the portal server 3 and other servers SV1 to SV4 on the network NT and consequently can transmit and receive various data to and from the portal server 3 and other servers SV1 to SV4.

### 1-8-2. Program module configuration

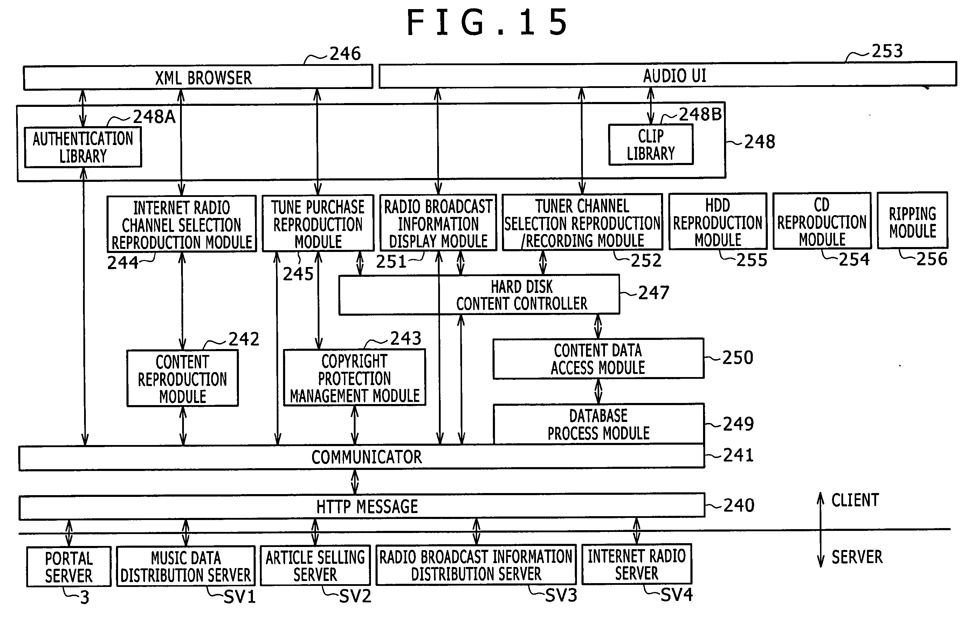

Referring to FIG. 15, program modules incorporated in the client terminal 2 of the hardware configuration according to the hardware circuit blocks described above with reference to FIG. 14 operate on the OS and communicate with the portal server 3 and other servers SV1 to SV4. An HTTP (Hyper Text Transfer Protocol) message program 240 is a program module which communicates with the portal server 3 and other servers SV1 to SV4 by HTTP communication, and a communicator program 241 is a program module which communicates data with the HTTP message program 240.

A content reproduction module 242 which interprets codec of a content and reproduce the content and a copyright protection management module 243 which deals with information relating to copyright protection are positioned in a above layer of the communicator program 241. Further, an Internet radio channel selection reproduction module 244 which performs channel selection and reproduction of the Internet radio and a tune purchase reproduction module 245 for managing purchase of a tune and reproduction of a preview tune are positioned above the content reproduction module 242 and the copyright protection management module 243, respectively. Music data reproduced by the Internet radio channel selection reproduction module 244 or the tune purchase reproduction module 245 are transferred to the sound processing section 209 and outputted finally as sound from the speaker 210.

An XML browser 246 is positioned above the Internet radio channel selection reproduction module 244 and the tune purchase reproduction module 245, and interprets XML files from various servers and controls the display unit 206 to display an image. For example, a tune selected by the user through the XML browser 246 is subject to a purchase process by the tune purchase reproduction module 245 and written into the hard disk drive 211 through a hard disk content controller 247.

It is to be noted that a authentication library 248A of a library 248 is connected to the communicator program 241 and cooperates with the portal server 3 and so forth to perform various authentication processes. Further, a database access module 249, a content data access module 250 and the hard disk content controller 247 are positioned above the communicator program 241. The database access module 249 accesses various databases constructed in the hard disk drive 211 while the content data access module 250 accesses content data stored in the hard disk drive 211, and the hard disk content controller 247 manages content data stored in the hard disk drive 211.

Above the hard disk content controller 247, a radio broadcast information display module 251 for displaying the title, artist name and so forth of a tune broadcasted by a radio station and a tuner channel selection reproduction/recording module 252 for selecting a channel of a radio station and storing (recording) content data as a tune received from the radio station into the hard disk drive 211 are positioned. For example, a tune received from a selected radio station through an audio user interface 253 is written into the hard disk drive 211 through the content data access module 250. Meanwhile, sound data as content data reproduced by the tuner channel selection reproduction/recording module 252 are transferred to the sound processing section 209 so that they are finally outputted as sound from the speaker 210.

The radio broadcast information display module 251 receives radio broadcast information such as now-on-air information including the title, artist name and so forth of a tune being currently broadcasted by a radio station from the radio broadcast information distribution server SV3 through the HTTP message program 240 by the tuner channel selection reproduction/recording module 252, and the radio broadcast information display module 251 displays the radio broadcast information on the display unit 206 through the audio user interface 253. It is to be noted that the radio broadcast information displayed on the display unit 206 through the audio user interface 253 may be temporarily stored into a clip library 248B of the library 248, and is finally stored into the hard disk drive 211 through the database access module 249 in accordance with an instruction from the user.

A CD reproduction module 254 controls the media drive 208 to reproduce a CD. Then, audio data reproduced from the CD by the CD reproduction module 254 is transferred to the sound processing section 209 so that it is finally outputted as sound from the speaker 210. Though not shown, an HDD reproduction module 255 is connected to the hard disk content controller 247 and the copyright protection management module 243. Consequently, the HDD reproduction module 255 reproduces music data as content data read out from the hard disk drive 211 under the control of the hard disk content controller 247 in accordance with copyright management information supplied from the copyright protection management module 243. Then, audio data reproduced in accordance with the copyright management information by the HDD reproduction module 255 are transferred to the sound processing section 209 so that they are finally outputted as sound from the speaker 210.

Though not shown, a ripping module 256 is connected to the hard disk content controller 247 and the copyright protection management module 243. Consequently, the ripping module 256 controls the CD reproduction module 254, copyright protection management module 243 and hard disk content controller 247 so that audio data reproduced from a CD by the CD reproduction module 254 are stored on the hard disk of the hard disk drive 211 (that is, so that the audio data are ripped from the CD) under the control of the hard disk content controller 247 together with the copyright management information for managing the audio data supplied from the copyright protection management module 243.

Incidentally, the HTTP message program 240 and the communicator program 241 in the program modules described above are program modules with which functions similar to those of the communication control section 32 of the client terminal 2 described hereinabove with reference to FIG. 2 can be implemented. Meanwhile, the content reproduction module 242 is a program module with which functions similar to those of the encoder/decoder section 34 of the client terminal 2 described hereinabove with reference to FIG. 2 can be implemented. Further, the copyright protection management module 243 is a program module with which functions similar to those of the copyright management section 35 of the client terminal 2 described hereinabove with reference to FIG. 2 can be implemented. Furthermore, the Internet radio channel selection reproduction module 244 is a program module with which functions similar to those of the control section 23 and the sound control section 26 of the client terminal 2 described hereinabove with reference to FIG. 2 can be implemented.

Further, the tune purchase reproduction module 245 is a program module with which functions similar to those of the control section 23 and the sound control section 26 of the client terminal 2 described hereinabove with reference to FIG. 2 can be implemented. Furthermore, the XML browser 246 is a program module with which functions similar to those of the input processing section 21 and the page information production section 36 of the client terminal 2 described hereinabove with reference to FIG. 2 can be implemented. Further, the hard disk content controller 247, database access module 249 and content data access module 250 are program modules with which functions similar to those of the control section 23 of the client terminal 2 described hereinabove with reference to FIG. 2 can be implemented. Furthermore, the authentication library 248A of the library 248 is a program module with which functions similar to those of the authentication processing section 37 and the authentication information storage section 38 of the client terminal 2 described hereinabove with reference to FIG. 2 can be implemented.

Further, the clip library 248B of the library 248 is a program module with which functions similar to those of the control section 23 of the client terminal 2 described hereinabove with reference to FIG. 2 can be implemented. Further, the radio broadcast information display module 251 is a program module with which functions similar to those of the radio broadcast displaying control section 39 of the client terminal 2 described hereinabove with reference to FIG. 2 can be implemented. Further, the tuner channel selection reproduction/recording module 252 is a program module with which functions similar to those of the control section 23, sound control section 26 and tuner section 31 of the client terminal 2 described hereinabove with reference to FIG. 2 can be implemented. Furthermore, the audio user interface 253 is a program module with which functions similar to those of the input processing section 21, control section 23 and display control section 24 of the client terminal 2 described hereinabove with reference to FIG. 2 can be implemented.

Further, the CD reproduction module 254 is a program module with which functions similar to those of the sound control section 26 and the external recording medium recording and reproduction section 28 of the client terminal 2 described hereinabove with reference to FIG. 2 can be implemented. Further, the HDD reproduction module 255 is a program module with which functions similar to those of the control section 23 and the sound control section 26 of the client terminal 2 described hereinabove with reference to FIG. 2 can be implemented. Furthermore, the ripping module 256 is a program module with which functions similar to those of the control section 23, the external recording medium recording and reproduction section 28, and the encoder/decoder section 34 of the client terminal 2 described hereinabove with reference to FIG. 2 can be implemented.

Accordingly, in the client terminal 2 of the hardware configuration according to the hardware circuit blocks described hereinabove with reference to FIG. 14, the CPU 203 can execute processes similar to those of the client terminal 2 of the hardware configuration according to the functional circuit blocks described hereinabove with reference to FIG. 2 in accordance with the program modules described above. Further, the client terminal 2 of the hardware configuration according to the hardware circuit blocks can implement a related information successive outputting process hereinabove. Furthermore, the client terminal 2 of the hardware configuration according to the functional circuit blocks can implement a related information successively outputting process hereinafter described similarly to the client terminal 2 of the hardware configuration according to the hardware circuit blocks because the functional circuit blocks include functions which can be implemented by the program modules incorporated in the client terminal 2 of the hardware configuration according to the hardware circuit blocks. 1-9. Hardware circuit block configuration of the music data distribution server SV1

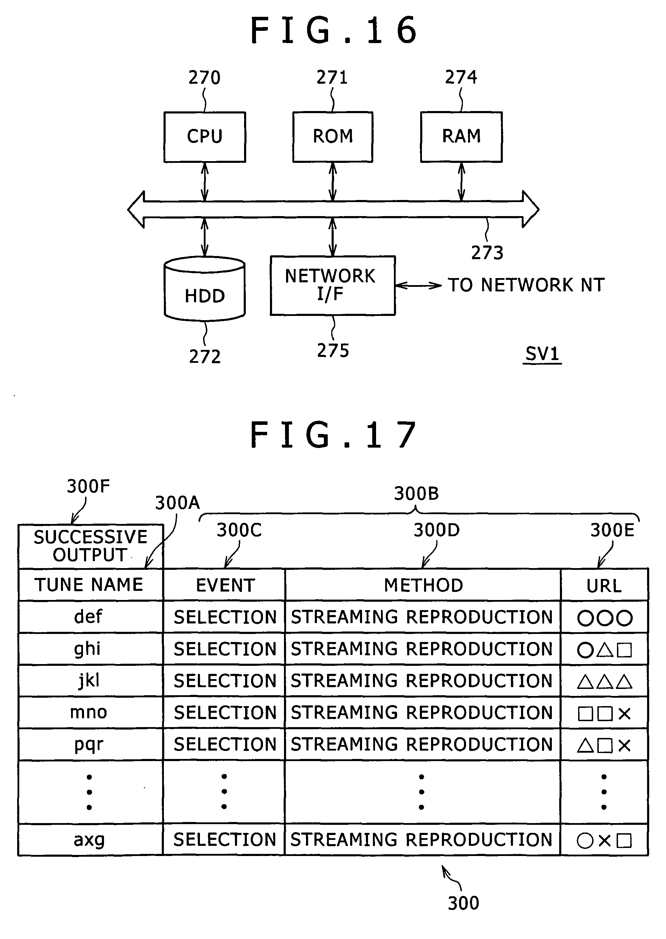

Now, a hardware configuration of the music data distribution server SV1 according to hardware circuit blocks is described. Referring to FIG. 16, the music data distribution server SV1 includes a CPU 270 which controls the entire music data distribution server SV1. The CPU 270 develops various programs such as a basic program and a related information providing program stored in a ROM 271 or a hard disk drive 272 into a RAM 274 through a bus 273 and executes the programs thereby to perform various processes such as a related information successively providing process. In this instance, a large number of music data are stored in the hard disk drive 272 such that they can be downloaded (that is, can be distributed to the client terminal 2). Also a large number of preview data prepared in advance for allowing some of tunes based on the music data to be enjoyed as preview tunes as tune-related information relating to the music data which can be loaded are stored in the hard disk drive 272. Further, also page information (hereinafter referred to as introduction page information) for introducing a large number of downloadable music data on the network NT, page information (hereinafter referred to as purchase page information) for actually requesting execution of downloading of music data and page information (hereinafter referred to as details presentation page information) for presenting details information of the artist name, reproduction time of music data, a comment on a tune and so forth as tune-related information relating to the downloadable music data are stored as page information for music data distribution in the hard disk drive 272. Furthermore, also various registration information such as customer information of customers to whom utilization of the music data distribution server SV1 is permitted is registered in a database constructed on the hard disk of the hard disk drive 272.

Consequently, the CPU 270 can read out various kinds of information and various data from the hard disk drive 272 and execute various processes using the read out various kinds of information and various data. Further, a network interface 275 establishes a connection to the client terminal 2 or any of the other servers for transmission and reception of various kinds of information and various data through the network NT in response to a process executed by the CPU 270.

In the music data distribution server SV1 having such a configuration described above, basically the CPU 270 performs various processes in accordance with the various programs stored in the ROM 271 or the hard disk drive 272. Therefore, in the music data distribution server SV1, the CPU 270 can function similarly to the control section 70, communication control section 72, authentication processing section 75 and search section 79 of the music data distribution server SV1 and the hard disk drive 272 can be used similarly to the customer database section 74, page information storage section 76, authentication information storage section 77 and music data storage section 78 of the music data distribution server SV1 by suitably selecting those programs to be stored into the ROM 271 or the hard disk drive 272 in response to the functions of the music data distribution server SV1 of the hardware configuration according to the functional circuit blocks described hereinabove with reference to FIG. 5. Further, the music data distribution server SV1 of the hardware configuration according to the hardware circuit blocks can implement a related information successive providing process hereinafter described. Meanwhile, the music data distribution server SV1 of the hardware configuration according to the functional circuit blocks can implement the related information successive providing process hereinafter described similarly to the music data distribution server SV1 of the hardware configuration according to the hardware circuit blocks because the functional circuit blocks include functions which can be implemented by the various programs incorporated in the music data distribution server SV1 of the hardware configuration according to the hardware circuit blocks.

It is to be noted that, while, in the embodiment described above, a radio broadcast which is broadcast from a radio station is applied as a broadcast which can be received by the client terminal 2, the broadcast is not limited to this, but it is possible for the client terminal 2 to receive a television broadcast which is broadcast from a broadcasting station for television and acquire various kinds of broadcast information relating to a television program of the television broadcast and so forth from a server on the network NT.

### 2. Related information successively providing outputting process

The music data distribution server SV1 can introduce, when music data which can be loaded to the client terminal 2 are to be introduced, the downloadable music data in more detail by successively providing preview data as tune related information corresponding to the music data so as to be outputted. Accordingly, in the following, a related information successively providing outputting process which is executed by the music data distribution server SV1 and the client terminal 2 is described. However, since such a related information successively providing outputting process as just mentioned can be executed mainly by any of the music data distribution server SV1 and the client terminal 2, in the following, a related information successively providing outputting process executed mainly by the music data distribution server SV1 and another related information successively providing outputting process executed mainly by the client terminal 2 are described successively.

### 2-1. Related information successively providing outputting process mainly by the music data distribution server SV1

The CPU 270 of the music data distribution server SV1 classifies a large number of downloadable music data by types of the genre, artist or the like, and the classified music data are stored in a unit of a single tune or in a unit of an album in which a plurality of tunes are included, in the hard disk drive 272. Further, the CPU 270 stores also a large number of preview data or details information data corresponding to music data in a unit of a single tune or to a plurality of music data in a unit of an album in the hard disk drive 272. Furthermore, the CPU 270 stores also URLs for allowing acquisition of the large number of music data and preview data in the hard disk drive 272 in a coordinated relationship with the music data or preview data which can be acquired therewith. Further, the CPU 270 stores page information for music data distribution (for example, introduction page information, purchase page information and details presentation page information) described, for example, in the XML for each type of the genre, artist or the like of the large number of downloadable music data in the hard disk drive 272.

In this instance, the introduction page information includes various kinds of screen configuration information used to produce tune introduction screens for introducing downloadable music data. Further, the introduction page information includes also various kinds of screen transition information and so forth used for transition from a tune introduction screen to a purchase screen produced based on purchase page information or a details information presentation screen and so forth produced based on details presentation page information. Further, the introduction page information includes, as seen in FIG. 17, also tune list information 300 which includes a list of a plurality of tune names as tune identification information 300A with which a plurality of music data introduced on the tune introduction screen can be identified. The tune list information 300 can associate process execution information 300B for allowing the client terminal 2 to execute an outputting process of preview data with a tune name selected arbitrarily from among a plurality of tune names presented as a list. In this instance, the process execution information 300B includes a execution condition 300C (that is, an event) when a reproduction process of preview data is to be executed, an execution instruction 300D (that is, a method) for causing a reproduction process to be executed when the execution condition 300C is satisfied, reference information 300E for being referred to when the reproduction is to be executed, and so forth. Here, the execution condition 300C prescribes a condition for executing an outputting process of text data like, for example, "a corresponding tune name is selected as tune identification information (hereinafter referred to as noticed tune information) indicative of music data to be noticed for introduction". Further, the execution instruction 300D prescribes an instruction for an outputting process for preview data like "preview data are reproduced while acquired in a streaming form (that is, preview data are streaming reproduced)". Further, the reference information 300E is a URL for acquisition of preview data. In this manner, the tune list information 300 can coordinate preview data for introduction of music data with a tune name selected arbitrarily.

Furthermore, a plurality of tune names in the tune list information 300 are prescribed such that, when a plurality of preview data corresponding to the plurality of tune names are to be outputted successively, they can be used as successive outputting object selection information for successively selecting the plurality of preview data of a successive outputting object. Then, if successive outputting permission identification information 300F representing that a plurality of preview data coordinated with a plurality of tune names can be outputted successively is added to the tune list information 300, then all of the tune names in the tune list information 300 can be set as a successive output object to be outputted successively. Incidentally, in the tune list information 300, if the successive outputting permission identification information 300F is added, then all of the tune names in the tune list information 300 can be set as a successive output object irrespective of coordination of preview data. It is to be noted that, in the tune list information 300, it is possible to set only some of the plurality of tune names in the tune list information 300 (for example, tune names with which preview data are coordinated) as a successive output object by adding predetermined information representing that the corresponding tune is a successive output object. Then, where the predetermined information representing that the corresponding tune name is a successive output object is added to some of the tune names in the tune list information 300, various types of information can be applied to the predetermined information like identification information representing that the tune is a successive output object or link information representing a tune name to be selected subsequently for successive outputting of preview data.

Further, where a plurality of tune names in the tune list information 300 are set as a successive output object, tune name selection indication information which indicates the tune names to be successively selected as noticed tune information is included in the introduction page information as processing control information for a successive output process for preview data coordinated with the tune names (such processing control information is hereinafter referred to merely as processing control information) in order to allow the preview data to be outputted successively. The tune name selection indication information includes order information representative of an order (hereinafter referred to as reference set order) when the plurality of tune names set as a successive output object are listed into the tune list information 300 by the music data distribution server SV1 side as an order for causing the tune names to be selected as noticed tune information. The tune name selection indication information further includes a selection instruction command for instructing whether or not the plurality of tune names set as a successive output object should be selected as noticed tune information in the reference set order. Therefore, according to the tune name selection indication information, where it is indicated that the tune names should be selected as noticed tune information in accordance with the reference set order by the selection instruction command, the plurality of tune names set as a successive output object can be selected as noticed tune information in the reference set order in accordance with the selection instruction command. As a result, if tune name selection indication information of such a configuration as described above is included in the instruction page information, then a plurality of tune data coordinated with a plurality of tune names set as a successive output object can be automatically outputted successively in the order according to the reference set order.

Incidentally, according to the tune name selection indication information, where it is instructed by the selection instruction command that tune names should not be selected as noticed tune information in the reference set order, the plurality of tune names set as a successive output object can be selected as noticed tune information in some other predetermined order different from the reference set order. As a result, if tune name selection indication information of such a configuration as described above is included in the introduction page information, then a plurality of preview data coordinated with a plurality of tune names set as a successive output object can be automatically outputted successively in a different play mode (hereinafter referred to as changed play mode) different from a play mode (hereinafter referred to as data play mode) wherein the preview data are automatically outputted successively in an order according to the reference set order. Then, where a plurality of preview data corresponding to a plurality of tune names set as a successive output object should be automatically outputted successively in a changed play mode, play mode indication information which indicates the changed play mode is included as processing control information in the introduction page information. Accordingly, according to the tune name selection indication information, where it is instructed by the selection instruction command that use of the reference set order is invalidated, a plurality of tune names set as a successive output object can be selected as noticed tune information in a predetermined order according to the changed play mode. In other words, according to the selection instruction command, when the play mode of preview data should not be changed (for example, when the introduction page information does not include play mode indication information), use of the reference set order is validated, but when the play mode of preview data should be changed (for example, when the introduction page information includes play mode indication information), use of the reference set order is invalidated.

The introduction page information further includes, as processing control information, emphatic display indication information which indicates to raise, when a tune name set as a successive output object in the tune list. information 300 is selected as noticed tune information on the tune introduction screen, the luminance of the tune name selected as noticed tune information when compared with that of the other tune names to emphasize (that is, focus) the tune name selected as noticed tune information. Further, the introduction page information includes, as processing control information, final emphatic display indication information which indicates to emphatically display a tune name selected finally as noticed tune information or selected first as noticed tune information when all of tune names set as a successive output object in the tune list information 300 are selected as noticed tune information and automatic successive outputting of all corresponding preview data comes to an end. It is to be noted that the introduction page information may otherwise include, as processing control information, final emphatic display indication information which indicates not only to emphatically display a tune name selected finally or first as noticed tune information when all of tune names set as a successive output object in the tune list information 300 are selected as noticed tune information and automatic successive outputting of all corresponding preview data comes to an end but also to emphatically display a tune name selected arbitrarily, for example, by the music data distribution server SV1 side. In other words, when automatic successive outputting of preview data comes to an end, the introduction page information can include, as processing control information, final emphatic display indication information which indicates to emphatically display a tune name selected as noticed tune information finally or first or a tune selected arbitrarily by the music data distribution server SV1 side irrespective of the play mode (that is, data play mode or changed play mode) at the point of time. Also it is possible for the introduction page information to include, as processing control information, final emphatic display indication information which indicates, when automatic successive outputting of preview data comes to an end, to emphatically display a tune name at the top or at the last end according to the reference set order from among a plurality of tune names in the tune list information 300 irrespective of the data play mode and the changed play mode. Furthermore, where preview data are to be automatically outputted successively in accordance with a shuffle play mode or a random play mode as a changed play mode, it is possible for the introduction page information to include, as processing control information, final emphatic display indication information which indicates, when automatic successive outputting of the preview data comes to an end, to emphatically display a tune name selected at random subsequently to a tune name selected last as noticed tune information.

In addition, where a plurality of tune names in the tune list information 300 are set as a successive output object, the introduction page information includes various indicators such as a successive output notification indicator for notifying that a plurality of preview data coordinated with the plurality of tune names on a tune introduction screen produced based on the introduction page information can be outputted successively and a coordination notification indicator for notifying that preview data are coordinated with the plurality of tune names. Through the indicators, the introduction page information can notify the user on the tune introduction screen precisely of the fact that tune data can be outputted successively or preview data are coordinated with tune names. It is to be noted that, on the music data distribution server SV1, although the introduction page information may include the successive output notification indicator, it is otherwise possible to draw a design pattern of the successive output notification indicator in advance at a predetermined position of wallpaper (template) of the background of a tune introduction screen which can be produced based on such introduction page information as described above.

The introduction page information further includes, as processing control information, selection continuation indication information for continuing, when a tune name with which no preview data is coordinated is automatically selected as noticed tune information where, while preview data are coordinated only with some of a plurality of tune names in the tune list information 300, the plurality of tune names are set as a successive output object irrespective of whether or nor preview data are coordinated therewith, the selection of the noticed tune information and the emphatic display, and first selection continuation time information representative of a fixed period of time (hereinafter referred to as first fixed period of time) which is a first period of time of, for example, several seconds for which the selection is to be continued. However, it is otherwise possible for the introduction page information to additionally include, as processing control information, second selection continuation time information representative of a fixed period of time (hereinafter referred to as second fixed period of time) which is a second period of time longer than the first period of time and within which, when a tune name with which no preview data is coordinated is selected as noticed tune information in response to an instruction of the user during execution of a series of successive outputting processes on the client terminal 2 where some of tune names in the tune list information 300 are set as a successive output object irrespective of whether or not preview data are coordinated, the tune name is selected continuously as noticed tune information and is emphatically displayed.

Further, the introduction page information may suitably include, as processing control information, scroll display indication information which indicates, where a tune name which is not coordinated with preview data is to be selected as noticed tune information, to scroll the display of the tune name in the direction of an array of a character string (in the following, the direction is referred to as, for example, transverse direction) which forms the tune name in a tune name display place hereinafter described on the tune introduction screen while selection of the tune name is continued for the first fixed period of time or the second fixed period of time. Accordingly, even where, for example, the character string which forms the tune name is comparatively long and therefore cannot entirely be displayed at a time in the tune name display place, by scrolling the tune name in the transverse direction within the tune name display place when the tune name is selected as noticed tune information, the tune name can be confirmed precisely by the user since the tune name is displayed emphatically.

Furthermore, the introduction page information may suitably include, as a processing control instruction, selection compulsory ending indication information which causes, when a plurality of tune names in the tune list information 300 are set as a successive output object irrespective of whether or not preview data is coordinated therewith and that one of the tune names set as a successive output object which is not coordinated with the preview data is selected, the client terminal 2 to compulsorily end the automatic selection of a tune name at the point of time.

In this manner, the introduction page information suitably and selectively includes various kinds of processing control information (including also the process execution information 300B) with which a series of processes for causing the client terminal 2 to produce a tune introduction screen and automatically select a plurality of tune names set as a successive output object in the tune list information 300 successively as noticed tune information on the produced tune introduction screen and beside streaming reproduce preview data coordinated with the tune name selected as the noticed tune information to automatically and successively output such preview tunes based on the preview data can be executed.

Then, if request information (hereinafter referred to as introduction page information requesting signal) for requesting introduction page information corresponding to a type (that is, genre, artist or the like) designated by the user from the client terminal 2 is transmitted to the music data distribution server SV1, then the CPU 270 of the music data distribution server SV1 receives the introduction page information requesting signal through the network interface 275. In response to the reception, the CPU 270 reads out the introduction page information corresponding to the introduction page information requesting signal from the hard disk drive 272 and transmits the read out introduction page information to the client terminal 2 through the network interface 275. Consequently, the CPU 270 can provide the introduction page information including the tune list information 300 to the client terminal 2.

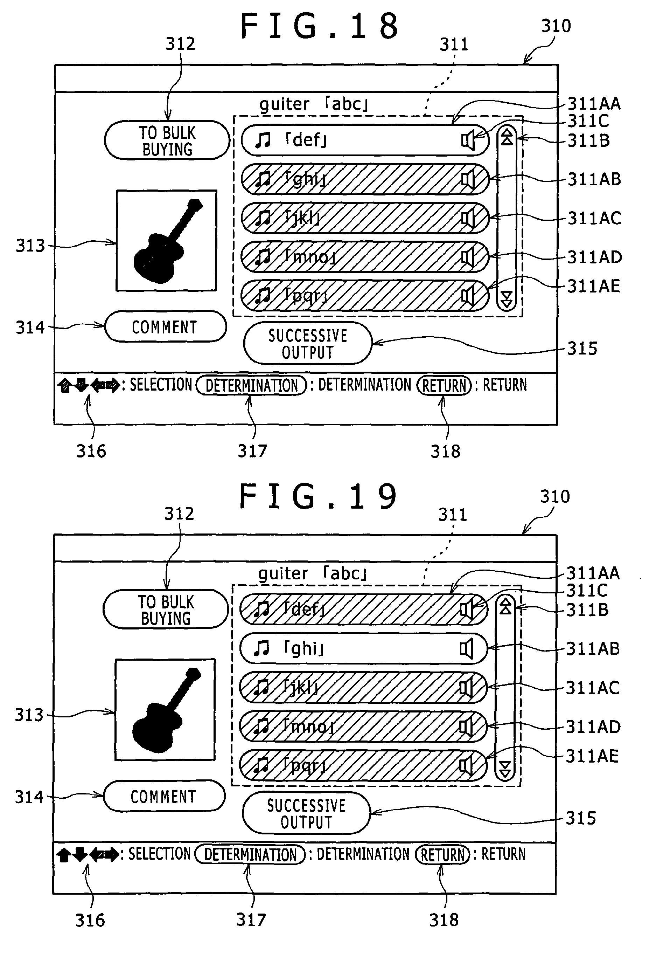

On the other hand, if an operation input signal for requesting acquisition of introduction page information is inputted through the operation inputting section 200, then the CPU 203 of the client terminal 2 transmits an introduction page information requesting signal to the music data distribution server SV1 successively through the communication processing section 214 and the network interface 215 in response to the operation input signal. As a result, if introduction page information transmitted from the music data distribution server SV1 is received successively through the network interface 215 and the communication processing section 214, then the CPU 203 produces tune introduction screen data based on the received introduction page information. Then, the CPU 203 signals the tune introduction screen data to the display unit 206 through the display processing section 207 so that, for example, such a tune introduction screen 310 as shown in FIG. 18 which is based on the tune introduction screen data is displayed on the display unit 206.

In this instance, the tune introduction screen 310 includes a tune name display section 311 having a plurality of tune name display places 311AA to 311AE arranged along the vertical direction of the tune introduction screen 310. To and on the tune name display places 311AA to 311AE displayed in the tune name display section 311, tune names in the tune list information 300 are allocated and displayed in the reference set order from an upper end toward a lower end in the vertical direction of the tune introduction screen 310. Further, the tune name display section 311 includes a scroll operation section 311B for changing over the tune name display places 311AA to 311AE to be displayed in the tune name display section 311. Accordingly, where a number of tune names greater than the number of tune name display places 311AA to 311AE which can be displayed at a time in the tune name display section 311 on the tune introduction screen 310 are included in the tune list information 300, if the tune name display places 311AA to 311AE are scrolled in the upward direction or the downward direction within the tune name display section 311 in response to a selective indication (that is, an operation) of an upward or downward arrow mark of the scroll operation section 311B, then the display in the tune name display places 311AA to 311AE can be successively changed over to a display including a tune name display place or places not shown in FIG. 18. Accordingly, with the tune introduction screen 310, it is possible to display all of the tune names in the tune list information 300 in respectively corresponding ones of the tune name display places 311AA to 311AE and the other tune name display places not shown so that they can be observed by the user. Further, where preview data is coordinated with a tune name displayed in any of the tune name display places 311AA to 311AE, also a coordination notification indicator 311C which is a mark schematically showing a shape of, for example, a speaker and is included in the introduction page information is displayed. Furthermore, the tune introduction screen 310 includes a bulk buying button 312 for jumping to a bulk buying screen (not shown) for bulk buying music data corresponding to all of the tune names in the tune list information 300.

Further, the tune introduction screen 310 includes a related image display section 313 for displaying, when a tune name in one of the tune name display places 311AA to 311AE is selected as noticed tune information, an image of a jacket photograph or the like as tune-related information corresponding to the tune name selected as the noticed tune information. Further, for example, where only tune names of one album are displayed in the tune name display places 311AA to 311AE of the tune name display section 311 of the tune introduction screen 310 in order to introduce only the tunes collected in the one album, the tune introduction screen 310 includes only a details information presentation button 314 for acquiring details presentation page information regarding the album (that is, regarding all of the plurality of tune names included in the tune introduction screen 310) and displaying the details information, for example, in a blank region in the tune introduction screen 310. Incidentally, such details information may be displayed otherwise in the details information presentation button 314. Furthermore, where a plurality of tune names in the tune list information 300 are set as a successive output object, the tune introduction screen 310 includes also a successive output notification indicator 315 included in the introduction page information. Further, an operation button notification region is provided at a lower end of the tune introduction screen 310. In the operation button notification region, selection buttons 316 for selective indication inputting indicated by arrow marks of four directions, a determination button 317 and a return button 318 for canceling a selection instruction and returning to a preceding process are displayed in order to notify the user of operation buttons which can be utilized (that is, which are effective) to input an operation instruction from among various operation buttons (that is, the operation inputting section 200) provided on a remote controller or the like when various kinds of inputting are to be performed on the tune introduction screen 310.

It is to be noted that the details information presentation button 314 on the tune introduction screen 310 may otherwise function so as to present details information as tune-related information for each tune name such that, when the details information presentation button 314 is selectively operated in a state wherein a tune name is selected as noticed tune information, details presentation page information corresponding only to the selected tune name is acquired and details information corresponding to the tune name is presented. Further, the tune introduction screen 310 may include selection buttons 316, a determination button 317 and a return button 318, which actually function as buttons on the screen, provided at a lower end thereof.

When the tune introduction screen 310 is displayed on the display unit 206, for example, for an initial period of the display, the CPU 203 selects the tune name displayed in the tune name display place 311AA disposed at an uppermost position among the tune name display places 311AA to 311AE of the tune name display section 311 and raise the luminance of the tune name display place 311AA when compared with that of the tune name display places 311AB to 311AE to emphatically display the tune name selected as the noticed tune information in response to setting information set in advance by the client terminal 2. Then, if the process execution information 300B is associated with a tune name when the tune name is selected as noticed tune information, then the CPU 203 transmits requesting information (hereinafter referred to as preview data requesting signal) for requesting preview data making use of a URL included in the process execution information 300B to the music data distribution server SV1 successively through the communication processing section 214 and the network interface 215 in accordance with the process execution information 300B.

Consequently, the CPU 270 of the music data distribution server SV1 receives the preview data requesting signal transmitted from the client terminal 2 through the network interface 275 and reads out the preview data, whose acquisition is requested, from the hard disk drive 272 in response to the URL utilized for the transmission of the received preview data requesting signal. Then, the CPU 270 transmits the preview data in a streaming format to the client terminal 2 through the network interface 275 in accordance with the UDP/IP (User Datagram Protocol/Internet Protocol). Accordingly, when the preview data are transmitted in the streaming format from the music data distribution server SV1, the CPU 203 of the client terminal 2 receives the preview data successively through the network interface 215 and the communication processing section 214 and signals the preview data to the speaker 210 through the sound processing section 209 so that a preview tune based on the preview data is outputted from the speaker 210 so as to be enjoyed by the user.

When the outputting of the preview data as a preview tune comes to an end, the CPU 203 decides whether or not successive outputting permission identification information 300F is included, for example, in the introduction page information in accordance with the processing control information included in the introduction page information. As a result, if the successive outputting permission identification information 300F is included in the introduction page information, then the CPU 203 automatically selects, for example, in accordance with tune selection indication information included in the introduction page information, a tune name displayed in the second tune name display place 311AB from the top on the tune introduction screen 310 (that is, a tune name set as a successive output object in the tune list information 300) as seen in FIG. 19. Further, the CPU 203 raises the luminance of the tune name display place 311AB when compared with that of the tune name display places 311AA and 311AC to 311AE to emphatically display the tune name automatically selected as the noticed tune information. Then, if the process execution information 300B is associated with the tune name selected as the noticed tune information, then the CPU 203 utilizes the URL included in the process execution information 300B to transmit a preview data requesting signal to the music data distribution server SV1 successively through the communication processing section 214 and the network interface 215 in accordance with the process execution information 300B.

Consequently, the CPU 270 of the music data distribution server SV1 receives the preview data requesting signal transmitted from the client terminal 2 through the network interface 275 and reads out the preview data, whose acquisition is requested, from the hard disk drive 272 in response to the URL utilized for the transmission of the received preview data requesting signal. Then, the CPU 270 transmits the preview data in the streaming format to the client terminal 2 through the network interface 275. Accordingly, if preview data are transmitted in the streaming format from the music data distribution server SV1, then the CPU 203 of the client terminal 2 receives the preview data successively through the network interface 215 and the communication processing section 214 and signals the received preview data to the speaker 210 through the sound processing section 209 so that a preview tune based on the preview data is outputted from the speaker 210 so as to be enjoyed by the user.

In this manner, for example, if preview data are individually coordinated with all of tune names in the tune list information 300 and all of the tune names are set as a successive output object, then every time an end of outputting of the preview data is detected, the CPU 203 of the client terminal 2 automatically selects, in accordance with tune name selection indication information included in the introduction page information, the tune names set as a successive output object in the tune list information 300 on the tune introduction screen 310 successively as noticed tune information in the reference set order and issues a request for the preview data coordinated with the tune name selected as the noticed tune information to the music data distribution server SV1 in accordance with the process execution information 300B included in the introduction page information. Further, every time a request for preview data is received from the client terminal 2, the CPU 270 of the music data distribution server SV1 automatically transmits the requested preview data successively. Consequently, the CPU 203 can automatically and successively output a plurality of preview data (that is, tune-related information) coordinated with a plurality of tune names in the tune list information 300 as a preview tune.

In addition, for example, if a determination instruction is inputted through the determination button of the operation inputting section 200 in a state wherein a tune name is selected as noticed tune information on the tune introduction screen 310 (that is, the tune name displayed in one of the tune name display places 311AA to 311AE is selected as noticed tune information and is emphatically displayed together with the tune name display place 311AA to 311AE) (that is, if the tune name is clicked), then the CPU 203 of the client terminal 2 acquires details presentation page information corresponding to the tune name from the music data distribution server SV1. Then, the CPU 203 causes details information (that is, details information which corresponds to the tune name selected as noticed tune information and is not shown particularly) based on the details presentation page to be displayed, for example, on the right side of the successive output notification indicator 315 on the tune introduction screen 310. Consequently, when a tune name is selected as noticed tune information, the CPU 203 can present details information together with a preview tune corresponding to the tune name to the user. It is to be noted that, every time a tune name is selected as noticed tune information on the tune introduction screen 310, the CPU 203 may automatically acquire details presentation page information and image data corresponding to the tune name selected as the noticed tune information and cause the related image display section 313 to display an image as tune-related information based on the image data while details information as tune-related information based on the details presentation page information is displayed on the right side of the successive output notification indicator 315 or at a portion of the details information presentation button 314. In this manner, every time a tune name is selected as noticed tune information, the CPU 203 can collectively present various kinds of tune-related information such as an image and details information together with a corresponding preview tune to the user.

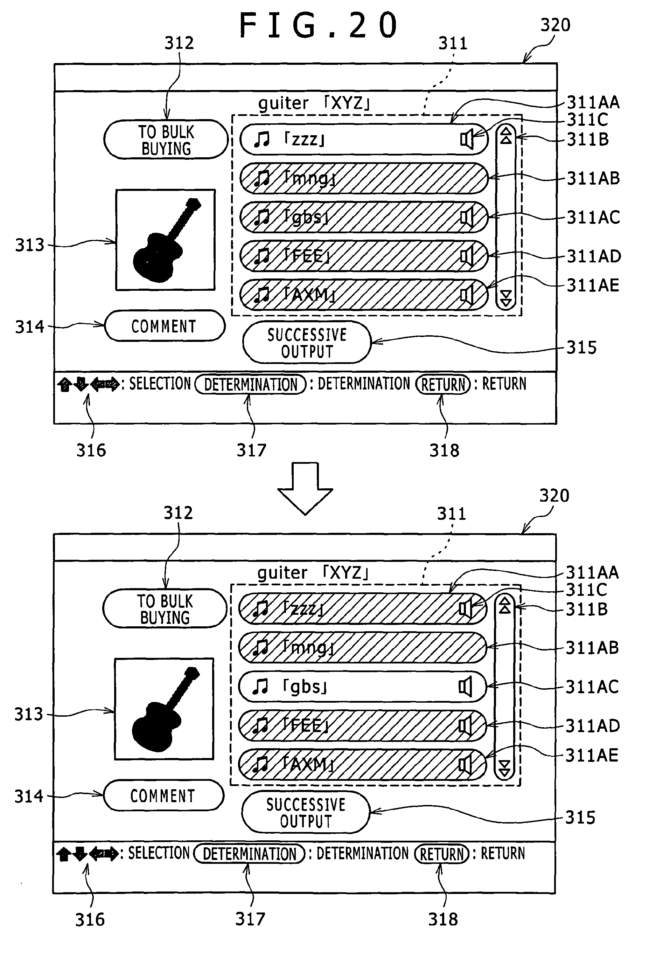

Incidentally, in FIG. 20, for example, if preview data is coordinated only with some (at least two) of a plurality of tune names in the tune list information 300 and only the tune names coordinated with the preview data are set as a successive output object, then every time an end of outputting of preview data is detected, the CPU 203 of the client terminal 2 selects only those tune names which are set as a successive output object from among the plurality of tune names in the tune list information 300 on a tune introduction screen 320 selectively and successively as noticed tune information in accordance with tune name selection indication information included in the introduction page information and issues a request for preview data coordinated with the tune name selected as the noticed tune information to the music data distribution server SV1 in accordance with the process execution information 300B included in the introduction page information. Further, also in this instance, every time a request for preview data is received from the client terminal 2, the CPU 270 of the music data distribution server SV1 automatically and successively transmits the requested preview data to the client terminal 2. Consequently, also in such a case as just described, the CPU 203 of the client terminal 2 can automatically and successively output preview data coordinated with a plurality of tune names in the tune list information 300 as a preview tune.

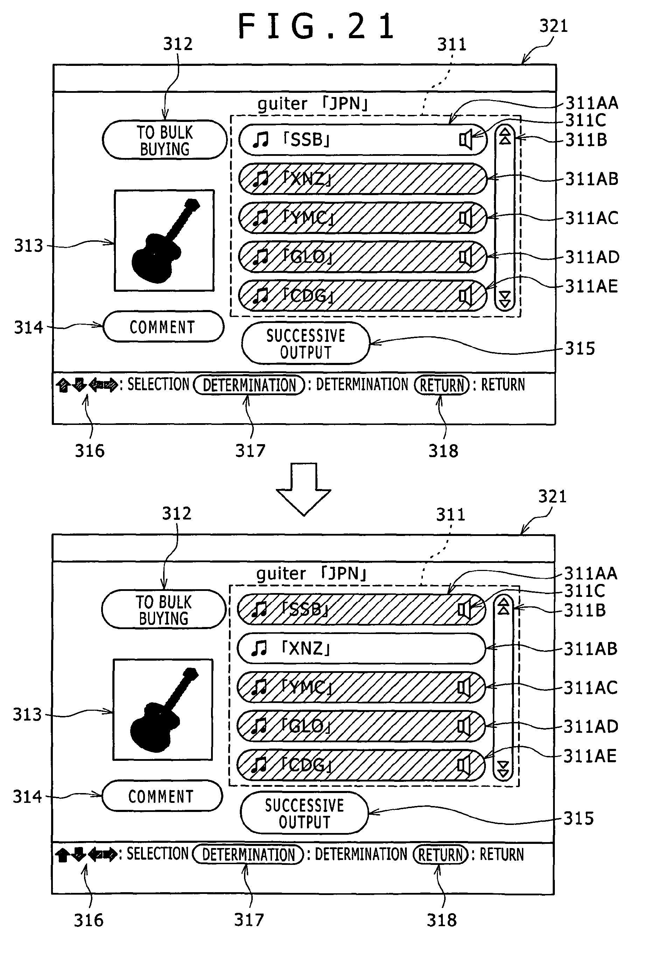

Referring now to FIG. 21, if preview data is coordinated only with some of a plurality of tune names in the tune list information 300 while the tune names are set as a successive output object irrespective of whether or not they are coordinated with the preview data, then when a tune name with which processing execution information 300B is not associated (that is, with which no preview data is coordinated) is automatically selected as noticed tune information on a tune introduction screen 321 in accordance with tune name selection indication information included in the introduction page information, the CPU 203 continuously selects the tune name as noticed tune information for the first fixed period of time in accordance with selection continuation indication instruction and first selection continuation time information included in the introduction page information and continues to emphatically display the tune name together with the tune name display place 311AB in which the tune name is displayed, whereafter the CPU 203 selects a next tune name as noticed tune information. However, where the introduction page information additionally includes the second selection continuation time information, if a tune name which is not coordinated with preview data is selected as noticed tune information in response to an instruction of the user while the tune names set as a successive output object in the tune list information 300 are successively set as noticed tune information, then the CPU 203 selects the tune name as noticed tune information continuously for the second fixed period of time in accordance with the selection continuation indication instruction and the second selection continuation time information included in the introduction page information and besides continues to emphatically display the tune name together with the tune name display place 311AB in which the tune name is displayed, whereafter the CPU 203 returns to the automatic selection of a tune name and selects a next new tune name as noticed tune information.

Consequently, if a tune name with which preview data is not coordinated is selected as noticed tune information in response to an instruction of the user, then while the CPU 203 continues the selection of the tune name as noticed tune information, the CPU 203 can acquire and present details information (that is, details presentation page information) of music data corresponding to the tune name in response to the instruction of the user. Accordingly, the CPU 203 can present and precisely introduce details information of music data with regard to which the user cannot enjoy a preview tune (that is, whose tune is not coordinated with preview data) during execution of a series of successive outputting processes. Further, the CPU 203 can continue also the emphatic display of the corresponding tune name display place 311AB together with the tune name then to allow the user to easily confirm the tune name selected as noticed tune information. Incidentally, if the introduction page information then includes scroll display indication information, then the CPU 203 scrolls the display of a tune name or tune names selected as noticed tune information although no preview data is coordinated therewith in the transverse direction in the corresponding tune name display place 311AB for the first fixed period of time or the second fixed period of time on the tune introduction screen 321 in accordance with the scroll display indication information. Consequently, even if a tune name cannot be displayed at a time in the tune name display place 311AB because the character string which forms the tune name is comparatively long, the CPU 203 can allow the user to easily confirm the entire tune name.

It is to be noted that, if a tune name which is not set as a successive output object is selected as noticed tune information by a user operation during execution of automatic and successive outputting of a plurality of preview data, then the CPU 203 can stop the automatic and successive outputting of preview data irrespective of whether or not the preview data is coordinated with the tune name selected as the noticed tune information. Further, the CPU 203 may otherwise decide, without stopping the automatic and successive outputting of the preview data, whether or not a tune name preceding or succeeding the tune name set as noticed tune information by the user in accordance with the reference set order is set as a successive output object and automatically set, if the preceding of succeeding tune name is set as a successive output object, the preceding or succeeding tune name as noticed tune information thereby to continue the automatic and successive outputting of the preview data. Furthermore, the CPU 203 may otherwise search, if a result of the decision that the tune name selected as noticed tune information preceding or succeeding the tune name selected as noticed tune information by the user is set as a successive output object indicates that the preceding or succeeding tune name is not set as a successive output object either, for tune names set as a successive output object successively in the reference set order, for example, from the top tune name to select those tune names which are set as a successive output object selectively as noticed tune information to continue the automatic and successive outputting of the preview data. Furthermore, when a tune name which is not set as a successive output object is selected as noticed tune information by a user operation during execution of automatic and successive outputting of a plurality of preview data, although the CPU 203 may stop or continue the automatic and successive outputting of the preview data at the point of time as described hereinabove, also where a tune name which is not set as a successive output object is selected as noticed tune information by a user operation when automatic and successive outputting of a plurality of preview data is not being executed, the CPU 203 may keep stopping the automatic and successive outputting of the preview data as it is or may start automatic and successive outputting of the preview data by a similar process to that in the case of continuation described above.

Further, if the introduction page information includes selection compulsorily ending indication information, then, for example, if a tune name with which the process execution information 300B is not associated (that is, with which no preview data is coordinated) is selected as noticed tune information from among a plurality of tune names set as a successive output object on the tune introduction screen 321, then the CPU 203 compulsorily ends the automatic selection of a tune name (that is, ends the automatic and successive outputting of preview data) in accordance with the selection compulsorily ending indication information. Thereafter, the CPU 203 urges the user to arbitrarily select a tune as noticed tune information on the tune introduction screen 321.

Incidentally, the CPU 203 of the client terminal 2 compulsorily ends automatic selection of a tune name in accordance with processing control information included in the introduction page information if a result of the decision of whether or not the introduction page information includes the successive outputting permission identification information 300F when outputting of the first preview tune comes to an end as described hereinabove indicates that the introduction page information does not include the successive outputting permission identification information 300F. Further, when the first tune is selected as noticed tune information on the tune introduction screen 310, if the process execution information 300B is not coordinated with the tune name selected as noticed tune information, then the CPU 203 decides whether or not the introduction page information at the point of time includes the successive outputting permission identification information 300F in accordance with the processing control information included in the introduction page information. As a result, if the successive outputting permission identification information 300F is not included in the introduction page information, then also in this instance, the CPU 203 compulsorily ends the automatic selection of a tune. On the other hand, if the successive outputting permission identification information 300F is included in the introduction page information although the process execution information 300B is not coordinated with the first tune name selected as noticed tune information, then the CPU 203 executes one of the processes described hereinabove in accordance with the processing control information included in the introduction page information.

Incidentally, the changed play mode described hereinabove includes a repeat play mode in which a plurality of preview data corresponding to a plurality of tune names set as a successive output object in the tune list information 300 are repeated circulatingly. The changed play mode further includes a single repeat play mode in which only one preview data (for example, preview data relating to one tune which the music data distribution server SV1 side intends to introduce positively) from among a plurality of preview data corresponding to a plurality of tune names set as a successive output object in the tune list information 300 is outputted repetitively and successively. The changed play mode further includes a shuffle play mode in which a plurality of preview data corresponding to a plurality of tune names set as a successive output object in the tune list information 300 are outputted in an order in which the order of the tune data where they are coordinated with the tune names in the tune list information 300 is changed at random. Furthermore, the changed play mode includes a random play mode in which one preview data is selected and outputted successively and at random from among all of a plurality of preview data corresponding to a plurality of tune names set as a successive output object in the tune list information 300. The changed play mode further includes a program play mode in which a plurality of preview data corresponding to a plurality of tune names set as a successive output object in the tune list information 300 are outputted in an arbitrarily set order. Incidentally, in the program play mode, a plurality of preview data corresponding to a plurality of tune names set as a successive output object may be outputted in an overlapping relationship, or alternatively, only one or some of the preview data corresponding to all of the tune names selected as a successive output object may be outputted.

Incidentally, the changed play mode further includes a shuffle repeat play mode in which both of the shuffle play mode and the repeat play mode are used such that a plurality of preview data corresponding to a plurality of tune names set as a successive output object in the tune list information 300 are outputted circulatingly and repetitively in an order in which the order of the preview data when they are coordinated with the tune names in the tune list information 300 is changed at random. The changed play mode further includes a program repeat play mode in which both of the program play mode and the repeat play mode are used such that a plurality of preview data corresponding to a plurality of tune names set as a successive output object in the tune list information 300 are outputted circulatingly and repetitively in an order set arbitrarily.

Then, when the repeat play mode is selected as the changed play mode of preview data on the music data distribution server SV1 side, the introduction page information includes play mode indication information which indicates the repeat play mode and further includes, as processing control information, circulation time number indication information indicating a maximum number of times of circulation by which a plurality of tune names set as a successive output object in the tune list information 300 is selected repetitively and circulatingly as noticed tune information. In addition, the introduction page information includes, for example, a play mode notification indicator for notifying that the repeat play mode or the single repeat play mode is used. Further, when the single repeat play mode is selected as the changed play mode of preview data on the music data distribution server SV1, the introduction page information includes, as processing control information, play mode indication information indicative of the single repeat play mode, and tune name indication information which indicates a tune name corresponding to the preview data to be outputted repetitively and selection time number indication information which indices a maximum number of times of selection by which the tune name is to be selected repetitively as noticed tune information. In addition, the introduction page information includes a play mode notification indicator for the notification of the repeat play mode or the single repeat play mode thereupon. Further, when the shuffle play mode is selected as the changed play mode of preview data on the music data distribution server SV1, the introduction page information further includes, as processing control information, play mode indication information which indicates the shuffle play mode and random selection indication information which indicates that a plurality of tune names set as a successive output object in the tune list information 300 are selected at random so that they may not be selected in an overlapping relationship in accordance with the shuffle play mode. In addition, the introduction page information thereupon includes a play mode notification indicator for the notification of the shuttle play mode.

Further, when the random play mode is selected as the changed play mode of preview data on the music data distribution server SV1, the introduction page information includes, as processing control information, play mode indication information indicative of the random play mode, random selection indication information which indicates to successively select one tune name at random from all of the plurality of tune names set as a successive output object in the tune list information 300 in response to the random play mode and selection time number indicative of a maximum selection time number by which a tune is successively selected at random from all of the tune names. In addition, the introduction page information includes also a play mode notification indicator for the notification of the random play mode thereupon. Furthermore, when the program play mode is selected as the changed play mode of preview data on the music data distribution server SV1, the introduction page information includes, as processing control information, play mode indication information indicative of the program play mode and set order indication information representative of an arbitrarily set order different from the reference set order when a plurality of tune names set as a successive output object in the tune list information 300 are selected as a noticed tune information. In addition, the introduction page information includes also a play mode notification indicator for the notification of the program play mode thereupon. Incidentally, when the play mode of preview data on the music data distribution server SV1 side is set to a data play mode, the introduction page information includes the tune name selection indication information described hereinabove as processing control information and further includes a play mode notification indicator for the notification of the data play mode.

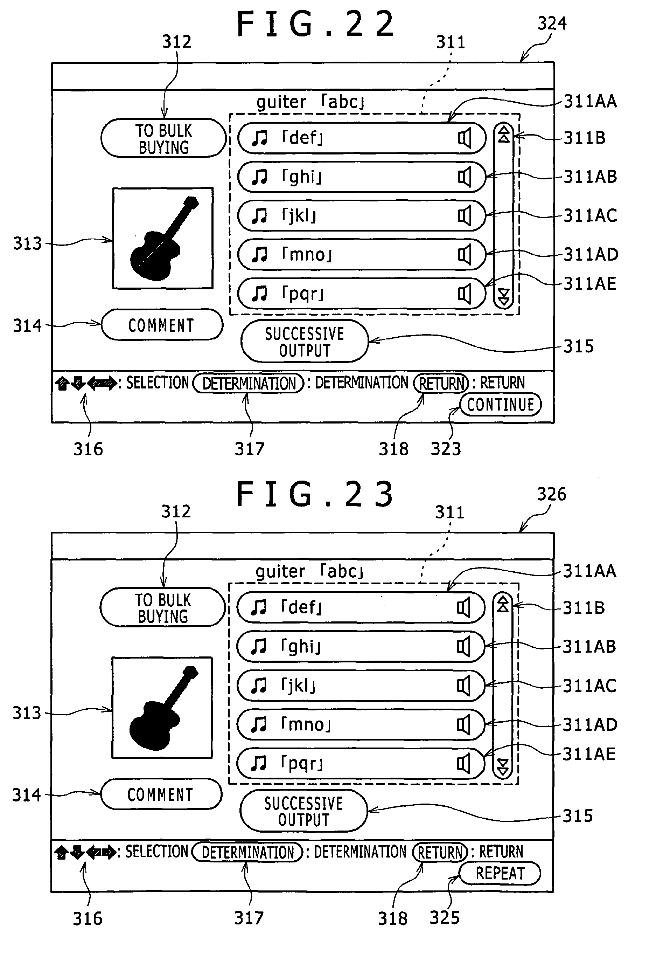

Consequently, if the CPU 203 of the client terminal 2 acquires introduction page information which includes tune name selection indication information indicating the data play mode from the music data distribution server SV1, then the CPU 203 controls the display unit 206 to display such a tune introduction screen 324 which includes a play mode notification indicator 323 for the notification of the data play mode as shown in FIG. 22 based on the introduction page information. In this state, the CPU 203 automatically and successively outputs a plurality of preview data while a plurality of corresponding tune names set as a successive output object in the tune list information 300 are successively selected in the reference set order as noticed tune information on the tune introduction screen 324 similarly as described hereinabove.

Further, if the CPU 203 acquires introduction page information which includes the play mode indication information indicative of the repeat play mode from the music data distribution server SV1, then it controls the display unit 206 to display a tune introduction screen 326 which includes such a play mode notification indicator 325 for the notification of the repeat play mode or the single repeat play mode as shown in FIG. 23 based on the introduction page information. In this state, the CPU 203 automatically, repetitively and circulatingly outputs a plurality of preview data while repetitively and circulatingly selecting a plurality of corresponding tune names set as a successive output object in the tune list information 300 on the tune introduction screen 326 until the maximum number of times of repetition is reached based on repetition time number indication information included in the introduction page information.

Further, if the CPU 203 acquires introduction page information which includes play mode indication information indicative of the single repeat play mode from the music data distribution server SV1, then the CPU 203 controls the display unit 206 to display the tune introduction screen 326 shown in FIG. 23 similarly to that when the repeat play mode is selected based on the introduction page information. In this state, the CPU 203 automatically, repetitively and successively outputs one preview data to be outputted repetitively while only one tune corresponding to the one tune data is automatically and successively selected as noticed tune information from among a plurality of tune names set as a successive output object in the tune list information 300 on the tune introduction screen 326 in accordance with tune name indication information and selection time number indication information included in the introduction page information. Then, the CPU 203 can automatically, successively and repetitively output only one preview data corresponding to only one tune from among a plurality of tune names set as a successive output object in the tune list information 300 at this time by a predetermined number of times (that is, the maximum selection time number) until after the maximum selection time number is reached.

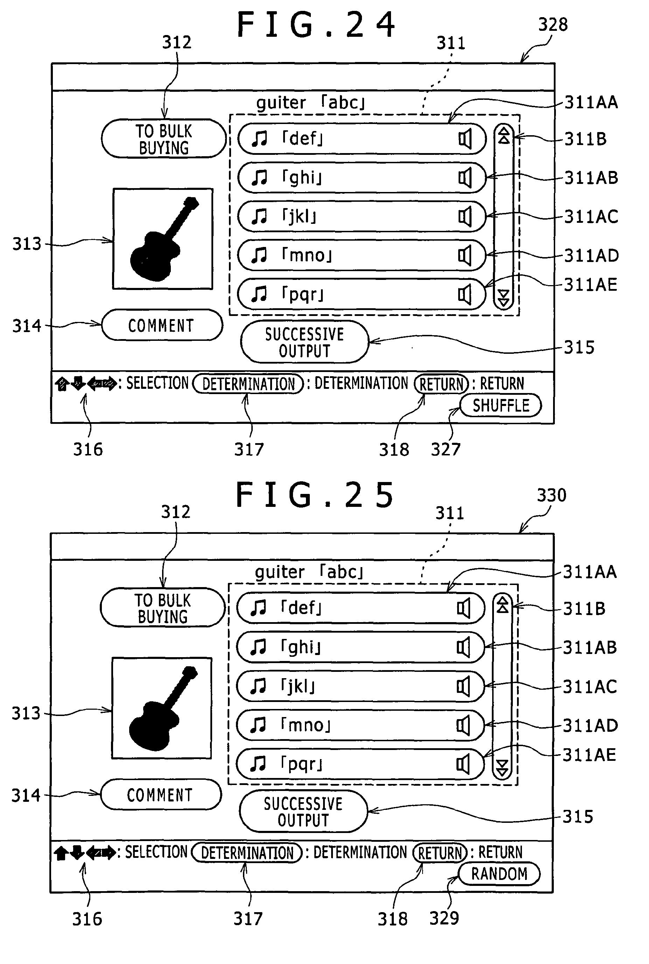

Further, if the CPU 203 acquires introduction page information which includes play mode indication information indicative of the shuffle play mode from the music data distribution server SV1, then the CPU 203 controls the display unit 206 to display such a tune introduction screen 328 which includes a play mode notification indicator 327 for the notification of the shuffle play mode as shown in FIG. 24 based on the introduction page information. In this state, the CPU 203 automatically and successively outputs preview data while a plurality of corresponding tune names set as a successive output object in the tune list information 300 are successively and randomly selected such that the tune names may not be selected in an overlapping relationship with each other and the selected tune names are automatically set as noticed tune information. Consequently, the CPU 203 automatically and successively outputs a plurality of preview data corresponding to a plurality of tune names set as a successive output object in the tune list information 300 in an order different from the order where the preview data are coordinated with the tune names (that is, in the order according to the reference set order).

Further, if the CPU 203 acquires introduction page information which includes play mode indication information indicative of the random play mode from the music data distribution server SV1, then the CPU 203 controls the display unit 206 to display a tune introduction screen 330 which includes such a play mode notification indicator 329 for the notification of the random play mode as shown in FIG. 25 based on the introduction page information. In this state, while the CPU 203 selects one tune name at random (thus, a tune name may possibly be selected in an overlapping relationship) from among all of a plurality of tune names set as a successive output object in the tune list information 300 repetitively until the maximum selection time number is reached on the tune introduction screen 330 and automatically sets the selected tune name as noticed tune information, the CPU 203 automatically and successively outputs corresponding preview data. Consequently, the CPU 203 randomly selects and automatically and successively outputs a plurality of preview data corresponding to a plurality of tune names set as a successive output object in the tune list information 300.

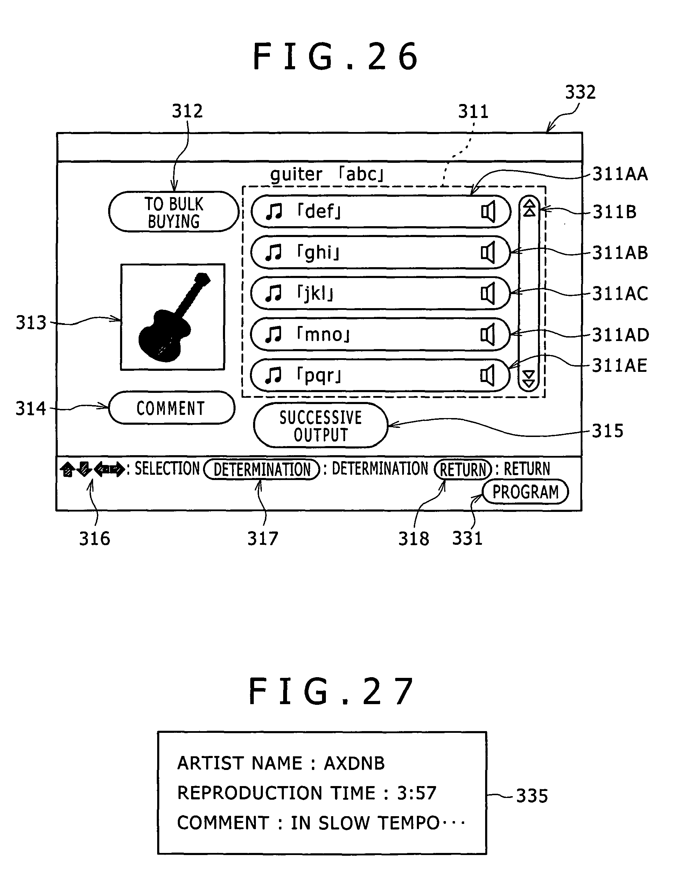

If the CPU 203 acquires introduction page information which includes play mode indication information indicative of the program play mode from the music data distribution server SV1, then the CPU 203 controls the display unit 206 to display a tune introduction screen 332 which includes such a play mode notification indicator 331 for the notification of the program play mode as shown in FIG. 26 based on the introduction page information. In this state, while the CPU 203 automatically and successively selects a plurality of tune names set as a successive output object in the tune list information 300 in a changed set order (that is, different from the reference set order) indicated by the set order indication information, the CPU 203 automatically and successively outputs corresponding preview data. Consequently, the CPU 203 automatically, repetitively and successively outputs a plurality of preview data corresponding to a plurality of tune names set as a successive output object in the tune list information 300 in an order according to the changed set order.

Incidentally, if the shuffle play mode is selected as the changed play mode of the preview data on the music data distribution server SV1 side, then the introduction page information includes random selection indication information and circulation time number indication information as processing control information together with play mode indication information indicative of the shuffle play mode. Accordingly, if the CPU 203 acquires introduction page information which includes play mode indication information indicative of the shuffle play mode from the music data distribution server SV1, then the CPU 203 controls the display unit 206 to display a tune introduction screen (not shown) based on the introduction page information. In this state, while the CPU 203 successively and randomly selects a plurality of tune names set as a successive output object in the tune list information 300 on the tune introduction screen 328 such that the tune names may not be selected in an overlapping relationship and automatically sets the selected tune name as noticed tune information, the CPU 203 automatically and successively outputs corresponding preview data. Further, after the selection of the tune names as noticed tune information is performed one round, the CPU 203 circulatingly repeats the selection until the maximum repetition time number is reached. Consequently, the CPU 203 automatically, repetitively and successively outputs a plurality of preview data corresponding to a plurality of tune names set as a successive output object in the tune list information 300 in an order different from the order when the preview data are coordinated with the tune names (that is, in an order according to the reference set order).

Further, if the program play mode is selected as the changed play mode of preview data on the music data distribution server SV1 side, then the introduction page information includes set order indication information and circulation time number indication information as processing control information together with play mode indication information which indicates the program play mode. Accordingly, if the CPU 203 acquires introduction page information which includes the play mode indication information which indicates the program play mode from the music data distribution server SV1, the CPU 203 controls the display unit 206 to display a tune introduction screen (not shown) based on the introduction page information. In this state, while the CPU 203 automatically and successively selects a plurality of tune names set as a successive output object in the tune list information 300 on the tune introduction screen 332 in a changed set order indicated by the set order indication information, the CPU 203 automatically and successively outputs corresponding preview data. Further, after the selection of the plurality of tune names as noticed tune information is performed one round, the CPU 203 circulatingly repeats the selection until the maximum repetition time number is reached thereby to automatically, repetitively and circulatingly output the plurality of preview data corresponding to the plurality of tune names in an order according to the changed set order. Consequently, the CPU 203 automatically, repetitively and successively outputs a plurality of preview data corresponding to a plurality of tune names set as a successive output object in the tune list information 300 in an order different from the order when the preview data are coordinated with the tune names (that is, in an order according to the reference set order) until a particular number of preview data are outputted.

In this manner, when the CPU 203 automatically and successively outputs a plurality of preview data corresponding to a plurality of tune names set as a successive output object in the tune list information 300 in accordance with processing control information included in the introduction page information, the CPU 203 leaves a tune name, which is selected finally as noticed tune information, in an emphatically displayed state together with one of the tune name display places 311AA to 311AE in which the tune name is displayed on the tune introduction screen 310 or emphatically displays the tune name selected first as noticed tune information together with the tune name display place 311AA in which the tune is displayed. Thereafter, the CPU 203 ends the automatic and successive outputting of the preview data. However, where the first selection continuation time information or the second selection continuation time information is not included in the introduction page information together with the selection continuation indication instruction described hereinabove, if the selection button, determination button or return button of the operation inputting section 200 is operated by the user on the tune introduction screen 310 to selectively indicate one of the tune name display places 311AA to 311AE, the bulk buying button 312, the details information presentation button 314 or the upper end or lower end of the scroll operation section 311B or the like while preview data are automatically and successively outputted, then the CPU 203 ends the automatic and successive outputting of preview data at the point of time. Then, after the point of time, the CPU 203 selects a tune name as noticed tune information or outputs preview data or else enters a purchase process of desired music data in response to instruction information inputted through the operation inputting section 200 by the user.

Incidentally, if some tune name is set as noticed tune information on the tune introduction screen 310 and then selectively indicated in response to an instruction of the user, then the CPU 203 transmits requesting information (hereinafter referred to as details presentation page information requesting signal) for details presentation page information corresponding to the tune name selected as the noticed tune information to the music data distribution server SV1 successively through the communication processing section 214 and the network interface 215 in accordance with the selective indication. Consequently, the CPU 270 of the music data distribution server SV1 receives the details presentation page information requesting signal transmitted from the client terminal 2 through the network interface 275 and reads out details presentation page information, whose acquisition is requested, from the hard disk drive 272 in response to the received details presentation page information requesting signal. Then, the CPU 270 transmits the details presentation page information to the client terminal 2 through the network interface 275. Accordingly, the CPU 203 receives the details presentation page information transmitted from the music data distribution server SV1 successively through the network interface 215 and the communication processing section 214 and produces details information presentation screen data based on the received details presentation page information. Then, the CPU 203 signals the details information presentation screen data to the display unit 206 through the display processing section 207 such that, for example, such a details information presentation screen 335 as shown in FIG. 27 based on the details information presentation screen data is displayed, for example, on the right side of the successive output notification indicator 315 of the tune introduction screen on the display unit 206. Consequently, the CPU 203 can particularly introduce not only preview tunes whose music data can be downloaded but also details information of the text format displayed in the details information presentation screen 335. It is to be noted that, although the CPU 203 may cause the details information presentation screen 335 of a comparatively great width to display the details information of the text format separately in several lines, it may otherwise control, for example, a details information presentation screen for displaying one line so that the details information of the text format is displayed in one line but is scrolled where the details information cannot be displayed collectively in one line.

Further, the introduction page information may include URLs for acquiring purchase page information for the purchase of music data individually corresponding to a plurality of tune names in the tune list information 300 in a coordinated relationship with the tune names. Thus, if a purchase button provided on the operation inputting section 200 is selectively indicated, for example, during automatic outputting of preview data, then the CPU 203 utilizes the URL for the purchase page information acquisition corresponding to the preview data being currently outputted automatically at the point of time (that is, corresponding to the tune name selected as noticed tune information at the point of time) to transmit requesting information (hereinafter referred to as purchase page information requesting signal) for requesting the purchase page information to the music data distribution server SV1 successively through the communication processing section 214 and the network interface 215. As a result, the CPU 270 of the music data distribution server SV1 receives the purchase page information requesting signal transmitted from the client terminal 2 through the network interface 275 and reads out purchase page information whose acquisition is requested from the hard disk drive 272 in response to the URL utilized for the transmission of the received purchase page information requesting signal. Then, the CPU 270 transmits the purchase page information to the client terminal 2 through the network interface 275. Accordingly, the CPU 203 of the client terminal 2 receives the purchase page information transmitted from the music data distribution server SV1 successively through the network interface 215 and the communication processing section 214 and displays a purchase screen based on the received purchase page information. Consequently, the CPU 203 can easily purchase music data corresponding to the preview tune being currently previewed by a simple operation of merely selectively indicating the purchase button during a preview of the preview tune.

### 2-1-1. Related information successively providing outputting processing procedure

The CPU 270 of the music data distribution server SV1 actually executes a related information successively providing outputting process together with the client terminal 2 in accordance with various processing control information included in introduction page information and a related information successively providing program stored in advance in the ROM 271 or the hard disk drive 272. In the following, the related information successively providing outputting processing procedure is described taking a case wherein test data is coordinated with all of a plurality of tune names in the tune list information 300 and the tune names are set as a successive output object as an example. In particular, the CPU 203 of the client terminal 2 successively acquires a series of pieces of page information for the music data distribution from the music data distribution server SV1 in response to an instruction of the user. Then, if a request for acquisition of introduction page information is issued on a screen produced based on predetermined page information, then the CPU 203 transmits an introduction page information requesting signal to the music data distribution server SV1 in response to the request at step SP100. At this time, the CPU 270 of the music data distribution server SV1 receives the introduction page information requesting signal transmitted from the client terminal 2 and starts the related information successively providing processing procedure in accordance with the related information successively providing program. Then, at step SP101 after the related information successively providing processing procedure is started, the CPU 270 reads out introduction page information in response to the introduction page information requesting signal from the hard disk drive 272 and transmits the read out introduction page information to the client terminal 2.

Consequently, the CPU 203 of the client terminal 2 receives the introduction page information transmitted from the music data distribution server SV1 and starts a related information successively outputting processing procedure in accordance with various processing control information included in the received introduction page information at step SP102. Then, the CPU 203 controls the display unit 206 to display the tune introduction screen 310 based on the introduction page information. In this state, the CPU 203 automatically sets that one of a plurality of tune names set as a successive output object in the tune list information 300 included in the introduction page information which comes to the top when the tune names are placed into a list as noticed tune information. Thereafter, the processing advances to step SP103. At step SP103, the CPU 203 transmits a preview data requesting signal for requesting preview data coordinated with the tune name selected as the noticed tune information to the music data distribution server SV1 in accordance with processing execution information 300B associated with the tune name. Accordingly, at step SP104, the CPU 270 of the music data distribution server SV1 receives the preview data requesting signal transmitted from the client terminal 2 and reads out preview data in accordance with the received preview data requesting signal from the hard disk drive 272. Then, the CPU 270 transmits the preview data in the streaming format to the client terminal 2. Consequently, the CPU 203 of the client terminal 2 receives the preview data transmitted in the streaming format from the music data distribution server SV1 and controls the speaker 210 to automatically output the preview data as a preview tune so that the preview tune is previewed by the user at step SP105. Then, when the outputting of the preview data as a preview tune comes to an end (that is, when an end of the outputting is detected), the CPU 203 advances the processing to step SP106.

Here, as a method of detecting an end of streaming reproduction (that is, an end of the outputting of a preview tune) of the preview data (that is, streaming content data), for example, the following methods are available. However, the method is not limited to them. First, it is possible to detect an end of streaming reproduction by managing a buffer positioned at a stage preceding to the speaker 210 or an interface for digital outputting. For example, linear PCM data (digital data) is inputted to the buffer, and digital data outputted from the buffer is inputted to a D/A converter, by and from which it is converted into and supplied as an analog signal to the speaker 210. The buffer and the D/A converter correspond to the sound processing section 209 (or sound control section 26) described hereinabove. Or, linear PCM data (digital data) supplied, for example, from a decoder is inputted once to a buffer in an interface controller, and digital data outputted from the buffer is converted into and outputted as data of a format compatible with a transmission protocol for digital outputting from the interface controller. The data is outputted as a digital output signal from an interface. The interface controller described above is not shown in the drawings. The CPU 203 (which corresponds to the control section 23) detects that writing of the digital data into the buffer comes to an end and all of the digital data written in the buffer are read out thereby to detect an end of the streaming reproduction of the preview data (that is, streaming content data). However, if the preview data (streaming content data) includes an end time code, then the CPU 203 detects the time code at present during reproduction. Then, if the present time code and the end time code coincide with each other, then the CPU 203 can decide that the streaming reproduction of the preview data (streaming content data) comes to an end. Further, if the CPU 203 (control section 23) detects the time code at present during reproduction of the preview data (streaming content data) and detects that the time code at present stops for a predetermined period of time, then the CPU 203 can decide that the streaming reproduction of the preview data (streaming content data) comes to an end. Furthermore, if the CPU 203 (control section 23) detects during streaming reproduction of the preview data (streaming content data) that a state wherein the level of the linear PCM data during reproduction is lower than a predetermined value continues for a predetermined period of time, then the CPU 203 can decide that the reproduction of the preview data (streaming content data) comes to an end.

At step SP106, the CPU 203 automatically selects a next tune name set as a successive output object in the tune list information 300 as new noticed tune information on the tune introduction screen 310 in accordance with the processing control information included in the introduction page information, and then advances its processing to step SP107. At step SP107, the CPU 203 transmits a preview data requesting signal for requesting preview data to the music data distribution server SV1 in accordance with the processing execution information 300B associated with the tune name selected as the noticed tune information. Accordingly, at step SP108, the CPU 270 of the music data distribution server SV1 receives the preview data requesting signal transmitted from the client terminal 2 and reads out preview data in accordance with the received preview data requesting signal from the hard disk drive 272. Then, the CPU 270 automatically transmits the preview data in the streaming format to the client terminal 2. Consequently, the CPU 203 of the client terminal 2 receives the preview data transmitted in the streaming format from the music data distribution server SV1 and causes the preview data to be automatically outputted as a preview tune from the speaker 210 so that the preview tune is previewed by the user at step SP109. Then, when the CPU 203 detects an end of the outputting of the preview data as a preview tune, it advances the processing to a next processing step.

Thereafter, the CPU 270 of the music data distribution server SV1 cooperates with the client terminal 2 to circulatingly and repetitively execute the processes at steps SP106 to SP109 described hereinabove for a period of time until all of the tune names set as a successive output object in the tune list information 300 are selected as noticed tune information in the client terminal 2. Consequently, the CPU 270 of the music data distribution server SV1 causes the client terminal 2 to automatically and successively select the tune names set as a successive output object in the tune list information 300 as noticed tune information and then automatically and successively transmit preview data coordinated with the tune names set as the noticed tune information thereby to cause the client terminal 2 to automatically and successively output a plurality of preview data as preview tunes.

It is to be noted that, while the CPU 270 of the tune data distribution server SV1 described above provides introduction page information including the successive output notification indicator 315 to the client terminal 2, the method of providing the successive output notification indicator 315 to the client terminal 2 is not limited to this. In particular, it is otherwise possible for the client terminal 2 to retain the successive output notification indicator 315 in advance or to produce the successive output notification indicator 315 based on the successive outputting permission indication information 300F included in the introduction page information. Where the successive output notification indicator 315 is provided in this manner, the configuration of the introduction page information on the music data distribution server SV1 side can be simplified by eliminating the successive output notification indicator 315. Further, while the CPU 270 of the music data distribution server SV1 provides the introduction page information including the coordination notification indicator 311C to the client terminal 2, the provision of the introduction page information to the client terminal 2 is not limited to this. In particular, it is otherwise possible for the client terminal 2 to analyze the substance of the tune list information 300 to decide whether or not preview data is coordinated with a plurality of tune names and produce and display a tune introduction screen on which those of the tune name display places 311AA to 311AE which display tune names coordinated with the preview data and those of the tune name display places 311AA to 311AE which display tune names which are not coordinated with the preview data are displayed in different displaying states such as, for example, blinking and continuously lighting states in response to a result of the decision. In this instance, while the CPU 270 of the music data distribution server SV1 can notify the user precisely that preview data are coordinated with tune names similarly as described hereinabove, the configuration of the introduction page information can be further simplified by eliminating the coordination notification indicator 311C.

Further, when selection of a tune name as noticed tune information is to be continued for the first and second fixed periods of time, the CPU 270 of the music data distribution server SV1 scrolls the display of a tune name which cannot be displayed at a time within any of the tune name display places 311AA to 311AE in the transverse direction. However, the transverse scrolling is not limited to this case, but also when a tune name coordinated with preview data is selected as noticed tune information, the display of a tune name which cannot be displayed at a time in the any of tune name display places 311AA to 311AE may be scrolled in the transverse direction. By the transverse scrolling just described, the CPU 270 of the music data distribution server SV1 can notify the user precisely of a coordinated tune when a preview tune is to be previewed by the user. It is to be noted that the CPU 203 may not perform scrolling display in accordance with processing control information in the introduction page information but may perform scrolling display in accordance with setting information set in advance to the client terminal 2. Further, while the CPU 270 of the music data distribution server SV1 causes the client terminal 2 to select a tune name as noticed tune information in response to setting information on the tune introduction screen 310 at an initial stage of display, selection of a tune name is not limited to this. In particular, the CPU 270 may provide introduction page information including indication information of indicating a tune name to be selected as noticed tune information at an initial stage of display of the tune introduction screen 310 to the client terminal 2.

Further, the CPU 270 of the music data distribution server SV1 described above provides introduction page information including the same play mode notification indicator 325 to the client terminal 2 irrespective of whether the repeat play mode or the single repeat play mode is selected as a play mode for preview data. However, the introduction page information is not limited to this, but introduction page information including a play mode notification indicator which is different depending upon whether the repeat play mode is selected or the single repeat play mode is selected as the play mode for preview data may be provided to the client terminal 2. According to this, the CPU 270 of the music data distribution server SV1 can notify the user of the repeat play mode and the single repeat play mode in a precisely distinguished manner from each other.

### 2-1-2. First related information successively outputting processing procedure

Now, a first related information successively outputting processing procedure executed in accordance with various processing control information included in introduction page information by the CPU 203 of the client terminal 2 under the general supervision or control the music data distribution server SV1 is described. In this instance, the CPU 203 of the client terminal 2 produces a tune introduction screen 310 similarly as described hereinabove based on introduction page information acquired from the music data distribution server SV1 and causes the tune introduction screen 310 to be displayed on the display unit 206. In this state, the CPU 203 of the client terminal 2 decides whether or not a plurality of tune names are set as a successive output object in the tune list information 300, and automatically and successively outputs a plurality of preview data coordinated with the plurality of tune names in response to a result of the decision.

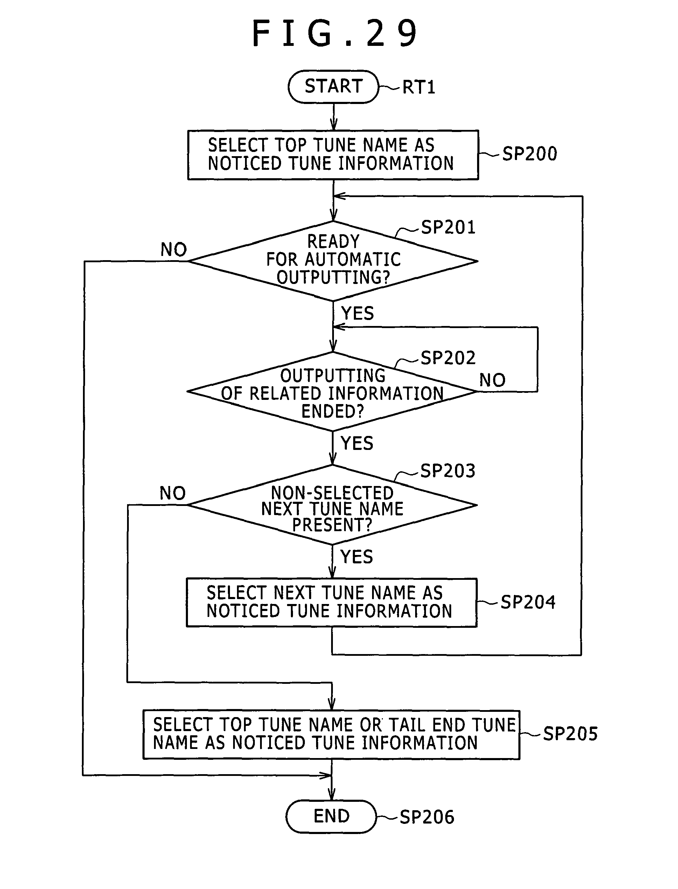

In particular, after the CPU 203 of the client terminal 2 controls the display unit 206 to display the tune introduction screen 310 based on the introduction page information, the CPU 203 starts a first related information successively outputting processing procedure RT1 illustrated in FIG. 29 in accordance with various processing control information included in the introduction page information. At step SP200 after the CPU 203 starts the first related information successively outputting processing procedure RT1, the CPU 203 automatically sets the top one of a plurality of tune names in the reference set order in the tune list information 300 as noticed tune information and emphatically displays the tune name selected as the noticed tune information together with that one of the tune name display places 311AA to 311AE in which the tune name is displayed. Thereafter, the processing advances to step SP201. At SP201, the CPU 203 decides whether or not a plurality of tune names in the tune list information 300 are set as a successive output object. If an affirmative result is obtained at step SP201, then this represents that successive outputting permission indication information 300F is included in the introduction page information. In other words, since a plurality of tune names in the tune list information 300 are set as a successive output object on the music data distribution server SV1 side, the affirmative result represents that a plurality of preview data coordinated with the plurality of tune names can be outputted automatically and successively. In this instance, the CPU 203 advances its processing to step SP202.

At step SP202, the CPU 203 utilizes, if processing execution information 300B is associated with the tune name selected as the noticed tune information, then a URL included in the processing execution information 300B to transmit a preview data requesting signal to the music data distribution server SV1 successively through the communication control section 214 and the network interface 215. Consequently, the CPU 203 issues a request for preview data coordinated with the tune name selected as the noticed tune information to the music data distribution server SV1. As a result, the CPU 203 receives preview data transmitted in the streaming format from the music data distribution server SV1 successively though the network interface 215 and the communication control section 214 and signals the received preview data to the speaker 210 through the sound processing section 209 so that a preview tune based on the preview data is outputted from the speaker 210 so as to be previewed by the user. On the other hand, if processing execution information 300B is not associated with the tune name selected as the noticed tune information, then the CPU 203 selects the tune name as the noticed tune information continuously for the first fixed time period in accordance with first selection continuation time period information included in the introduction page information and continuously displays the tune name emphatically together with that one of the tune name display places 311AB to 311AE in which the tune name is displayed. Then, if the CPU 203 detects an end of the outputting of the preview data as a preview tune or detects that the selection time period of the tune name as noticed tune information elapses, then the CPU 203 advances its processing to step SP203.

At step SP203, the CPU 203 decides whether or not a tune name to be selected next as noticed tune information in the reference set order exists among the tune names set as a successive output object in the tune list information 300. If an affirmative result is obtained at step SP203, then this represents that all of the tune names set as a successive output object in the tune list information 300 are not selected as noticed tune information as yet. Accordingly, at this time, the CPU 203 advances its processing to step SP204. At step SP204, the CPU 203 automatically selects a next one of the tune names set as a successive output object in the tune list information 300 in the reference set order as noticed tune information on the tune introduction screen 310 and emphatically displays the tune name selected as the noticed tune information together with that one of the tune name display places 311AA to 311AE in which the tune name is displayed. Thereafter, the CPU 203 returns its processing to step SP201. Accordingly, the CPU 203 thereafter executes the processes at steps SP201 to SP204 repetitively and circulatingly for a period of time until after a negative result is obtained at step SP203 to automatically select the plurality of tune names set as a successive output object in the tune list information 300 in the reference set order as noticed tune information and automatically and successively acquire and output the plurality of preview data coordinated with the plurality of tune names as preview tunes.

Then, if a negative result is obtained at step SP203, then this represents that all of the tune names set as a successive output object in the tune list information 300 are selected as noticed tune information and the automatic and successive outputting of all of the preview data coordinated with the tune names is completed. In this instance, the CPU 203 advances its processing to step SP205. Then at step SP205, the CPU 203 returns its selection to the tune name display place 311AA in which the top one (that is, the tune name selected first as noticed tune information) of the plurality of tune names set as a successive output object in the tune list information 300 is displayed and causes the top tune name to be emphatically displayed on the tune introduction screen 310 or causes the tail tune name (that is, the tune name selected last as noticed tune information) in the reference set order to remain displayed emphatically together with that one of the tune name display places 311AA to 311AE in which the tail end tune name is displayed. Thereafter, the CPU 203 advances its processing to step SP206, at which it ends the first related information successively outputting processing procedure RT1. Incidentally, if a negative result is obtained at step SP201 described hereinabove, then this represents that successive outputting permission indication information 300F is not included in the introduction page information. In other words, the negative result represents that preview data cannot be automatically outputted successively, for example, because preview data is not coordinated with the plurality of tune names in the tune list information 300. Accordingly, in this instance, the CPU 203 advances its processing to step SP206. In this manner, where the CPU 203 executes the first related information successively outputting processing procedure RT1, if a plurality of tune names in the tune list information 300 are set as a successive output object, then all music data which can be downloaded can be introduced precisely as preview tunes based on preview data or emphatically displayed tune names.

It is to be noted that, while, in the first related information successively outputting processing procedure RT1 executed under the control of the music data distribution server SV1, where processing execution information 300B is not coordinated with a tune name selected as noticed tune information, the CPU 203 of the client terminal 2 selects the tune name as noticed tune information continuously for the first fixed period of time in accordance with the first selection continuation time information included in the introduction page information, the case in which the tune name is selected for a fixed period of time is not limited to this. In particular, it is otherwise possible to select the tune name as noticed tune information continuously for a fixed period of time which is a predetermined period time set in advance in the client terminal 2 or select the tune name as noticed tune information for a fixed period of time which is a fixed period of time set arbitrarily by the user. Further, while, in the first related information successively outputting processing procedure RT1, it is decided at step SP201 described hereinabove whether or not a plurality of tune names in the tune list information 300 are set as a successive output object, the decision is not limited to this. In particular, the decision of whether or not a plurality of tune names in the tune list information 300 are set as a successive output object may be performed immediately after the first related information successively outputting processing procedure RT1 is started (that is, before the step SP200), between the steps SP202 and SP203 or between the steps SP203 and SP204 in accordance with the processing control information included in the introduction page information, with a setting of the client terminal 2 in advance or with an instruction by the user.

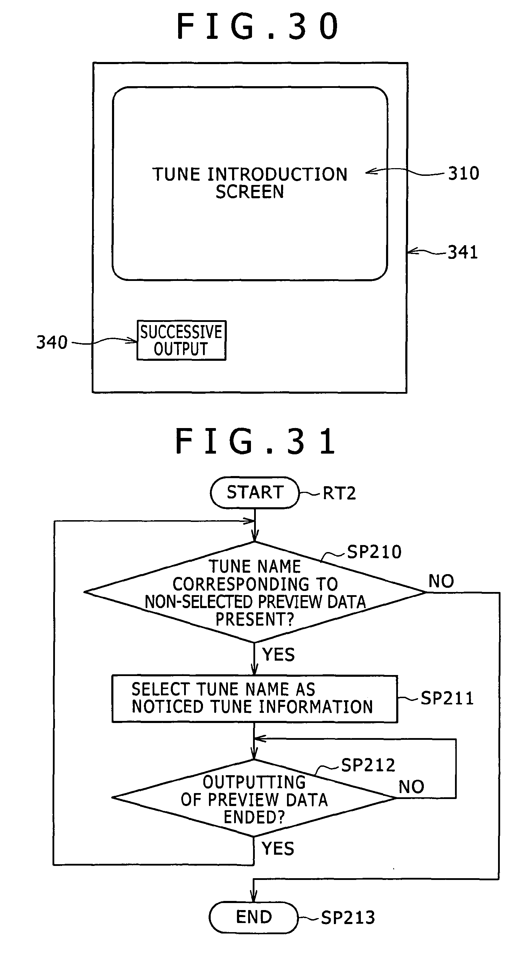

Further, while the CPU 203 of the client terminal 2 decides whether or not a plurality of tune names in the tune list information 300 are set as a successive output object halfway of execution of the first related information successively outputting processing procedure RT1 executed under the control of the music data distribution server SV1, the decision is not limited to this. In particular, it is otherwise possible to decide in advance, in accordance with the processing control information included in the introduction page information, with a setting of the client terminal 2 in advance or with an instruction by the user, whether or not successive outputting permission indication information 300F is included in the introduction page information and starts the first related information successively outputting processing procedure RT1 when the successive outputting permission indication information 300F is included in the introduction page information. In addition, even if such a decision process as described above is not performed in advance, the CPU 203 of the client terminal 2 may start the first related information successively outputting processing procedure RT1 in response to a processing execution instruction inputted through an operation button provided on the surface of the housing or the remote controller by the user who confirms the presence of the successive output notification indicator 315 on the tune introduction screen 310. Further, the CPU 203 of the client terminal 2 may control the display unit 206 to display a tune introduction screen 310 together with a processing instruction inputting screen 341 as a user interface on which a processing execution indication button 340 is provided as seen in FIG. 30 such that the first related information successively outputting processing procedure RT1 is started in response to a selective operation of the processing execution indication button 340 by the user who confirms the display of the successive output notification indicator 315 in the tune introduction screen 310. This makes it possible for the first related information successively outputting processing procedure RT1 to be configured such that the decision process of deciding whether or not a plurality of tune names in the tune list information 300 are set as a successive output object is not executed particularly. Thus, the configuration of the first related information successively outputting processing procedure RT1 can be simplified.

### 2-2. Related information successively providing outputting process by and under the control of the client terminal 2

Now, a related information successively providing outputting process executed under the control of the client terminal 2 together with the music data distribution server SV1 is described. Actually, the CPU 203 of the client terminal 2 produces a tune introduction screen based on introduction page information in a substantially similar manner as described above in accordance with the tune purchase reproduction module 245 and the XML browser 246 (hereinafter referred to collectively related information successively outputting program) as program modules described hereinabove and displays the tune introduction screen on the display unit 206. Further, in this state, the CPU 203 automatically and successively outputs a plurality of preview data corresponding to a plurality of tune names set as a successive output object in the tune list information 300.

However, the CPU 203 of the client terminal 2 can execute related information successively outputting processing procedures of different techniques in accordance with related information successively outputting programs of different configurations from each other. Further, the CPU 203 of the client terminal 2 may incorporate the different related information successively outputting programs of different configurations in advance and analyze, when it acquires introduction page information from the music data distribution server SV1, the substance of the introduction page information (that is, processing control information) and then selectively use one of the related information successively outputting programs in response to a result of the analysis to execute a corresponding related information successively outputting processing procedure. Also it is possible for the CPU 203 of the client terminal 2 to incorporate the plurality of related information successively outputting programs in advance and urge, every time introduction page information is acquired from the music data distribution server SV1, the user to arbitrarily select one of the plurality of related information successively outputting programs such that a related information successively outputting processing procedure corresponding to the selected related information successively outputting program is executed. Further, the CPU 203 of the client terminal 2 may incorporate one of the plurality of related information successively outputting programs in advance such that, when introduction page information is acquired from the music data distribution server SV1, the CPU 203 executes only a related information successively outputting processing procedure in accordance with the related information successively outputting program. Accordingly, in the following, a plurality of different related information successively outputting processing procedures which can be executed by the CPU 203 of the client terminal 2 are described successively.

It is to be noted, however, that the CPU 203 of the client terminal 2 may execute, in addition to the several related information successively outputting processing procedures described below, the first related information successively outputting processing procedure RT1 described hereinabove with reference to FIG. 29 which is executed by and under the control of the client terminal 2 in accordance with the first related information successively outputting program.

### 2-2-1. Second related information successively outputting processing procedure

First, the second related information successively outputting processing procedure executed by the CPU 203 of the client terminal 2 is described. In this instance, the CPU 203 of the client terminal 2 produces a tune introduction screen 310 similarly as described hereinabove based on introduction page information acquired from the music data distribution server SV1 and controls the display unit 206 to display the tune introduction screen 310. In this state, the CPU 203 of the client terminal 2 analyzes the substance of the tune list information 300 and automatically selects only those of a plurality of tune names set as a successive output object in the tune list information 300 with which preview data is coordinated as noticed tune information in accordance with the reference set order in response to a result of the analysis. Then, the CPU 203 automatically and continuously outputs the preview data.

In particular, after the CPU 203 of the client terminal 2 controls the display unit 206 to display the tune introduction screen 310 based on the introduction page information, it starts a second related information successively outputting processing procedure RT2 illustrated in FIG. 31 in accordance with a second related information successively outputting program. After the CPU 203 starts the second related information successively outputting processing procedure RT2, it detects at step SP210 whether or not processing execution information 300B (or a URL merely for acquisition of preview data) is coordinated with a plurality of tune names in the tune list information 300 as an analysis of the substance of the tune list information 300. Then, the CPU 203 decides in response to a result of the detection whether or not tune names with which preview data is coordinated and which should be selected as noticed tune information in accordance with the reference set order exist among a plurality of tune names in the tune list information 300. If an affirmative result is obtained at step SP210, then this represents that a plurality of tune names in the tune list information 300 are set as a successive output object on the music data distribution server SV1 side and tune names which are not selected as noticed tune information as yet exist although preview data is coordinated therewith. In this instance, the CPU 203 advances its processing to step SP211. However, only when the CPU 203 executes the process at step SP210 for the first time, the CPU 203 sets only those of a plurality of tune names in the tune list information 300 with which preview data is coordinated newly as a successive output object. Then, when the CPU 203 executes the process at step SP210 for the second or succeeding time, the CPU 203 makes use of a setting to a plurality of tune names as a successive output object in the tune list information 300 to decide whether or not tune names which are coordinated with each preview data in a plurality of tune names in the tune list information 300 and to be selected as noticed tune information in accordance with the reference set order exist.

At step S211, the CPU 203 automatically selects one of the plurality of tune names set as a successive output object in the tune list information 300 by the CPU 203 itself as noticed tune information in accordance with the reference set order on the tune introduction screen 310. Further, the CPU 203 causes the tune name selected as the noticed tune information to be emphatically displayed together with that one of the tune name display places 311AA to 311AE in which the selected tune name is displayed, and then advances its processing to step SP212. At step SP212, the CPU 203 makes use of a URL in processing execution information 300B associated with the tune name selected as the noticed tune information to transmit a preview data requesting signal to the music data distribution server SV1 successively through the communication control section 214 and the network interface 215. As a result, the CPU 203 receives preview data transmitted in the streaming format from the music data distribution server SV1 successively through the network interface 215 and the communication control section 214 and signals the received preview data to the speaker 210 through the sound processing section 209 so that a preview tune based on the preview data is outputted from the speaker 210 so as to be previewed by the user. Then, if the CPU 203 detects an end of the outputting of the preview data as a preview tune, then the CPU 203 advances its processing to step SP210.

Accordingly, the CPU 203 thereafter executes, for a period of time until a negative result is obtained at step SP210, the processes at steps SP210 to SP212 repetitively and circulatingly to automatically select a plurality of tune names set as a successive output object in the tune list information 300 by the CPU 203 itself as noticed tune information in accordance with the reference set order and acquire and automatically and successively output a plurality of preview data coordinated with the plurality of tune names as preview tunes. Incidentally, if a negative result is obtained at step SP210 described hereinabove, then this represents that all of the plurality of tune names set as a successive output object in the tune list information 300 by the CPU 203 itself are set as noticed tune information and the automatic and successive outputting of all of the preview data coordinated with the tune names is completed. Or, where a negative result is obtained at step SP210, this represents that a tune name with which preview data is coordinated does not exist because the plurality of tune names in the tune list information 300 are not set as a successive output object on the music data distribution server SV1. At this time, the CPU 203 advances its processing to step SP213, at which the CPU 203 ends the second related information successively outputting processing procedure RT2. In this manner, where the CPU 203 can acquire introduction page information from the music data distribution server SV1, the CPU 203 executes the second related information successively outputting processing procedure RT2 without taking care of whether or not a plurality of tune names in the tune list information 300 are set as a successive output object at all to precisely set only those tune names with which preview data is coordinated as noticed tune information and automatically and successively output the preview data.

It is to be noted that, while the CPU 203 of the client terminal 2 analyzes the substance of the tune list information 300 during execution of the second related information successively outputting processing procedure RT2, the analysis is not limited to this. In particular, the second related information successively outputting processing procedure RT2 may be started only if the substance of the tune list information 300 is analyzed when introduction page information is acquired (or when the tune introduction screen 310 is produced) and it is decided as a result of the analysis that a plurality of tune names in the tune list information 300 are set as a successive output object. Consequently, the second related information successively outputting processing program can be configured such that the process for analyzing the substance of the tune list information 300 is not executed particularly, and the processing of the second related information successively outputting processing procedure RT2 can be simplified. Further, while the CPU 203 of the client terminal 2 analyzes, during execution of the second related information successively outputting processing procedure RT2, the substance of the tune list information 300 and sets only those tune names with which preview data is coordinated as a successive output object, the setting is not limited to this. In particular, the CPU 203 may otherwise urge the user to confirm tune names coordinated with preview data depending upon the coordination notification indicator 311C on the tune introduction screen 310 as a user interface and set only those tune names with which preview data is coordinated in the tune list information 300 as a successive output object in response to a result of the confirmation. Also where tune names with which preview data is coordinated are set as a successive output object by the user in this manner, the second related information successively outputting processing program can be configured such that the process for analyzing the substance of the tune list information 300 is not executed particularly similarly as described above. Thus, the processing of the second related information successively outputting processing procedure RT2 can be simplified.

Further, where the CPU 203 of the client terminal 2 described above acquires introduction page information from the music data distribution server SV1, the CPU 203 executes the second related information successively outputting processing procedure RT2 without taking care of whether or not a plurality of tune names in the tune list information 300 are set as a successive output object. However, the execution of the second related information successively outputting processing procedure RT2 is not limited to this, but the second related information successively outputting processing procedure RT2 may be started only when it is decided whether or not the successive outputting permission indication information 300F is included in the introduction page information in advance and a result of the decision indicate that the successive outputting permission indication information 300F is included in the introduction page information. In addition, even if such a decision process as described above is not performed in advance, the CPU 203 of the client terminal 2 may start the second related information successively outputting processing procedure RT2 in response to a processing execution instruction inputted through an operation button provided on the surface of the housing or the remote controller by the user who confirms the presence of the successive output notification indicator 315 on the tune introduction screen 310. Further, the CPU 203 of the client terminal 2 may start the second related information successively outputting processing procedure RT2 in response to a selective operation of the processing execution indication button 340 by the user who confirms the display of the successive output notification indicator 315 in the tune introduction screen 310 on the display unit 206 described hereinabove with reference to FIG. 30. According to the configuration just described, even if the CPU 203 of the client terminal 2 acquires introduction page information from the music data distribution server SV1, since it executes the second related information successively outputting processing procedure RT2 only when a plurality of tune names in the tune list information 300 are set as a successive output object, the processing load upon introduction of downloadable music data can be reduced.

### 2-2-2. Third related information successively outputting processing procedure

Now, a third related information successively outputting processing procedure executed by the CPU 203 of the client terminal 2 is described. In this instance, the CPU 203 of the client terminal 2 produces a tune introduction screen 310 similarly as described above based on introduction page information acquired from the music data distribution server SV1 and controls the display unit 206 to display the tune introduction screen 310. In this state, the CPU 203 of the client terminal 2 automatically selects a plurality of tune names of the tune list information 300 as noticed tune information in the reference set order. However, the CPU 203 continues the related information successively outputting process only where preview data is coordinated with the tune name selected as the noticed tune information to automatically and successively output the preview data.

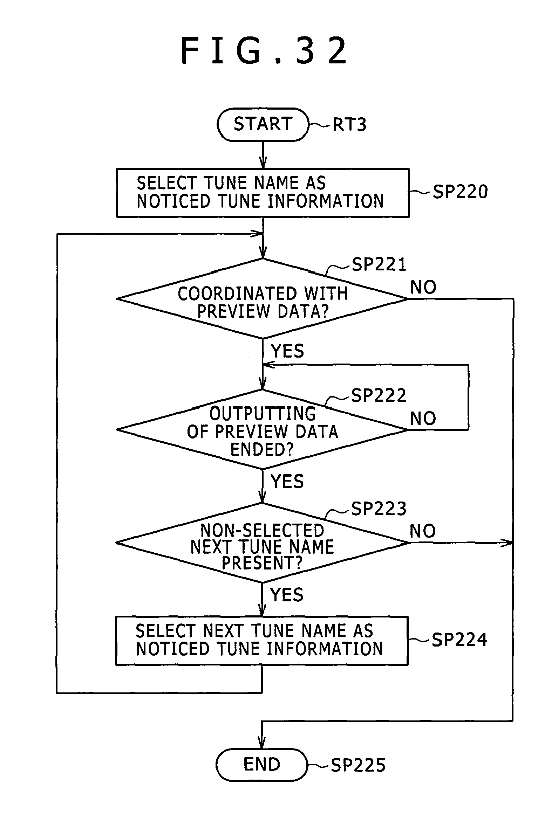

In particular, after the CPU 203 of the client terminal 2 controls the display unit 206 to display the tune introduction screen 310 based on the introduction page information, it starts the third related information successively outputting processing procedure RT3 illustrated in FIG. 32 in accordance with the third related information successively outputting program. At step SP220 after the CPU 203 starts the third related information successively outputting processing procedure RT3, the CPU 203 automatically selects the top one of the plurality of tune names in the tune list information 300 in the reference set order as noticed tune information and causes the tune name selected as the noticed tune information to be displayed emphatically together with that one of the tune name display places 311AA to 311AE in which the selected tune name is displayed. Thereafter, the processing advances to step SP221. At step SP221, the CPU 203 decides whether or not preview data is coordinated with the tune name selected as the noticed tune information. If an affirmative result is obtained at step SP221, this represents that a plurality of tune names in the tune list information 300 are set as a successive output object on the music data distribution server SV1 side and processing execution information 300B is associated with the tune name selected as the noticed tune information. At this time, the CPU 203 advances the processing to step SP222.

At step SP222, the CPU 203 makes use of a URL in the processing execution information 300B associated with the tune name selected as the noticed tune information to transmit a preview data requesting signal to the music data distribution server SV1 successively through the communication control section 214 and the network interface 215. As a result, the CPU 203 receives preview data transmitted in the streaming format from the music data distribution server SV1 successively through the network interface 215 and the communication control section 214 and signals the received preview data through the sound processing section 209 to the speaker 210 so that a preview tune based on the preview data is outputted from the speaker 210 so as to be previewed by the user. Then, if the CPU 203 detects an end of the outputting of the preview data as a preview tune, then it advances the processing to step SP223.

At step SP223, the CPU 203 decides whether or not a tune to be selected next as noticed tune information in the reference set order exists in the plurality of tune names set as a successive output object in the tune list information 300. If an affirmative result is obtained at step SP223, then this represents that all of the tune names set as a successive output object in the tune list information 300 are not completely selected as noticed tune information as yet. At this time, the CPU 203 advances its processing to step SP224. At step SP224, the CPU 203 automatically selects a tune name next in the reference set order from among the tune names set as a successive output object in the tune list information 300 as noticed tune information on the tune introduction screen 310 and causes the tune name selected as the noticed tune information to be emphatically displayed together with that one of the tune name display places 311AA to 311AE in which the selected tune name is displayed. Thereafter, the processing returns to step SP221. Accordingly, the CPU 203 thereafter executes the processes at steps SP221 to SP224 repetitively and circulatingly for a period of time until a negative result is obtained at steps SP221 and S223. Consequently, while the CPU 203 automatically selects the plurality of tune names set as a successive output object in the tune list information 300 as noticed tune information in the reference set order, the CPU 203 acquires a plurality of preview data coordinated with the tune names selected as the noticed tune information and automatically and successively outputs the acquired preview data as preview tunes.

Incidentally, if a negative result is obtained at step SP221 described above, then this represents that, although a plurality of tune names in the tune list information 300 are set as a successive output object, preview data is not coordinated with the tune name selected as the noticed tune information at the present point of time. Or, if a negative result is obtained at step S221, then this represents that a tune name coordinated with preview data does not exist because the plurality of tune names in the tune list information 300 are not set as a successive output object. Accordingly, at this time, the CPU 203 advances its processing to step SP225, at which it ends the third related information successively outputting processing procedure RT3. On the other hand, if a negative result is obtained at step SP223 described hereinabove, then this represents that a plurality of tune names in the tune list information 300 are set as a successive output object on the music data distribution server SV1 side while preview data is coordinated with all of the tune names and the automatic and successive outputting of all preview data coordinated with the tune names is completed while all of the tune names are successively selected as noticed tune information in the reference set order. At this time, the CPU 203 advances its processing to step SP225. In this manner, even if a plurality of tune names in the tune list information 300 are set as a successive output object, if the number of tune names with which preview data is coordinated is small, the CPU 203 can prevent such a situation that a plurality of tune names with which preview data is not coordinated are successively selected as noticed tune information and emphatically displayed. In other words, where the number of tune names with which preview data is coordinated is small, the CPU 203 can introduce downloadable music data efficiently using preview tunes.

It is to be noted that, where the CPU 203 of the client terminal 2 acquires introduction page information from the music data distribution server SV1, it executes the third related information successively outputting processing procedure RT3 without taking care of whether or not a plurality of tune names in the tune list information 300 are set as a successive output object. However, execution of the third related information successively outputting processing procedure RT3 is not limited to this, but the third related information successively outputting processing procedure RT3 may be started only when it is decided in advance whether or not the successive outputting permission indication information 300F is included in the introduction page information and a result of the decision indicates that the successive outputting permission indication information 300F is included in the introduction page information. In addition, even if such a decision process as described above is not performed in advance, the CPU 203 of the client terminal 2 may start the third related information successively outputting processing procedure RT3 in response to a processing execution instruction inputted through the operation button provided on the surface of the housing or the remote controller by the user who confirms the presence of the successive output notification indicator 315 on the tune introduction screen 310. Further, the CPU 203 of the client terminal 2 may start the third related information successively outputting processing procedure RT3 in response to a selective operation of the processing execution indication button 340 by the user who confirms the display of the successive output notification indicator 315 in the tune introduction screen 310 on the display unit 206 described hereinabove with reference to FIG. 30. This makes it possible for the CPU 203 of the client terminal 2 to reduce the processing load upon introduction of downloadable music data because the CPU 203 executes the third related information successively outputting processing procedure RT3 only when a plurality of tune names in the tune list information 300 are set as a successive output object even if introduction page information is acquired from the music data distribution server SV1.

### 2-2-3. Fourth related information successively outputting processing procedure

Now, a fourth related information successively outputting processing procedure executed by the CPU 203 of the client terminal 2 is described. In this instance, the CPU 203 of the client terminal 2 produces a tune introduction screen 310 similarly as described above based on introduction page information acquired from the music data distribution server SV1 and controls the display unit 206 to display the tune introduction screen 310. In this state, if a plurality of tune names in the tune list information 300 are set as a successive output object, then the CPU 203 of the client terminal 2 automatically selects the tune names set as a successive output object in the tune list information 300 as noticed tune information in the reference set order and automatically and successively outputs preview data coordinated with the tune names selected as the noticed tune information. On the other hand, if preview data is not coordinated with a tune name automatically selected as noticed tune information, then the CPU 203 keeps the tune name as noticed tune information continuously, for example, for the first fixed period of time and emphatically displays the tune name.

In addition, the CPU 203 of the client terminal 2 can urge the user halfway of execution of the related information successively outputting process to select a tune name with which preview data is not coordinated arbitrarily as noticed tune information so that, for example, details information may be read by the user. Then, if a tune name with which preview data is not coordinated is selected as noticed tune information in this manner by the user, then the CPU 203 of the client terminal 2 keeps the tune name selected as noticed tune information continuously for the second fixed period of time longer than the first fixed period of time and causes the selected tune name to be emphatically displayed.

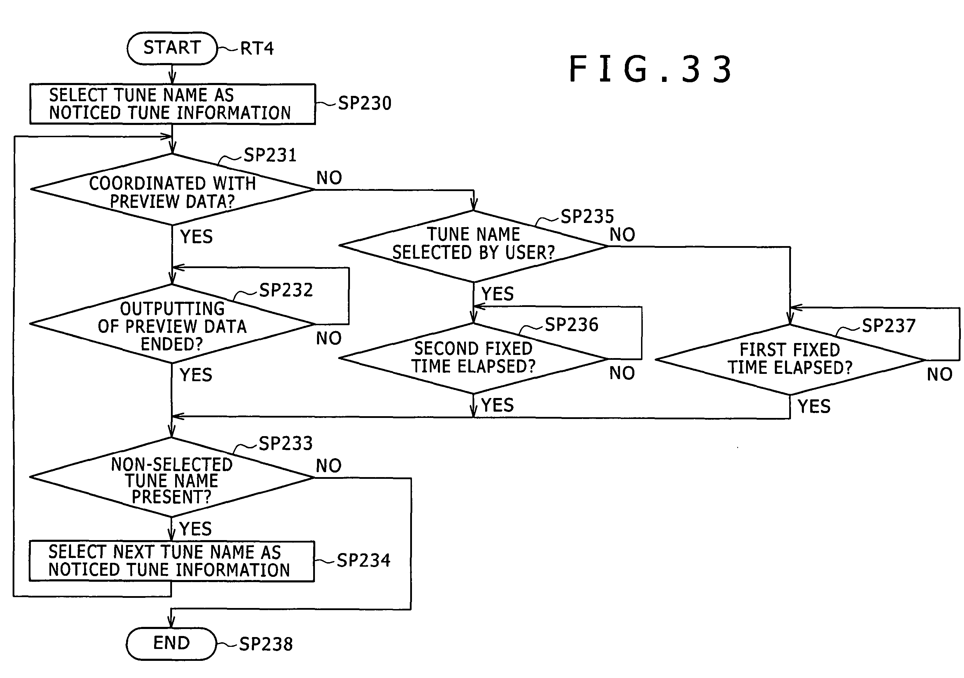

In particular, the CPU 203 of the client terminal 2 controls the display unit 206 to display a processing instruction inputting screen 341 together with the tune introduction screen 310 similarly as in the case described hereinabove, for example, with reference to FIG. 30. Then, if the processing execution indication button 340 is selectively operated by the user who confirms the display of the successive output notification indicator 315 in the tune introduction screen 310, then the CPU 203 starts the fourth related information successively outputting processing procedure RT4 illustrated in FIG. 33 in accordance with the fourth related information successively outputting program in response to the selective operation. At step SP230 after the fourth related information successively outputting processing procedure RT4 is started, the CPU 203 automatically selects the top tune name in the reference set order from among the plurality of tune names set as a successive output object in the tune list information 300 on the tune introduction screen 310 and causes the tune name selected as the noticed tune information to be displayed emphatically together with that one of the tune name display places 311AA to 311AE in which the tune name is displayed. Thereafter, the processing advances to step SP231. At step SP231, the CPU 203 decides whether or not preview data is coordinated with the tune name selected as the noticed tune information. If an affirmative result is obtained at step SP231, then this represents that processing execution information 300B is coordinated with the tune name selected as the noticed tune information. At this time, the CPU 203 advances its processing to step SP232.

At step SP232, the CPU 203 utilizes a URL in the processing execution information 300B associated with the tune name selected as the noticed tune information to transmit a preview data requesting signal to the music data distribution server SV1 successively through the communication control section 214 and the network interface 215. Then, the CPU 203 receives preview data transmitted in the streaming format from the music data distribution server SV1 in response to the preview data requesting signal successively through the network interface 215 and the communication control section 214 and signals the preview data to the speaker 210 through the sound processing section 209 so that a preview tune based on the preview data is outputted from the speaker 210 so as to be previewed by the user. Then, when the CPU 203 detects an end of the outputting of the preview data as a preview tune, it advances its processing to step SP233.

At step SP233, the CPU 203 decides whether or not a tune name to be selected next as noticed tune information in the reference set order exists among the plurality of tune names set as a successive output object in the tune list information 300. If an affirmative result is obtained at step SP233, then this represents that all of the tune names set as a successive output object in the tune list information 300 are not completely selected as noticed tune information. At this time, the CPU 203 advances its processing to step SP234. At step SP234, the CPU 203 automatically sets a next tune name in the reference set order from among the tune names set as a successive output object in the tune list information 300 as noticed tune information on the tune introduction screen 310 and causes the tune name selected as the noticed tune information to be displayed emphatically together with that one of the tune name display places 311AA to 311AE in which the selected tune name is displayed. Thereafter, the processing returns to step SP231. Accordingly, the CPU 203 repetitively and circulatingly executes the processes at steps SP231 to SP234 for a period of time until a negative result is obtained at steps SP231 and SP233. Consequently, while the CPU 203 automatically selects a plurality of tune names set as a successive output object in the tune list information 300 as noticed tune information in the reference set order, the CPU 203 acquires a plurality of preview data coordinated with the tune names and automatically and successively outputs the acquired preview data as preview tunes.

Incidentally, if a negative result is obtained at step SP231 described hereinabove, then this represents that preview data is not coordinated with the tune name selected as noticed tune information at the present point of time. At this time, the CPU 203 advances its processing to step SP235. At step SP235, the CPU 203 decides whether or not the tune name selected as noticed tune information at the present point of time is a tune selected by the user. If an affirmative result is obtained at step SP235, then this represents that the tune name selected as noticed tune information at the present point of time is a tune name selectively indicated, for example, by the user in order to read the details information on the tune introduction screen 310. At this time, the processing advances to step SP236. At step SP236, the CPU 203 selects a tune name selectively indicated by the user as it is as noticed tune information for the second fixed period of time on the tune introduction screen 310, for example, in accordance with the second selection continuation time information included in the introduction page information and besides causes the tune name to be continuously displayed emphatically together with that one of the tune name display places 311AB to 311AE in which the tune name is displayed. Then, if the CPU 203 detects that the elapsed selection time of the tune name as noticed tune information becomes equal to or longer than the second fixed period of time, then the CPU 203 advances its processing to step SP233.

On the other hand, if a negative result is obtained at step SP235, then this represents that the tune name selected as noticed tune information at the present point of time is automatically selected as noticed tune information in the reference set order from among the plurality of tune names set as a successive output object in the tune list information 300 by the CPU 203 itself. At this time, the CPU 203 advances its processing to step SP237. At step SP237, the CPU 203 selects the tune name selected automatically as noticed tune information by the CPU 203 itself as it is as noticed tune information for the first fixed period of time on the tune introduction screen 310, for example, in accordance with the first selection continuation time information included in the introduction page information and causes the tune name to be continuously displayed emphatically together with that one of the tune name display places 311AB to 311AE in which the selected tune name is displayed. Then, if the CPU 203 detects the elapsed selection time of the tune name as noticed tune information becomes equal to or longer than the first fixed period of time, then the CPU 203 advances its processing to step SP233. In this manner, where a tune name with which preview data is not coordinated is selected as noticed tune information, the CPU 203 selectively executes the processes at steps SP236 and SP237 in response to the circumstances of the selection of the tune name as noticed tune information.

Then, if a negative result is obtained at step SP233 described hereinabove, then this represents that all tune names set as a successive output object in the tune list information 300 are selected as noticed tune information and automatic and successive outputting of all preview data coordinated with the tune names is completed. In this instance, the CPU 203 advances its processing to step SP238, at which it ends the fourth related information successively outputting processing procedure RT4. In this manner, where the CPU 203 executes the fourth related information successively outputting processing procedure RT4, if a plurality of tune names in the tune list information 300 are set as a successive output object, then all downloadable music data can be introduced precisely as preview tunes based on the preview data or as emphatically displayed tune names. Further, halfway of execution of the fourth related information successively outputting processing procedure RT4, the CPU 203 accepts a selective indication of a tune name, with which preview data is not coordinated, which is executed by the user on the tune introduction screen 310. Therefore, while a plurality of preview data coordinated with the plurality of tune names are automatically and successively outputted as preview tunes, the CPU 203 can cope precisely with a reading request, for example, for details information by the user. Then, if a tune name with which preview data is not coordinated is selectively indicated on the tune introduction screen 310 by the user, then the CPU 203 keeps the tune name selectively indicated by the user in a state selected as noticed tune information for a period of time longer than the period of time when a tune name with which preview data is not coordinated is selectively indicated. Consequently, the user can precisely confirm the substance of details information corresponding to the selectively indicated tune name.

It is to be noted that, while, in the fourth related information successively outputting processing procedure RT4, where processing execution information 300B is not associated with a tune name selected as noticed tune information, the CPU 203 of the client terminal 2 selects the tune name as noticed tune information continuously for the first or second fixed period of time in accordance with the first or second selection continuation time information included in the introduction page information, the selection is not limited to this. In particular, if the fixed period of time which is utilized when a tune name is selectively indicated arbitrarily by the user is set longer than the fixed period of time which is utilized when the CPU 203 itself automatically selects a tune name, then the tune names may be selected as noticed tune information continuously for two different fixed periods of time which are different predetermined periods of time set in advance to the client terminal 2, or the tune names may be selected as noticed tune information continuously for two different fixed periods of time set arbitrarily by the user.

Further, in the fourth related information successively outputting processing procedure RT4, when a tune name arbitrarily selectively indicated by the user is selected continuously for the second fixed period of time halfway of automatic selection of tune names as noticed tune information in the reference set order, the CPU 203 of the client terminal 2 restores the reference set order and automatically selects the tune names as noticed tune information in the reference set order. However, the selection is not limited to this, but after a tune name selectively indicated arbitrarily by the user is selected as noticed tune information continuously for the second fixed period of time, a tune name to be selected next to the arbitrarily selectively indicated tune name may be automatically selected as noticed tune information in accordance with the reference set order. Consequently, since a tune name before it is selected as noticed tune information by the CPU 203 is selectively indicated by the user formerly, after the tune name selectively indicated by the user is selected as noticed tune information, the CPU 203 itself can prevent the same tune name from being selected as noticed tune information again. This can prevent such a situation that the selection process of tune names as noticed tune information is complicated.

Further, the CPU 203 of the client terminal 2 starts the fourth related information successively outputting processing procedure RT4 in response to a selective operation of the processing execution indication button 340 by the user who confirms the display of the successive output notification indicator 315 in the tune introduction screen 310 on the display unit 206 described hereinabove with reference to FIG. 30. However, the starting of the fourth related information successively outputting processing procedure RT4 is not limited to this, but the fourth related information successively outputting processing procedure RT4 may be started when it is decided whether or not successive outputting permission indication information 300F is included in the introduction page information and a result of the decision indicates that the successive outputting permission indication information 300F is included in the introduction page information. In addition, even if such a decision process as described above is not performed in advance, the CPU 203 of the client terminal 2 may start the fourth related information successively outputting processing procedure RT4 in response to a processing execution instruction inputted through the operation button provided on the surface of the housing or the remote controller by the user who confirms the presence of the successive output notification indicator 315 on the tune introduction screen 310. This makes it possible for the CPU 203 of the client terminal 2 to precisely execute the fourth related information successively outputting processing procedure RT4 only when introduction page information including the tune list information 300 in which a plurality of tune names are set as a successive output object is acquired from the music data distribution server SV1.

### 2-2-4. Fifth related information successively outputting processing procedure

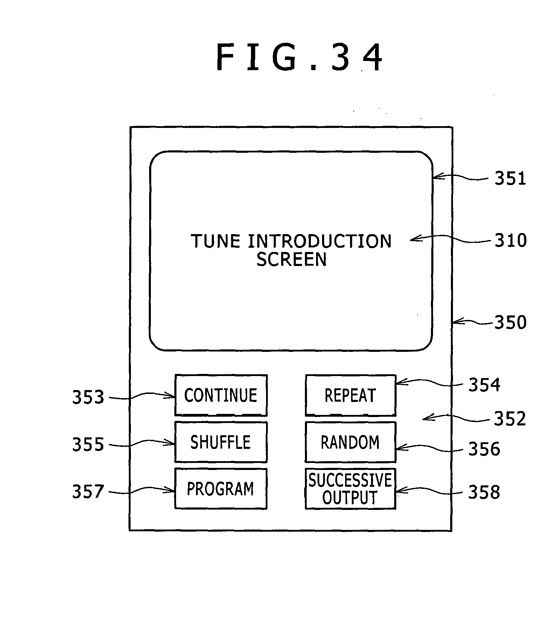

Now, a fifth related information successively outputting processing procedure executed by the CPU 203 of the client terminal 2 is described. In this instance, after the CPU 203 of the client terminal 2 acquires the introduction page information from the music data distribution server SV1, it analyzes the substance of the tune list information 300 included in the introduction page information to detect tune names with which preview data is coordinated (that is, with which the processing execution information 300B or a URL for preview data acquisition is associated) from among a plurality of tune names in the tune list information 300. Then, the CPU 203 sets only those tune names with which preview data is coordinated in the tune list information 300 as a successive outputting object. Further, the CPU 203 produces tune introduction screen data based on the introduction page information in a similar manner as described hereinabove. Then, the CPU 203 combines the tune introduction screen data with play mode setting screen data as a user interface stored in the hard disk drive 211 in advance to produce composite screen data and signals the composite screen data to the display unit 206 through the display processing section 207. Consequently, the CPU 203 controls the display unit 206 to display, for example, a play mode setting screen 350 shown in FIG. 34 based on the composite screen data.

Referring to FIG. 34, the play mode setting screen 350 includes a tune introduction screen display region 351 provided at an upper portion thereof and a button arrangement region 352 provided below the tune introduction screen display region 351. A tune introduction screen 310 is displayed in a form fitted in the tune introduction screen display region 351. Meanwhile, the button arrangement region 352 includes a data play mode setting button 353, a repeat play mode setting button 354 and a shuffle play mode setting button 355 for causing the play mode for a plurality of preview data coordinated with a plurality of tune names set as a successive outputting object in the tune list information 300 by the CPU 203 to be set to a data play mode (that is, a continue mode) in which the preview data are outputted in accordance with the reference set order, the repeat play mode or the single repeat play mode and the shuffle play mode as the changed play modes, respectively. The button arrangement region 352 further includes a random play mode setting button 356 and a program play mode setting button 357 for causing the play mode for a plurality of preview data coordinated with a plurality of tune names set as a successive outputting object in the tune list information 300 by the CPU 203 to the random play mode and the program play mode as the changed play modes, respectively. In addition, the button arrangement region 352 includes also a processing execution indication button 358 for indicating execution of the fifth related information successively outputting processing procedure.

If the data play mode setting button 353 is selectively operated by the user on the play mode setting screen 350 while the play mode setting screen 350 is displayed on the display unit 206, then the CPU 203 sets the play mode for preview data to the data play mode in response to the operation of the data play mode setting button 353. Then, if the CPU 203 executes a related information successively outputting process in response to the selective operation of the processing execution indication button 358 in the data play mode set in this manner, then the CPU 203 automatically and successively outputs a plurality of preview data coordinated with a plurality of tune names set as a successive outputting object by the CPU 203 itself in an order according to the reference set order.

Incidentally, the repeat play mode setting button 354 provided on the play mode setting screen 350 is configured, for example, as a toggle button. If the repeat play mode setting button 354 is selectively operated once, then it inputs a first setting instruction for setting the play mode for preview data to the single repeat play mode in response to the operation. Then, if the repeat play mode setting button 354 is selectively operated again, then it inputs a second setting instruction for setting the play mode for preview data to the repeat play mode. Thereafter, if the repeat play mode setting button 354 is selectively operated one again, then it inputs a cancellation instruction for canceling the input of the setting instructions of the single repeat play mode and the repeat play mode for preview data in response to the selective operation. If the repeat play mode setting button 354 is selectively operated three times and inputs the cancellation instruction in this manner, then the state wherein the first setting instruction can be inputted is restored. Consequently, the instruction can be inputted while it is changed over circulatingly among the first, second and cancellation instructions in response to each of repetitions of a selective operation.

Accordingly, if the repeat play mode setting button 354 is selectively operated once in a state wherein the first setting instruction can be inputted on the play mode setting screen 350 (that is, if the first setting instruction is inputted), then the CPU 203 sets the play mode for preview data to the single repeat play mode in response to the selective operation. Then, the CPU 203 initially sets a particular one tune name such as, for example, the top tune name from among a plurality of tune names set as a successive outputting object by the CPU 203 itself as a single tune name to be selected as noticed tune information for repetitive outputting only of preview data corresponding to the particular one tune name in accordance with processing control information included in the introduction page information at this point of time or in accordance with the setting substance set in advance to the client terminal 2. It is to be noted, however, that, even if the CPU 203 initially sets a single tune name to be selected as noticed tune information in response to the processing control information or the setting information of the client terminal 2, if one tune name is selectively indicated arbitrarily in the tune introduction screen 310 by the user, then the CPU 203 sets the tune name selectively indicated by the user to the single tune name to be selected as noticed tune information for repetitive outputting of preview data coordinated with the selective indicated tune name. If, in this state, the CPU 203 executes the related information successively outputting process in response to the selective operation of the processing execution indication button 358 by the user, then the CPU 203 automatically selects the single tune name set as an successive outputting object of preview data as successive noticed tune information and automatically, successively and repetitively outputs the preview data so as to automatically output the preview data coordinated with the tune name every time until a maximum selection time number set to the client terminal 2 in advance or arbitrarily set by the user is reached.

Further, the if the repeat play mode setting button 354 is selectively operated twice on the play mode setting screen 350 by the user in a state wherein the first setting instruction can be inputted (that is, if the second setting instruction is inputted), then the CPU 203 sets the play mode for preview data to the repeat play mode in accordance with the selective operation. If, in the setting state reached, the CPU 203 executes the related information successively outputting process in accordance with the selective operation of the processing execution instruction button 358 by the user, then the CPU 203 automatically, successively, repetitively and circulatingly outputs all of the plurality of preview data coordinated with the plurality of tune names set as a successive outputting object by the CPU 203 itself until the maximum repetition time number set in advance to the client terminal 2 or set arbitrarily by the user is reached.

Further, if the shuffle play mode setting button 355 is selectively operated by the user on the play mode setting screen 350, then the CPU 203 sets the play mode for preview data to the shuffle play mode in accordance with the selective operation. Then, if the CPU 203 executes the related information successively outputting process in accordance with the selective operation of the processing execution indication button 358 by the user in this setting state, then while the CPU 203 successively and randomly selects one tune name from among the plurality of tune names set as a successive outputting object by the CPU 203 itself, for example, in accordance with a random number generated by a predetermined random number generator so that the tune name may not overlap and automatically selects the selected tune name as noticed tune information, the CPU 203 automatically and successively outputs preview data coordinated with the tune name selected as the noticed tune information.

Further, if the random play mode setting button 356 is selectively operated by the user on the play mode setting screen 350, then the CPU 203 sets the play mode for preview data to the random play mode in accordance with the selective operation. Then, if the CPU 203 executes the related information successively outputting process in accordance with the selective operation of the processing execution indication button 358 by the user in this setting state, then while the CPU 203 successively and randomly selects one tune name from among the plurality of tune names set as a successive outputting object by the CPU 203 itself, for example, in accordance with a random number normally generated by a predetermined random number generator and automatically selects the selected tune name as noticed tune information, the CPU 203 automatically and successively outputs preview data corresponding to the tune name selected as the noticed tune information. In this instance, the CPU 203 successively and randomly selects the plurality of tune names selected as a successive outputting object in the tune list information 300 until the maximum selection time number set in advance to the client terminal 2 or arbitrarily set by the user is reached.

Further, if the program play mode setting button 357 is selectively operated by the user on the play mode setting screen 350, then the CPU 203 sets the play mode for preview data to the program play mode in accordance with the selective operation. At this time, for example, if a tune name is arbitrarily and selectively indicated by the user in the tune introduction screen 310 after the program play mode setting button 357 is selectively operated once on the play mode setting screen 350 by the user and then the program play mode setting button 357 is selectively operated again for the second time, then the CPU 203 sets a tune name to be selected actually as noticed tune information from among the plurality of tune names set as a successive outputting object and the order number in selection of the tune as noticed tune information to the tune name selectively indicated by the user and the order number in accordance with which the tune name is selected. Or, the CPU 203 arbitrarily selects a tune name in response to a random number generated by a predetermined random number generator from among a plurality of tune names set as a successive outputting object in the tune list information 300 by the CPU 203 itself, and sets a tune name to be actually selected as noticed tune information and an order number in selection of the tune name as noticed tune information to the tune name arbitrarily selected by the CPU 203 itself and the order number in which the tune name is selected. Incidentally, if the play mode for preview data is set to the program play mode, then the CPU 203 can select a tune name to be selected actually as noticed tune information in an overlapping relationship from among the plurality of tune names set as a successive outputting object in the tune list information 300 by the CPU 203 itself and can select only some of the plurality of tune names (that is, not all tune names set as a successive outputting object) actually as noticed tune information. Further, if, in the setting state just described, the CPU 203 executes the related information successively outputting process in accordance with a selective operation of the processing execution indication button 358, then the CPU 203 automatically and successively outputs preview data coordinated with the tune name selected as the noticed tune information while the CPU 203 successively selects a plurality of tune names arbitrarily selected by the user or the CPU 203 as noticed tune information in the arbitrarily selected order.

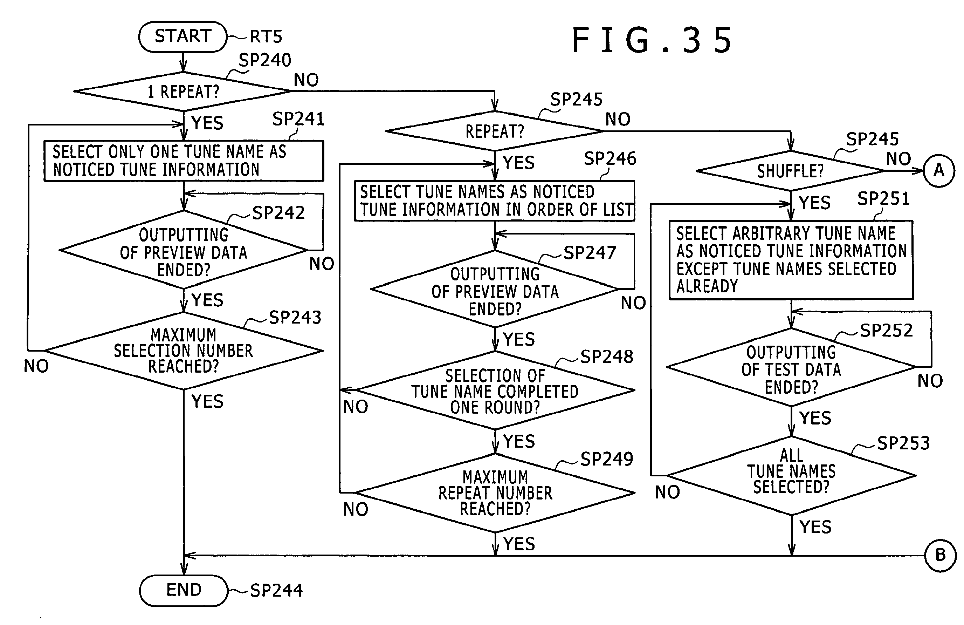

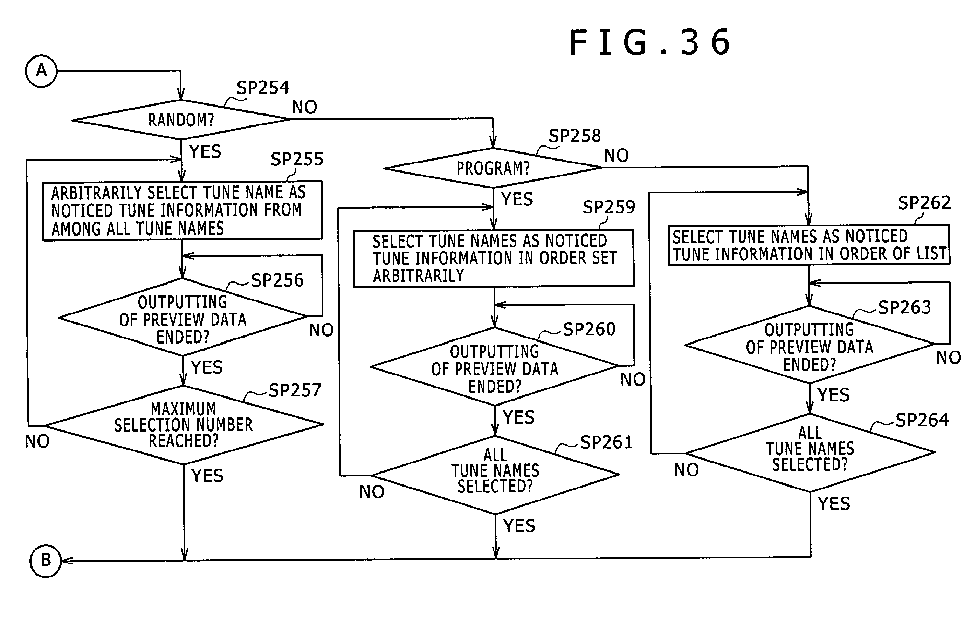

Actually, if the processing execution indication button 358 is selectively operated after one of the play modes is set in response to an operation of the user on the play mode setting screen 350 displayed on the display unit 206, then the CPU 203 of the client terminal 2 starts the fifth related information successively outputting processing procedure RT5 illustrated in FIGS. 35 and 36 in accordance with the fifth related information successively outputting program. After the fifth related information successively outputting processing procedure RT5 is started, the CPU 203 decides at step SP240 whether or not the play mode for preview data is set to the single repeat play mode. If an affirmative result is obtained at step SP240, then this represents that the play mode is set to the single repeat play mode at the present point of time. At this time, the CPU 203 advances its processing to step SP241. At step SP241, the CPU 203 selects a single tune name set as an outputting object of preview data from among the plurality of tune names set as a successive outputting object in the tune list information 300 by the CPU 203 itself as noticed tune information and causes the tune name selected as the noticed tune information to be displayed emphatically together with that one of the tune name display places 311AA to 311AE in which the selected tune name is displayed. Thereafter, the processing advances to step P242.

At step SP242, the CPU 203 utilizes a URL in the processing execution information 300B associated with the single tune name selected as noticed tune information to transmit a preview data requesting signal to the music data distribution server SV1 successively through the communication processing section 214 and the network interface 215. As a result, the CPU 203 receives preview data transmitted in the streaming format from the music data distribution server SV1 successively through the network interface 215 and the communication processing section 214 and signals the received preview data to the speaker 210 through the sound processing section 209. Consequently, a preview tune based on the preview data is outputted from the speaker 210 so as to be previewed by the user. Then, after the CPU 203 detects an end of the outputting of the preview data as a preview tune, it advances its processing to step SP243.

At step SP243, the CPU 203 decides whether or not the number of times of selection of a single tune name set as a successive outputting object of preview data reaches the maximum selection time number. If a negative result is obtained at step SP243, then this represents that the single tune name set as a successive outputting object of preview data is not selected as noticed tune information by the maximum selection time number as yet. At this time, the CPU 203 returns its processing to step SP241. Then, the CPU 203 thereafter executes the processes at steps SP241 to SP243 repetitively and circulatingly for a period of time until an affirmative result is obtained at step SP243. Consequently, while the single tune name set as a successive outputting object of preview data is automatically and repetitively selected as noticed tune information, the single preview data coordinated with the single tune name selected as the noticed tune information is automatically, successively and repetitively outputted as a preview tune. Then, if an affirmative result is obtained at step SP243, then this represents that the single tune name set as a successive outputting object of preview data is selected as noticed tune information by a number of times equal to the maximum time number. At this time, the CPU 203 advances its processing to step SP244, at which the CPU 203 ends the fifth related information successively outputting processing procedure RT5. In this manner, the CPU 203 can automatically and successively output one preview data coordinated with one tune name from among a plurality of tune names in the tune list information 300.

Incidentally, if a negative result is obtained at step SP204 described hereinabove, then this represents that, at the present point of time, the play mode for preview data is set to one of the repeat play mode, shuffle play mode, random play mode, program play mode and data play mode. At this time, the CPU 203 advances its processing to step SP245. Then at step SP245, the CPU 203 decides whether or not the play mode is set to the repeat play mode. Then, if an affirmative result is obtained at step SP245, then this represents that, at the present point of time, the play mode is set to the repeat play mode. At this time, the CPU 203 advances its processing to step SP246. Then at step SP246, the CPU 203 sets one tune name according to the reference set order from among the plurality of tune names set as a successive outputting object in the tune list information 300 by the CPU 203 itself as noticed tune information and causes the tune name selected as the noticed tune information to be displayed emphatically together with that one of the tune name display places 311AA to 311AE in which the selected tune name is displayed. Thereafter, the CPU 203 advances its processing to step SP247. At step SP247, the CPU 203 utilizes a URL in the processing execution information 300B associated with the tune name selected as noticed tune information to transmit a preview data requesting signal to the music data distribution server SV1 successively through the communication processing section 214 and the network interface 215. As a result, the CPU 203 receives preview data transmitted in the streaming format from the music data distribution server SV1 successively through the network interface 215 and the communication processing section 214 and signals the received preview data to the speaker 210 through the sound processing section 209. Consequently, a preview tune based on the preview data is outputted from the speaker 210 so as to be previewed by the user. Then, when the CPU 203 detects an end of the outputting of the preview data as a preview tune, the CPU 203 advances its processing to step SP248.

At step SP248, the CPU 203 decides whether or not the selection of the tune names set as a successive outputting object in the tune list information 300 by the CPU 203 itself as noticed tune information according to the reference set order is performed one round. If a negative result is obtained at step SP248, then this represents that the selection of the tune names set as a successive outputting object in the tune list information 300 by the CPU 203 itself as noticed tune information is not performed one round as yet. At this time, the CPU 203 returns its processing to step SP246. Then, the CPU 203 thereafter executes the processes at steps SP246 to SP248 repetitively and circulatingly for a period of time until an affirmative result is obtained at step SP249. Consequently, while all of the tune names set as a successive outputting object in the tune list information 300 by the CPU 203 itself are repetitively and successively selected as noticed tune information, the preview data coordinated with the tune names selected as the noticed tune information are automatically, successively and repetitively outputted as preview tunes. Then, if an affirmative result is obtained at step SP248, then this represents that all of the tune names set as a successive outputting object in the tune list information 300 by the CPU 203 itself are repetitively selected completely until the maximum repetition time number is reached. At this time, the CPU 203 advances its processing to step SP249. In this manner, the CPU 203 can automatically and successively output a plurality of preview data coordinated with a plurality of tune names in the tune list information 300.

Then at step SP249, the CPU 203 decides whether or not the repetitive selection time number for all of the tune names set as a successive outputting object in the tune list information 300 by the CPU 203 itself reaches the maximum repetition time number. If a negative result is obtained at step SP249, then this represents that all of the tune names set as a successive outputting object in the tune list information 300 by the CPU 203 itself are not selected as noticed tune information by a number of times equal to the maximum repetition time number as yet. In this instance, the CPU 203 returns its processing to step SP246. Then, the CPU 203 thereafter executes the processes at steps SP246 to SP249 repetitively and circulatingly for a period of time until an affirmative result is obtained at step SP249. Consequently, while all of the tune names set as a successive outputting object in the tune list information 300 by the CPU 203 itself are repetitively and successively selected as noticed tune information in accordance with the reference set order until the maximum repetition time number is reached, the preview data coordinated with the tune names selected as the noticed tune information are automatically, successively and repetitively outputted as preview tunes. Then, if an affirmative result is obtained at step SP249, then this represents that all of the tune names set as a successive outputting object in the tune list information 300 by the CPU 203 itself are repetitively selected completely until the maximum repetition time number is reached. At this time, the CPU 203 returns its processing to step SP244. In this manner, the CPU 203 can automatically and successively output a plurality of preview data coordinated with a plurality of tune names in the tune list information 300.

Incidentally, if a negative result is obtained at step SP245 described hereinabove, then this represents that the play mode for preview data at the present point of time is set to one of the shuffle mode, random play mode, program play mode and data play mode. At this time, the CPU 203 advances its processing to step SP250. Then at step SP250, the CPU 203 decides whether or not the play mode is the shuffle play mode. If an affirmative result is obtained at step SP250, then this represents that the play mode at present is the shuffle play mode. At this time, the CPU 203 advances its processing to step SP251. At step SP251, the CPU 203 randomly selects one of the plurality of tune names set as a successive outputting object in the tune list information 300 by the CPU 203 itself as noticed tune information such that the tune names may not overlap with each other (that is, such that a tune name set already as noticed tune information is not selected as noticed tune information again). Further, the CPU 203 causes the tune name selected as noticed tune information to be displayed emphatically together with that one of the tune name display places 311AA to 311AE in which the selected tune name is displayed. Thereafter, the processing advances to step SP252.

At step SP252, the CPU 203 utilizes a URL in the processing execution information 300B associated with the tune name selected as noticed tune information to transmit a preview data requesting signal to the music data distribution server SV1 successively through the communication processing section 214 and the network interface 215. As a result, the CPU 203 receives preview data transmitted in the streaming format from the music data distribution server SV1 successively through the network interface 215 and the communication processing section 214 and signals the received preview data to the speaker 210 through the sound processing section 209. Consequently, a preview tune based on the preview data is outputted from the speaker 210 so as to be previewed by the user. Then, when the CPU 203 detects an end of the outputting of preview data as a preview tune, the CPU 203 advances its processing to step SP253.

At step SP253, the CPU 203 decides whether or not all of the plurality of tune names set as a successive outputting object in the tune list information 300 by the CPU 203 itself are randomly selected individually one time as noticed tune information. If a negative result is obtained at step SP253, then this represents that all of the plurality of tune names set as a successive outputting object in the tune list information 300 by the CPU 203 itself are not selected as noticed tune information as yet. At this time, the CPU 203 returns its processing to step SP251. Then, the CPU 203 thereafter executes the processes at steps SP251 to SP253 repetitively and circulatingly for a period of time until an affirmative result is obtained at step SP253. Consequently, while the tune names set as a successive outputting object in the tune list information 300 by the CPU 203 itself are randomly selected as noticed tune information such that they may not overlap with each other, the preview data coordinated with the tune names selected as the noticed tune information are automatically and successively outputted as preview tunes. Then, if an affirmative result is obtained at step SP253, then this represents that the outputting of the plurality of preview data coordinated with all of the tune names set as a successive outputting object in the tune list information 300 by the CPU 203 itself as preview tunes is completed. At this time, the CPU 203 advances its processing to step SP244. In this manner, the CPU 203 can automatically and successively output a plurality of preview data coordinated with a plurality of tune names in the tune list information 300 in an outputting order different from an outputting order according to the reference set order of the plurality of tune names.

On the other hand, if a negative result is obtained at step SP250 described hereinabove, then this represents that the play mode for preview data at the present point of time is set to one of the random play mode, program play mode and data play mode. At this time, the CPU 203 advances its processing to step SP254 (FIG. 36). Referring now to FIG. 36, at step SP254, the CPU 203 decides whether or not the play mode is the random play mode. If an affirmative result is obtained at step SP254, then this represents that the play mode at present is the random play mode. At this time, the CPU 203 advances its processing to step SP255. At step SP255, the CPU 203 selects one tune name at random from among all of the plurality of tune names set as a successive outputting object in the tune list information 300 by the CPU 203 itself as noticed tune information and causes the tune name selected as noticed tune information to be displayed emphatically together with that one of the tune name display places 311AA to 311AE in which the selected tune name is displayed. Thereafter, the processing advances to step SP256.

At step SP256, the CPU 203 utilizes a URL in the processing execution information 300B associated with the tune name selected as noticed tune information to transmit a preview data requesting signal to the music data distribution server SV1 successively through the communication processing section 214 and the network interface 215. As a result, the CPU 203 receives preview data transmitted in the streaming format from the music data distribution server SV1 successively through the network interface 215 and the communication processing section 214 and signals the received preview data to the speaker 210 through the sound processing section 209. Consequently, a preview tune based on the preview data is outputted from the speaker 210 so as to be previewed by the user. Then, when the CPU 203 detects an end of the outputting of preview data as a preview tune, the CPU 203 advances its processing to step SP257.

At step SP257, the CPU 203 decides whether or not the number of times of selection of a tune name from among all of the plurality of tune names set as a successive outputting object in the tune list information 300 by the CPU 203 itself at random as noticed tune information reaches the maximum selection time number. If a negative result is obtained at step SP257, then this represents that a tune name is not selected at random as noticed tune information from among all of the plurality of tune names set as a successive outputting object in the tune list information 300 by the CPU 203 itself until the maximum selection time number is reached. At this time, the CPU 203 returns its processing to step SP255. Then, the CPU 203 thereafter executes the processes at steps SP255 to SP257 repetitively and circulatingly for a period of time until an affirmative result is obtained at step SP253. Consequently, while one tune name is successively selected at random as noticed tune information from among all of the tune names set as a successive outputting object in the tune list information 300 by the CPU 203 itself, the preview data coordinated with the tune names selected as the noticed tune information are automatically and successively outputted as preview tunes. Then, if an affirmative result is obtained at step SP257, then this represents that a tune name is completely selected at random as noticed tune information from among all of the tune names set as a successive outputting object in the tune list information 300 by the CPU 203 itself until the maximum selection time number is reached. At this time, the CPU 203 advances its processing to step SP244. In this manner, the CPU 203 can successively and randomly select a plurality of tune names coordinated with a plurality of tune names in the tune list information 300 and automatically and successively output the preview data.

Further, if a negative result is obtained at step SP254 described hereinabove, then this represents that the play mode for preview data at the present point of time is set to one of the program play mode and the data play mode. At this time, the CPU 203 advances its processing to step SP258. Then at step SP258, the CPU 203 decides whether or not the play mode is the program play mode. If an affirmative result is obtained at step SP258, then this represents that the play mode at present is the program play mode. At this time, the CPU 203 advances its processing to step SP259. At step SP259, the CPU 203 successively selects a tune name in a changed set order different from the reference set order from among the plurality of tune names set as a successive outputting object in the tune list information 300 by the CPU 203 itself as noticed tune information and causes the tune name selected as the noticed tune information to be displayed emphatically together with that one of the tune name display places 311AA to 311AE in which the selected tune name is displayed. Thereafter, the processing advances to step SP260.

At step SP260, the CPU 203 utilizes a URL in the processing execution information 300B associated with the tune name selected as noticed tune information to transmit a preview data requesting signal to the music data distribution server SV1 successively through the communication processing section 214 and the network interface 215. As a result, the CPU 203 receives preview data transmitted in the streaming format from the music data distribution server SV1 successively through the network interface 215 and the communication processing section 214 and signals the received preview data to the speaker 210 through the sound processing section 209. Consequently, a preview tune based on the preview data is outputted from the speaker 210 so as to be previewed by the user. Then, when the CPU 203 detects an end of the outputting of preview data as a preview tune, the CPU 203 advances its processing to step SP261.

At step SP261, the CPU 203 decides whether or not the tune names set as a successive outputting object in the tune list information 300 by the CPU 203 itself are completely selected as noticed tune information in the changed set order different from the reference set order. If a negative result is obtained at step SP261, then this represents that the tune names set as a successive outputting object in the tune list information 300 by the CPU 203 itself are not completely selected as noticed tune information as yet. At this time, the CPU 203 returns its processing to step SP259. Then, the CPU 203 thereafter executes the processes at steps SP259 to SP261 repetitively and circulatingly for a period of time until an affirmative result is obtained at step SP261. Consequently, while the tune names set as a successive outputting object in the tune list information 300 by the CPU 203 itself are selected as noticed tune information in the changed set order different from the reference set order, the preview data coordinated with the tune names selected as the noticed tune information are automatically and successively outputted as preview tunes. Then, if an affirmative result is obtained at step SP261, then this represents that the tune names set as a successive outputting object in the tune list information 300 by the CPU 203 itself are completely selected as noticed tune information in the changed set order different from the reference set order. At this time, the CPU 203 returns its processing to step SP244. In this manner, the CPU 203 can automatically and successively output a plurality of preview data coordinated with a plurality of tune names in the tune list information 300 in an outputting order according to the changed set order different from an outputting order according to the reference set order.

Furthermore, if a negative result is obtained at step SP258 described hereinabove, then this represents that the play mode for preview data at the present point of time is set to the data play mode. At this time, the CPU 203 advances its processing to step SP262. Then at step SP262, the CPU 203 selects one tune name according to the reference set order from among the plurality of tune names set as a successive outputting object in the tune list information 300 by the CPU 203 itself as noticed tune information and causes the tune name selected as the noticed tune information to be displayed emphatically together with that one of the tune name display places 311AA to 311AE in which the selected tune name is displayed. Thereafter, the processing advances to step SP263. At step SP263, the CPU 203 utilizes a URL in the processing execution information 300B associated with the tune name selected as noticed tune information to transmit a preview data requesting signal to the music data distribution server SV1 successively through the communication processing section 214 and the network interface 215. As a result, the CPU 203 receives preview data transmitted in the streaming format from the music data distribution server SV1 successively through the network interface 215 and the communication processing section 214 and signals the received preview data to the speaker 210 through the sound processing section 209. Consequently, a preview tune based on the preview data is outputted from the speaker 210 so as to be previewed by the user. Then, when the CPU 203 detects an end of the outputting of preview data as a preview tune, the CPU 203 advances its processing to step SP264.

At step SP264, the CPU 203 decides whether or not all of the tune names set as a successive outputting object in the tune list information 300 by the CPU 203 itself are selected as noticed tune information in accordance with the reference set order. If a negative result is obtained at step SP264, then this represents that all of the tune names set as a successive outputting object in the tune list information 300 by the CPU 203 itself are not completely selected as noticed tune information as yet. At this time, the CPU 203 returns its processing to step SP262. Then, the CPU 203 thereafter executes the processes at steps SP262 to SP264 repetitively and circulatingly for a period of time until an affirmative result is obtained at step SP264. Consequently, while the tune names set as a successive outputting object in the tune list information 300 by the CPU 203 itself are randomly selected as noticed tune information in accordance with the reference set order, the preview data coordinated with the tune names selected as the noticed tune information are automatically and successively outputted as preview tunes. Then, if an affirmative result is obtained at step SP264, then this represents that all of the tune names set as a successive outputting object in the tune list information 300 by the CPU 203 itself are selected as noticed tune information in accordance with the reference set order. At this time, the CPU 203 advances its processing to step SP244. In this manner, the CPU 203 can automatically and successively output a plurality of preview data coordinated with a plurality of tune names in the tune list information 300 in accordance with the reference set order.

It is to be noted that, when the CPU 203 of the client terminal 2 acquires the introduction page information from the music data distribution server SV1, the CPU 203 set a plurality of tune names in the tune list information 300 as a successive outputting object and sets a play mode for preview data, whereafter the CPU 203 executes the fifth related information successively outputting processing procedure RT5. However, execution of the fifth related information successively outputting processing procedure RT5 is not limited to this. In particular, when the CPU 203 acquires introduction page information from the music data distribution server SV1, the CPU 203 may decide whether or not the introduction page information includes the successive outputting permission indication information 300F or the successive output notification indicator 315 and automatically start, if a result of the decision indicates that the introduction page information includes the successive outputting permission indication information 300F or the successive output notification indicator 315, the fifth related information successively outputting processing procedure RT5 and then set, at an initial stage of the fifth related information successively outputting processing procedure RT5, the plurality of tune names in the tune list information 300 as a successive outputting object as one of processes of the fifth related information successively outputting processing procedure RT5 whereas the play mode for preview data is arbitrarily set by the CPU 203 itself. By this, the CPU 203 of the client terminal 2 can execute the fifth related information successively outputting processing procedure RT5 without the necessity for any operation by the user. Further, where the CPU 203 of the client terminal 2 acquires the introduction page information from the music data distribution server SV1, when the CPU 203 detects that the introduction page information includes the successive outputting permission indication information 300F or the successive output notification indicator 315, the CPU 203 may set a plurality of tune names in the tune list information 300 as a successive outputting object. By this, only when the CPU 203 detects that the introduction page information includes the successive outputting permission indication information 300F or the successive output notification indicator 315, it is necessary for the CPU 203 to analyze the substance of the tune list information 300, and consequently, the processing load upon acquisition of introduction page information can be reduced. In addition, while the CPU 203 of the client terminal 2 analyzes, during execution of the fifth related information successively outputting processing procedure RT5, the substance of the tune list information 300 and sets only those tune names with which preview data is coordinated as a successive outputting object, the setting is not limited to this. In particular, it is possible for the user to confirm tune names with which preview data is coordinated from the coordination notification indicator 311C on the tune introduction screen 310 and set only those tune names with which preview data is coordinated in the tune list information 300 as a successive outputting object in response to a result of the confirmation. Since this allows the user to set those tune names with which preview data is coordinated as a successive outputting object, the fifth related information successively outputting processing program can be configured so as not to particularly execute the process for analyzing the substance of the tune list information 300. Consequently, the processing of the fifth related information successively outputting processing procedure RT5 can be simplified.

Furthermore, where the CPU 203 of the client terminal 2 acquires the introduction page information from the music data distribution server SV1, when the CPU 203 detects that the introduction page information includes the successive outputting permission indication information 300F, or when the processing execution information 300B (or a URL for acquisition of preview data) is associated with a plurality of tune names, the CPU 203 itself may not particularly re-set the plurality of tune names in the tune list information 300 as a successive outputting object but execute the fifth related information successively outputting processing procedure RT5 such that also selection of a tune name as noticed tune information and continuation of emphatic display may be executed together with outputting of preview data. By this, the CPU 203 of the client terminal 2 can reduce the processing load when the fifth related information successively outputting processing procedure RT5 is started. Further, where the CPU 203 of the client terminal 2 acquires the introduction page information from the music data distribution server SV1, while the CPU 203 sets a play mode for preview data in accordance with a request of the user, the display is not limited to this. In particular, where the CPU 203 acquires the introduction page information from the music data distribution server SV1, the CPU 203 may set a play mode for preview data in accordance with tune name selection indication information or play mode indication information included in the introduction page information. By this, the CPU 203 of the client terminal 2 can introduce music data to the user while an intention of the music data distribution server SV1 is reflected on the introduction.

Further, where the CPU 203 of the client terminal 2 is set such that the single repeat play mode, repeat play mode, random play mode and program play mode are executed as a play mode for preview data, every time a tune name is selected as noticed tune information, the CPU 203 acquires preview data coordinated with the tune name selected as the noticed tune information from the music data distribution server SV1 and outputs the acquired preview data. However, the outputting is not limited to this, but it is possible for the CPU 203 of the client terminal 2 to temporarily store preview data, which is to be outputted repetitively, into the RAM 205, hard disk drive 211 or the like when the preview data is acquired for the first time, and output, upon outputting for the second or succeeding time, the temporarily stored preview data without acquiring the preview data from the music data distribution server SV1 again. By this, when the CPU 203 of the client terminal 2 sets the play mode for preview data to the single repeat play mode, repeat play mode, random play mode or program play mode to execute the fifth related information successively outputting processing procedure RT5, the processing load to the music data distribution server SV1 can be reduced significantly. Further, when the CPU 203 of the client terminal 2 executes the fifth related information successively outputting processing procedure RT5, the CPU 203 causes the tune introduction screen 310 to be displayed. However, there is no restriction to the specific case. In particular, the tune introduction screen 324, 326, 328, 330 or 332 having the play mode notification indicator 323, 325, 327, 329 or 331 similarly to those described hereinabove with reference to FIGS. 22 to 26 may be displayed in response to the data play mode, single repeat play mode, repeat play mode, shuffle play mode, random play mode or program play mode set as the play mode for preview data. By this, the CPU 203 of the client terminal 2 can allow the user, during execution of the fifth related information successively outputting processing procedure RT5, to readily confirm the play mode for preview data set at the current point of time. Incidentally, the CPU 203 of the client terminal 2 may utilize the play mode notification indicator 323, 325, 327, 329 or 331 included in the introduction page information as the play mode notification indicator 323, 325, 327, 329 or 331 to be displayed in the tune introduction screen 324, 326, 328, 330 or 332 or may utilize a suitable one of such play mode indicators which are retained in advance in the client terminal 2.

Further, while the CPU 203 of the client terminal 2 allows the user to utilize the same repeat play mode setting button 354 for the selective indication of the repeat play mode and the single repeat play mode, the selective indication is not limited to this. In particular, a repeat play mode setting button and a single repeat play setting button different from each other may be presented so that the user may perform the selective indication of the repeat play mode and the single repeat play mode, respectively. Further, while, where the play mode for preview data is set to the repeat play mode, the CPU 203 of the client terminal 2 sets all of tune names set as a successive outputting object in the tune list information 300 by the CPU 203 itself as they are as tune names with regard to which a plurality of preview data should be outputted, the setting of tune names is not limited to this. In particular, where the play mode for preview data is set to the repeat play mode, the CPU 203 may allow the user to arbitrarily select a plurality of tune names with regard to which preview data should be outputted from among all of tune names set as a successive outputting object in the tune list information 300 by the CPU 203 itself. Furthermore, where the play mode for preview data is set to the repeat play mode, the CPU 203 of the client terminal 2 may arbitrarily select a plurality of tune names with regard to which preview data should be outputted in response to a random number generated by a predetermined random number generator from among all tune names set as a successive outputting object in the tune list information 300 by the CPU 203 itself. Incidentally, where the CPU 203 executes the repeat play mode after it causes the user to arbitrarily select a plurality of tune names in this manner, the CPU 203 may allow, for example, the user to selectively indicate the shuffle play mode setting button 355 or the program play mode setting button 357 on the play mode setting screen 350 to set the play mode for preview data once to the shuffle play mode or the program play mode (that is, select a tune name to be selected as noticed tune information) and use, when the repeat play mode setting button 354 is selectively operated subsequently, the repeat play mode together with the shuffle play mode or the program play mode (that is, shuffle repeat play mode or program repeat play mode). Further, while, where the play mode for preview data is set to the single repeat play mode, the CPU 203 of the client terminal 2 urges the user to arbitrarily select a single tune name for repetitive outputting of preview data from among a plurality of tune names set as a successive outputting object in the tune list information 300 by the CPU 203 itself, the selection of a single tune name is not limited to this. In particular, where the play mode for preview data is set to the single repeat play mode, the CPU 203 may arbitrarily select one tune name in response to a random number generated by a predetermined random number generator from among all tune names set as a successive outputting object in the tune list information 300 by the CPU 203 itself and set the selected tune name as the single tune name to be selected as noticed tune information for the repetitive outputting of coordinated preview data.

Further, while the CPU 203 of the client terminal 2 sets a play mode for preview data while the play mode setting screen 350 is displayed and then executes automatic and successive outputting of a plurality of preview data when the processing execution indication button 358 is selectively operated, the automatic and successive outputting is not limited to this. In particular, the CPU 203 may suitably update and retain, every time a play mode for preview data is set, play mode setting information representative of the set play mode and automatically start, when the tune introduction screen 310 is displayed together with the play mode setting screen 350, automatic and successive outputting of a plurality of preview data in the play mode representative of the play mode setting information retained at the point of time. Further, the CPU 203 may automatically start automatic and successive outputting of a plurality of preview data in a play mode set in advance to the client terminal 2, a play mode representative of play mode indication information included in the introduction page information or a play mode upon automatic and successive outputting of preview data in the preceding cycle when the tune introduction screen 310 is displayed together with the play mode setting screen 350, and then change, when the data play mode setting button 353, repeat play mode setting button 354, shuffle play mode setting button 355, random play mode setting button 356 or program play mode setting button 357 is selectively operated halfway of execution of the automatic and successive outputting of the plurality of preview data, the play mode for the plurality of preview data in response to the selectively operated data play mode setting button 353, repeat play mode setting button 354, shuffle play mode setting button 355, random play mode setting button 356 or program play mode setting button 357. Incidentally, where the CPU 203 changes the play mode to the single repeat play mode, shuffle play mode, random play mode or program play mode during automatic and successive outputting of a plurality of preview data in the configuration described above, the tune to be selected as noticed tune information is automatically selected by the CPU 203 itself. Further, the CPU 203 may change the play mode similarly while it executes automatic and successive outputting of a plurality of preview data in response to a selective operation of the processing execution indication button 358.

### 2-2-5. Sixth related information successively outputting processing procedure

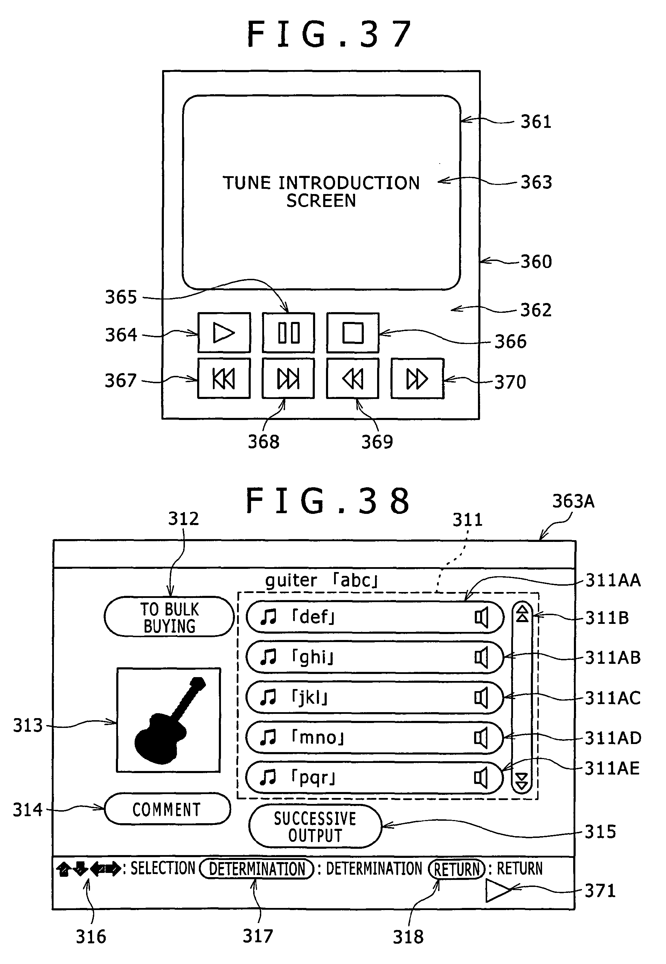

Now, a sixth related information successively outputting processing procedure which is executed by the CPU 203 of the client terminal 2 in response to an operation instruction inputted by the user is described. In this instance, when the CPU 203 of the client terminal 2 acquires the introduction page information from the music data distribution server SV1, it analyzes the substance of the tune list information 300 included in the introduction page information to detect tune names with which preview data is coordinated (that is, with which the processing execution information 300B or a URL for preview data acquisition is associated) from among a plurality of tune names in the tune list information 300. Then, the CPU 203 sets only those tune names with which preview data is coordinated in the tune list information 300 as a successive outputting object. Further, the CPU 203 produces tune introduction screen data based on the introduction page information in a similar manner as described hereinabove. Then, the CPU 203 combines the tune introduction screen data with play mode screen data as a user interface stored in the hard disk drive 211 in advance to produce composite screen data and signals the composite screen data to the display unit 206 through the display processing section 207. Consequently, the CPU 203 controls the display unit 206 to display, for example, an output control screen 360 shown in FIG. 37 based on the composite screen data.

Referring to FIG. 37, the output control screen 360 includes a tune introduction screen display region 361 provided at an upper portion thereof and a button arrangement region 362 provided below the tune introduction screen display region 361. A tune introduction screen 363 is displayed in a manner fitted in the tune introduction screen display region 361. Meanwhile, the button arrangement region 362 includes a an output button 364 for inputting an outputting instruction (that is, reproduction instruction) to output preview data coordinated with a tune name in the tune list information 300, a temporary stop button 365 for inputting a temporary stopping instruction to temporarily stop outputting of the preview data, and an output stop button 366 for inputting an outputting stopping instruction to stop the outputting of the preview data. The button arrangement region 362 further includes a reverse skip button 367 for inputting a reverse skip instruction to return the preview data of an object of outputting to the immediately preceding preview data in an order, for example, according to the reference set order, a forward skip button 368 for inputting a forward skip instruction to advance the preview data of an object of outputting to the immediately succeeding preview data in an order, for example, according to the reference set order, a fast reverse feeding button 369 for inputting a fast reverse feeding instruction to fast feed the preview data being outputted reversely, and a fast forwarding button 370 for inputting a fast forwarding instruction to fast forward the preview data being outputted.

When the output control screen 360 is displayed on the display unit 206 together with the tune introduction screen 363, the CPU 203 automatically selects a plurality of tune names set as a successive outputting object in the tune list information 300 by the CPU 203 itself as noticed tune information in accordance with the reference set order on the tune introduction screen 363. Further, the CPU 203 acquires preview data coordinated with the tune names selected as the noticed tune information from the music data distribution server SV1 and automatically and successively outputs the acquired preview data as preview tunes. Thereupon, the CPU 203 temporarily stores the preview data acquired from the music data distribution server SV1, for example, into a buffer memory provided in the sound processing section 209 and then reads out and outputs the preview data from the buffer memory as a preview tune. Further, for a period of time after starting of outputting of the preview data till ending of the outputting, the CPU 203 supervises the output button 364, temporary stop button 365, output stop button 366, reverse skip button 367, forward skip button 368, fast reverse feeding button 369 and fast forwarding button 370 to detect whether or not any of the buttons is selectively operated by the user on the output control screen 360 to input a corresponding outputting instruction, temporary stopping instruction, outputting stopping instruction, reverse skip instruction, forward skip instruction, fast reverse feeding instruction or fast forwarding instruction. Then, if the temporary stop button 365 or the output stop button 366 is selectively operated to input a corresponding temporary stopping instruction or outputting stopping instruction during outputting of preview data, then the CPU 203 temporarily stops the preview data being outputted or stops the outputting in accordance with the inputted instruction.

Incidentally, in order to re-start outputting of preview data after the outputting is temporarily stopped in accordance with the temporary stopping instruction, various methods according to settings to the client terminal 2 in advance or settings by the user in advance are available. For example, when outputting of preview data is temporarily stopped, the CPU 203 temporarily stores a tune name corresponding to the temporarily stopped preview data and a temporary stopping position (hereinafter referred to as data temporary stopping position) of the preview data. Then, if the output button 364 is selectively operated (or the temporary stop button 365 is selectively operated again) to input an outputting instruction after the preview data is temporarily stopped, then the CPU 203 re-starts the outputting of the temporarily stopped preview data from the data temporary stopping position based on the temporarily stored tune name and data temporary stopping position in accordance with the outputting instruction. Further, when the preview data being outputted is temporarily stopped, the CPU 203 temporarily stores a tune name corresponding to the temporarily stopped preview data. Then, in response to an outputting instruction inputted thereafter, the CPU 203 specifies the temporarily stopped preview data based on the temporarily stopped tune name and re-starts the outputting from the top position (hereinafter referred to as data top position) of the specified preview data. Also it is possible for the CPU 203 to re-start the outputting from the data top position of preview data coordinated with a particular tune name different from the tune name coordinated with the preview data whose outputting is temporarily stopped from among a plurality of tune names set as a successive outputting object by the CPU 203 itself.

On the other hand, also in order to re-start outputting of preview data after the outputting is stopped in accordance with the outputting stopping instruction, various methods according to settings to the client terminal 2 in advance or settings by the user in advance are available. For example, when outputting of preview data being outputted is stopped, the CPU 203 temporarily stores a tune name corresponding to the preview data whose outputting is stopped and an outputting stopping position (hereinafter referred to as data outputting stopping position) of the preview data. Then, if the output button 364 is selectively operated to input an outputting instruction after the outputting of the preview data is stopped, then the CPU 203 re-starts the outputting of the preview data whose outputting is stopped from the data outputting stopping position based on the temporarily stored tune name and data outputting stopping position in accordance with the outputting instruction. Further, when the outputting of the preview data being outputted is stopped, the CPU 203 temporarily stores a tune name corresponding to the preview data whose outputting is stopped. Then, upon re-starting of the outputting, the CPU 203 specifies the stopped preview data whose outputting is stopped coordinated with the temporarily stored tune name and re-starts the outputting from the data top position of the specified preview data. Also it is possible for the CPU 203 to re-start the outputting from the data top position of preview data coordinated with a particular tune name different from the tune name coordinated with the preview data whose outputting is stopped from among a plurality of tune names set as a successive outputting object by the CPU 203 itself. Incidentally, when outputting of preview data is re-started after the outputting is temporarily stopped or stopped, the CPU 203 determines, as the particular tune name, a tune name at the top in the reference set order or a tune name preceding or succeeding in the reference set order with respect to the tune name coordinated with the preview data whose outputting is temporarily stopped or stopped from among a plurality of tune names set as a successive outputting object by the CPU 203 itself with reference to the tune name temporarily stored upon the temporary stopping or upon the stopping of the outputting. Then, the method of re-starting outputting of preview data being outputted after the outputting of the preview data is temporarily stopped or stopped may be suitably selected by the user or some method may be fixedly utilized.

In addition, if the forward skip button 367 is selectively operated to input the reverse skip instruction by the user during outputting of preview data, then the CPU 203 stops the outputting of the preview data being outputted at the point of time in accordance with the reverse skip instruction. Then, the CPU 203 outputs preview data coordinated with a tune name immediately preceding to the tune name coordinated with the preview data whose outputting is stopped from among a plurality of tune names set as a successive outputting object by the CPU 203 itself from the data top position of the preview data. On the other hand, if the forward skip button 368 is selectively operated to input the forward skip instruction during outputting of preview data, then the CPU 203 stops the outputting of the preview data being outputted at the point of time in accordance with the forward skip instruction. Then, the CPU 203 outputs preview data coordinated with a tune name next to the tune name coordinated with the preview data whose outputting is stopped at the point of time from among the plurality of tune names set as a successive outputting object by the CPU 203 itself from the data top position of the preview data.

Further, if the fast reverse feeding button 369 is selectively operated to input the fast reverse feeding instruction by the user upon starting of outputting or during outputting of preview data, then the CPU 203 executes a fast reverse feeding process of reading out the preview data retrospectively toward the data top position side from the buffer memory while the preview data are suitably sampled out. Consequently, the CPU 203 successively outputs the preview tune to the reproduction starting position side with some sound skipped and thereby achieves fast reverse feeing outputting at a rate higher than an ordinary output rate (hereinafter referred to as normal rate). In this manner, where the fast reverse feeding button 369 is continuously selected by the user, the CPU 203 executes a fast reverse feeding process of the preview data in accordance with the selection instruction. However, if the selective operation of the fast reverse feeding button 369 is canceled before the fast reverse feeding position of the preview data comes to the data top position, then the CPU 203 stops the fast reverse feeding process at the point of time and begins to automatically output the preview data at the normal rate from the fast reverse feeding ending position toward the tail end position (hereinafter referred to as data tail end position) of the data. Further, if the fast reverse feeding position of the preview data comes to the data top position before the selective operation of the fast reverse feeding button 369 is canceled, then the CPU 203 stops the fast reverse feeding process at the point of time and begins to automatically output the preview data at the normal rate again from the data top position toward the data tail end position side.

On the other hand, if the fast forwarding button 370 is selectively operated to input the fast forwarding instruction upon starting of outputting of preview data or during outputting of preview data, then the CPU 203 executes a fast forwarding process of reading out the preview data toward the data tail end position from the buffer memory while the preview data are suitably sampled out in accordance with the fast forwarding instruction. Consequently, the CPU 203 outputs the preview tune toward the reproduction ending position side with some sound skipped successively to achieve fast forwarding outputting. In this manner, when the fast forwarding button 370 is continuously selected by the user, the CPU 203 executes the fast forwarding process for the preview data in accordance with the selective operation. However, if the selective operation of the fast forwarding button 370 is canceled before the fast forwarding position of the preview data comes to the data tail end position, then the CPU 203 stops the fast forwarding process at the point of time and automatically begins to output the preview data at the normal rate again from the fast forwarding ending position toward the data tail end position side. Further, if the fast forwarding position of the preview data comes to the data tail end position before the selective operation of the fast forwarding button 370 is canceled, then the CPU 203 automatically begins to output other preview data of a next object of outputting of preview data at the normal rate from the data top position toward the data tail end position side.

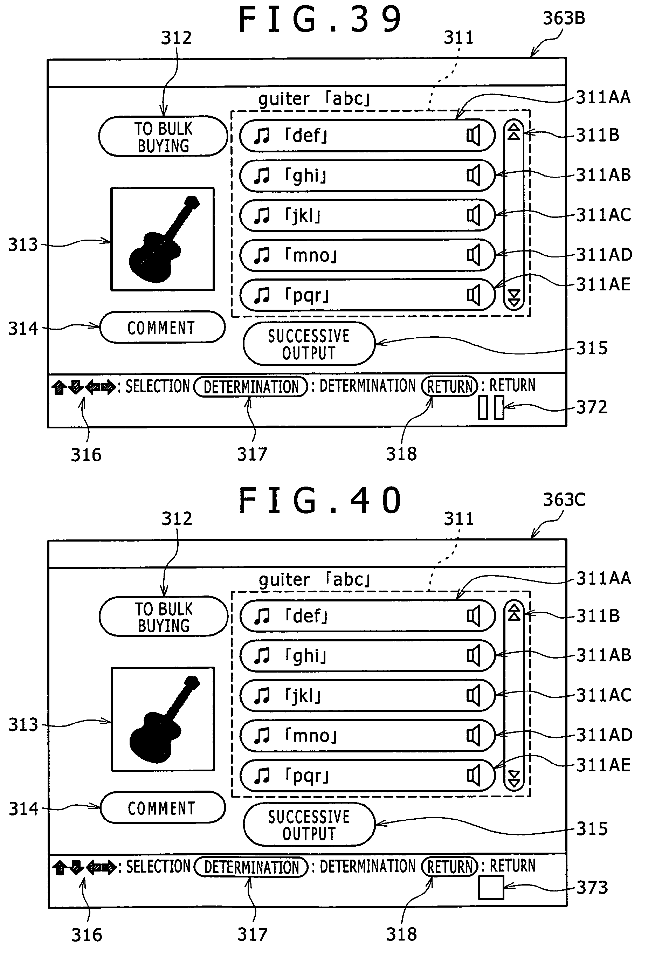

Then, if the CPU 203 detects outputting of preview data coordinated with a plurality of tune names set as a successive outputting object in the tune list information 300 by the CPU 203 itself, then the CPU 203 causes a tune introduction screen 363A in the tune introduction screen display region 361 of the output control screen 360 to display an outputting execution notification indicator 371 retained in the client terminal 2 in advance for notifying the user that the preview data is being outputted as seen in FIG. 38. On the other hand, if outputting of preview data being outputted is temporarily stopped, then the CPU 203 stops the display of the outputting execution notification indicator 371 and causes a temporary stopping notification indicator 372, which is retained in the client terminal 2 in advance for notifying the user of temporary stopping of the preview data, to be displayed on a tune introduction screen 363B in the tune introduction screen display region 361 of the output control screen 360 for the period of time of the temporary stopping as seen in FIG. 39. Further, if the CPU 203 stops outputting of preview data being outputted, then the CPU 203 stops the display of the outputting execution notification indicator 371 and displays an outputting stopping notification indicator 373, which is retained in the client terminal 2 in advance for notifying the user of the stopping of the outputting of the preview data, to be displayed on a tune introduction screen 363C in the tune introduction screen display region 361 of the output control screen 360 for the period of time of the stopping of the outputting as seen in FIG. 40.

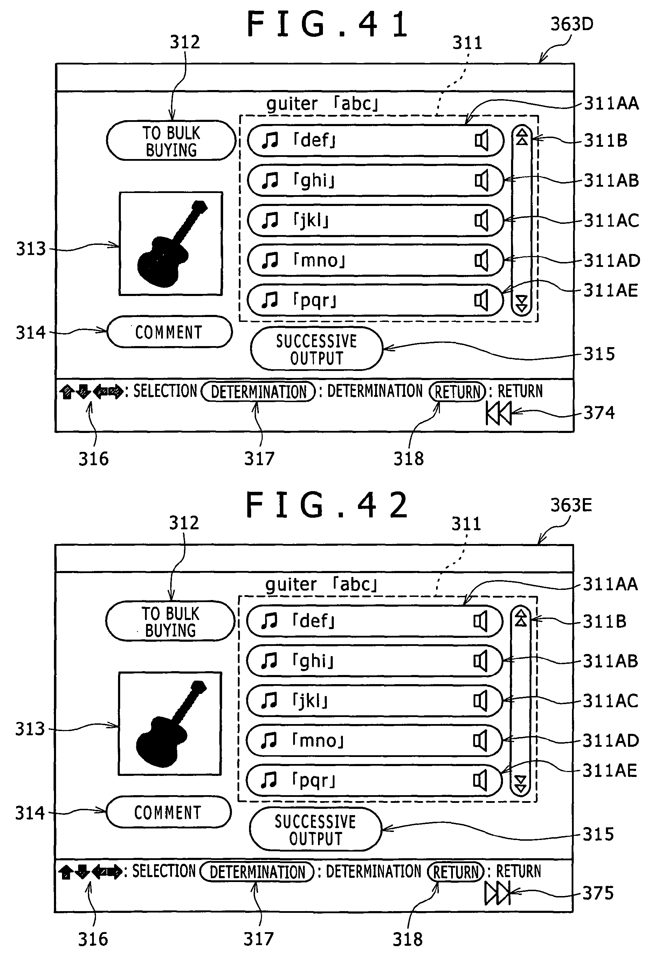

Furthermore, if the reverse skip process is executed during outputting of preview data, then the CPU 203 stops the display of the outputting execution notification indicator 371 for a period of time after the reverse skip process is started until the reverse skip process is ended. Further, the CPU 203 displays a reverse skip execution notification indicator 374, which is retained in the client terminal 2 in advance for notifying the user that the reverse skip process is being executed, on a tune introduction screen 363D in the tune introduction screen display region 361 of the output control screen 360 as seen in FIG. 41. Further, if the CPU 203 executes the forward skip process during outputting of preview data, then the CPU 203 stops the display of the outputting execution notification indicator 371 for a period of time after the forward skip process is started until the forward skip process is ended. Further, the CPU 203 displays a forward skip execution notification indicator 375, which is retained in the client terminal 2 in advance for notifying the user that the forward skip process is being executed, on a tune introduction screen 363E in the tune introduction screen display region 361 of the output control screen 360 as seen in FIG. 42.

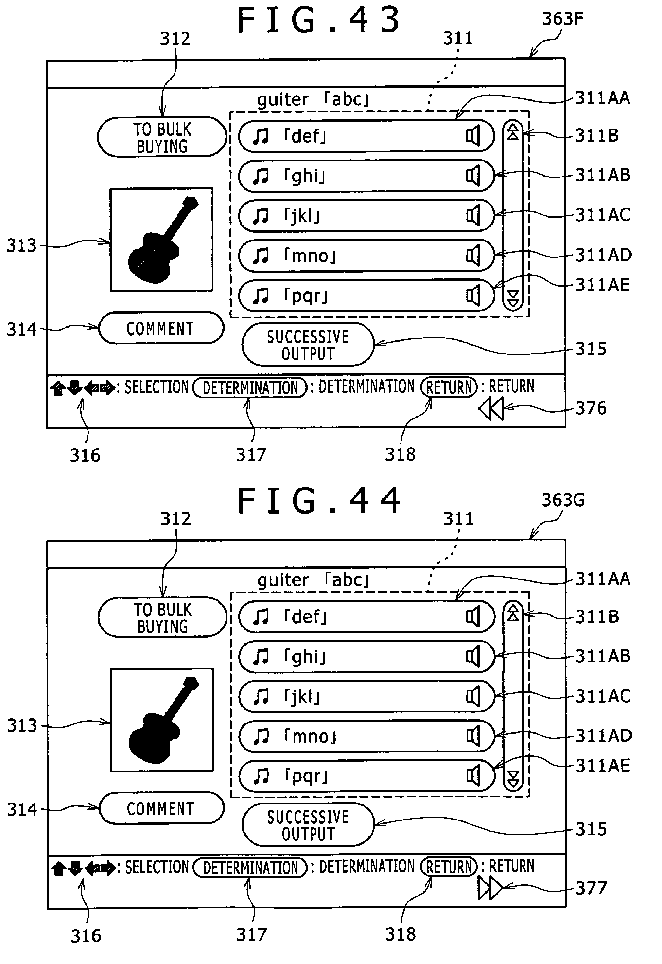

Furthermore, if the CPU 203 executes the fast reverse feeding process during outputting of preview data, then the CPU 203 stops the display of the outputting execution notification indicator 371 for a period of time after the fast reverse feeding process is started until the fast reverse feeding process is ended. Further, the CPU 203 displays a fast reverse feeding execution notification indicator 376, which is retained in the client terminal 2 in advance for notifying the user that the fast reverse feeding process is being executed, on a tune introduction screen 363F in the tune introduction screen display region 361 of the output control screen 360 as seen in FIG. 43. Further, if the CPU 203 executes the fast forwarding process during outputting of preview data, then the CPU 203 stops the display of the outputting execution notification indicator 371 for a period of time after the fast forwarding process is started until the fast forwarding process is ended. Further, the CPU 203 displays a fast forwarding execution notification indicator 377, which is retained in the client terminal 2 in advance for notifying the user that the fast forwarding process is being executed, on a tune introduction screen 363G in the tune introduction screen display region 361 of the output control screen 360 as seen in FIG. 44. In this manner, the CPU 203 can precisely notify the user of the substance of control and so forth for the outputting of the preview data through the tune introduction screens 363A to 363G during outputting of preview data so that the user may confirm the substance of control and so forth.

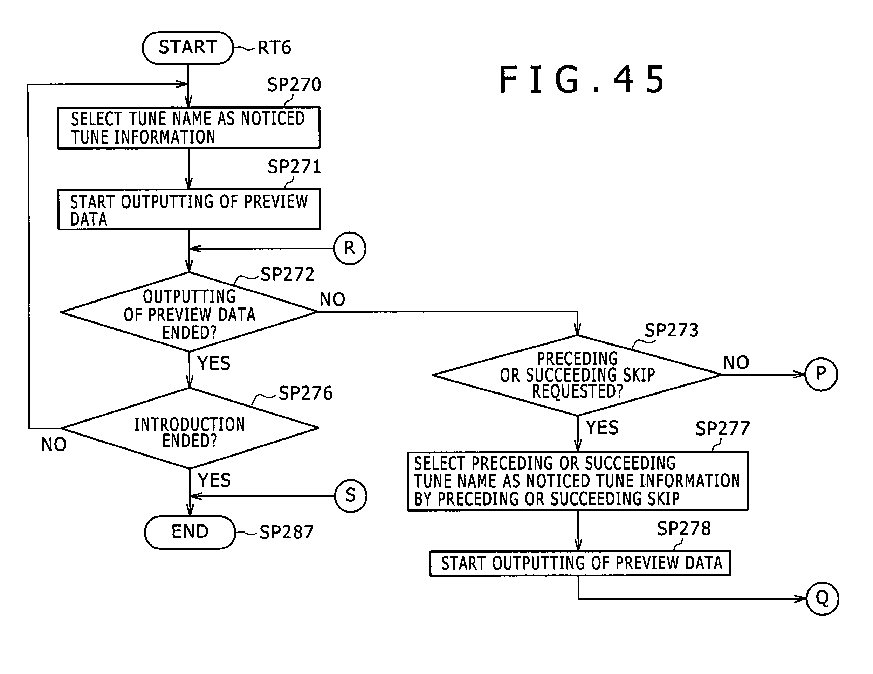

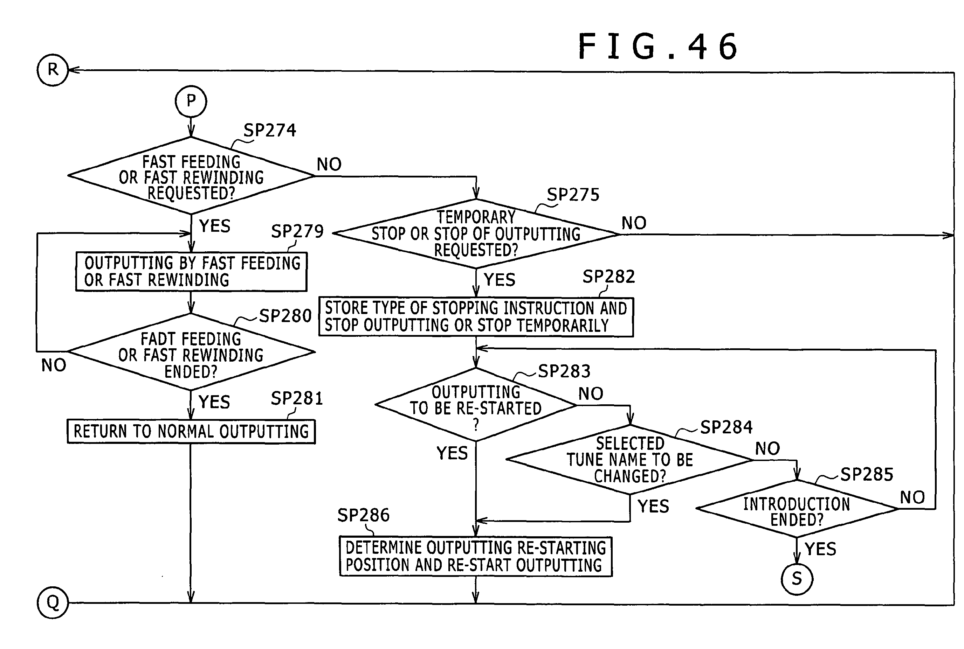

Actually, after the CPU 203 of the client terminal 2 controls the display unit 206 to display the output control screen 360, the CPU 203 starts the sixth related information successively outputting processing procedure RT6 illustrated in FIGS. 45 and 46 in accordance with the sixth related information successively outputting program. Referring first to FIG. 45, first step SP270 after the CPU 203 starts the sixth related information successively outputting processing procedure RT6, the CPU 203 automatically selects a tune name in accordance with the reference set order from among a plurality of tune names set as a successive outputting object in the tune list information 300 by the CPU 203 itself as noticed tune information on the tune introduction screen 363 in the output control screen 360 and causes the tune name selected as the noticed tune information to be displayed emphatically together with that one of the tune name display places 311AA to 311AE in which the selected tune name is displayed. Thereafter, the CPU 203 advances its processing to step SP271.

At step SP271, the CPU 203 utilizes a URL in the processing execution information 300B associated with the tune name selected as noticed tune information to transmit a preview data requesting signal to the music data distribution server SV1 successively through the communication processing section 214 and the network interface 215. As a result, the CPU 203 receives preview data transmitted in the streaming format from the music data distribution server SV1 successively through the network interface 215 and the communication processing section 214 and temporarily stores the received preview data into the buffer memory in the sound processing section 209. Further, the CPU 203 begins to read out the preview data from the buffer memory and performs a predetermined sound process for the preview data and then signals resulting preview data to the speaker 210. Consequently, outputting of a preview tune based on the preview data from the speaker 210 is started. Thereafter, the CPU 203 advances its processing to step SP272. Then at step SP272, the CPU 203 decides whether or not outputting of the preview tune based on the preview data coordinated with the tune name set as noticed tune information comes to an end. If a negative result is obtained at step SP272, then this represents that the preview data is being outputted as yet. At this time, the CPU 203 advances its processing to step SP273.

At step SP273, the CPU 203 decides whether or not a reverse skip request or a forward skip request with respect to the preview data being outputted is issued by the user. If a negative result is obtained at step SP273, then this signifies that none of the reverse skip button 367 and the forward skip button 368 is selectively operated on the output control screen 360 at this point of time by the user. At this time, the CPU 203 advances its processing to step SP274 (FIG. 46). Referring now to FIG. 46, at step SP274, the CPU 203 decides whether or not a fast reverse feeding instruction or a fast forwarding instruction for the preview data being outputted is issued by the user. If a negative result is obtained at step SP274, then this represents that none of the fast reverse feeding button 369 and the fast forwarding button 370 is selectively operated by the user on the output control screen 360 at this point of time. In other words, the negative result represents that none of a fast reverse feeding instruction and a fast forwarding instruction is inputted as yet. At this time, the CPU 203 advances its processing to step SP275. At step SP275, the CPU 203 decides whether or not a temporary stopping instruction or an outputting stopping instruction for the preview data being outputted is issued by the user. If a negative result is obtained at step SP275, then this represents that none of the temporary stop button 365 and the output stop button 366 is selectively operated by the user on the output control screen 360 at this point of time. In other words, the negative result represents that none of a temporary stopping instruction and an outputting stopping instruction is inputted as yet. At this time, the CPU 203 returns its processing to step SP272. In this manner, the CPU 203 thereafter continues to output the preview data coordinated with the tune name selected as noticed tune information for a period of time until an affirmative result is obtained at one of steps SP272 to SP275.

Then, if an affirmative result is obtained at step SP272, then this represents that an end of outputting of the preview data is detected before a request for temporary stopping, outputting stopping, reverse skip, forward skip, fast reverse feeding or fast forwarding for the preview data being outputted is issued. At this time, the CPU 203 advances its processing to step SP276. At step SP276, the CPU 203 decides whether or not the introduction of downloadable music data should be ended. If a negative result is obtained at step SP276, then this represents that a request to end the introduction of music data is not issued, for example, by the user as yet. At this time, the CPU 203 returns its processing to step SP270. Accordingly, for a period of time until an affirmative result is obtained at step SP276, the CPU 203 repetitively and circulatingly executes the processes at step SP270 to SP276 to automatically select a plurality of tune names set as a successive outputting object in the tune list information 300 by the CPU 203 by itself as noticed tune information in accordance with the reference set order and automatically and successively output preview data coordinated with the tune name selected as the noticed tune information.

Incidentally, if an affirmative result is obtained at step SP273, then this represents that the reverse skip button 367 or the forward skip button 368 is selectively operated on the output control screen 360 at this point of time by the user to input the corresponding reverse skip instruction or forward skip instruction. At this time, the CPU 203 advances its processing to step SP277. At step SP277, the CPU 203 automatically stops the outputting of the preview data being outputted at this point of time if the reverse skip instruction is effective then. Further, the CPU 203 automatically selects the immediately preceding tune name in accordance with the reference set order with respect to the tune name coordinated with the tune data whose outputting is stopped in accordance with the reverse skip request from among the plurality of tune names set as a successive outputting object in the tune list information 300 by the CPU 203 itself on the tune introduction screen 363 in the output control screen 360. Further, the CPU 203 causes the tune name selected as the noticed tune information to be emphatically displayed together with that one of the tune name display places 311AA to 311AE in which the selected tune name is displayed. Thereafter, the CPU 203 advances its processing to step SP278. On the other hand, if the forward skip instruction is effective at step SP277, then the CPU 203 automatically stops the outputting of the preview data being outputted at the present point of time. Further, the CPU 203 automatically selects the immediately succeeding tune name in accordance with the reference set order with respect to the tune name coordinated with the tune data whose outputting is stopped in accordance with the forward skip request from among the plurality of tune names set as a successive outputting object in the tune list information 300 by the CPU 203 itself as noticed tune information on the tune introduction screen 363 in the output control screen 360. Further, the CPU 203 causes the tune name selected as the noticed tune information to be emphatically displayed together with that one of the tune name display places 311AA to 311AE in which the selected tune name is displayed. Thereafter, the CPU 203 advances its processing to step SP278. Then at step SP278, the CPU 203 acquires preview data coordinated with the tune name selected newly as the noticed tune information in accordance with the reverse skip request or forward skip request in a similar manner as described hereinabove from the music data distribution server SV1 and begins to cause a preview tune based on the preview data to be outputted. Thereafter, the CPU 203 returns its processing to step SP272.

On the other hand, if an affirmative result is obtained at step SP274, then this represents that the fast reverse feeding button 369 or the fast forwarding button 370 is selectively operated by the user on the output control screen 360 to input the corresponding fast reverse feeding instruction or fast forwarding instruction. At this time, the CPU 203 advances its processing to step SP279. At step SP279, the CPU 203 performs, where the fast reverse feeding instruction is effective, a fast reverse feeding process for the preview data being outputted at the point of time so that the preview data are outputted reversely at a higher rate than the normal rate. Thereafter, the CPU 203 advances its processing to step SP280. At step SP280, the CPU 203 decides whether or not the fast reverse feeding outputting of the preview data being outputted at the point of time is ended. If a negative result is obtained at step SP280, then this represents that the fast reverse feeding outputting of the preview data does not reach the data top position and besides the fast reverse feeding instruction corresponding to the selective operation of the fast reverse feeding button 369 by the user on the output control screen 360 still remains effective. At this time, the CPU 203 returns its processing to step SP279. Consequently, the CPU 203 thereafter continues the fast reverse feeding outputting at a rate higher than the normal rate through the fast reverse feeding process of the preview data at step SP279 for a period of time until an affirmative result is obtained at step SP280. Then, if an affirmative result is obtained at step SP280, then this represents that the operation for the fast reverse feeding by the user comes to an end before the fast reverse feeding of the preview data being reversely outputted fast comes to the data top position or the fast reverse feeding of the preview data being reversely outputted fast reaches the data top position before the operation for the fast reverse feeding by the user comes to an end. At this time, the CPU 203 advances its processing to step SP281. At step SP281, the CPU 203 ends the fast reverse feeding of the preview data being reversely outputted fast and re-starts outputting of the preview data at the normal rate from the fast reverse feeding ending position or the data top position, then the CPU 203 returns its proceeding to step SP272.

On the other hand, if the fast forwarding instruction is effective at step SP274, then the CPU 203 performs a fast forwarding process for the preview data being outputted at the point of time and fast outputs the preview data at a rate higher than the normal rate. Thereafter, the CPU 203 advances its processing to step SP280. At step SP280, the CPU 203 decides whether or not the fast forwarding outputting of the preview data being outputted at the point of time is ended. If a negative result is obtained at step SP280, then this represents that the fast forwarding outputting of the preview data does not reach the data tail end position and besides the fast forwarding instruction corresponding to the selective operation of the fast forwarding button 370 by the user on the output control screen 360 still remains effective. At this time, the CPU 203 returns its processing to step SP279. Consequently, the CPU 203 thereafter continues the fast forwarding outputting at a rate higher than the normal rate through the fast forwarding process of the preview data at step SP279 for a period of time until an affirmative result is obtained at step SP280. Then, if an affirmative result is obtained at step SP280, then this represents that the operation for the fast forwarding by the user comes to an end before the fast forwarding of the preview data being forwardly outputted fast comes to the data tail end position or the fast forwarding of the preview data being forwardly outputted fast reaches the data tail end position before the operation for the fast forwarding by the user comes to an end. At this time, the CPU 203 advances its processing to step SP281. At step SP281, the CPU 203 ends the fast forwarding of the preview data being forwardly outputted fast. At this time, if the fast forwarding comes to an end before the data tail end position of the preview data is reached, then the CPU 203 re-starts outputting of the preview data at the normal rate from the fast forwarding ending position. Thereafter, the CPU 203 returns its processing to step SP272. On the other hand, if the fast forwarding of the preview data comes to the data tail end position and is ended compulsorily, then the CPU 203 automatically selects, as noticed tune information, a next tune name in accordance with the reference set order with respect to the tune name corresponding to the preview data at which the fast forwarding is compulsorily ended from among the plurality of tune names set as a successive outputting object in the tune list information 300 by the CPU 203 itself on the tune introduction screen 363 in the output control screen 360. Further, the CPU 203 causes the tune name selected as the noticed tune information to be displayed emphatically together with that one of the tune name display places 311AA to 311AE in which the selected tune name is displayed. Then, the CPU 203 acquires preview data coordinated with the tune name selected newly as the noticed tune information in response to the compulsory ending of the fast forwarding in a similar manner as described hereinabove from the music data distribution server SV1 and starts outputting of a preview tune based on the acquired preview data at the normal rate. Thereafter, the CPU 203 returns its processing to step SP272.

On the other hand, if an affirmative result is obtained at step SP275, then this represents that the temporary stop button 365 or the output stop button 366 is selectively operated by the user on the output control screen 360 at this point of time to input the corresponding temporary stopping instruction or outputting stopping instruction. At this time, the CPU 203 advances its processing to step SP282. At step SP282, the CPU 203 produces input instruction history information indicative of the temporary stopping instruction or outputting stopping instruction inputted at this time (for example, if it is set to re-start outputting of the preview data from the data temporary stopping position or data outputting stopping position, also information of the data temporary stopping position or data outputting stopping position is included in the input instruction history information). Then, the CPU 203 temporarily stores the produced input instruction history information and a tune name corresponding to the preview data whose outputting is temporarily stopped or stopped, for example, into the RAM 205 and then temporarily stops or stops the outputting of the preview data being outputted at this point of time in accordance with the inputted temporary stopping instruction or outputting stopping instruction. Thereafter, the CPU 203 advances its processing to step SP283. At step SP283, the CPU 203 decides whether or not the outputting of the preview data should be re-started. If a negative result is obtained at step SP283, then this represents that a request to output the preview data is not issued as yet by the user. At this time, the CPU 203 advances its processing to step SP284. At step SP284, the CPU 203 decides whether or not the tune name selected as noticed tune information at this point of time (that is, tune name corresponding to the preview data whose outputting is temporarily stopped or stopped) should be changed to another tune name. If a negative result is obtained at step SP284, then this represents that a request to change the tune name selected as noticed tune information is not issued by the user at this point of time. At this time, the CPU 203 advances its processing to step SP285. At step SP285, the CPU 203 decides whether or not the introduction of downloadable music data should be ended. If a negative result is obtained at step SP285, then this represents that a request to end the introduction of music data is not issued as yet, for example, by the user. At this time, the CPU 203 returns its processing to step SP283. Then the CPU 203 repetitively and circulatingly executes the processes at steps SP283 to SP285 for a period of time until an affirmative result is obtained at any of steps SP283 to step SP285 thereby to wait that a request to re-start outputting of the preview data is issued.

Incidentally, if an affirmative result is obtained at step SP283, then this signifies that the output button 364 is selectively operated by the user on the output control screen 360 to input an outputting instruction. At this time, the CPU 203 advances its processing to step SP286. At step SP286, the CPU 203 sets the preview data of an object of outputting at this point of time as described hereinabove in response to the inputting instruction history information temporarily stored in the RAM 205 and the settings to the client terminal 2 or by the user and determines the outputting re-starting position of the preview data set as the object of outputting. Then, the CPU 203 outputs the preview data of the object of outputting from the outputting starting position determined as described above, and then returns its processing to step 272. On the other hand, if an affirmative result is obtained at step SP284, then this represents that, because a tune name different from the tune name coordinated with the preview data whose outputting is temporarily stopped or stopped is selectively indicated on the tune introduction screen 363 by the user, the tune name selectively indicated is selected as new noticed tune information and the tune name selected as the noticed tune information is emphatically displayed together with that one of the tune name display places 311AA to 311AE in which the selected tune name is displayed. At this time, the CPU 203 advances its processing to step SP286. Then at step SP286, the CPU 203 thereupon determines the outputting starting position for the preview data corresponding to the tune name selectively indicated by the user to the data top position of the preview data and re-starts the outputting of the preview data from the data top position. Thereafter, the CPU 203 returns its processing to step SP272. Further, if an affirmative result is obtained at step SP285, then this represents that a request to end the introduction of music data is issued, for example, by the user. At this time, the CPU 203 advances its processing to step SP287, at which it ends the sixth related information successively outputting processing procedure RT6. Incidentally, if an affirmative result is obtained at step SP276 described hereinabove, then also this represents that a request to end the introduction of music data is issued, for example, by the user. Also at this time, the CPU 203 advances its processing to step SP287, at which it ends the sixth related information successively outputting processing procedure RT6.

In this manner, although the CPU 203 automatically and successively outputs a plurality of preview data coordinated with a plurality of tune names set as a successive outputting object in the tune list information 300 by the CPU 203 itself, if some outputting controlling instruction (that is, outputting instruction, temporary stopping instruction, outputting stopping instruction, reverse skip instruction, forward skip instruction, fast reverse feeding instruction or fast forwarding instruction) is inputted thereupon by the user, then the CPU 203 controls the outputting of the preview data in accordance with the inputted outputting controlling instruction. Consequently, the CPU 203 can introduce a plurality of downloadable music data through preview tunes in accordance with a request of the user such that preview data requested by the user are outputted over and over again or only preview data requested by the user are successively outputted. Accordingly, the CPU 203 can introduce a plurality of downloadable music data most efficiently and effectively to the user.

It is to be noted that, where the CPU 203 of the client terminal 2 acquires the introduction page information from the music data distribution server SV1, the CPU 203 first sets a plurality of tune names in the tune list information 300 as a successive outputting object and then executes the sixth related information successively outputting processing procedure RT6. However, execution of the sixth related information successively outputting processing procedure RT6 is not limited to this. In particular, where the CPU 203 acquires the introduction page information from the music data distribution server SV1, the sixth related information successively outputting processing procedure RT6 may be started automatically in response to a processing execution instruction inputted through an operation button provided on the surface of the housing or the remote controller by the user who confirms the presence of the successive output notification indicator 315 on the tune introduction screen 310, and a plurality of tune names in the tune list information 300 may be set as a successive outputting object as a process in the sixth related information successively outputting processing procedure RT6 at an initial stage of the sixth related information successively outputting processing procedure RT6. Further, the CPU 203 may set a plurality of tune names in the tune list information 300 as a successive outputting object when it detects, where it acquires the introduction page information from the music data distribution server SV1, that the introduction page information includes the successive outputting permission indication information 300F or the successive output notification indicator 315. By this, it is only necessary for the CPU 203 of the client terminal 2 to analyze the substance of the tune list information 300 only when the CPU 203 detects that the successive outputting permission indication information 300F or the successive output notification indicator 315 is included in the introduction page information, and consequently, the processing load upon acquisition of the introduction page information can be reduced. In addition, the CPU 203 of the client terminal 2 may urge the user to confirm tune names with which preview data is coordinated through the coordination notification indicator 311C and set only those tune names with which preview data is coordinated in the tune list information 300 as a successive outputting object in accordance with a result of the confirmation.

Further, where the CPU 203 of the client terminal 2 acquires the introduction page information from the music data distribution server SV1, when the CPU 203 detects that the successive outputting permission indication information 300F (or the successive output notification indicator 315) is included in the introduction page information or when the processing execution information 300B (or a URL for preview data acquisition) is associated with a plurality of tune names, the CPU 203 may execute the sixth related information successively outputting processing procedure RT6 without particularly re-setting the plurality of tune names in the tune list information 300 as a successive outputting object by the CPU 203 itself to execute not only outputting of the preview data but also selection of a tune name as noticed tune information and continuation of emphatic display. By this, the CPU 203 of the client terminal 2 can reduce the processing load when it executes the sixth related information successively outputting processing procedure RT6.

Further, while the CPU 203 of the client terminal 2 causes the outputting execution notification indicator 371, temporary stopping notification indicator 372, outputting stopping notification indicator 373, reverse skip execution notification indicator 374, forward skip execution notification indicator 375, fast reverse feeding execution notification indicator 376 and fast forwarding execution notification indicator 377 retained in advance by the client terminal 2 to be displayed on the tune introduction screens 363A to 363G as seen in FIGS. 38 to 44 in response to the substance of outputting control for preview data, the display is not limited to this. In particular, the outputting execution notification indicator 371, temporary stopping notification indicator 372, outputting stopping notification indicator 373, reverse skip execution notification indicator 374, forward skip execution notification indicator 375, fast reverse feeding execution notification indicator 376 and fast forwarding execution notification indicator 377 may be included in the introduction page information in advance by the music data distribution server SV1 side and utilized by the CPU 203. In addition, the music data distribution server SV1 side may include processing control information indicative of timings and so forth for displaying the outputting execution notification indicator 371, temporary stopping notification indicator 372, outputting stopping notification indicator 373, reverse skip execution notification indicator 374, forward skip execution notification indicator 375, fast reverse feeding execution notification indicator 376 and fast forwarding execution notification indicator 377 into the introduction page information. Further, while the CPU 203 of the client terminal 2 decides, when outputting of preview data being outputted is temporarily stopped or stopped, preview data of an object of outputting and the outputting re-starting position in accordance with settings by the client terminal 2 or the user in advance, the determination is not limited to this. In particular, the preview data of an object of outputting and the outputting re-starting position upon restating of outputting may be set on the music data distribution server SV1 side in advance and included in the introduction page information.

Further, when the CPU 203 of the client terminal 2 performs fast reverse feeding of preview data being outputted, the CPU 203 compulsorily ends the fast reverse feeding at the data top position of the preview data. However, the fast reverse feeding need not necessarily be ended compulsorily. In particular, when the CPU 203 performs the fast reverse feeding of preview data being outputted, while the fast reverse feeding button 369 is selectively operated by the user and the fast reverse feeding instruction remains inputted, the fast reverse feeding may be continued while the preview data of an object of outputting is successively changed retrospectively to the immediately preceding preview data. In addition, when the CPU 203 of the client terminal 2 performs fast forwarding of preview data being outputted, the fast forwarding is ended compulsorily at the data tail end position of the preview data. However, the fast forwarding need not be ended compulsorily. In particular, when fast forwarding of preview data being outputted is performed, while the fast forwarding button 370 is selectively operated by the user and the fast forwarding instruction remains inputted, the fast forwarding may be continued while the preview data of an object of outputting is successively changed forwardly to the immediately succeeding preview data. By this, when the CPU 203 of the client terminal 2 receives a request for fast reverse feeding or fast forwarding issued from the user, since the CPU 203 executes fast reverse feeding or fast forwarding over a plurality of preview data, it is possible for the user to confirm the substance of a plurality of preview tunes rapidly though roughly.

### 2-2-6. Seventh related information successively outputting processing procedure

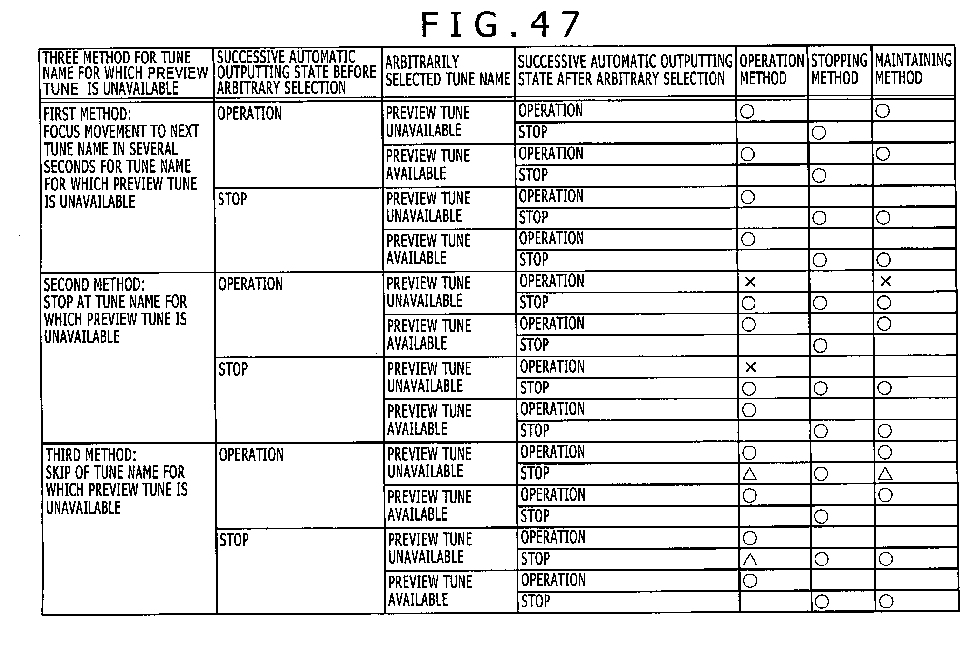

Now, a seventh related information successively outputting processing procedure executed by the CPU 203 of the client terminal 2 is described with reference to a table shown in FIG. 47. It is to be noted that the table shown in FIG. 47 is equivalent to a flow chart which illustrates the seventh related information successively outputting processing procedure. The seventh related information successively outputting processing procedure indicates a process of automatically and successively outputting preview data where a tune name is selected arbitrarily as noticed tune information from among a plurality of tune names set as a successive outputting object by a user operation while, for example, the tune introduction screen 320 or 321 described hereinabove with reference to FIG. 21 or 22 is displayed based on the introduction page information including the tune list information 300 in which preview data is not coordinated with some of the tune names.

First, roughly speaking, where a tune name with which preview data is not coordinated is included in the tune list information 300, three specifications, that is, first to third specifications described below, are available as specifications for selection of a plurality of tune names set as a successive outputting object as noticed tune information. In particular, the first specification corresponds to the fourth related information successively outputting processing procedure RT4 described hereinabove with reference to FIG. 33. In particular, according to the first specification, if a tune name with which preview data is not coordinated is automatically selected as noticed tune information from among a plurality of tune names set as a successive outputting object, then the selection is continued as it is, for example, for the first fixed period of time, and then a new tune name is selected as noticed tune information. Further, if a tune name with which preview data is not coordinated is selected as noticed tune information by a user operation, then the selection is continued as it is, for example, for the second fixed period of time, and then a new tune name is selected as noticed tune information. The second specification corresponds to the third related information successively outputting processing procedure RT3 described hereinabove with reference to FIG. 32. According to the second specification, if a tune name with which preview data is not coordinated is automatically selected as noticed tune information from among a plurality of tune names set as a successive outputting object, then the automatic and successive outputting process of a plurality of preview data is stopped. Further, the third specification corresponds to the second related information successively outputting processing procedure RT2 described hereinabove with reference to FIG. 31. According to the third specification, only those tune names with which preview data is coordinated from among a plurality of tune names set as a successive outputting object are automatically selected as noticed tune information.

The seventh related information successively outputting processing procedure can be applied to any of the first to third specifications. In particular, in the seventh related information successively outputting processing procedure, when a tune name is arbitrarily selected as noticed tune information by a user operation from among a plurality of tune names set as a successive outputting object, processes are performed successively depending upon a state of whether or not a plurality of preview data are outputted automatically and successively immediately before the point of time (the state is hereinafter referred to as automatically and successively outputting state before arbitrary selection), another state of whether or not preview data is coordinated with the tune name arbitrarily selected as noticed tune information by the user operation and a further state of whether or not a plurality of preview data should be outputted automatically and successively immediately after the tune name is selected as noticed tune information by the user operation (the state is hereinafter referred to as automatically and successively outputting state after arbitrary selection). Incidentally, in the seventh related information successively outputting processing procedure, three specifications are available for the automatically and successively outputting state after arbitrary selection. The first one of the three specifications is an operation specification wherein automatic and successive outputting of a plurality of preview data is executed (newly started or continued) irrespective of the automatically and successively outputting state before arbitrary selection (that is, irrespective of whether or not a plurality of preview data are outputted automatically and successively immediately before a tune name is arbitrarily selected as noticed tune information by a user operation). The second one of the three specifications is a stopping specification wherein automatic and successive outputting of a plurality of preview data is stopped (the process is ended or stopping is continued) irrespective of the automatically and successively outputting state before arbitrary selection (that is, irrespective of whether or not a plurality of preview data are automatically and successively outputted immediately before a tune name is arbitrarily selected as noticed tune information by a user operation). The third one of the specifications is a maintaining specification wherein an automatic and successive outputting state before arbitrary selection is maintained (processing is continued or stopping is continued).

Actually, if the CPU 203 of the client terminal 2 starts the seventh related information successively outputting processing procedure while it is set such that a plurality of preview data are automatically and successively outputted, for example, in the first specification, then the CPU 203 waits that a tune name is arbitrarily selected as noticed tune information by a user operation on the tune introduction screen 320 or 321. Then, if a tune name is arbitrarily selected as noticed tune information by a user operation, then the CPU 203 decides whether or not preview data is coordinated with the tune name selected as the noticed tune information. Further, the CPU 203 decides also an automatically and successively outputting state before arbitrary selection in this instance. Then, if a result of the decision indicates that preview data is not coordinated with the tune name selected arbitrarily as noticed tune information, for example, by a user operation and the automatically and successively outputting state before arbitrary selection is that a plurality of preview data are automatically and successively outputted immediately before the tune name is arbitrarily selected as noticed tune information by the user operation, then the CPU 203 executes a decision of the automatically and successively outputting state after arbitrary selection. In this instance, where the operation specification is applied as the automatically and successively outputting state after arbitrary selection, the CPU 203 continues the selection of the tune name as noticed tune information by the user operation as it is for the second period of time to continue the automatic and successive outputting process of the plurality of preview data in accordance with the first specification. On the other hand, where the stopping specification is applied as the automatically and successively outputting state after arbitrary selection, the CPU 203 completes the automatic and successive outputting process for the plurality of preview data without reference to the first specification. Further, where the maintaining specification is applied as the automatically and successively outputting state before arbitrary selection, the CPU 203 continues the selection of the tune name as noticed tune information by the user operation as it is for the second period of time and then automatically selects a next tune name as noticed tune information to continue the automatic and successive outputting process of the plurality of preview data in accordance with the first specification.

On the other hand, if the result of the decision of whether or not preview data is coordinated with a tune name selected as noticed tune information by the user operation and the decision of the automatically and successively outputting state before arbitrary selection indicate that preview data is coordinated with the tune name selected arbitrarily as noticed tune information, for example, by a user operation and besides the automatically and successively outputting state before arbitrary selection is such that a plurality of preview data are automatically and successively outputted immediately before the tune name is arbitrarily selected as noticed tune information by the user operation, then the CPU 203 subsequently executes a decision of the automatically and successively outputting state after arbitrary selection. In this instance, where the operation specification is applied as the automatically and successively outputting state before arbitrary selection, the CPU 203 acquires preview data corresponding to the tune name selected as noticed tune information in the streaming format by the user operation from the music data distribution server SV1 and automatically outputs the preview data. On the other hand, where the stopping specification is applied as the automatically and successively outputting state after arbitrary selection, the CPU 203 stops the automatic and successive outputting process of the plurality of preview data regardless of the first specification. Further, where the maintaining specification is applied as the automatically and successively outputting state after arbitrary selection, the CPU 203 acquires preview data coordinated with the tune name selected as noticed tune information by the user operation in the streaming format from the music data distribution server SV1 and automatically outputs the preview data to continue the automatic and successive outputting process of the plurality of preview data.

Further, also where the seventh related information successively outputting processing procedure is started in a state wherein it is set that a plurality of preview data are automatically and successively outputted in accordance with the second or third specification, the CPU 203 executes an automatic and successive outputting process of the plurality of preview data similarly. However, where the CPU 203 sets such that the plurality of preview data are automatically and successively outputted in accordance with the second specification and besides the operation specification is applied as the automatically and successively outputting state after arbitrary selection, since, originally in the second specification, the automatic and successive outputting of the plurality of preview data is stopped if a tune name with which preview data is not coordinated is selected as noticed tune information, the prescription according to the second specification takes precedence. In other words, when preview data is not coordinated with a tune name selected arbitrarily as noticed tune information by a user operation, the CPU 203 stops the automatic and successive outputting of the plurality of preview data irrespective of the automatically and successively outputting state before arbitrary selection. Also where the CPU 203 sets that such a plurality of preview data are outputted automatically and successively in accordance with the second specification and besides the maintaining specification is applied as the automatically and successively outputting state after arbitrary selection, although the automatically and successively outputting state before arbitrary selection is that the plurality of preview data are automatically and successively outputted, where preview data is not coordinated with the tune name selected arbitrarily as noticed tune information by a user operation, the CPU 203 stops the automatic and successive outputting of the plurality of preview data in accordance with the second specification.

Further, where the CPU 203 sets such that a plurality of preview data are automatically and successively outputted in accordance with the third specification and the operation specification is applied as the automatically and successively outputting state after arbitrary selection, since, originally in the third specification, a tune name with which one of the preview data is coordinated is selectively set as noticed tune information while any tune name with which preview data is not coordinated is omitted (that is, skipped), the prescription according to the third specification takes precedence. In particular, where preview data is not coordinated with a tune name arbitrarily selected as noticed tune information by a user operation, the CPU 203 automatically re-selects (selects rapidly, for example, as in a skipping manner) a tune name next to the tune name arbitrarily selected as noticed tune information by the user operation as new noticed tune information irrespective of the automatically and successively outputting state before arbitrary selection to continue the automatic and successive outputting of the plurality of preview data. Also where the CPU 203 sets such that a plurality of preview data are automatically and successively outputted in accordance with the third specification and besides the maintaining specification is applied as the automatically and successively outputting state after arbitrary selection, if preview data is not coordinated with the tune name arbitrarily selected as noticed tune information by the user operation although the automatically and successively outputting state before arbitrary selection is such that the plurality of preview data are automatically and successively outputted, the CPU 203 re-selects a tune name next to the tune name arbitrarily selected as noticed tune information by the user operation as new noticed tune information in accordance with the third specification to continue the automatic and successive outputting of the plurality of preview data.

It is to be noted that, where the CPU 203 sets such that a plurality of preview data are automatically and successively outputted in accordance with the third specification and the operation specification is applied as the automatically and successively outputting state after arbitrary selection, if preview data is not coordinated with the tune name arbitrarily selected as noticed tune information by the user operation, then since a tune name to be skipped originally in the third specification is selected as noticed tune information, the automatic and successive outputting of the plurality of preview data may be stopped. Further, where the CPU 203 sets such that a plurality of preview data are automatically and successively outputted in accordance with the third specification and besides the maintaining specification is applied as the automatically and successively outputting state after arbitrary selection, if preview data is not coordinated with the tune name arbitrarily selected as noticed tune information by the user operation although the automatically and successively outputting state before arbitrary selection is such that the plurality of preview data are automatically and successively outputted, the CPU 203 may stop the automatic and successive outputting of the plurality of preview data similarly.

Further, the client terminal 2 may set the first to third specifications and the automatically and successively outputting state after arbitrary selection based on the processing control information included in the introduction page information and suitably change the substance of settings in response to a change of the processing control information included in the introduction page information. Further, the client terminal 2 may have the first to third specifications and the automatically and successively outputting state after arbitrary selection set in advance in the client terminal 2 itself. Furthermore, the client terminal 2 may set the first to third specifications and the automatically and successively outputting state after arbitrary selection in response to an input from the outside by the user. In particular, the seventh related information successively outputting processing procedure may be executed under the control of any of the music data distribution server SV1, client terminal 2 and user. Incidentally, for the automatically and successively outputting state after arbitrary selection, the operation specification, stopping specification and maintaining specification can be applied in various combinations irrespective of the automatically and successively outputting state before arbitrary selection and irrespective of whether or not preview data is coordinated with a tune name arbitrarily selected as noticed tune information by a user operation for individual ones of the first to third specifications. Further, while the CPU 203 of the client terminal 2 executes the seventh related information successively outputting processing procedure in a state wherein the first to third specifications are set, execution of the seventh related information successively outputting processing procedure is not limited to this. In particular, the seventh related information successively outputting processing procedure may be executed in a state wherein a play mode for preview data such as the data play mode (continue) or the program play mode is set in combination with the first to third specifications.

### 3. Operation and effects

In the configuration described above, the music data distribution server SV1 retains the introduction page information including the tune list information 300 including a list of a plurality of tune names with which downloadable music data can be identified and processing control information for allowing the client terminal 2 to acquire and output a plurality of preview data corresponding to the plurality of tune names. Then, if a request for the introduction page information is received from the client terminal 2, then the music data distribution server SV1 provides the introduction page information to the client terminal 2. Consequently, the client terminal 2 automatically sets a top one of the plurality of tune names set as a successive outputting object in the tune list information 300 as noticed tune information in accordance with the processing control information included in the introduction page information. Further, the client terminal 2 issues a request for preview data coordinated with the tune name selected as the noticed tune information to the music data distribution server SV1. As a result, the music data distribution server SV1 provides the preview data in accordance with the request for the preview data from the client terminal 2 to the client terminal 2. Consequently, the client terminal 2 outputs the preview data provided from the music data distribution server SV1.

Then, if the client terminal 2 detects an end of the outputting of the preview data, then the client terminal 2 automatically selects a second one of the plurality of tune names selected as a successive outputting object in the tune list information 300 as noticed tune information and issues a request for preview data coordinated with the tune name selected as the noticed tune information to the music data distribution server SV1 again. As a result, the music data distribution server SV1 provides the preview data in accordance with the request for the preview data from the client terminal 2 to the client terminal 2. Consequently, the client terminal 2 outputs the preview data provided from the music data distribution server SV1. In this manner, the client terminal 2 acquires and automatically and successively outputs the plurality of preview data coordinated with the plurality of tune names set as a successive outputting object in the tune list information 300 from the music data distribution server SV1.

Accordingly, the music data distribution server SV1 allows the client terminal 2 to successively select preview data of an object of acquisition through the tune list information 300 and the processing control information included in the introduction page information and to issue a request for the selected preview data. Then, the music data distribution server SV1 merely provides the preview data whose acquisition is requested in accordance with the request for preview data. Consequently, the music data distribution server SV1 can automatically and successively output a plurality of preview data to the client terminal 2 without successively selecting preview data of an object of provision from among the plurality of preview data or without performing such a complicated process as to cut out preview data from music data.

According to the configuration described above, the music data distribution server SV1 provides the introduction page information including the tune list information 300 of a plurality of tune names of downloadable music data to the client terminal 2. Then, the client terminal 2 automatically selects the top one of the plurality of tune names set as a successive outputting object in the tune list information 300 as noticed tune information and issues a request for preview data coordinated with the tune name selected as the noticed tune information to the music data distribution server SV1. Consequently, the client terminal 2 acquires and outputs preview data transmitted from the music data distribution server SV1. Then, if the client terminal 2 detects an end of the outputting of the preview data, then the client terminal 2 automatically detects a new one of the plurality of tune names set as a successive outputting object in the tune list information 300 as noticed tune information again and issues a request for preview data coordinated with the tune name selected as the noticed tune information to the music data distribution server SV1 again. As a result, the client terminal 2 acquires and outputs preview data transmitted from the music data distribution server SV1. Consequently, the client terminal 2 successively acquires and automatically outputs the plurality of preview data coordinated with the plurality of tune names set as a successive outputting object in the tune list information 300. Accordingly, as the client terminal 2 automatically and successively selects and requests preview data of an object of acquisition, if the music data distribution server SV1 successively transmits the preview data whose acquisition is requested in accordance with the request, then the music data distribution server SV1 can automatically and successively output a plurality of preview data to the client terminal 2 without performing such a complicated process as to successively select preview data to be transmitted to the client terminal 2 from among the plurality of preview data or to cut out preview data from music data. Thereby, when providing the plurality of preview data, the music data distribution server SV1 can lower substantially the processing load.

Further, the music data distribution server SV1 provides the introduction page information including the tune list information 300 including a plurality of tune names of downloadable music data and processing control information for extracting and outputting a plurality of preview data coordinated with the plurality of tune names to the client terminal 2 and allows the client terminal 2 to issue a request for a plurality of preview data in accordance with the processing control information included in the introduction page information. Accordingly, the music data distribution server SV1 can introduce downloadable music data to the user through preview tunes based on the preview data as intended by a providing source of the downloadable music data. In addition, it is possible for the client terminal 2 to issue a request for a plurality of preview data coordinated with a plurality of tune names set as a successive outputting object in the tune list information 300 in accordance with any of the first to sixth related information successively outputting programs incorporated in the client terminal 2 itself. In this instance, the client terminal 2 can simplify the configuration of the introduction page information and allows the providing source of downloadable music data to reduce the load upon production of the introduction page information.

Further, the music data distribution server SV1 provides the introduction page information which includes play mode indication information for indicating a play mode for a plurality of preview data coordinated with a plurality of tune names as processing control information to the client terminal 2 and allows the client terminal 2 to selectively issue a request for preview data in accordance with the repeat play mode, single repeat play mode, shuffle play mode, random play mode or program play mode in accordance with the play mode indication information. Accordingly, even if the manner of introduction of the music data is changed by the providing source of downloadable music data, the music data distribution server SV1 can introduce downloadable music data to the user as intended by the providing source readily and precisely without re-producing the tune list information 300. In addition, the client terminal 2 allows the user to select a play mode for preview data. Accordingly, the client terminal 2 can introduce a plurality of preview data in a manner as desired by the user.

Furthermore, the music data distribution server SV1 provides the introduction page information which includes various indicators such as the successive output notification indicator 315, coordination notification indicator 311C, play mode notification indicator 323, 325, 327, 329 or 331, outputting execution notification indicator 371, temporary stopping notification indicator 372, outputting stopping notification indicator 373, reverse skip execution notification indicator 374, forward skip execution notification indicator 375, fast reverse feeding execution notification indicator 376 and fast forwarding execution notification indicator 377 to the client terminal 2 such that the indicators may be displayed suitably. Accordingly, the music data distribution server SV1 can notify the user precisely of the substance of settings for execution of processes, the substance of execution of processing and so forth upon automatic and successive outputting of a plurality of preview data. In addition, the client terminal 2 retains in advance various indicators such as the successive output notification indicator 315, coordination notification indicator 311C, play mode notification indicator 323, 325, 327, 329 or 331, outputting execution notification indicator 371, temporary stopping notification indicator 372, outputting stopping notification indicator 373, reverse skip execution notification indicator 374, forward skip execution notification indicator 375, fast reverse feeding execution notification indicator 376 and fast forwarding execution notification indicator 377 and displays the indicators suitably. Accordingly, the client terminal 2 can notify the user precisely of the substance of settings for execution of processing, the substance of execution of processing and so forth upon automatic and successive outputting of a plurality of preview data. Further, the client terminal 2 can simplify the configuration thereof by configuring the introduction page information eliminating the indicators suitably, and therefore, the load upon production of introduction page information can be reduced.

### 4. Modifications

It is to be noted that, in the first embodiment described above, when the client terminal 2 selects a tune name as noticed tune information, the music data distribution server SV1 provides preview data coordinated with the tune name selected as noticed tune information to the client terminal 2. However, the present invention is not limited to this. In particular, as related information relating to music data, also sample data such as text data such as details information, moving picture data which are at least part of music clips and still picture data of photograph images of artists may be provided together with or separately from preview data. By this, downloadable music data can be introduced more particularly. In addition, where preview data is not coordinated with tune names, the music data distribution server SV1 may coordinate sample data such as text data such as details information, moving picture data which are at least part of music clips and still picture data of photograph images of artists as related information relating to the tune names. By this, when a tune name with which preview data is not coordinated is selected as noticed tune information on the client terminal 2, the music data distribution server SV1 can cause the client terminal 2 to present a sample based on such sample data to the user to introduce the music data.

Further, while, in the first embodiment described hereinabove, the client terminal 2 acquires and automatically and successively outputs preview data as related information relating to music data, the present invention is not limited to this. In particular, the client terminal 2 may acquire and automatically and successively output content-related information such as sample data and so forth relating to various contents such as moving pictures, still pictures, games, audios, texts and programs. Further, the music data distribution server SV1 may provide content data (audio data, video data, image data, text data and program data) as related information corresponding to content identification information such as a tune name to the client terminal 2.

Further, while, in the first embodiment described hereinabove, the introduction page information which is acquired by the client terminal 2 when the client terminal 2 executes any of the first to sixth related information successively outputting processing procedures RT1 to RT6 includes the processing execution information 300B as part of the tune list information 300, the present invention is not limited to this. In particular, when the client terminal 2 can execute the first to sixth related information successively outputting processing procedures RT1 to RT6, the introduction page information need not include the entire processing execution information 300B as part of the tune list information 300 but may include only the least information necessary for acquisition of preview data such as, for example, a URL. Also by this, the first to sixth related information successively outputting processing procedures RT1 to RT6 described above can be executed.

Further, while, in the first embodiment described hereinabove, the music data distribution server SV1 provides the introduction page information and preview data to the client terminal 2, the present invention is not limited to this. In particular, to the client terminal 2, the introduction page information and the preview data may be provided from a list information providing apparatus and/or a related information successively providing apparatus which are different servers from each other. In this case, a similar effect can be obtained as the case described hereinabove.

Furthermore, while, in the first embodiment described hereinabove, the first related information successively outputting processing procedure RT1 described hereinabove is executed by the client terminal 2 under the control the music data distribution server SV1, the present invention is not limited to this. In particular, the first related information successively outputting processing procedure RT1 may be executed in accordance with the first related information successively outputting program under the control of the client terminal 2, or the client terminal 2 may execute the first related information successively outputting processing procedure RT1 in response to an input under the general supervision of the user in response to an input by the user.

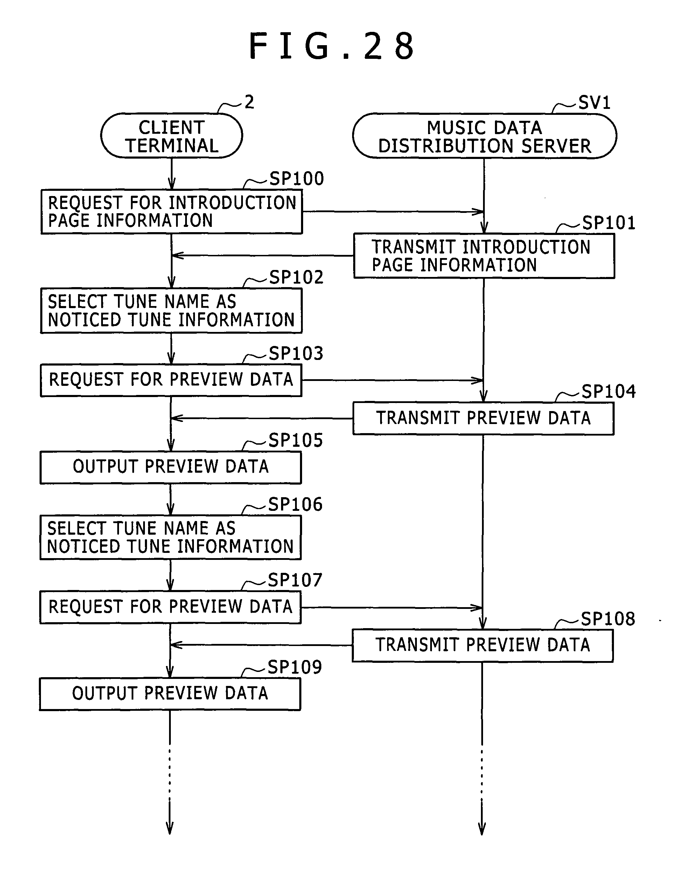

Furthermore, while, in the first embodiment described hereinabove, the second to sixth related information successively outputting processing procedures RT2 to RT6 described hereinabove are executed in accordance with the second to sixth related information successively outputting programs by and under the control of the client terminal 2, the present invention is not limited to this. In particular, the client terminal 2 may execute the second to sixth related information successively outputting processing procedures RT2 to RT6 described hereinabove in accordance with processing control information included in introduction page information under the control of the music data distribution server SV1. Or, the client terminal 2 may execute the second to sixth related information successively outputting processing procedures RT2 to RT6 in response to an input by a user under the general supervision of the user. In other words, in the first embodiment described hereinabove, when the music data distribution server SV1 and the client terminal 2 execute the related information successively outputting processing procedure described hereinabove with reference to FIG. 28, the substance of the related information successively outputting process to be executed by the client terminal 2 can be changed to any one of the first to sixth related information successively outputting processing procedures RT1 to RT6. Thereupon, the related information successively outputting processing procedure can be executed by and under the control of any one of the music data distribution server SV1, client terminal 2 and user.

### [2]. Second Embodiment

### 1. Configuration of the related information successively providing outputting system

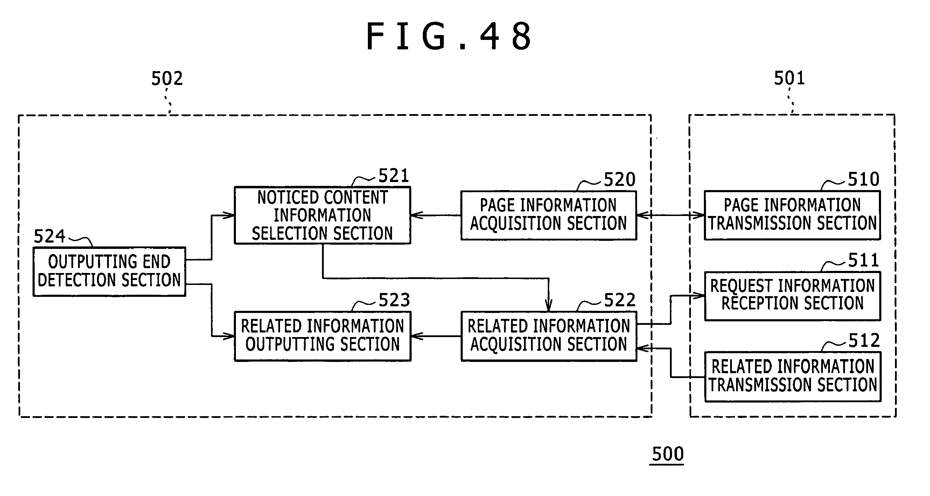

FIG. 48 shows a related information successively providing outputting system 500 according to a second embodiment of the present invention. Referring to FIG. 48, the related information successively providing outputting system 500 shown includes a related information successively providing apparatus 501 which can successively provide content related information, and a related information successively outputting apparatus 502 which can acquire content related information from the related information successively providing apparatus 501 and successively output the acquired content related information.

### 1-1. Functional circuit block configuration of the related information successively providing apparatus 501

First, a hardware configuration of functional circuit blocks of the related information successively providing apparatus 501 according to the second embodiment is described with reference to FIG. 48. The related information successively providing apparatus 501 includes a page information transmission section 510 which transmits page information including a list of a plurality of pieces of content identification information to the related information successively outputting apparatus 502 in response to a request transmitted from the related information successively outputting apparatus 502. The related information successively providing apparatus 501 further includes a request information reception section 511 which receives request information for content related information coordinated with content identification information selected as noticed content information and transmitted from the related information successively outputting apparatus 502 when content identification information set as a successive output object in a list included in the page information is selected as noticed content information by the related information successively outputting apparatus 502. The related information successively providing apparatus 501 further includes a related information transmission section 512 which transmits content related information in accordance with the request information received by the request information reception section 511 to the related information successively outputting apparatus 502.

In particular, if one of the pieces of content identification information set as a successive output object in the list included in the page information is selected as noticed content information by the related information successively outputting apparatus 502, then request information for content related information coordinated with content identification information selected as noticed content information is transmitted from the related information successively outputting apparatus 502. The request information reception section 511 in the related information successively providing apparatus 501 receives the request information for content related information transmitted from the request information reception section 511, and the related information transmission section 512 transmits content related information in accordance with the request information to the related information successively outputting apparatus 502. Then, when outputting of the content identification information from the related information successively outputting apparatus 502 comes to an end and one of the pieces of content identification information set as a successive output object in the list included in the page information is automatically selected as noticed content information, request information for content related information coordinated with content identification information selected newly as noticed content information is transmitted from the related information successively outputting apparatus 502. The request information reception section 511 receives the request information for content related information, and the related information transmission section 512 transmits content identification information according to the request information to the related information successively outputting apparatus 502. In this manner, in the related information successively providing apparatus 501, the request information reception section 511 and the related information transmission section 512 operate successively and alternately to automatically and successively transmit content related information according to request information transmitted successively from the related information successively outputting apparatus 502 to the related information successively outputting apparatus 502.

It is to be noted that the related information successively providing apparatus 501 corresponds to the music data distribution server SV1 described hereinabove in connection with the first embodiment. Further, the page information transmission section 510 corresponds to the control section 70, communication control section 72 and network interface 73 or the CPU 270 and network interface 275 of the music data distribution server SV1 described hereinabove and has functions of implementing the process at step SP101 of the related information successively outputting processing procedure described hereinabove in connection with the first embodiment. Further, the request information reception section 511 corresponds to the control section 70, communication control section 72 and network interface 73 or the CPU 270 and network interface 275 of the music data distribution server SV1 described hereinabove and has functions of implementing the process at step SP104 of the related information successively outputting processing procedure described hereinabove in connection with the first embodiment. Further, the request information reception section 512 corresponds to the control section 70, communication control section 72 and network interface 73 or the CPU 270 and network interface 275 of the music data distribution server SV1 described hereinabove and has functions of implementing the process at step SP108 of the related information successively outputting processing procedure described hereinabove in connection with the first embodiment.

### 1-2. Functional circuit block configuration of the related information successively outputting apparatus 502

Now, a hardware configuration of functional circuit blocks of the related information successively outputting apparatus 502 according to the second embodiment is described with reference to FIG. 48. The related information successively outputting apparatus 502 includes a page information acquisition section 520 which issues a request for the page information to the related information successively providing apparatus 501 (or to some other page information providing apparatus not shown) and acquires the page information including a list of a plurality of pieces of content identification information transmitted from the related information successively providing apparatus 501 in response to the request for page information. The related information successively outputting apparatus 502 further includes a noticed content information selection section 521 which selects a piece of content identification information set as a successive output object in the list included in the page information acquired by the page information acquisition section 520 as noticed content information. The related information successively outputting apparatus 502 further includes a related information acquisition section 522 which transmits request information for content related information coordinated with the content identification information selected as the noticed content information by the noticed content information selection section 521 to the related information successively providing apparatus 501. As a result, the related information acquisition section 522 acquires content related information coordinated with the content identification information selected as the noticed content information by the noticed content information selection section 521 from the related information successively providing apparatus 501. The related information successively outputting apparatus 502 further includes a related information outputting section 523 which outputs the content related information acquired by the related information acquisition section 522. The related information successively outputting apparatus 502 further includes a outputting end detection section 524 which detects an end of the outputting of the content related information by the related information outputting section 523.

In particular, in the related information successively outputting apparatus 502, if the noticed content information selection section 521 selects one of the pieces of content identification information set as a successive output object in the list included in the page information as noticed content information, then the related information acquisition section 522 acquires content related information coordinated with the content identification information selected as the noticed content information from the related information successively providing apparatus 501, and the related information outputting section 523 outputs the acquired content identification information. Thereupon, in the related information successively outputting apparatus 502, when the outputting end detection section 524 detects an end of the outputting of the content related information by the related information outputting section 523, the noticed content information selection section 521 automatically sets a new one of the pieces of content identification information set as a successive output object in the list included in the page information as noticed content information. Then, the related information acquisition section 522 acquires content related information coordinated with the content identification information selected newly as the noticed content information from the related information successively providing apparatus 501, and the related information outputting section 523 outputs the acquired content related information. In this manner, in the related information successively outputting apparatus 502, the noticed content information selection section 521, related information acquisition section 522, related information outputting section 523 and outputting end detection section 524 operate repetitively and circulatingly to automatically and successively output content related information coordinated with the content identification information set as a successive output object in the list included in the page information.

It is to be noted that the related information successively outputting apparatus 502 corresponds to the client terminal 2 described hereinabove in connection with the first embodiment. Further, the page information acquisition section 520 corresponds to the control section 22, communication control section 32 and network interface 33 or the CPU 203, communication control section 214 and network interface 215 of the client terminal 2 and has functions of implementing the process at step SP100 of the related information successively outputting processing procedure described hereinabove in connection with the first embodiment. Further, the noticed content information selection section 521 corresponds to the control section 22 or the CPU 203 of the client terminal 2 described above and has functions of implementing the processes at steps SP102 and SP106 of the related information successively outputting processing procedure described hereinabove in connection with the first embodiment. Furthermore, the related information acquisition section 522 corresponds to the control section 22, communication control section 32 and network interface 33 or the CPU 203, communication control section 214 and network interface 215 of the client terminal 2 described hereinabove and has functions of implementing the processes at steps SP103 and SP107 of the related information successively outputting processing procedure described hereinabove in connection with the first embodiment. Further, the related information outputting section 523 corresponds to the control section 22, sound control section 26 and speaker 27 or the CPU 203, sound processing section 209 and speaker 210 of the client terminal 2 described hereinabove and has functions of implementing the processes at steps SP105 and SP109 of the related information successively outputting processing procedure described hereinabove in connection with the first embodiment. Furthermore, the outputting end detection section 524 corresponds to the control section 22 and the sound control section 26 or the CPU 203 and sound processing section 209 of the client terminal 2 described hereinabove and has functions of implementing the processes at steps SP202, SP212, SP222, SP232, SP242, SP247, SP252, SP256, SP260, SP263 and SP272 of the first to sixth related information successively outputting processing procedures RT1 to RT6 described hereinabove in connection with the first embodiment.

### 2. Operation and effects

In the configuration described above, the related information successively outputting apparatus 502 acquires the page information including a list of a plurality of pieces of content identification information from the related information successively providing apparatus 501 (or the page information providing apparatus) and selects one of the pieces of content identification information set as a successive output object in the list included in the page information as noticed content information. Then, the related information successively outputting apparatus 502 acquires content related information coordinated with the one piece of content identification information selected as the noticed content information from the related information successively providing apparatus 501 and outputs the acquired content related information. Then, if an end of the outputting of the content related information is detected, then the related information successively outputting apparatus 502 automatically selects a new one of the pieces of content identification information set as a successive output object in the list included in the page information as noticed content information and acquires content related information coordinated with the one piece of content identification information selected newly as the noticed content information from the related information successively providing apparatus 501 and then outputs the acquired content related information thereby to automatically and successively output the content related information coordinated with the content identification information set as a successive output object.

Accordingly, in the related information successively outputting apparatus 502, the content identification information set as a successive output object in the list included in the page information is automatically selected as noticed content information, and a request for content related information coordinated with the content identification information selected as the noticed content information is issued to the related information successively providing apparatus 501. Consequently, the related information successively providing apparatus 501 can automatically and successively transmit content related information coordinated with content identification information set as a successive output object in the list included in the page information and automatically output the content related information without performing such a cumbersome process as to successively select content related information to be provided to the related information successively outputting apparatus 502 from among a plurality of pieces of content related information.

In particular, since content identification information set as a successive output object in the list included in the page information is automatically and successively selected as noticed content information and a request for content related information coordinated with the content identification information selected as the noticed content information is issued from the related information successively outputting apparatus 502, the related information successively providing apparatus 501 can automatically and successively transmit content related information coordinated with the content identification information set as a successive output object in the list included in the page information to the related information successively outputting apparatus 502 without performing such a cumbersome process as to successively select content related information to be provided to the related information successively outputting apparatus 502 from among a plurality of pieces of content related information.

According to the configuration described above, the related information successively providing apparatus 501 acquires the page information including a list of a plurality of pieces of content identification information transmitted from the related information successively providing apparatus 501 (or the page information processing apparatus) and selects one of the pieces of content identification information set as a successive output object in the list included in the acquired page information as noticed content information to acquire content related information coordinated with the one piece of content identification information selected as the noticed content information, and then outputs the acquired content related information. Then, if an end of the outputting of the content related information is detected, then the related information successively outputting apparatus 502 acquires content related information coordinated with the one piece of content identification information selected newly as the noticed content information from the related information successively providing apparatus 501 and outputs the acquired content related information thereby to automatically and successively output content related information coordinated with the content identification information set as a successive output object. Accordingly, the related information successively outputting apparatus 502 can allow the related information successively providing apparatus 501 to automatically and successively transmit content related information coordinated with the content identification information set as a successive output object in the list included in the page information and output the content related information without causing the related information successively providing apparatus 501 to perform a cumbersome process such as to successively select content related information to be provided from the related information successively providing apparatus 501 from among the plurality of pieces of content identification information. Consequently, the processing load to the related information successively providing apparatus 501 upon provision of content related information can be reduced significantly.

Further, the related information successively providing apparatus 501 transmits the page information including a list of a plurality of pieces of content identification information to the related information successively outputting apparatus 502 in accordance with a request transmitted from the related information successively outputting apparatus 502 and receives request information for content related information coordinated with one piece of the content identification information selected as the noticed content information transmitted from the related information successively outputting apparatus 502 as a result of selection of the one piece of content identification information set as a successive output object in the list included in the page information as the noticed content information. Then, in response to the reception of the request information, the related information successively providing apparatus 501 transmits content related information in accordance with the request information to the related information successively outputting apparatus 502. Then, when the outputting of the content related information from the related information successively outputting apparatus 502 comes to an end and one of the pieces of content identification information set as a successive output object in the list included in the page information is automatically selected newly as noticed content information, request information for content related information coordinated with the one piece of content identification information selected newly as the noticed content information is transmitted from the related information successively outputting apparatus 502. Thus, when the request information is received, the related information successively providing apparatus 501 automatically and successively transmits content related information in accordance with the request information successively transmitted from the related information successively outputting apparatus 502 to the related information successively outputting apparatus 502. Accordingly, the related information successively providing apparatus 501 can automatically and successively transmit content related information coordinated with content identification information set as a successive output object in the list included in the page information to the related information successively outputting apparatus 502 without performing a cumbersome process such as to successively select content related information to be provided to the related information successively outputting apparatus 502 from among a plurality of pieces of content related information. Consequently, the processing load upon provision of content related information can be reduced significantly.

### [3] Third Embodiment

### 1. Configuration of the related information successively providing outputting system

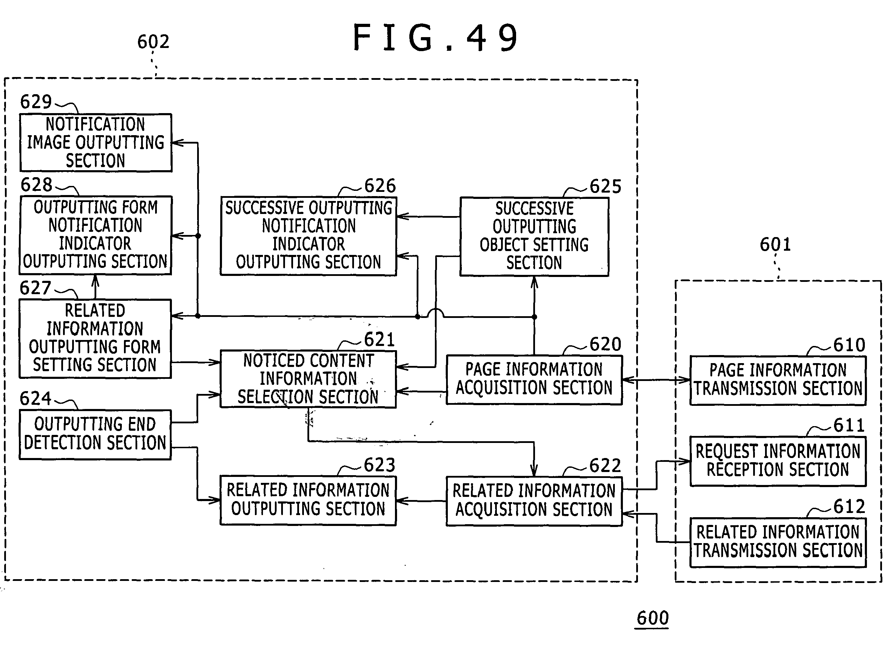

FIG. 49 shows a related information successively providing outputting system 600 according to a third embodiment of the present invention. Referring to FIG. 49, the related information successively providing outputting system 600 shown includes a related information successively providing apparatus 601 which can successively provide content related information, and a related information successively outputting apparatus 602 which can acquire content related information from the related information successively providing apparatus 601 and successively output the acquired content related information.

### 1-1. Functional circuit block configuration of the related information successively providing apparatus 601

First, a hardware configuration according to functional circuit blocks of the related information successively providing apparatus 601 of the related information successively providing outputting system 600 according to the third embodiment is described. The related information successively providing apparatus 601 includes a page information transmission section 610 which transmits page information including a list of a plurality of pieces of content identification information to the related information successively outputting apparatus 602 in response to a request transmitted from the related information successively outputting apparatus 602. The related information successively providing apparatus 601 further includes a request information reception section 611 which receives request information for content identification information coordinated with content identification information selected as noticed content information, transmitted from the related information successively outputting apparatus 602 by which content identification information set as a successive output object in the list included in the page information is selected as noticed content information. The related information successively providing apparatus 601 further includes a related information transmission section 612 which transmits the content related information according to the request information received by the request information reception section 611 to the related information successively outputting apparatus 602.

In particular, in the related information successively providing apparatus 601, if the request information reception section 611 receives request information for content related information coordinated with content identification information selected as noticed content information, transmitted from the related information successively outputting apparatus 602 as a result of selection of one of the plurality of pieces of content identification information set as a successive output object in the list included in the page information as noticed content information on the related information successively outputting apparatus 602, then the related information transmission section 612 transmits content related information according to the request information to the related information successively outputting apparatus 602. Then, in the related information successively providing apparatus 601, if the request information reception section 611 receives request information for content related information coordinated with content identification information selected newly as noticed content information, transmitted from the related information successively outputting apparatus 602 as a result of automatic selection of one of the pieces of content identification information set as a successive output object in the list included in the page information newly as noticed content information after outputting of the content identification information from the related information successively outputting apparatus 602, then the related information transmission section 612 transmits content related information coordinated with the request information to the related information successively outputting apparatus 602. In this manner, in the related information successively providing apparatus 601, the request information reception section 611 and the related information transmission section 612 operate successively and alternately to automatically and successively transmit content related information according to request information successively transmitted from the related information successively outputting apparatus 602 to the related information successively outputting apparatus 602.

In addition, the page information transmission section 610 of the related information successively providing apparatus 601 can transmit the page information including successive outputting permission identification information which represents that content related information coordinated with content identification information set as a successive output object can be outputted successively to the related information successively outputting apparatus 602. Further, the page information transmission section 610 can transmit also the page information including a successive outputting notification indicator for notifying the related information successively outputting apparatus 602 that content related information coordinated with content identification information set as a successive output object can be outputted successively to the related information successively outputting apparatus 602. Furthermore, the page information transmission section 610 can transmit also the page information including play mode indication information which indicates content identification information set as a successive output object and a play mode for content related information coordinated with the content identification information to the related information successively outputting apparatus 602.

Then, when the page information transmission section 610 transmits the page information including the play mode indication information to the related information successively outputting apparatus 602, the page information transmission section 610 can transmit the page information including a plurality of pieces of content identification information set as a successive output object and play mode indication information which indicates the repeat play mode as a play mode for a plurality of pieces of content related information coordinated with the plurality of pieces of content identification information to the related information successively outputting apparatus 602. Further, the page information transmission section 610 can transmit also the page information which includes content identification information set as a successive output object and play mode indication information which indicates the single repeat play mode as a play mode for content related information coordinated with the content identification information to the related information successively outputting apparatus 602. Furthermore, the page information transmission section 610 can transmit also the page information which includes a plurality of pieces of content identification information set as a successive output object and play mode indication information which indicates the shuffle play mode as a play mode for a plurality of pieces of content related information coordinated with the plurality of pieces of content identification information to the related information successively outputting apparatus 602. Further, the page information transmission section 610 can transmit also the page information which includes a plurality of pieces of content identification information set as a successive output object and play mode indication information which indicates the random play mode as a play mode for a plurality of pieces of content related information coordinated with the plurality of pieces of content identification information to the related information successively outputting apparatus 602. Furthermore, the page information transmission section 610 can transmit also the page information which includes a plurality of pieces of content identification information set as a successive output object, an outputting order set to a plurality of pieces of content related information coordinated with the plurality of pieces of content identification information and play mode indication information which indicates the program play mode, in which the plurality of pieces of content related information are outputted in an outputting order set in advance, as a play mode for a plurality of pieces of content related information to the related information successively outputting apparatus 602. Besides, the page information transmission section 610 can transmit also the page information which includes a play mode notification indicator which notifies the related information successively outputting apparatus 602 of a play mode for content related information coordinated with content identification information set as a successive output object to the related information successively outputting apparatus 602.

Incidentally, the page information transmission section 610 can transmit the page information which includes an outputting execution notification indicator, which is outputted during outputting of content related information coordinated with content identification information set as a successive output object, for notifying the related information successively outputting apparatus 602 that the content related information is being outputted to the related information successively outputting apparatus 602. Further, the page information transmission section 610 can transmit also the page information which includes outputting restarting position indication information which indicates an outputting restarting position after outputting of content related information coordinated with content identification information set as a successive output object is stopped once to the related information successively outputting apparatus 602. Furthermore, the page information transmission section 610 can transmit also the page information which includes outputting restarting position indication information which indicates the top of content related information, whose outputting is stopped, as an outputting restarting position to the related information successively outputting apparatus 602. Further, the page information transmission section 610 can transmit also the page information which includes outputting restarting position indication information which indicates an outputting stopping position of content related information, whose outputting is stopped, as an outputting restarting position to the related information successively outputting apparatus 602. Furthermore, the page information transmission section 610 can transmit the page information which includes outputting restarting position indication information which indicates content related information coordinated with content identification information selected as noticed content information first as an outputting restarting position to the related information successively outputting apparatus 602.

In addition, when content related information is not coordinated with the content selected as noticed content information, the page information transmission section 610 can transmit the page information which includes selection continuation time information indicative of a fixed period of time within which selected content identification information is kept selected as it is as noticed content information before next content identification information is selected as noticed content information to the related information successively outputting apparatus 602. Further, the page information transmission section 610 can transmit also the page information which includes selection continuation time information indicative of a fixed period of time as a first fixed period of time within which, when content identification information with which content related information is not coordinated is selected as noticed content information in response to an external input, the content identification information is kept selected as it is as noticed content information and selection continuation time information which includes a fixed period of time as a second period of time within which, when content identification information with which content related information is not coordinated is automatically selected as noticed content information, the content identification information is kept selected as it is as noticed content information.

Further, the page information transmission section 610 can transmit the page information which includes a coordination notification indicator for notifying the related information successively outputting apparatus 602 of whether or not content related information is coordinated with content identification information set as a successive output object to the related information successively outputting apparatus 602. Further, the page information transmission section 610 can transmit also the page information by which a sample content for a content which includes a moving picture, a still picture, a game, an audio, a text or a program and is identified with the content related information is coordinated as content related information with the content identification information to the related information successively outputting apparatus 602. Further, the page information transmission section 610 can transmit also the page information by which text information relating to a content identified with the content identification information is coordinated as content related information with the content identification information to the related information successively outputting apparatus 602. Further, the page information transmission section 610 can transmit also the page information by which image information relating to a content identified with the content identification information is coordinated as content related information coordinated with the content identification information selected to the related information successively outputting apparatus 602. Then, the related information transmission section 612 can transmit the content related information in the streaming format to the related information successively outputting apparatus 602.

It is to be noted that the related information successively providing apparatus 601 corresponds to the music data distribution server SV1 described hereinabove in connection with the first embodiment. Further, the page information transmission section 610 corresponds to the control section 70, communication control section 72 and network interface 73 or the CPU 270 and network interface 275 of the music data distribution server SV1 described hereinabove and has functions of implementing the process at step SP101 of the related information successively outputting processing procedure described hereinabove in connection with the first embodiment. Meanwhile, the request information reception section 611 corresponds to the control section 70, communication control section 72 and network interface 73 or the CPU 270 and the network interface 275 of the music data distribution server SV1 described hereinabove and has a function of implementing the process at step SP104 of the related information successively outputting processing procedure described hereinabove in connection with the first embodiment. Further, the related information transmission section 612 corresponds to the control section 70, communication control section 72 and network interface 73 or the CPU 270 and the network interface 275 of the music data distribution server SV1 described hereinabove and has a function of implementing the process at step SP108 of the related information successively outputting processing procedure described hereinabove in connection with the first embodiment.

### 1-2. Functional circuit block configuration of the related information successively outputting apparatus 602

Now, a hardware configuration of functional circuit blocks of the related information successively outputting apparatus 602 of the related information successively providing outputting system 600 according to the third embodiment is described with reference to FIG. 49. The related information successively outputting apparatus 602 includes a page information acquisition section 620 which issues a request for page information to the related information successively providing apparatus 601 (or some other page information providing apparatus not shown) and acquires the page information including a list of a plurality of pieces of content identification information and transmitted from the related information successively providing apparatus 601 (or the page information providing apparatus) in response to the request. The related information successively outputting apparatus 602 further includes a noticed content information selection section 621 which selects content identification information set as a successive output object in the list included in the page information acquired by the page information acquisition section 620 as noticed content information. The related information successively outputting apparatus 602 further includes a related information acquisition section 622 which transmits request information for content related information coordinated with the content identification information selected as the noticed content information by the noticed content information selection section 621 to the related information successively providing apparatus 601. As a result, the related information acquisition section 622 acquires content related information coordinated with the content identification information selected as the noticed content information by the noticed content information selection section 621 from the related information successively providing apparatus 601. The related information successively outputting apparatus 602 further includes a related information outputting apparatus 623 which outputs the content related information acquired by the related information acquisition section 622. The related information successively outputting apparatus 602 further includes an outputting end detection section 624 which detects an end of outputting of the content related information by the related information outputting apparatus 623.

In particular, in the related information successively outputting apparatus 602, after the noticed content information selection section 621 selects one of the pieces of the content identification information set as a successive output object in the list included in the page information as noticed content information, the related information acquisition section 622 acquires content related information coordinated with the content identification information selected as the noticed content information from the related information successively providing apparatus 601, and the related information outputting apparatus 623 outputs the acquired content related information. Then, in the related information successively outputting apparatus 602, if the outputting end detection section 624 detects an end of the outputting of the content related information by the related information outputting apparatus 623, then the noticed content information selection section 621 automatically selects a new one of the pieces of the content identification information set as a successive output object in the list included in the page information as noticed content information. Then, the related information acquisition section 622 acquires content related information coordinated with the content identification information selected newly as the noticed content information from the related information successively providing apparatus 601, and the related information outputting apparatus 623 outputs the acquired content related information. In this manner, in the related information successively outputting apparatus 602, the noticed content information selection section 621, related information acquisition section 622, related information outputting apparatus 623 and outputting end detection section 624 operate repetitively and circulatingly to automatically and successively output content related information coordinated with the content identification information set as a successive output object in the list included in the page information.

In addition, when content related information is coordinated with one of pieces of content identification information selected as noticed content information, the related information acquisition section 622 of the related information successively outputting apparatus 602 acquires the content related information from the related information successively providing apparatus 601. Meanwhile, when the page information includes successive outputting permission identification information which indicates that content related information coordinated with content identification information set as a successive output object can be outputted successively, the noticed content information selection section 621 automatically selects the content identification information as noticed content information.

The related information successively outputting apparatus 602 further includes a successive output object setting section 625 which can set a particular piece of content identification information in a list included in the page information as a successive output object. Thereupon, the successive output object setting section 625 can set a piece of content identification information designated in the list included in the page information in response to an input from the outside as a successive output object. Then, when the content identification information is set as a successive output object in response to the external input, the successive output object setting section 625 produces a user interface for executing the inputting and outputs the produced user interface.

Further, the related information successively outputting apparatus 602 further includes a successive outputting notification indicator outputting section 626 which outputs a successive outputting notification indicator for the notification that content related information coordinated with content identification information set as a successive output object in a list included in the page information can be outputted successively. Thereupon, the successive outputting notification indicator outputting section 626 can output the successive outputting notification indicator included in the page information. Further, when successive outputting permission identification information indicating that content related information coordinated with content identification information set as a successive output object can be outputted successively is included in the page information, the successive outputting notification indicator outputting section 626 can output a successive outputting notification indicator in response to the successive outputting permission identification information.

If outputting of all of the pieces of content related information coordinated with all of the pieces of content identification information set as a successive output object in the list included in the page information comes to an end, then the related information outputting apparatus 623 stops the outputting of the content related information setting the content identification information coordinated with the content related information outputted last or the content identification information coordinated with the content related information outputted first as noticed content information.

In addition, the related information successively outputting apparatus 602 further includes a related information play mode setting section 627 which can set a play mode for content related information coordinated with content identification information set as a successive output object in the list included in the page information. Then, the noticed content information selection section 621 successively selects the content identification information set as a successive output object in the list included in the page information as noticed content information in response to the play mode set as described above, and the related information outputting apparatus 623 outputs content related information coordinated with the content identification information selected as the noticed content information in accordance with the play mode.

Incidentally, such various play modes as described hereinabove are available for the play mode, and where the set play mode is the repeat play mode, the related information outputting apparatus 623 repetitively and circulatingly outputs a plurality of pieces of content related information coordinated with a plurality of pieces of content identification information set as a successive output object in the list included in the page information in response to the repeat play mode. On the other hand, where the set play mode is the single repeat play mode, the related information outputting apparatus 623 repetitively outputs a single piece of content related information coordinated with a single piece of content identification information selected as the noticed content information at present. Further, where the set play mode is the shuffle play mode, the related information outputting apparatus 623 outputs a plurality of content related information coordinated with a plurality of pieces of content identification information set as a successive output object in the list included in the page information in a randomly re-arranged order in response to the shuffle play mode. Further, where the set play mode is the random play mode, the related information outputting apparatus 623 successively and randomly selects one of a plurality of pieces of content related information coordinated with a plurality of content identification information set as a successive output object in the list included in the page information and successively outputs the successively selected pieces of content related information in response to the random play mode. Furthermore, where the set play mode is the program play mode, the related information outputting apparatus 623 outputs a plurality of pieces of content related information coordinated with a plurality of pieces of content identification information set as a successive output object in the list included in the page information in a preset order in response to the program play mode.

On the other hand, the noticed content information selection section 621 can automatically select, in response to play mode indication information included in the page information and indicative of a play mode for content related information coordinated with content identification information set as a successive output object, those pieces of the content identification information set as a successive output object in the list included in the page information which conform to the play mode as noticed content information. Also it is possible for the noticed content information selection section 621 to automatically select those pieces of content identification information which conform to a play mode set in advance for content related information coordinated with those pieces of content identification information set as a successive output object from among the pieces of content identification information set as a successive output object in the list included in the page information.

In addition, the related information play mode setting section 627 can set also a play mode for content related information coordinated with content identification information set as a successive output object in the list included in the page information in response to an input from the outside. In this instance, the related information play mode setting section 627 produces a user interface for allowing such inputting to be executed and outputs the produced user interface. Then, if the play mode at this time is the program play mode, then the related information play mode setting section 627 allows the user to set an order in which a plurality of pieces of content related information coordinated with a plurality of pieces of content identification information set as a successive output object in the list included in the page information are to be outputted through the user interface.

The related information successively outputting apparatus 602 further includes a play mode notification indicator outputting section 628 which outputs a play mode notification indicator corresponding to the set play mode. Thereupon, the play mode notification indicator outputting section 628 may output the play mode notification indicator included in the page information or may output the play mode notification indicator in response to the play mode indication information included in the page information and indicating a play mode. Further, when the related information play mode setting section 627 sets a play mode in response to an input from the outside, the play mode notification indicator outputting section 628 may output the play mode notification indicator corresponding to the set play mode.

Incidentally, during outputting of content related information, the related information outputting apparatus 623 outputs an outputting execution notification indicator for the notification that the content related information is being outputted. Then, if the related information outputting apparatus 623 decides at this time that content related information is being outputted, then the related information outputting apparatus 623 may output an outputting execution notification indicator included in the page information. Further, if it is decided that content related information is being outputted, then the related information outputting apparatus 623 may output an outputting execution notification indicator stored in advance therein. Then, when the outputting of content related information is stopped, the related information outputting apparatus 623 stops also the outputting of the outputting execution notification indicator.

Further, the related information outputting apparatus 623 controls outputting of content related information in response to an output from the outside. At this time, the related information outputting apparatus 623 may output content related information coordinated with content identification information set so as to be selected as noticed content information preceding or following the content identification information selected as the noticed content information at present in response to the output from the outside, or may output the content related information being outputted at present by fast forwarding or fast reverse feeding in response to the input from the outside. Then, while the fast forwarding or fast reverse feeding instruction remains inputted from the outside, the related information outputting apparatus 623 outputs the content related information by fast forwarding or fast reverse feeding. Then, if the inputting of the fast forwarding or fast reverse feeding instruction from the outside comes to an end, then the related information outputting apparatus 623 ends the fast forwarding or fast reverse feeding outputting of the content related information and then starts normal outputting from the position of the content related information at which the outputting is ended.

Further, the related information outputting apparatus 623 stops the outputting of the content related information being outputted at present in response to an input from the outside. Then, the related information outputting apparatus 623 starts outputting of content related information in response to an input which indicates starting of outputting from the outside. At this time, when the outputting of content related information is stopped, the related information outputting apparatus 623 can store the content identification information coordinated with the content related information whose outputting is stopped and then start outputting of the content related information coordinated with the stored content identification information from the top of the content related information in response to an input which indicates starting of outputting from the outside. Or, when the outputting of content related information is stopped, the related information outputting apparatus 623 may store content identification information coordinated with the content related information whose outputting is stopped and an outputting stopping position of the content related information and then start outputting of the content related information coordinated with the stored content identification information from the stored outputting stopping position in response to an input which indicates starting of outputting from the outside. Further, the related information outputting apparatus 623 may start outputting of content related information coordinated with content identification information selected as noticed content information first from within the content identification information set as a successive output object in the list included in the page information in response to an input which indicates starting of outputting from the outside. Or, the related information outputting apparatus 623 may start outputting of content related information from an outputting restarting position included in the page information in response to an input which indicates starting of outputting from the outside. Furthermore, the related information outputting apparatus 623 may start outputting of content related information from an output restarting position set in advance in response to an input which indicates starting of outputting from the outside, or may start outputting of content related information from an output restarting position set in advance in response to an input which indicates starting of outputting from the outside.

Incidentally, when content related information is not coordinated with a piece of content identification information selected as noticed content information, the noticed content information selection section 621 keeps the content identification information selected as noticed content information for a fixed period of time and then automatically selects another piece of the content identification information set so as to be selected as noticed content information next to the piece of content identification information as noticed content information. Then, when content related information is not coordinated with a piece of content identification information selected as noticed content information, the noticed content information selection section 621 can keep the content identification information selected as noticed content information for a fixed period of time in response to selection continuation time information included in the page information and indicative of the fixed period of time and then automatically set another piece of content identification information set so as to be selected as noticed content information next to the piece of content identification information as noticed content information. Further, when content related information is not coordinated with a piece of content identification information selected as noticed content information, the noticed content information selection section 621 can keep the piece of content identification information selected as noticed content information for a fixed period of time set in advance and then automatically select another piece of content identification information set so as to be selected as noticed content information next to the piece of content identification information as noticed content information. Furthermore, when content related information is not coordinated with a piece of content identification information selected as noticed content information, the noticed content information selection section 621 can select the piece of content identification information for a fixed period of time set in advance in response to an input from the outside as noticed content information and then automatically select another piece of content identification information set so as to be selected as noticed content information next to the piece of content identification information as noticed content information. Further, if content related information is not coordinated with a piece of content identification information when the content identification information is selected as noticed content information in response to an input from the outside, then the noticed content information selection section 621 can keep the piece of content identification information selected as the noticed content information for a fixed period of time as a first period of time and then automatically set another piece of content identification information set so as to be selected as noticed content information next to the piece of content identification information as noticed content information. Further, if content related information is not coordinated with a piece of content identification information when the piece of content identification information is selected as noticed content information automatically, then the noticed content information selection section 621 can keep the piece of content identification information as noticed content information for a fixed period of time as a second period of time and then automatically select another piece of content identification information set so as to be selected as noticed content information next to the piece of content identification information as noticed content information. In addition, when content related information is not coordinated with a piece of content identification information selected as noticed content information, the noticed content information selection section 621 may end the outputting operation of content related information or may selectively set another piece of content identification information with which content related information is coordinated as noticed content information.

The related information successively outputting apparatus 602 further includes a notification image outputting section 629 which produces and outputs a notification image for the notification of whether or not content related information is coordinated with content identification information set as a successive output object in a list included in the page information. Thereupon, the notification image outputting section 629 can produce a notification image using the coordination notification indicator included in the page information for the notification of whether or not content related information is coordinated with content identification information set as a successive output object. Further, the notification image outputting section 629 may decide whether or not content related information is coordinated with content identification information set as a successive output object in a list included in the page information and produce a notification image in response to a result of the decision.

Actually, the related information outputting apparatus 623 can output a sample content for a content which is identified with the content identification information as content related information coordinated with the content identification information selected as notified content information. The content may include a moving picture, a still picture, a game, an audio, a text or a program. Further, the related information outputting apparatus 623 can output also text information relating to a content identified with the content identification information as content related information coordinated with the content identification information selected noticed content information. Further, the related information outputting apparatus 623 can output also image information relating to a content identified with the content identification information as content related information coordinated with the content identification information selected noticed content information. Then, the related information outputting apparatus 623 can output content related information transmitted in the streaming format from the related information successively providing apparatus 601.

It is to be noted that the related information successively outputting apparatus 602 corresponds to the client terminal 2 described hereinabove in connection with the first embodiment. The page information acquisition section 620 corresponds to the control section 22, communication control section 32 and network interface 33 or the CPU 203, communication control section 214 and network interface 215 of the client terminal 2 and has functions of implementing the process at step SP100 in the related information successively outputting processing procedure described hereinabove in connection with the first embodiment. The noticed content information selection section 621 corresponds to the control section 22 or the CPU 203 of the client terminal 2 described hereinabove and has functions of implementing the processes at steps S102 and SP106 in the related information successively outputting processing procedure described hereinabove in connection with the first embodiment. The noticed content information selection section 621 further has functions of implementing the processes at steps SP200, SP202, SP204, SP210, SP211, SP220, SP221, SP223, SP224, SP230, SP233, SP234, SP236, SP237, SP241, SP246, SP251, SP255, SP259, SP262, SP270 and SP277 in the first to sixth related information successively outputting processing procedures RT1 to RT6 described hereinabove.

Further, the related information acquisition section 622 corresponds to the control section 22, communication control section 32 and network interface 33 or the CPU 203, communication control section 214 and network interface 215 of the client terminal 2 described hereinabove and has functions of implementing the processes at steps SP103 and SP107 in the related information successively outputting processing procedure described hereinabove in connection with the first embodiment. The related information acquisition section 622 further has functions of implementing the processes at steps SP202, SP212, SP222, SP232, SP242, SP247, SP252, SP256, SP260, SP263 and SP272 of the first to sixth related information successively outputting processing procedures RT1 to RT6 described hereinabove. Furthermore, the related information outputting apparatus 623 corresponds to the control section 22, sound control section 26 and speaker 27 or the CPU 203, sound processing section 209 and speaker 210 of the client terminal 2 described hereinabove and has functions of implementing the processes at steps SP105 and SP109 of the related information successively outputting processing procedure described hereinabove in connection with the first embodiment. The related information outputting apparatus 623 further has functions of implementing the processes at steps SP205, SP278, SP279, SP280, SP281, SP282 and SP286 of the first and sixth related information successively outputting processing procedures RT1 and RT6 described hereinabove. In addition, the related information outputting apparatus 623 has also functions of outputting and displaying the tune introduction screens 363A to 363G described hereinabove with reference to FIGS. 38 to 44 when the sixth related information successively outputting processing procedure RT6 is executed in the first embodiment described hereinabove.

Further, the outputting end detection section 624 corresponds to the control section 22 and the sound control section 26 or the CPU 203 and the sound processing section 209 of the client terminal 2 described hereinabove and has functions of implementing the processes at steps SP202, SP212, SP222, SP232, SP242, SP247, SP252, SP256, SP260, SP263 and SP272 of the first to sixth related information successively outputting processing procedures RT1 to RT6 described hereinabove in connection with the first embodiment. Further, the successive output object setting section 625 corresponds to the control section 22 or the CPU 203 of the client terminal 2 described hereinabove and has a functions of implementing the process, for example, at step SP210 of the second related information successively outputting processing procedure RT2 described hereinabove in connection with the first embodiment. Furthermore, the successive outputting notification indicator outputting section 626 corresponds to the control section 22, display control section 24, display section 25 or the CPU 203, display processing section 207 and display unit 206 of the client terminal 2 described hereinabove and has functions of outputting and displaying, for example, the coordination notification indicator 311C on the tune introduction screen 310 described hereinabove with reference to FIG. 18 when any of the first to sixth related information successively outputting processing procedures RT1 to RT6 described hereinabove is executed in the first embodiment.

Further, the related information play mode setting section 627 corresponds to the control section 22 or the CPU 203 of the client terminal 2 described hereinabove and has a function of setting a play mode for content related information in response to various instructions inputted, for example, on the play mode setting screen 350 described hereinabove with reference to FIG. 34 when the fifth related information successively outputting processing procedure RT5 described hereinabove in connection with the first embodiment is started or the like. Further, the play mode notification indicator outputting section 628 corresponds to the control section 22, display control section 24, display section 25 or the CPU 203, display processing section 207 and display unit 206 of the client terminal 2 described hereinabove and has functions of outputting and displaying, for example, the play mode notification indicator 323, 325, 327, 329 or 331 on the tune introduction screen 324, 326, 328, 330 or 332 described hereinabove with reference to FIGS 22 to 26 when the fifth related information successively outputting processing procedure RT5 described hereinabove in connection with the first embodiment is executed. Furthermore, the notification image outputting section 629 corresponds to the control section 22, display control section 24 and display section 25 or the CPU 203, display processing section 207 and display unit 206 of the client terminal 2 described hereinabove and has functions of outputting and displaying, for example, the tune introduction screen 310 described hereinabove with reference to FIG. 18 when any of the first to sixth related information successively outputting processing procedures RT1 to RT6 described hereinabove in connection with the first embodiment is executed.

### 2. Operation and effects

In the configuration described above, the related information successively outputting apparatus 602 acquires the page information including a list of a plurality of content identification information from the related information successively outputting apparatus 602 (or the page information providing apparatus). Then, in response to various kinds of information and indicators included in the acquired page information, to settings by the related information successively outputting apparatus 602 itself in advance or to an input from the outside, the related information successively outputting apparatus 602 selects one of pieces of content identification information set as a successive output object in a list included in the page information as noticed content information. Further, the related information successively outputting apparatus 602 acquires content related information coordinated with the one piece of content identification information selected as the noticed content information from the related information successively outputting apparatus 602 and outputs the acquired content related information. Then, if the related information successively outputting apparatus 602 detects an end of the outputting of the content related information, then the related information successively outputting apparatus 602 automatically selects a new one of the pieces of content identification information set as a successive output object in the list included in the page information as noticed content information. Further, the related information successively outputting apparatus 602 acquires content related information coordinated with the one piece of content identification information selected newly as the noticed content information from the related information successively providing apparatus 601 and outputs the acquired content related information. Consequently, the related information successively outputting apparatus 602 automatically and successively outputs content related information coordinated with the content identification information set as a successive output object.

Accordingly, in the related information successively outputting apparatus 602, the content identification information set as a successive output object in the list included in the page information is automatically selected as noticed content information, and a request for content related information coordinated with the content identification information selected as the noticed content information is issued to the related information successively providing apparatus 601. Consequently, the related information successively providing apparatus 601 can automatically and successively transmit content related information coordinated with content identification information set as a successive output object in the list included in the page information and automatically output the content related information without performing such a cumbersome process as to successively select content related information to be provided to the related information successively outputting apparatus 602 from among a plurality of pieces of content related information.

In particular, since content identification information set as a successive output object in the list included in the page information is automatically and successively selected as noticed content information and a request for content related information coordinated with the content identification information selected as the noticed content information is issued from the related information successively outputting apparatus 602, the related information successively providing apparatus 601 can automatically and successively transmit content related information coordinated with the content identification information set as a successive output object in the list included in the page information to the related information successively outputting apparatus 602 without performing such a cumbersome process as to successively select content related information to be provided to the related information successively outputting apparatus 602 from among a plurality of pieces of content related information.

According to the configuration described above, the related information successively outputting apparatus 602 acquires the page information including a list of a plurality of pieces of content identification information transmitted from the related information successively providing apparatus 601 (or the page information processing apparatus) and selects one of the pieces of content identification information set as a successive output object in the list included in the acquired page information in accordance with various kinds of information and indicators, settings in advance in the related information successively providing apparatus 601 itself or an external input included in the page information as noticed content information to acquire content related information coordinated with the one piece of content identification information selected as the noticed content information, and then outputs the acquired content related information. Then, if an end of the outputting of the content related information is detected, then the related information successively outputting apparatus 602 automatically selects a new one of the pieces of content identification information set as a successive output object in the list included in the page information as noticed content information. Further, the related information successively outputting apparatus 602 acquires content related information coordinated with the one piece of content identification information selected newly as the noticed content information from the related information successively providing apparatus 601 and outputs the acquired content related information thereby to automatically and successively output content related information coordinated with the content identification information set as a successive output object. Accordingly, advantages similar to those achieved by the second embodiment described hereinabove can be achieved by the related information successively outputting apparatus 602. In addition, automatic and successive outputting of content related information can be executed under the general supervision of any of the related information successively providing apparatus 601, the related information successively outputting apparatus 602 and the user. Consequently, restrictions to achievement of automatic and successive content outputting of related information can moderated significantly, and automatic and successive outputting of content related information can be implemented readily.

Further, the related information successively providing apparatus 601 transmits the page information including a list of a plurality of pieces of content identification information to the related information successively outputting apparatus 602 in accordance with a request transmitted from the related information successively outputting apparatus 602 and receives request information for content related information coordinated with one piece of the content identification information selected as the noticed content information transmitted from the related information successively outputting apparatus 602 as a result of selection, as noticed content information by the related information successively outputting apparatus 602, of the one piece of content identification information set as a successive output object in the list included in the page information in accordance with various kinds of information and indicators included in the page information, settings in advance to the related information successively outputting apparatus 602 or an external input to the related information successively outputting apparatus 602 as the noticed content information. Then, in response to the reception of the request information, the related information successively providing apparatus 601 transmits content related information in accordance with the request information to the related information successively outputting apparatus 602. Then, when the outputting of the content related information from the related information successively outputting apparatus 602 comes to an end and one of the pieces of content identification information set as a successive output object in the list included in the page information is automatically selected newly as noticed content information, request information for content related information coordinated with the one piece of content identification information selected newly as the noticed content information is transmitted from the related information successively outputting apparatus 602. Thus, when the request information is received, the related information successively providing apparatus 601 automatically and successively transmits content related information in accordance with the request information successively transmitted from the related information successively outputting apparatus 602 to the related information successively outputting apparatus 602. Accordingly, advantages similar to those achieved by the second embodiment described hereinabove can be achieved by the related information successively providing apparatus 601. In addition, automatic and successive outputting of content related information can be executed under the general supervision of any of the related information successively providing apparatus 601, the related information successively outputting apparatus 602 and the user. Consequently, restrictions to achievement of automatic and successive outputting of content related information can moderated significantly, and automatic and successive outputting of content related information can be implemented readily.

### [4] Other Embodiments

It is to be noted that, in the first to third embodiments described hereinabove, the related information successively outputting apparatus according to the present invention is applied to the client terminal 2 and the related information successively outputting apparatus 502 and 602 described hereinabove with reference to FIGS. 1 to 49. However, the present invention is not limited to this, but can be applied widely to information processing apparatus such as a personal computer, a portable telephone set, a PDA (Personal Digital Assistance), a game machine, a compact disk player, a DVD (Digital Versatile Disk) player, a hard disk recorder and various other related information successively outputting apparatus such as a television receiver only if page information and content related information can be acquired from the outside. In particular, in the embodiments described hereinabove, the hardware circuit blocks, functional circuit blocks and program modules described hereinabove with reference to FIGS. 1 to 49 are incorporated in the client terminal 2 or the related information successively outputting apparatus 502 or 602. However, the present invention is not limited to this, but the hardware circuit blocks, functional circuit blocks and program modules may be incorporated in various terminal equipments such as portable telephone sets and personal computers other than the client terminal 2 and the related information successively outputting apparatus 502 and 602. Any terminal equipment which incorporates the hardware circuit blocks, functional circuit blocks and program modules can implement processes similar to those of the client terminal 2 and/or the related information successively outputting apparatus 502 or 602 described hereinabove.

Further, in the first to third embodiments described hereinabove, the related information successively providing apparatus according to the present invention is applied to the music data distribution server SV1 and the related information successively providing apparatus 501 and 601 described hereinabove with reference to FIGS. 1 to 49. However, the present invention is not limited to this, but can be applied widely to various other related information successively providing apparatus such as server apparatus like the article selling server SV2, radio broadcast information distribution server SV3, Internet radio server SV4 and so forth described hereinabove, information processing apparatus such as a personal computer, a portable telephone set, a PDA, a game machine, a compact disk player, a DVD player, a hard disk player and so forth only if they can provide page information and content related information. In particular, in the embodiments described hereinabove, the hardware circuit blocks, functional circuit blocks and program modules described hereinabove with reference to FIGS. 1 to 49 are incorporated in the music data distribution server SV1 or the related information successively providing apparatus 501 or 601. However, the present invention is not limited to this, but the hardware circuit blocks, functional circuit blocks and program modules may be incorporated in various apparatus such as portable telephone sets and personal computers other than the music data distribution server SV1 and the related information successively providing apparatus 501 and 601. Any apparatus which incorporates the hardware circuit blocks, functional circuit blocks and program modules can implement processes similar to those of the music data distribution server SV1 and/or the related information successively providing apparatus 501 or 601 described hereinabove.

Further, in the first to third embodiments described hereinabove, a related information successively outputting program is applied to the tune purchase reproduction module 245 and the XML browser 246 described hereinabove with reference to FIGS. 1 to 49. However, the present invention is not limited to this, but can be applied widely to various related information successively outputting programs having various configurations. The related information successively outputting programs are recorded on or in a recording medium such as a disk or a memory and installed into a computer when the recording medium is loaded into the computer. Consequently, the computer can function as a related information successively providing apparatus. Further, the programs may be downloaded as a signal into a computer.

Further, in the first to third embodiments described hereinabove, the control section 22, communication control section 32 and network interface 33 or the CPU 203, communication control section 214 and network interface 215 of the client terminal 2 or the page information acquisition section 520 or 620 of the related information successively outputting apparatus 502 or 602 described hereinabove with reference to FIGS. 1 to 49 is applied as a page information acquisition section for acquiring page information transmitted from a page information providing apparatus and including a list of a plurality of pieces of content identification information. However, the present invention is not limited to this, but other various information acquisition sections like a page information acquisition circuit or the like of a hardware configuration which acquires page information transmitted from a page information providing apparatus and including a list of a plurality of content identification information can be applied widely.

Further, in the first to third embodiments described hereinabove, the control section 22 or the CPU 203 of the client terminal 2 or the noticed content information selection section 521 or 621 of the related information successively outputting apparatus 502 or 602 described hereinabove with reference to FIGS. 1 to 49 is applied as a noticed content information selection section which selects content identification information set as a successive output object in a list included in page information acquired by the page information acquisition section. However, the present invention is not limited to this, but other various noticed content information selection sections like a noticed content information selection circuit and so forth of a hardware circuit configuration which selects content identification information set as a successive output object in a list included in page information acquired by the page information acquisition section as noticed content information can be applied widely.

Further, in the first to third embodiments described hereinabove, the control section 22, communication control section 32 and network interface 33 or the CPU 203, communication control section 214 and network interface 215 of the client terminal 2 or the related information acquisition section 522 or 622 of the related information successively outputting apparatus 502 or 602 described hereinabove with reference to FIGS. 1 to 49 is applied as a request information acquisition section for acquiring content related information coordinated with content identification information applied as noticed content information by a noticed content information selection section from a related information successively providing apparatus. However, the present invention is not limited to this, but other various related information acquisition sections like a related information acquisition circuit or the like of a hardware circuit configuration which acquires content related information coordinated with content identification information selected as noticed content information by a noticed content information selection section from a related information successively providing apparatus can be applied widely.

Further, in the first to third embodiments described hereinabove, the control section 22, sound control section 26 and speaker 27 or the CPU 203, sound processing section 209 and speaker 210 of the client terminal 2 or the related information outputting section 523 or 623 of the related information successively outputting apparatus 502 or 602 described hereinabove with reference to FIGS. 1 to 49 is applied as a related information outputting section for outputting content related information acquired by a related information acquisition section. However, the present invention is not limited to this, but a request information outputting circuit having a hardware circuit configuration which outputs content related information acquired by the related information acquisition section and other various related information outputting sections such as the control section 22, display control section 24 and display section 25 for outputting an image, or the CPU 203, display processing section 207 and display unit 206 can be applied widely.

Further, in the first to third embodiments described hereinabove, the control section 22 and sound control section 26 of the client terminal 2 or the CPU 203 and sound processing section 209 described hereinabove with reference to FIGS. 1 to 49 or the outputting end detection section 524 or 624 of the related information successively outputting apparatus 502 or 602 is applied as an outputting end detection section for detecting an end of outputting of content related information by a request information outputting section. However, the present invention is not limited to this, but other various outputting end detection suctions like an outputting end detection circuit having a hardware circuit configuration for detecting an end of outputting of content related information by the request information outputting section can be applied widely.

Further, in the first to third embodiments described hereinabove, the control section 70, communication control section 72 and network interface 73 or the CPU 270 and the network interface 275 of the music data distribution server SV1 or the page information transmission section 510 or 610 of the related information successively providing apparatus 501 or 601 described hereinabove with reference to FIGS. 1 to 49 is applied as a page information transmission section for transmitting page information including a list of a plurality of pieces of content identification information to a related information successively outputting apparatus in response to a request transmitted from the related information successively outputting apparatus. However, the present invention is not limited to this, but other various page information transmission sections like a page information transmission circuit of a hardware circuit configuration which transmits page information including a list of a plurality of pieces of content identification information to a related information successively outputting apparatus in response to a request transmitted from the related information successively outputting apparatus can be applied widely.

Further, in the first to third embodiments described hereinabove, the control section 70, communication control section 72 and network interface 73 or the CPU 270 and the network interface 275 of the music data distribution server SV1 or the request information reception section 511 or 611 of the related information successively providing apparatus 501 or 601 described hereinabove with reference to FIGS. 1 to 49 is applied as a requesting information reception section which receives requesting information transmitted from a related information successively outputting apparatus for requesting content related information coordinated with content identification information selected as noticed content information as a result of selection of content identification information set as a successive output object in a list included in page information as the noticed content information by the related information successively outputting apparatus. However, the present invention is not limited to this, but other various requesting information reception sections like a requesting information reception circuit of a hardware circuit configuration which receives requesting information for content related information coordinated with content identification information selected as noticed content information transmitted from a related information successively outputting apparatus as a result of selection of content identification information set as a successive output object in a list included in page information as the noticed content information by the related information successively outputting apparatus can be applied widely.

Furthermore, in the first to third embodiments described hereinabove, the control section 70, communication control section 72 and network interface 73 or the CPU 270 and the network interface 275 of the music data distribution server SV1 or the related information transmission section 512 or 612 of the related information successively providing apparatus 501 or 601 described hereinabove with reference to FIGS. 1 to 49 is applied as a related information transmission section for transmitting content related information in accordance with requesting information received by a requesting information reception section to a related information successively outputting apparatus. However, the present invention is not limited to this, but other various related information transmission sections like a related information transmission circuit of a hardware circuit configuration which transmits content related information in response to requesting information received by a requesting information reception section to the related information successively outputting apparatus can be applied widely.

While preferred embodiments of the present invention have been described using specific terms, such description is for illustrative purpose only, and it is to be understood that changes and variations may be made without departing from the scope of the following claims.
Various respective aspects and features of the invention are defined in the appended claims. Features from the dependent claims may be combined with features of the independent claims as appropriate and not merely as explicitly set out in the claims.

## Claims

1. A related information successively outputting method, comprising:
a page information acquisition step of acquiring page information transmitted from a page information providing apparatus and including a list of a plurality of pieces of content identification information;
a noticed content information selection step of selecting one of those of the pieces of content identification information which are set as a successive output object in the list included in the acquired page information as noticed content information;
a related information acquisition step of acquiring content related information coordinated with the one piece of content identification information selected as the noticed content information from a related information successively providing apparatus;
a related information outputting step of outputting the acquired content related information; and
an outputting end detection step of detecting an end of the outputting of the content related information; whereby,
if an end of the outputting of the content related information is detected at the outputting end detection step, then the noticed content information selection step, related information acquisition step, related information outputting step and outputting end detection step are successively executed again thereby to automatically and successively output the content related information coordinated with the content identification information set as a successive output object in the list included in the page information.

2. The related information successively outputting method according to claim 1, wherein, when content related information is coordinated with the one piece of content identification information selected as the noticed content information, the related information acquisition step acquires the content related information from the related information successively providing apparatus.

3. The related information successively outputting method according to claim 1, wherein, when the page information includes successive outputting permission identification information which indicates that the content related information coordinated with the content identification information set as a successive output object can be successively outputted, the noticed content information selection step automatically selects the content identification information as the noticed content information.

4. The related information successively outputting method according to claim 1, further comprising
a successive output object setting step of setting specific content identification information in the list included in the page information as a successive output object.

5. The related information successively outputting method according to claim 4, wherein the successive output object setting step sets content identification information designated in the list included in the page information as a successive output object in response to an input from the outside.

6. The related information successively outputting method according to claim 5, wherein the successive output object setting step produces a user interface for allowing such inputting from the outside to be executed and outputs the produced user interface.

7. The related information successively outputting method according to claim 1, further comprising
a successive outputting notification indicator outputting step of outputting a successive outputting notification indicator for the notification that the content related information coordinated with the content identification information set as a successive output object in the list included in the page information can be successively outputted.

8. The related information successively outputting method according to claim 7, wherein the successive outputting notification indicator outputting step outputs the successive outputting notification indicator included in the page information.

9. The related information successively outputting method according to claim 7, wherein, when the page information includes successive outputting permission identification information which indicates that content related information coordinated with the content identification information set as a successive output object can be successively outputted, the successive outputting notification indicator outputting step outputs the successive outputting notification indicator in response to the successive outputting permission identification information.

10. The related information successively outputting method according to claim 1, wherein, when the outputting of all of the pieces of the content related information coordinated with the content identification information set as a successive output object in the list included in the page information comes to an end, the related information outputting step sets the content identification information coordinated with the content related information outputted last or the content identification information coordinated with the content related information outputted first as the noticed content information and stops the outputting of the content related information.

11. The related information successively outputting method according to claim 1, further comprising
a related information play mode setting step of setting a play mode for the content related information coordinated with the content identification information set as the successive output object in the list included in the page information, wherein
the noticed content information selection step successively selects, in response to the set play mode, the content identification information set as a successive output object in the list included in the page information as the noticed content information, and
the related information outputting step outputs the content related information coordinated with the content identification information selected as the noticed content information in response to the play mode at the noticed content information selection step.

12. The related information successively outputting method according to claim 11, wherein, where the set play mode is a repeat play mode, the related information outputting step repetitively and circulatingly outputs a plurality of pieces of the content related information coordinated with the plurality of pieces of content identification information set as a successive output object in the list included in the page information in response to the repeat play mode.

13. The related information successively outputting method according to claim 11, wherein, where the set play mode is a single repeat play mode, the related information outputting step repetitively outputs a single piece of the content related information coordinated with the content identification information selected as the noticed content information at present.

14. The related information successively outputting method according to claim 11, wherein, where the set play mode is a shuffle play mode, the related information outputting step outputs a plurality of pieces of the content related information coordinated with a plurality of pieces of the content identification information set as a successive output object in the list included in the page information in accordance with a randomly arranged order in response to the shuffle play mode.

15. The related information successively outputting method according to claim 11, wherein, where the set play mode is a random play mode, the related information outputting step successively and randomly selects and outputs one of a plurality of pieces of the content related information coordinated with a plurality of pieces of the content identification information set as a successive output object in the list included in the page information in response to the random replay mode.

16. The related information successively outputting method according to claim 11, wherein, where the set play mode is a program play mode, the related information outputting step outputs a plurality of pieces of the content related information coordinated with a plurality of pieces of the content identification information set as a successive output object in the list included in the page information in accordance with a preset order in response to the program play mode.

17. The related information successively outputting method according to claim 1, wherein the noticed content information selection step automatically selects one piece of the content identification information according to the play mode from within the content identification information set as a successive output object in the list included in the page information as the noticed content information in response to play mode instruction information included in the page information and indicative of a play mode for the content related information coordinated with the content identification information set as a successive output object.

18. The related information successively outputting method according to claim 1, wherein the noticed content information selection step automatically selects one piece of the content identification information according to the play mode set in advance for the content related information coordinated with the content identification information set as a successive output object from within the content identification information set as a successive output object in the list included in the page information as the noticed content information.

19. The related information successively outputting method according to claim 18, further comprising
a related information play mode setting step of setting the play mode for the content related information coordinated with the content identification information set as a successive output object in the list included in the page information in response to an input from the outside.

20. The related information successively outputting method according to claim 19, wherein the related information play mode setting step produces a user interface for allowing such inputting from the outside to be executed and outputs the produced user interface.

21. The related information successively outputting method according to claim 20, wherein, where the play mode is a program play mode, the related information play mode setting step uses the user interface to set an outputting order of a plurality of pieces of the content related information corresponding to a plurality of pieces of the content identification information set as a successive output object in the list included in the page information.

22. The related information successively outputting method according to claim 11, further comprising
a play mode notification displaying information outputting step of outputting a play mode notification indicator corresponding to the set play mode.

23. The related information successively outputting method according to claim 22, wherein the play mode notification indicator outputting step outputs the play mode notification indicator included in the page information.

24. The related information successively outputting method according to claim 22, wherein the play mode notification indicator outputting step outputs the play mode notification indicator in response to play mode indication information included in the page information and indicative of the play mode.

25. The related information successively outputting method according to claim 22, wherein the related information play mode setting step sets the play mode in response to an input from the outside, and the play mode notification indicator outputting step outputs the play mode notification indicator corresponding to the set play mode set.

26. The related information successively outputting method according to claim 1, wherein the related information outputting step outputs, during outputting of the content related information, an outputting execution notification indicator for the notification that the content related information is being outputted.

27. The related information successively outputting method according to claim 26, wherein the related information outputting step outputs the outputting execution notification indicator included in the page information if it is decided that the content related information is being outputted.

28. The related information successively outputting method according to claim 26, wherein the related information outputting step outputs the outputting execution notification indicator stored in advance if it is decided that the content related information is being outputted.

29. The related information successively outputting method according to claim 26, wherein the related information outputting step stops the outputting of the outputting execution notification indicator if the outputting of the content related information is stopped.

30. The related information successively outputting method according to claim 1, wherein the related information outputting step controls the outputting of the content related information in response to an input from the outside.

31. The related information successively outputting method according to claim 30, wherein the related information outputting step outputs, in response to the input from the outside, the content related information coordinated with the content identification information set so as to be selected as the noticed content information preceding or succeeding the content identification information selected as the noticed content information at present.

32. The related information successively outputting method according to claim 30, wherein the related information outputting step performs fast forwarding or fast reverse feeding outputting of the content related information being outputted at present in response to the input from the outside.

33. The related information successively outputting method according to claim 32, wherein the related information outputting step performs fast forwarding or fast reverse feeding outputting of the content related information while an indication for fast forwarding or fast reverse feeding is inputted from the outside, but, when the inputting of the indication for the fast forwarding or fast reverse feeding from the outside comes to an end, the related information outputting step ends the fast forwarding or fast reverse feeding outputting for the content related information and performs normal outputting from the end position of the outputting of the content related information.

34. The related information successively outputting method according to claim 30, wherein the related information outputting step stops the outputting of the content related information being outputted at present in response to the input from the outside.

35. The related information successively outputting method according to claim 34, wherein the related information outputting step starts the outputting of the content related information in response to an input which indicates starting of the outputting from the outside.

36. The related information successively outputting method according to claim 35, wherein the related information outputting step stores, when the outputting of the content related information is stopped, the content identification information coordinated with the content related information whose outputting is stopped, and starts the outputting of the content related information coordinated with the stored content identification information in order from the top of the content related information in response to the input which indicates starting of the outputting from the outside.

37. The related information successively outputting method according to claim 35, wherein the related information outputting step stores, when the outputting of the content related information is stopped, the content identification information coordinated with the content related information whose outputting is stopped and an outputting stop position of the content related information, and starts the outputting of the content related information coordinated with the stored content identification information from the stored outputting stop position in response to the input which indicates starting of the outputting from the outside.

38. The related information successively outputting method according to claim 35, wherein the related information outputting step starts, in response to the input which indicates starting of the outputting from the outside, the outputting of the content related information coordinated with the content identification information selected first as the noticed content information from within the content identification information set as a successive output object in the list included in the page information.

39. The related information successively outputting method according to claim 35, wherein the related information outputting step starts the outputting of the content related information from an output restarting position included in the page information in response to the input which indicates starting of the outputting from the outside.

40. The related information successively outputting method according to claim 35, wherein the related information outputting step starts the outputting of the content related information from an output restarting position set in advance in response to the input which indicates starting of the outputting from the outside.

41. The related information successively outputting method according to claim 35, wherein the related information outputting step starts, in response to the input which indicates starting of the outputting from the outside, the outputting of the content related information from an output restarting position set in advance in response to the input from the outside.

42. The related information successively outputting method according to claim 1, wherein the noticed content information selection step selects, when the content related information is not coordinated with the content identification information selected as the noticed content information, the content identification information as the noticed content information for a fixed period of time and then automatically selects another one of the pieces of content identification information which is set so as to be selected as the noticed content information next to the content identification information as the noticed content information.

43. The related information successively outputting method according to claim 42, wherein the noticed content information selection step selects, when the content related information is not coordinated with the content identification information selected as the noticed content information, the content identification information as the noticed content information for the fixed period of time in response to selection continuation time information included in the page information and indicative of the fixed period of time and then automatically selects another one of the pieces of content identification information set so as to be selected as the noticed content information next to the content identification information as the noticed content information.

44. The related information successively outputting method according to claim 42, wherein the noticed content information selection step selects, when the content related information is not coordinated with the content identification information selected as the noticed content information, the content identification information as the noticed content information for the fixed period of time set in advance and the automatically selects another one of the pieces of content identification information set so as to be selected as the noticed content information next to the content identification information as the noticed content information.

45. The related information successively outputting method according to claim 42, wherein the noticed content information selection step selects, when the content related information is not coordinated with the content identification information selected as the noticed content information, the content identification information as the noticed content information for the fixed period of time set in advance in response to an input from the outside and then automatically selects another one of the pieces of content identification information set so as to be selected as the noticed content information next to the content identification information as the noticed content information.

46. The related information successively outputting method according to claim 42, wherein the noticed content information selection step selects, where the content related information is not coordinated with the content identification information when the content identification information is selected as the noticed content information in response to the input from the outside, the content identification information as the noticed content information for the fixed period of time which is a first period of time and then automatically selects another one of the pieces of content identification information set so as to be selected as the noticed content information next to the content identification information as the noticed content information, but selects, where the content related information is not coordinated with the content identification information when the content identification information is automatically selected as the noticed content information, the content identification information as the noticed content information for the fixed period of time which is a second period of time and then automatically selects another one of the pieces of content identification information set so as to be selected as the noticed content information next to the content identification information as the noticed content information.

47. The related information successively outputting method according to claim 1, wherein the noticed content information selection step ends the outputting operation of the content related information when the content related information is not coordinated with the content identification information selected as the noticed content information.

48. The related information successively outputting method according to claim 1, wherein the noticed content information selection step selectively sets the content identification information with which the content related information is coordinated as the noticed content information.

49. The related information successively outputting method according to claim 1, further comprising
a notification image outputting step of producing and outputting a notification image for the notification of whether or not the content related information is coordinated with the content identification information set as a successive output object in the list included in the page information.

50. The related information successively outputting method according to claim 49, wherein the notification image outputting step produces the notification image using a coordination notification indicator included in the page information for the notification of whether or not the content related information is coordinated with the content identification information set as a successive output object.

51. The related information successively outputting method according to claim 49, wherein the notification image outputting step decides whether or not the content related information is coordinated with the content identification information set as a successive output object in the list in the page information and produces the notification image in accordance with a result of the decision.

52. The related information successively outputting method according to claim 1, wherein the related information outputting step outputs a sample content for a content identified with the content identification information as the content related information coordinated with the content identification information selected as the noticed content information.

53. The related information successively outputting method according to claim 52, wherein the content includes at least one of a moving picture, a static picture, a game, an audio, a text, and a program.

54. The related information successively outputting method according to claim 1, wherein the related information outputting step outputs text information relating to a content identified with the content identification information as the content related information coordinated with the content identification information selected as the noticed content information.

55. The related information successively outputting method according to claim 1, wherein the related information outputting step outputs image information relating to a content identified with the content identification information as the content related information coordinated with the content identification information selected as the noticed content information.

56. The related information successively outputting method according to claim 1, wherein the related information outputting step outputs the content related information transmitted in a streaming format from the related information successively providing apparatus.

57. A related information successively providing method, comprising:
a page information transmission step of transmitting, in response to a request transmitted from a related information successively outputting apparatus, page information including a list of a plurality of pieces of content identification information to the related information successively outputting apparatus;
a requesting information receiving step of receiving requesting information, transmitted from the related information successively outputting apparatus as a result of selection of one of those of the pieces of content identification information which are set as a successive output object in the list included in the page information by the related information successively outputting apparatus as noticed content information, for content related information coordinated with the content identification information selected as the noticed content information; and
a related information transmission step of transmitting the content related information according to the received requesting information to the related information successively outputting apparatus; whereby,
if the outputting of the content related information by the related information successively outputting apparatus comes to an end and a new one of the pieces of content identification information from within the content identification information set as a successive output object in the list included in the page information is automatically selected as the noticed content information, then the requesting information receiving step and the related information transmission step are successively executed again to automatically and successively transmit the content related information according to the requesting information successively transmitted from the related information successively outputting apparatus to the related information successively outputting apparatus.

58. The related information successively providing method according to claim 57, wherein the page information transmission step transmits the page information including successive outputting permission identification information which indicates that the content related information coordinated with the content identification information set as a successive output object can be successively outputted to the related information successively outputting apparatus.

59. The related information successively providing method according to claim 57, wherein the page information transmission step transmits the page information including a successive outputting notification indicator for the notification that the content related information coordinated with the content identification information set as a successive output object can be successively outputted to the related information successively outputting apparatus.

60. The related information successively providing method according to claim 57, wherein the page information transmission step transmits the page information including the content identification information set as a successive output object and play mode indication information which indicates a play mode for the content related information coordinated with the content identification information to the related information successively outputting apparatus.

61. The related information successively providing method according to claim 60, wherein the page information transmission step transmits the page information including a plurality of pieces of the content identification information set as a successive output object and the play mode indication information which indicates a repeat play mode as the play mode for a plurality of pieces of the content related information coordinated with the plurality of pieces of content identification information to the related information successively outputting apparatus.

62. The related information successively providing method according to claim 60, wherein the page information transmission step transmits the page information including the content identification information set as a successive output object and the play mode indication information which indicates a single repeat play mode as the play mode for the content related information coordinated with the content identification information to the related information successively outputting apparatus.

63. The related information successively providing method according to claim 60, wherein the page information transmission step transmits the page information including a plurality of pieces of the content identification information set as a successive output object and the play mode indication information which indicates a shuffle play mode as the play mode for a plurality of pieces of the content related information coordinated with the plurality of pieces of content identification information to the related information successively outputting apparatus.

64. The related information successively providing method according to claim 60, wherein the page information transmission step transmits the page information including a plurality of pieces of the content identification information set as a successive output object and the play mode indication information which indicates a random play mode as the play mode for a plurality of the content related information coordinated with the plurality of pieces of the content identification information to the related information successively outputting apparatus.

65. The related information successively providing method according to claim 60, wherein the page information transmission step transmits the page information including a plurality of pieces of the content identification information set as a successive output object, an outputting order set for a plurality of pieces of the content related information coordinated with the plurality of pieces of content identification information and the play mode indication information which indicates a program play mode in which a plurality of pieces of the content related information are outputted in accordance with the set output order as the play mode for the plurality of pieces of content related information to the related information successively outputting apparatus.

66. The related information successively providing method according to claim 60, wherein the page information transmission step transmits the page information including a play mode notification indicator for notifying of the play mode of the content related information coordinated with the content identification information set as a successive output object to the related information successively outputting apparatus.

67. The related information successively providing method according to claim 57, wherein the page information transmission step transmits the page information including an outputting execution notification indicator, for the notification that the content related information is being outputted, to be outputted during outputting of the content related information coordinated with the content identification information set as a successive output object to the related information successively outputting apparatus.

68. The related information successively providing method according to claim 57, wherein the page information transmission step transmits the page information including outputting restarting position indication information which indicates an outputting restarting position after the outputting of the content related information coordinated with the content identification information set as a successive output object is temporarily stopped to the related information successively outputting apparatus.

69. The related information successively providing method according to claim 68, wherein the page information transmission step transmits the page information including the outputting restarting position indication information which indicates the top of the content related information whose outputting is stopped as the outputting restarting position to the related information successively outputting apparatus.

70. The related information successively providing method according to claim 68, wherein the page information transmission step transmits the page information including the outputting restarting position indication information which indicates an outputting stopping position of the content related information whose outputting is stopped as the outputting restarting position to the related information successively outputting apparatus.

71. The related information successively providing method according to claim 68, wherein the page information transmission step transmits the page information including the outputting restarting position indication information which indicates, as the outputting restarting position, the content related information coordinated with the content identification information to be selected first as the noticed content information to the related information successively outputting apparatus.

72. The related information successively providing method according to claim 57, wherein the page information transmission step transmits, where the content related information is not coordinated with the content identification information selected as the noticed content information, the page information including selection continuation time information which indicates a fixed period of time within which the selected content identification information is to be selected as it is as the noticed content information before the next content identification information is selected as the noticed content information to the related information successively outputting apparatus.

73. The related information successively providing method according to claim 72, wherein the page information transmission step transmits the page information including the selection continuation time information which indicates the fixed period of time which is a first period of time within which the identification information is to be selected as it is as the noticed content information when the content identification information with which the content related information is not coordinated is selected as the noticed content information in response to an input from the outside and the selection continuation time information which indicates the fixed period of time which is a second period of time within which the content identification information is to be selected as it is as the noticed content information when the content identification information with which the content related information is not coordinated is automatically selected as the noticed content information to the related information successively outputting apparatus.

74. The related information successively providing method according to claim 57, wherein the page information transmission step transmits the page information including a coordination notification indicator for notifying of whether or not the content related information is coordinated with the content identification information set as a successive output object to the related information successively outputting apparatus.

75. The related information successively providing method according to claim 57, wherein the page information transmission step transmits the page information which coordinates a sample content for a content identified with the content identification information as the content related information with the content identification information to the related information successively outputting apparatus.

76. The related information successively providing method according to claim 75, wherein the page information transmission step transmits the page information which coordinates the sample content for the content which includes at least one of a moving picture, a static picture, a game, an audio, a text, and a program identified with the content identification information as the content related information with the content identification information to the related information successively outputting apparatus.

77. The related information successively providing method according to claim 57, wherein the page information transmission step transmits the page information which coordinates text information relating to a content identified with the content identification information as the content related information with the content identification information to the related information successively outputting apparatus.

78. The related information successively providing method according to claim 57, wherein the page information transmission step transmits the page information which coordinates image information relating to a content identified with the content identification information as the content related information with the content identification information to the related information successively outputting apparatus.

79. The related information successively providing method according to claim 57, wherein the related information transmission step transmits the content related information in a streaming format to the related information successively outputting apparatus.

80. A related information successively outputting apparatus, comprising:
a page information acquisition section configured to acquire page information including a list of a plurality of pieces of content identification information transmitted from a page information providing apparatus;
a noticed content information selection section configured to select the content identification information set as a successive output object in the list included in the page information acquired by said page information acquisition section as noticed content information;
a related information acquisition section configured to acquire content related information coordinated with the content identification information selected as the noticed content information by said noticed content information selection section from a related information successively providing apparatus;
a related information outputting section configured to output the content related information acquired by said related information acquisition section; and
an outputting end detection section configured to detect an end of the outputting of the content related information by the related information outputting section; whereby,
if said noticed content information selection section selects, as the noticed content information, one of those of the pieces of the content identification information which are set as a successive output object in the list included in the page information, then said related information acquisition section acquires the content related information coordinated with the content identification information selected as the noticed content information from the related information successively providing apparatus and said related information outputting section outputs the acquired content related information, and then when said outputting end detection section detects an end of the outputting of the content related information by said related information outputting section, said noticed content information selection section automatically and newly selects, as the noticed content information, one of those of the pieces of the content identification information which are set as the successive outputting target in the list included in the page information and said related information acquisition section acquires the content related information coordinated with the content identification information newly selected as the noticed content information from the related information successive providing apparatus, whereafter said related information outputting section outputs the acquired content related information thereby to automatically and successively output the content related information coordinated with the content identification information set as a successive output object in the list included in the page information.

81. A related information successively outputting apparatus, comprising:
page information acquisition means for acquiring page information including a list of a plurality of pieces of content identification information transmitted from a page information providing apparatus;
noticed content information selection means for selecting the content identification information set as a successive output object in the list included in the page information acquired by said page information acquisition means as noticed content information;
related information acquisition means for acquiring content related information coordinated with the content identification information selected as the noticed content information by said noticed content information selection means from a related information successively providing apparatus;
related information outputting means for outputting the content related information acquired by said related information acquisition means; and
outputting end detection means for detecting an end of the outputting of the content related information by the related information outputting means; whereby,
if said noticed content information selection means selects, as the noticed content information, one of those of the pieces of the content identification information which are set as a successive output object in the list included in the page information, then said related information acquisition means acquires the content related information coordinated with the content identification information selected as the noticed content information from the related information successively providing apparatus and said related information outputting means outputs the acquired content related information, and then when said outputting end detection means detects an end of the outputting of the content related information by said related information outputting means, said noticed content information selection means automatically and newly selects, as the noticed content information, one of those of the pieces of the content identification information which are set as the successive outputting target in the list included in the page information and said related information acquisition means acquires the content related information coordinated with the content identification information newly selected as the noticed content information from the related information successive providing apparatus, whereafter said related information outputting means outputs the acquired content related information thereby to automatically and successively output the content related information coordinated with the content identification information set as a successive output object in the list included in the page information.

82. A related information successively providing apparatus, comprising:
a page information transmission section configured to transmit, in response to a request transmitted from a related information successive outputting apparatus, page information including a list of a plurality of pieces of content identification information to the related information successive outputting apparatus;
a requesting information receiving section configured to receive requesting information, transmitted from the related information successively outputting apparatus as a result of selection of one of those of the pieces of content identification information which are set as a successive output object in the list included in the page information by the related information successively outputting apparatus as noticed content information, for content related information coordinated with the content identification information selected as the noticed content information; and
a related information transmission section configured to transmit the content related information according to the requesting information received by said requesting information receiving section to the related information successive outputting apparatus; whereby,
if said requesting information receiving section receives the requesting information, transmitted as a result of the selection of one of those of the pieces of the content identification information which are set as the successive output object in the list included in the page information as the noticed content information from the related information successive outputting apparatus, for the content related information coordinated with the content identification information selected as the noticed content information, then said related information transmission section transmits the content related information according to the requesting information to the related information successive outputting apparatus, and then if said requesting information receiving section receives the requesting information, transmitted as a result of automatic selection of a new one of those of the pieces of content identification information which are set as a successive output object in the list included in the page information as the noticed content information after the outputting of the content related information from the related information successively outputting apparatus, for the content related information coordinated with the content identification information newly selected as the noticed content information, then said related information transmission section transmits the content related information according to the requesting information to the related information successively outputting apparatus thereby to automatically and successively transmit the content related information according to the requesting information successively transmitted from the related information successively outputting apparatus to the related information successively outputting apparatus.

83. A related information successively providing apparatus, comprising:
page information transmission means for transmitting, in response to a request transmitted from a related information successive outputting apparatus, page information including a list of a plurality of pieces of content identification information to the related information successive outputting apparatus;
requesting information receiving means for receiving requesting information, transmitted from the related information successively outputting apparatus as a result of selection of one of those of the pieces of content identification information which are set as a successive output object in the list included in the page information by the related information successively outputting apparatus as noticed content information, for content related information coordinated with the content identification information selected as the noticed content information; and
related information transmission means for transmitting the content related information according to the requesting information received by said requesting information receiving means to the related information successive outputting apparatus; whereby,
if said requesting information receiving means receives the requesting information, transmitted as a result of the selection of one of those of the pieces of the content identification information which are set as the successive output object in the list included in the page information as the noticed content information from the related information successive outputting apparatus, for the content related information coordinated with the content identification information selected as the noticed content information, then said related information transmission means transmits the content related information according to the requesting information to the related information successive outputting apparatus, and then if said requesting information receiving means receives the requesting information, transmitted as a result of automatic selection of a new one of those of the pieces of content identification information which are set as a successive output object in the list included in the page information as the noticed content information after the outputting of the content related information from the related information successively outputting apparatus, for the content related information coordinated with the content identification information newly selected as the noticed content information, then said related information transmission means transmits the content related information according to the requesting information to the related information successively outputting apparatus thereby to automatically and successively transmit the content related information according to the requesting information successively transmitted from the related information successively outputting apparatus to the related information successively outputting apparatus.

84. A related information successively outputting program for causing an information processing apparatus to execute:
a page information acquisition step of acquiring page information transmitted from a page information providing apparatus and including a list of a plurality of pieces of content identification information;
a noticed content information selection step of selecting one of those of the pieces of content identification information which are set as a successive output object in the list included in the acquired page information as noticed content information;
a related information acquisition step of acquiring content related information coordinated with the one piece of content identification information selected as the noticed content information from a related information successively providing apparatus;
a related information outputting step of outputting the acquired content related information; and
an outputting end detection step of detecting an end of the outputting of the content related information; whereby,
if an end of the outputting of the content related information is detected at the outputting end detection step, then the noticed content information selection step, related information acquisition step, related information outputting step and outputting end detection step are successively executed again thereby to automatically and successively output the content related information coordinated with the content identification information set as a successive output object in the list included in the page information.

85. A related information successively outputting program for causing an information processing apparatus to execute:
a page information transmission step of transmitting, in response to a request transmitted from a related information successively outputting apparatus, page information including a list of a plurality of pieces of content identification information to the related information successively outputting apparatus;
a requesting information receiving step of receiving requesting information, transmitted from the related information successively outputting apparatus as a result of selection of one of those of the pieces of content identification information which are set as a successive output object in the list included in the page information by the related information successively outputting apparatus as noticed content information, for content related information coordinated with the content identification information selected as the noticed content information; and
a related information transmission step of transmitting the content related information according to the received requesting information to the related information successively outputting apparatus; whereby,
if the outputting of the content related information by the related information successively outputting apparatus comes to an end and a new one of the pieces of content identification information from within the content identification information set as a successive output object in the list included in the page information is automatically selected as the noticed content information, then the requesting information receiving step and the related information transmission step are successively executed again to automatically and successively transmit the content related information according to the requesting information successively transmitted from the related information successively outputting apparatus to the related information successively outputting apparatus.
